(19) Europäisches Patentamt
European Patent Office
Office européen des brevets

(11) **EP 2 087 827 A1**

(12) **EUROPEAN PATENT APPLICATION**
published in accordance with Art. 153(4) EPC

(43) Date of publication:
**12.08.2009 Bulletin 2009/33**

(51) Int Cl.:
*A47L 9/16* *(2006.01)*    *A47L 9/24* *(2006.01)*
*B01D 51/02* *(2006.01)*    *B03C 3/15* *(2006.01)*
*B03C 3/30* *(2006.01)*    *B03C 3/36* *(2006.01)*

(21) Application number: **07828401.5**

(22) Date of filing: **26.09.2007**

(86) International application number:
**PCT/JP2007/068628**

(87) International publication number:
**WO 2008/044468 (17.04.2008 Gazette 2008/16)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: 06.10.2006   JP 2006275231
31.10.2006   JP 2006295698
31.10.2006   JP 2006295699
29.11.2006   JP 2006322356
06.12.2006   JP 2006329361
22.12.2006   JP 2006346105

(71) Applicant: **Sharp Kabushiki Kaisha**
**Osaka-shi**
**Osaka 545-8522 (JP)**

(72) Inventors:
• **KATOH, Yasuaki**
**Kitakatsuragi-gun,**
**Nara 363-0001 (JP)**

• **OHTSUKA, Masaki**
**Yao-shi**
**Osaka 581-0041 (JP)**
• **TOMOMURA, Yoshinobu**
**Kitatsuragi-gun**
**Nara 636-0003 (JP)**
• **KITATANI, Kazuya**
**Ikoma-gun**
**Nara 636-0821 (JP)**
• **YOSHIDA, Choji**
**Yao-chi**
**Osaka 581-0068 (JP)**

(74) Representative: **Treeby, Philip David William et al**
**R.G.C. Jenkins & Co**
**26 Caxton Street**
**London SW1H 0RJ (GB)**

(54) **DUST FLOCCULATING PASSAGE, DUST FLOCCULATING METHOD, AND VACUUM CLEANER**

(57)     Provided are a dust flocculating duct, a dust flocculating method, and a vacuum cleaner in which a simple configuration is realized and which facilitate flocculation of particulates by increasing the number of times when the particulates are caused to collide with one another and allow a reduction in the number of the particulates and an increase in an apparent diameter of each of the particulates. The dust flocculating duct (10) comprises: a passage (11) for circulating gas therethrough; a wall (12) forming the passage (11); and a vortex generating part for generating vortices in the gas circulating through the passage (11). The vortex generating part is disposed on an inner surface of the wall (12) so as to impart an uneven velocity distribution to a flow of the gas in the vicinity of the wall (12). The vortex generating part includes a swirling part (13) which has a wall portion projecting from the inner surface of the wall (12) toward an inside of the passage (11) so as to swirl the flow of the gas inside the passage (11); or protrusions formed so as to project from the inner surface of the wall (12) and to make a velocity of the gas passing therethrough uneven.

FIG.5

**Description**

TECHNICAL FIELD

The present invention relates to a dust flocculating duct, a dust flocculating method, and a vacuum cleaner for circulating gas containing dust and flocculating the dust.

BACKGROUND ART

Conventionally, as an example in which protruding portions are provided on an inner wall surface of a pipe through which gas containing dust circulates, there is an extension pipe of a vacuum cleaner disclosed in Japanese Patent Application Laid-Open Publication No. 2002-320578 (Patent Document 1). This aims to accelerate an air flow in the vicinity of the inner wall surface of the extension pipe by providing guide blades, as acceleration means, in the vicinity of an inlet of the extension pipe connected via a hose to a main body of the vacuum cleaner.

In addition, Japanese Patent Application Laid-Open Publication No. 9-131522 (Patent Document 2) discloses a mixing element which increases a fluid mixing efficiency. This aims to increase the mixing efficiency by providing a cylindrical passage pipe with helical blades in an integrated manner and imparting action of positional shifting, confluence, and shearing of a fluid along the blades.

On the other hand, Japanese Patent Application Laid-Open Publication No. 2005-324094 (Patent Document 3) discloses a particulate flocculation device which electrifies particulates by utilizing corona discharge and thereafter, collects the particulates by using an electric conductor having a voltage applied thereto. This particulate flocculation device has a mechanism in which the collected particulates flocculates on a surface of the electric conductor, and when the particulates have grown to have certain sizes, groups of the flocculated particulates are separated off from the electric conductor by a gas flow and discharged.

Japanese Patent No. 2517877 (Patent Document 4) discloses that particulates are electrified through frictional and contact electrification. There disclosed is a method, for producing a fine particulate composite body, in which fine particulates on one side are electrified with positive static electricity and fine particulates on another side are electrified with negative static electricity through electrification by contact with a pipe and thereafter, both of the particulates are mixed to be electrically combined.

Patent Document 1: Japanese Patent Application Laid-Open Publication No. 2002-320578
Patent Document 2: Japanese Patent Application Laid-Open Publication No. 9-131522
Patent Document 3: Japanese Patent Application Laid-Open Publication No. 2005-324094
Patent Document 4: Japanese Patent No. 2517877

DISCLOSURE OF THE INVENTION

Problems to be solved by the invention

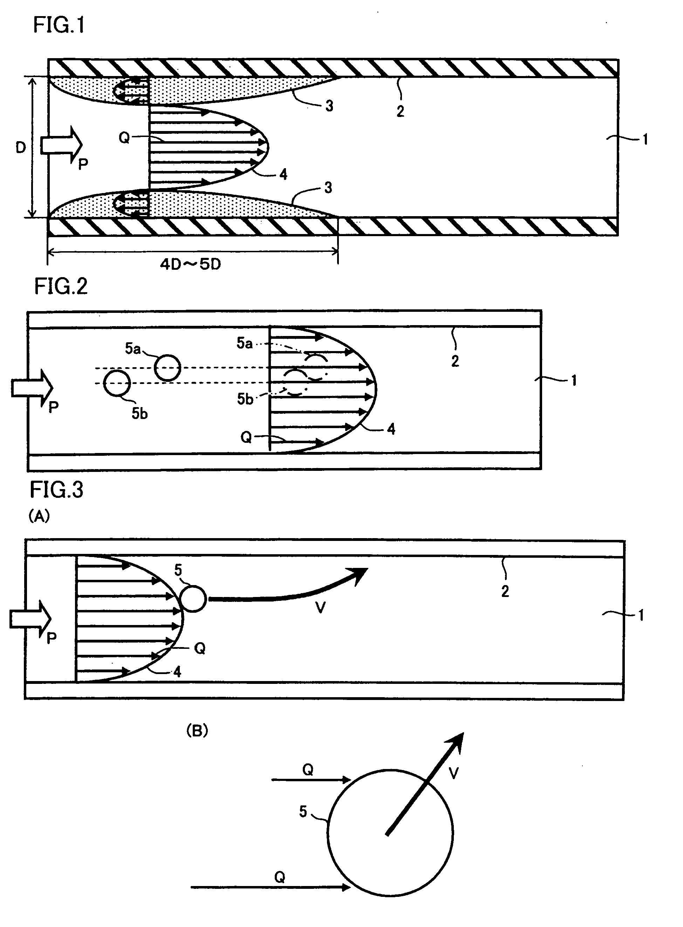

Fig. 1 is a schematic diagram illustrating a gas flow inside a cylindrical pipe such as an extension pipe of a vacuum cleaner. As shown in Fig. 1, when gas P flows into a passage 1 in a direction indicated by an arrow, an exfoliation area 3 is formed on a portion where a wall 2 of the passage 1 contacts gas. Therefore, velocities of a gas flow Q at positions inside the passage become uneven and a velocity gradient 4 arises. A length of the exfoliation area 3 in a direction along the gas flow is approximately 4 to 5 times that of a diameter D of the passage 1.

In Japanese Patent Application Laid-Open Publication No. 2002-320578 (Patent Document 1), the guide blades provided in the extension pipe of the vacuum cleaner is aimed at an effect of reducing a pressure loss in order to effectively transport the dust to a dust collecting chamber by suppressing the exfoliation, as shown in Fig. 1, around an inlet portion of the passage and increasing an apparent area of an suction inlet. However, collision flocculation of the particulates contained in the gas flow is not particularly described therein.

In addition, in Japanese Patent Application Laid-Open Publication No. 9-131522 (Patent Document 2), a main object of the mixing element is to mix fluid. Therefore, means for reducing the number of particularly fine particulates of the dust by causing the fine particulates to collide with one another and to be flocculated is not described therein.

In Japanese Patent Application Laid-Open Publication No. 2005-324094 (Patent Document 3), since the particulate flocculation device utilizes the corona discharge in order to electrify the particulates, a high voltage part is provided in a duct. In such a case, when a substance having a size which corresponds to a diameter of the duct and in particular, a threadlike substance is caught in the high voltage part, a short circuit in electrodes may occur, thereby leading to a hazard such as a fire.

Furthermore, in the method for producing the particulate composite body disclosed in Japanese Patent No.

2517877 (Patent Document 4), by using two pipes, fine particulates passing through one of the two pipes are electrified with positive static electricity and fine particulates passing through the other of the two pipes are electrified with negative static electricity, and thereafter, both of the particulates are mixed.

In order to provide the two passages as mentioned above, it is required to branch one pipe having one inlet halfway or to provide one pipe having two inlets. However, when the one pipe is branched halfway, accumulation of the fine particulates at a branched portion easily occurs. When in order to avoid the above-mentioned accumulation, the two inlets are provided, it is required to increase a distance between the two inlets, thereby not only increasing an area occupied by the pipes but also rendering a configuration thereof complicated.

Therefore, objects of the present invention are to provide a dust flocculating duct, a dust flocculating method, a vacuum cleaner in which a simple configuration is realized and which facilitate flocculation of particulates by increasing the number of times when the particulates are caused to collide with one another and allow a reduction in the number of the particulates and an increase in an apparent diameter of each of the particulates.

Means for solving the problems

A dust flocculating duct according to the present invention comprises: a passage for circulating gas therethrough; a wall forming the passage; and a vortex generating part for generating vortices in the gas circulating through the passage. In the dust flocculating duct, the vortex generating part is disposed on an inner surface of the wall so as to impart an uneven velocity distribution to a flow of the gas in the vicinity of the wall.

In the gas flowing into the passage, vortices are formed by the vortex generating part disposed on the wall of the passage so as to impart the uneven velocity distribution to the flow of the gas in the vicinity of the wall. This causes pieces of the dust contained in the gas to collide with one another and to be flocculated, thereby forming dust masses (clusters).

In the present invention, in order to effectively form the vortices, the vortex generating part is formed not only on a portion on which an exfoliation occurs but also a portion on which the exfoliation has disappeared.

By employing the above-described configuration, while realizing a simple configuration, the dust flocculating duct which is capable of increasing the number of times when the particulates of the dust mutually collide with one another, thereby facilitating the flocculation, reducing the number of the particulates, and increasing the apparent diameters of the particulates can be provided.

In the dust flocculating duct according to the present invention, it is preferable that the vortex generating part includes a swirling part and the swirling part has a wall portion projecting from the inner surface of the wall toward an inside of the passage so as to swirl the flow of the gas inside the passage.

The dust circulating through the dust flocculating duct which comprises the vortex generating part including the swirling part sequentially undergoes: a step at which the dust is guided into the passage by the gas flow; a step at which the dust is transported through the passage by the gas flow traveling forward; a step at which the dust circulates along the wall of the passage; a step at which the dust is caused to collide with a wall portion projecting from the wall of the passage; a step at which the dust is caught up in vortical flows generated downstream of the wall portion and circulates; a step at which the dust is caused to collide with the wall of the passage a plurality of times by the vortical flows; a step at which a plurality of pieces of the dust are caused to mutually collide with one another by the vortical flows; a step at which the plurality of pieces of the dust in collision with one another grow to be dust masses (clusters); and a step at which the dust masses are transported through the passage by the gas flow.

By performing the above-described steps, while realizing a simple configuration, the dust flocculating duct which is capable of increasing the number of times when the particulates of the dust mutually collide with one another, thereby facilitating the flocculation, reducing the number of the particulates, and increasing the apparent diameters of the particulates can be provided.

In the dust flocculating duct according to the present invention, it is preferable that the vortex generating part includes a protrusion and the protrusion is formed so as to project from the inner surface of the wall and to make a velocity of the gas passing around the protrusions uneven.

The dust circulating through the dust flocculating duct which comprises the vortex generating part including the protrusions sequentially undergoes: a step at which the dust is guided into the passage by the gas flow; a step at which the dust is transported through the passage by the gas flow traveling forward; a step at which the dust is caught up in vortical flows generated downstream of the protrusions which project from the wall of the passage and circulates; a step at which a plurality of pieces of the dust are caused to mutually collide with one another by the vortical flows; a step at which the plurality of pieces of dust in collision with one another form dust masses (clusters); and a step at which the dust masses are transported through the passage by the gas flow.

By performing the above-described steps, while realizing a simple configuration, the dust flocculating duct which is capable of increasing the number of times when the particulates of the dust mutually collide with one another, thereby facilitating the flocculation, reducing the number of the particulates, and increasing the apparent diameters of the particulates can be provided.

In the dust flocculating duct according to the present invention, it is preferable that a plurality of the protrusions are disposed along a direction of the gas flow in the passage and are disposed such that at least one part of one of the protrusions overlaps another of the protrusions when the protrusions are viewed from an upstream side toward a downstream side of the passage in a perspective manner.

This allows the gas flowing through the passage to easily pass around the protrusions, thereby enabling efficient generation of the vortices.

In the dust flocculating duct according to the present invention, it is preferable that the protrusions are disposed so as to wholly overlap each other when the protrusions are viewed from the upstream side toward the downstream side of the passage in the perspective manner.

By employing the above-described configuration, an area where the gas can circulate, seen when the passage is viewed from the upstream side toward the downstream side in the perspective manner, can be ensured to be large, thereby allowing a reduction in a pressure loss in the passage.

In the dust flocculating duct according to the present invention, it is preferable that the protrusions are disposed so as to partially overlap each other when the protrusions are viewed from the upstream side toward the downstream side of the passage in the perspective manner.

By employing the above-described configuration, the vortex generated from the protrusion located on the upstream side is captured by the protrusion located on the downstream side, thereby forming the vortex. Therefore, an intensity of the vortex can be made higher than that of the vortex formed by a protrusion which singly functions. In other words, owing to a relationship of a disposition of the protrusions located on the upstream side and the downstream side, while an advantage of enhancing the intensity of the vortex, which is obtained if further large protrusions were formed in a singly functioning manner, is ensured, a possibility of dirt clogging occurring in a case where the large protrusions are formed can be decreased and even when a length of the passage is shortened, a dust flocculation effect can be obtained.

In addition, before the intensities of the vortices are attenuated due to influences such as a frictional resistance caused by a viscosity of the gas flowing along the passage and a frictional resistance with a surface of a wall, the vortices generated by the protrusions, which respectively neighbor each other, can be caused to mutually collide with each other, thereby enhancing a probability with which the particulates of dust mutually collide with one another.

In the dust flocculating duct according to the present invention, it is preferable that the protrusions are disposed such that an upstream side end portion of the protrusion located downstream of the flow of the gas is located more upstream than a downstream side end portion of the protrusion located upstream of the flow of the gas.

By employing the above-described configuration, before the intensity of the vortex generated from the protrusion located on the upstream side is attenuated due to influences such as a frictional resistance caused by a viscosity of the gas flowing along the passage and a frictional resistance with a surface of the wall, the vortex generated from the protrusion can collide with the vortex generated from the other protrusion located downstream, thereby allowing effective further enhancement of the probability with which the particulates of dust collide with one another.

Furthermore, as compared with a case where the upstream end portion of the protrusion located on the downstream side of the gas flow is not disposed so as to be located more upstream than the downstream end portion of the protrusion located on the upstream side of the gas flow, a distance between the protrusions can be further shortened, whereby a further large number of protrusions can be formed in the short dust flocculating duct.

In the dust flocculating duct according to the present invention, it is preferable that the wall and/or the vortex generating part are/is formed of a material allowing dust contained in the gas circulating through the passage to be positively or negatively contact-electrified.

This facilitates collision of the dust which has collided with the dust flocculating duct and/or the vortex generating part and been positively or negatively electrified and the dust which has not collided with the dust flocculating duct and/or the vortex generating part. When the former dust and the latter dust collide with each other, dielectric polarization occurs on a surface of the dust which has not collided with the dust flocculating duct and/or the vortex generating part due to an electric charge of the dust which has collided with the dust flocculating duct and/or the vortex generating part and been positively or negatively electrified and a strong bonding force is generated between the former dust and the latter dust due to an electrostatic force. Due to this bonding force, dust masses (clusters) in which the plurality of pieces of dust have been flocculated are generated.

By performing the gas flow control as described above, fine dust is easily flocculated by the collision and the dust masses (clusters) are easily formed.

In the dust flocculating duct according to the present invention, it is preferable that the wall and/or the vortex generating part have/has a first electrification part for positively contact-electrifying dust contained in the gas circulating through the passage and a second electrification part for negatively contact-electrifying the dust contained in the gas circulating through the passage, and the first electrification part and the second electrification part are disposed so as to face each other.

By employing the above-described configuration, when the dust is transported through the passage by the gas flow, the dust contacts the first electrification part for positively contact-electrifying the dust or the second electrification part for negatively contact-electrifying the dust and is positively or negatively electrified, whereby the positively or negatively electrified dust can be caused to form the dust masses (clusters). This causes the positively or negatively electrified dust to mutually adsorb each other by electrostatic action, thereby allowing the masses (clusters) of the dust to be formed.

In the dust flocculating duct according to the present invention, it is preferable that the wall portion is formed of a plurality of wall portions, the passage is formed so as to be divided into a plurality of independent small passages by the plurality of wall portions, and the small passages are formed so as to be skewed along the flow of the gas and to allow the flow of the gas to be swirled.

By employing the above-described configuration, as compared with a case where the passage is not divided into the small passages, an influence of the shearing force which the wall surface exerts on the gas increases, thereby allowing enhancement of a dust flocculating power. In addition, swirling flows formed in the respective small passages collide with one another on downstream sides of end portions of the small passages, and as a result, the particulates caught up in the swirling flows can be caused to efficiently collide with one another.

In the dust flocculating duct according to the present invention, it is preferable that the plurality of small passages communicate with one another in a central portion of the passage.

By employing the above-described configuration, a pressure loss in the passage can be drastically reduced.

In the dust flocculating duct according to the present invention, it is preferable that a skew angle of each of the small passages is small on an upstream side and increases gradually in accordance with an increase in proximity to the downstream side.

By employing the above-described configuration, a swirling force of the gas can be increased.

In the dust flocculating duct according to the present invention, it is preferable that the wall portions are formed of a material allowing dust contained in the gas circulating through the small passages to be positively or negatively contact-electrified.

In a case where the passage is divided into the small passages, as compared with a case where the passage is not divided, a probability with which the particulates collide with the wall portions is increased. The passage is divided into the small passages by the wall portions and the wall portions are made of the material which is capable of positively or negatively contact-electrifying the dust contained in the gas circulating through the small passages, thereby allowing an increase in an electrification amount charged in the particulates and enhancement of a dust flocculation effect.

This facilitates collision of the dust which has collided with the small passages and been positively or negatively electrified and the dust which has not collided with the small passages. When the former dust and the latter dust collide with each other, dielectric polarization occurs on a surface of the dust which has not collided with the small passages due to an electric charge of the dust which has collided with the small passages and been positively or negatively electrified and a strong bonding force is generated between the former dust and the latter dust due to an electrostatic force. Due to this bonding force, dust masses (clusters) in which the plurality of pieces of dust have been flocculated are generated.

In the dust flocculating duct according to the present invention, it is preferable that a first small passage for positively contact-electrifying dust contained in the gas circulating through the passage and a second small passage for negatively contact-electrifying the dust contained in the gas circulating through the passage constitute the plurality of small passages divided by the wall portions and the first small passage and the second small passage are disposed such that the first small passage and the second small passage neighbor each other.

By dividing the passage into the small passages, as compared with a case where the passage is not divided into the small passages, an influence of the shearing force which the wall surface exerts on the gas increases, thereby allowing enhancement of a dust flocculating power. In addition, swirling flows formed in the respective small passages collide with one another on downstream sides of end portions of the small passages, and as a result, the particulates caught up in the swirling flows can be caused to efficiently collide with one another.

By employing the above-described configuration, when the dust is transported by the gas flow through the passage, the dust contacts the first small passage for positively contact-electrifying the dust or the second small passage for negatively contact-electrifying the dust and is positively or negatively electrified, whereby the positively or negatively electrified dust can be caused to form the dust masses (clusters). This causes the positively or negatively electrified dust to adsorb each other by electrostatic action, thereby causing the dust to form the dust masses (clusters).

In the dust flocculating duct according to the present invention, it is preferable that a plurality of the protrusions are disposed.

By employing the above-described configuration, a large number of the vortices are generated inside the passage, thereby allowing a dust flocculation effect to be enhanced.

In the dust flocculating duct according to the present invention, it is preferable that the protrusions have curved shapes so as to form depressions and couples of the protrusions, each of which comprises two protrusions neighboring each other in a direction intersecting a direction of the flow of the gas, are disposed such that two depressions of the two protrusions face each other.

By employing the above-described configuration, the vortices generated on the neighboring protrusions move downstream while swirling in opposite directions. Therefore, in a plane on which the vortices neighbor each other, the gas flows which form these vortices travel in the same direction. Accordingly, the vortices generated on the neighboring protrusions smoothly converge, thereby reducing a frictional resistance caused by a viscosity of the flow. Thus, a pressure loss inside the passage can be reduced.

In the dust flocculating duct according to the present invention, it is preferable that the protrusions change directions of the flow of the gas entering the passage, and directions of the flow of the gas, changed by the two protrusions neighboring each other among the protrusions, are opposite to each other.

As described above, the vortices generated on the neighboring protrusions move downstream while swirling in the opposite directions. Therefore, in the plane on which the vortices neighbor each other, the gas flows which form these vortices travel in the same direction. Accordingly, the vortices generated on the neighboring protrusions smoothly converge, thereby reducing the frictional resistance caused by the viscosity of the flow. Thus, the pressure loss inside the passage can be reduced.

In the dust flocculating duct according to the present invention, it is preferable that an area of a cross section of each of the protrusions in a direction perpendicular to a direction of the flow of the gas is small on an upstream side and large on a downstream side.

By employing the above-described configuration, a foreign substance is hardly caught by the protrusions.

In the dust flocculating duct according to the present invention, it is preferable that the wall is formed of a material allowing the dust contained in the gas circulating through the passage to be positively or negatively contact-electrified.

This facilitates collision of the dust which has collided with the wall of the dust flocculating duct and been positively or negatively electrified and the dust which has not collided with the wall of the dust flocculating duct. When the former dust and the latter dust collide with each other, dielectric polarization occurs on a surface of the dust which has not collided with the wall of the dust flocculating duct due to the electric charge of the dust which has collided with the wall of the dust flocculating duct and been positively or negatively electrified and a strong bonding force is generated between the former dust and the latter dust due to an electrostatic force. Due to this bonding force, the dust masses (clusters) in which the plurality of pieces of dust have been flocculated are generated.

By performing the gas flow control as described above, fine dust is easily flocculated by the collision and the dust masses (clusters) are easily formed.

In the dust flocculating duct according to the present invention, it is preferable that the wall has a first electrification part for positively contact-electrifying the dust contained in the gas circulating through the passage and a second electrification part for negatively contact-electrifying the dust contained in the gas circulating through the passage, and the first electrification part and the second electrification part are disposed so as to face each other.

By employing the above-described configuration, when the dust is transported through the gas passage by the gas flow, the dust contacts the first electrification part for positively contact-electrifying the dust or the second electrification part for negatively contact-electrifying the dust and is positively or negatively electrified, whereby the positively or negatively electrified dust can be caused to form the dust masses (clusters). This causes the positively or negatively electrified dust to mutually adsorb each other by electrostatic action, thereby allowing the masses (clusters) of the dust to be formed.

In the dust flocculating duct according to the present invention, it is preferable that the protrusions are formed of a material allowing the dust contained in the gas circulating through the passage to be positively or negatively contact-electrified.

This facilitates collision of the dust which has collided with the protrusions of the dust flocculating duct and been positively or negatively electrified and the dust which has not collided with the protrusions of the dust flocculating duct. When the former dust and the latter dust collide with each other, dielectric polarization occurs on a surface of the dust which has not collided with the protrusions of the dust flocculating duct due to an electric charge of the dust which has collided with the protrusions of the dust flocculating duct and been positively or negatively electrified and a strong bonding force is generated between the former dust and the latter dust due to an electrostatic force. Due to this bonding force, dust masses (clusters) in which a plurality of pieces of dust have been flocculated are generated.

By performing the gas flow control as described above, fine dust is easily flocculated by the collision and the dust masses (clusters) are easily formed.

In the dust flocculating duct according to the present invention, it is preferable that a first protrusion for positively contact-electrifying the dust contained in the gas circulating through the passage and a second protrusion for negatively contact-electrifying the dust contained in the gas circulating through the passage constitute the protrusions, and the first protrusion and the second protrusion are disposed so as to face each other.

By employing the above-described configuration, when the dust is transported through the passage by the gas flow, the dust contacts the first protrusion for positively contact-electrifying the dust or the second protrusion for negatively contact-electrifying the dust and is positively or negatively electrified, whereby the positively or negatively electrified dust can be caused to form the dust mass (cluster). This causes the positively or negatively electrified dust to mutually adsorb each other by electrostatic action, thereby allowing the mass (cluster) of the dust to be formed.

In the dust flocculating duct according to the present invention, it is preferable that the protrusions are formed of a same material as the material forming the wall.

This allows a flocculation effect to be enhanced since the particulates in the dust contained the gas circulating through the inside of the passage are electrified by the collision with either of the wall or the protrusions.

In the dust flocculating duct according to the present invention, it is preferable that a height of the vortex generating part from the wall is less than or equal to one eighth of a representative length of a cross section of the passage, the cross section being perpendicular to a direction of the gas flow.

By employing the above-described configuration, a foreign substance is hardly caught by the protrusions.

In the dust flocculating duct according to the present invention, it is preferable that a height of the vortex generating part from the wall is less than or equal to a quarter of a representative length of a cross section of the passage, the cross section being perpendicular to a direction of the gas flow, and a round portion is formed on an edge face of the vortex generating part.

By employing the above-described configuration, a foreign substance is hardly caught by the protrusions.

In the dust flocculating duct according to the present invention, it is preferable that the vortex generating part is disposed in a position with no contracted flow in the passage.

By employing the above-described configuration, the vortices can be effectively generated.

In the dust flocculating duct according to the present invention, it is preferable that the vortex generating part is disposed in a position four times as distant from an inlet of the passage as a representative length of a cross section of the passage.

By employing the above-described configuration, the vortex generating part can be disposed in the position with no contracted flow. Thus, the vortices can be effectively generated by the vortex generating part.

In the dust flocculating duct according to the present invention, it is preferable that a round portion is formed at an edge face of an inlet of the passage and the vortex generating part is disposed in the vicinity of the inlet of the passage.

Since the contracted flow generated inside the passage is made small by forming the round portion at the edge face of the inlet of the passage, even when the vortex generating part is disposed in the vicinity of the inlet, a vortex generating effect is hardly subjected to an influence of the contracted flow.

In the dust flocculating duct according to the present invention, it is preferable that when a representative length of a cross section perpendicular to a direction of the gas flow is supposed to be D, a radius of the round portion formed at the edge face of the inlet of the passage is supposed to be R, a ratio of R to D (R/D) is supposed to be $\beta$, a distance from the inlet of the passage to the vortex generating part is X, and a condition $0<\beta\leqq1/4$ is satisfied, X is a value expressed by $(70\beta^2-33\beta+4)D$.

By making the setting as described above, the vortex generating part can be disposed in a region other than a region where the contracted flow is generated inside the passage.

A vacuum cleaner according to the present invention comprises: an electric blower; a gas duct communicating from a suction inlet to the electric blower; and a dust collecting unit. In the vacuum cleaner, dust is sucked from the suction inlet by a gas flow generated by the electric blower and the dust passing through the gas duct is collected into the dust collecting unit. In the vacuum cleaner, it is preferable that the gas duct has any of the above-described dust flocculating ducts.

By employing the above-described configuration, the sucked dust is caused to be flocculated in the gas duct of the vacuum cleaner, thereby causing the dust to form dust masses (clusters). These dust masses are caused to appropriately grow, thereby increasing a mass (weight) of each of the dust masses and causing the clusters to grow. The mass (weight) of each of the dust masses is increased, whereby, for example, in a cyclone vacuum cleaner, the dust masses can be collected through centrifugal separation. In addition, in a filter-type vacuum cleaner, since each of sizes of the dust masses can be made larger than a mesh size of a filter, the dust can be collected by a filter having a large mesh size. In each case, since a pressure loss in suction gas hardly occurs, a dust suction power (power) of the vacuum cleaner main body is hardly reduced.

In a dust flocculating method according to one aspect of the present invention, when dust is transported through a passage by a gas flow, dust masses (clusters) are formed through generating vortices in the gas flow.

Thus, the dust flocculating method in which a simple configuration is realized and which facilitates flocculation of particulates by increasing the number of times when the particulates are caused to collide with one another and allows a reduction in the number of the particulates and an increase in an apparent diameter of each of the particulates can be provided.

In a dust flocculating method according to another aspect of the present invention, when dust is transported through a passage by a gas flow, vortices are generated in a gas flow along a wall surface of the passage.

Thus, the dust flocculating method in which a simple configuration is realized and which facilitates flocculation of particulates by increasing the number of times when the particulates are caused to collide with one another and allows a reduction in the number of the particulates and an increase in an apparent diameter of each of the particulates can be provided.

A dust flocculating method according to further another aspect of the present invention comprises the steps of guiding dust into a passage by a gas flow; transporting the dust through an inside of the passage by the gas flow traveling forward; causing the dust to be caught up in a vortical flow generated downstream of a protrusion projecting from a wall of the passage and to circulate; causing a plurality of particulates of the dust to mutually collide with one another by the vortical flows; causing the plurality of particulates of dust in collision with one another to form dust masses (clusters); and transporting the dust masses through the inside of the passage by the gas flow.

Thus, the dust flocculating method in which a simple configuration is realized and which facilitates flocculation of particulates by increasing the number of times when the particulates are caused to collide with one another and allows a reduction in the number of the particulates and an increase in an apparent diameter of each of the particulates can be provided.

A dust flocculating method according to still another aspect comprises the steps of: guiding dust into a passage by a gas flow; transporting the dust through an inside of the passage by the gas flow traveling forward; circulating the dust along a surface of a wall of the passage; causing the dust to collide with a protrusion projecting from the wall of the passage; causing the dust to be caught up in a vortical flow generated downstream of the protrusions and to circulate; causing the dust to collide with the surface of the wall of the passage by the vortical flow a plurality of times; causing a plurality of pieces of the dust to collide with one another by the vortical flow; causing the plurality of pieces of the dust in collision with one another to form dust masses (clusters); and transporting the dust masses through the inside of the passage by the gas flow.

Thus, the dust flocculating method in which a simple configuration is realized and which facilitates flocculation of particulates by increasing the number of times when the particulates are caused to collide with one another and allows a reduction in the number of the particulates and an increase in an apparent diameter of each of the particulates can be provided.

In the dust flocculating method according to the present invention, it is preferable that when the dust is transported through the inside of the passage by the gas flow, gas flow control is performed so as to electrify the dust by causing the dust to collide with the surface of the wall and/or the protrusion and thereafter, so as to cause the particulates of the dust to collide with one another; and a period of causing a plurality of pieces of the dust in collision with one another to form dust masses (clusters) is provided.

Thus, the dust flocculating method in which a simple configuration is realized and which facilitates flocculation of particulates by increasing the number of times when the particulates are caused to collide with one another and allows a reduction in the number of the particulates and an increase in an apparent diameter of each of the particulates can be provided.

In the dust flocculating method according to the present invention, it is preferable that when the dust is transported through the inside of the passage by the gas flow, gas flow control is performed so as to cause positively electrified first dust mass and negatively electrified second dust mass to collide with each other; and a period of bonding the first dust mass and the second dust mass in collision with each other due to an electrostatic force and of forming further large dust masses (large clusters) is provided.

By performing the gas flow control as described above, collision of the first dust mass which has been positively electrified as a whole and the second dust mass which has been negatively electrified as a whole is facilitated.

Upon the collision of the first dust mass and the second dust mass, due to a strong electrostatic force generated from a positive electric charge which the former dust mass has and a negative electric charge which the latter dust mass has, a further strong bonding force is generated between the former dust mass and the latter dust mass. Due to this bonding force, a large dust mass in which the plurality of dust masses have been further flocculated is generated.

By performing the gas flow control as described above, the flocculation of fine dust, which is caused by the collision, is repeated, thereby forming large dust masses (large clusters).

Thus, the positively or negatively electrified dust can be caused to form the dust masses (clusters). This causes the positively or negatively electrified dust to mutually adsorb each other by electrostatic action, thereby allowing the masses (clusters) of the dust to be formed.

A dust flocculating duct according to the present invention comprises: a passage for circulating gas therethrough; a wall forming the passage; a vortex generating part for generating vortices in the gas circulating through the passage; and an electrification part for positively and/or negatively electrifying dust contained in the gas circulating through the passage. The electrification part includes electrodes connected to power sources, and the vortex generating part is disposed on an inner surface of the wall so as to impart an uneven velocity distribution to the gas in the vicinity of the wall.

In the gas flowing into the passage, the vortices are formed by the vortex generating part disposed on the wall of the passage so as to provide the gas flow in the vicinity of the wall with the uneven velocity distribution. This causes pieces of the dust contained in the gas to collide with one another and to be flocculated, thereby forming the dust masses (clusters).

In the present invention, in order to effectively form the vortices, the vortex generating part is formed not only on a portion on which exfoliation occurs but also a portion on which the exfoliation has disappeared.

In addition, when the dust is transported through the passage by the gas flow, the dust is electrified by the electrification part for positively or negatively electrifying the dust and the positively or negatively electrified dust can be caused to form the dust masses (clusters). This causes the positively or negatively electrified dust to adsorb each other by electrostatic action, thereby causing the dust to form the dust masses (clusters).

Thus, the dust flocculating duct which has a simple configuration, is capable of facilitating the flocculation by increasing the number of times when the particulates in the dust collide with one another, of decreasing the number of particulates, and of increasing apparent diameters of the particulates can be provided.

In the dust flocculating duct according to the present invention, it is preferable that the electrification part is disposed on an upstream side of the passage and the vortex generating part is disposed on a downstream side of the passage.

Thus, the dust masses (clusters) can be efficiently formed.

In the dust flocculating duct according to the present invention, it is preferable that the vortex generating part includes a swirling part and the swirling part has a wall portion projecting from the inner surface of the wall toward an inside of the passage so as to swirl a flow of the gas in the passage.

The dust circulating through the dust flocculating duct comprising the vortex generating part including the swirling part sequentially undergoes: a step of guiding dust into a passage by a gas flow; a step of transporting the dust through an inside of the passage by the gas flow traveling forward; a step of circulating the dust along a wall of the passage; a step of causing the dust to collide with wall portions projecting from the wall of the passage; a step of causing the dust to be caught up in vortical flows generated downstream of the wall portions and to circulate; a step of causing the dust to collide with the wall of the passage by the vortical flows a plurality of times; a step of causing a plurality of pieces of the dust to collide with one another by the vortical flows; a step of causing the plurality of pieces of the dust in collision with one another to form dust masses (clusters); and a step of transporting the dust masses through the inside of the passage by the gas flow.

By performing the above-described steps, while realizing a simple configuration, the dust flocculating duct which is capable of increasing the number of times when the particulates of the dust mutually collide with one another, thereby facilitating the flocculation, reducing the number of the particulates, and increasing the apparent diameters of the particulates can be provided.

In the dust flocculating duct according to the present invention, it is preferable that the vortex generating part includes a protrusion and the protrusion is formed so as to project from the inner surface of the wall and to make the velocity of the gas passing around the protrusion uneven.

The dust circulating through the dust flocculating duct comprising the vortex generating part including the protrusions sequentially undergoes: a step of guiding dust into a passage by a gas flow; a step of transporting the dust through an inside of the passage by the gas flow traveling forward; a step of causing the dust to be caught up in vortical flows generated downstream of the protrusions projecting from the wall of the passage and to circulate; a step of causing a plurality of pieces of the dust to collide with one another by vortical flows; a step of causing the plurality of pieces of the dust in collision with one another to form dust masses (clusters); and a step of transporting the dust masses through the inside of the passage by the gas flow.

Thus, the dust flocculating duct which has a simple configuration, is capable of facilitating the flocculation by increasing the number of times when the particulates in the dust collide with one another, of decreasing the number of particulates, and of increasing apparent diameters of the particulates can be provided.

In the dust flocculating duct according to the present invention, it is preferable that a plurality of the protrusions are disposed along a direction of a gas flow in the passage and the protrusions are disposed so as to partially overlap each other when the protrusions are viewed from an upstream side toward a downstream side of the passage in a perspective manner.

This allows the gas flowing through the passage to easily pass around the protrusions, thereby enabling efficient generation of the vortices.

A vacuum cleaner according to the present invention comprises: an electric blower; a gas duct communicating from a suction inlet to the electric blower; and a dust collecting unit. In the vacuum cleaner, dust is sucked from the suction inlet by a gas flow generated by the electric blower and the dust passing through the gas duct is collected into the dust collecting unit. In the vacuum cleaner, it is preferable that the gas duct has any of the above-described dust flocculating ducts.

By employing the above-described configuration, the sucked dust is caused to be flocculated in the gas duct of the vacuum cleaner, thereby causing the dust to form dust masses (clusters). These dust masses are caused to appropriately grow, thereby increasing a mass (weight) of each of the dust masses and causing the clusters to grow. The mass (weight) of each of the dust masses is increased, whereby, for example, in a cyclone vacuum cleaner, the dust masses can be collected through centrifugal separation. In addition, in a filter-type vacuum cleaner, since each of sizes of the dust masses can be made larger than a mesh size of a filter, the dust can be collected by a filter having a large mesh size. In each case, since a pressure loss in suction gas hardly occurs, a dust suction power (power) of the vacuum cleaner main body is hardly reduced.

A dust flocculating duct according to the present invention comprises: a passage for circulating gas containing dust therethrough; and a frictional electrification passage part for electrifying the dust flowing through the passage and for promoting formation of dust masses (clusters) by causing the electrified dust and other dust to collide with each other. In the dust flocculating duct, the frictional electrification passage part has a wall forming the frictional electrification passage part; a protrusion having a projected top edge portion is disposed on an inner surface of the wall; at the top edge portion of the protrusion, a round portion is formed; and a radius of the round portion is greater than or equal to 0.2 mm.

By employing the above-described configuration, even in a case where the the frictional electrification passage part is electrically charged, the concentration of the electric field on the top edge portion of the protrusion of the frictional electrification passage part can be prevented. Thus, since the electric discharge from the top edge portion can be prevented, it can be prevented that the top edge portion is lost. Accordingly, the failure that the height of the protrusion is gradually impaired, the dust flocculation effect of the protrusion is impaired, and the performance of the dust flocculating duct is gradually deteriorated can be obviated.

In addition, in a case where a molded component made of a resin is used as the protrusion, in order to easily mold such a component, it is only required to set the curvature radius of the top edge portion to be greater than or equal to 0.2 mm. Therefore, a cost of manufacturing the dust flocculating duct comprising the frictional electrification passage part can be reduced.

By employing the above-described configuration, the dust flocculating duct which has a simple configuration and is capable of facilitating the flocculation by increasing the number of times when the particulates in the dust collide with one another, of decreasing the number of particulates, and of increasing apparent diameters of the particulates can be provided.

In the dust flocculating duct according to the present invention, it is preferable that when a length of the shortest part of a diameter of a cross section perpendicular to a direction of a gas flow in the passage is supposed to be D and the radius of the round portion formed on an edge face at the top edge portion is supposed to be R, a condition $R \leqq 0.25D$ is satisfied.

This allows easy collision of the protrusion and dust transported by the gas flow which circulates through the dust flocculating duct.

In the dust flocculating duct according to the present invention, it is preferable that when a length of the shortest part of a diameter of a cross section perpendicular to a direction of a gas flow in the passage is supposed to be D and the radius of the round portion formed on an edge face at the top edge portion is supposed to be R, a condition $R \leqq 0.05D$ is satisfied.

Since this allows efficient generation of a vortex on a downstream side of the protrusion, collision of the dust transported by the gas flow, which circulates through the dust flocculating duct, and a wall surface of the frictional electrification passage part can be further promoted, thereby allowing an increase in an electric charge amount in the dust and further enhancement of a dust flocculation effect attained by the dust flocculating duct.

In the dust flocculating duct according to the present invention, it is preferable that the frictional electrification passage part is formed of a material allowing easy electrification of the dust contained in the gas circulating through the passage.

This allows the dust to be efficiently electrified, whereby pieces of the dust can be flocculated so as to be clusters and dust masses can be further efficiently formed. Accordingly, a dust flocculation effect attained by the dust flocculating duct can be further enhanced.

In the dust flocculating duct according to the present invention, it is preferable that the frictional electrification passage part has a first frictional electrification part having a contact potential difference higher than a contact potential difference of predetermined dust circulating through the passage and a second frictional electrification part having a contact potential difference lower than the contact potential difference of the predetermined dust circulating through the passage, and the first frictional electrification part and the second frictional electrification part are disposed so as to face each other.

This allows the dust to be efficiently electrified, also positively electrified dust and negatively electrified dust to be further flocculated due to the Coulomb force, and further large dust masses to be efficiently formed. Accordingly, a dust flocculation effect attained by the dust flocculating duct can be further increasingly enhanced.

EFFECT OF THE INVENTION

As described above, according to the present invention, a dust flocculating duct, a dust flocculating method, and a vacuum cleaner in which a simple configuration is realized and which facilitate flocculation of particulates in dust by increasing the number of times when the particulates are caused to collide with one another and allow a reduction in the number of the particulates and an increase in an apparent diameter of each of the particulates can be provided.

BRIEF DESCRIPTION OF THE DRAWINGS

Fig. 1 is a schematic diagram illustrating a gas flow inside a cylindrical pipe.

Fig. 2 is a schematic diagram illustrating a manner in which particulates are flocculated in a case where a gas flow inside a passage has a laminar flow velocity distribution.

Fig. 3 is a schematic diagram illustrating an influence which a velocity gradient exerts on particulates having large diameters in a case where the gas flow inside the passage has the laminar flow velocity distribution.

Fig. 4 is a schematic diagram illustrating an influence which the velocity gradient exerts on particulates having small diameters in a case where the gas flow inside the passage has the laminar flow velocity distribution.

Fig. 5 is a diagram illustrating a dust flocculating duct of an embodiment 1-1 according to the present invention.

Fig. 6 shows a front view of the dust flocculating duct of the embodiment 1-1 according to the present invention.

Fig. 7 shows a cross-sectional side view of the dust flocculating duct of the embodiment 1-1 according to the present invention.

Fig. 8 is a schematic diagram illustrating a view of vortices generated by a swirling part of the embodiment 1-1 according to the present invention. Fig. 8 (A) shows a front view of a passage and Fig. 8 (B) shows a side view of the passage.

Fig. 9 shows a perspective view illustrating an important part of a dust flocculating duct of an embodiment 1-2 according to the present invention.

Fig. 10 shows a front view of the dust flocculating duct of the embodiment 1-2 according to the present invention.

Fig. 11 shows a cross-sectional side view of the dust flocculating duct of the embodiment 1-2 according to the present invention.

Fig. 12 shows a perspective view illustrating an important of a dust flocculating duct of an embodiment 1-3 according to the present invention.

Fig. 13 shows a front view illustrating the important part of the dust flocculating duct of the embodiment 1-3 according to the present invention.

Fig. 14 is a schematic diagram illustrating a view of vortices generated by swirling parts of the embodiment 1-3 according to the present invention. Fig. 14 (A) shows a front view of a passage and Fig. 14 (B) shows a side view of the passage.

Fig. 15 shows a perspective view illustrating an important part of a dust flocculating duct of an embodiment 1-4 according to the present invention.

Fig. 16 shows a front view illustrating the important part of the dust flocculating duct of the embodiment 1-4 according to the present invention.

Fig. 17 shows a cross-sectional side view illustrating the dust flocculating duct of the embodiment 1-4 according to the present invention.

Fig. 18 is a schematic diagram illustrating a gas flow around a protrusion in the dust flocculating duct of the embodiment 1-4.

Fig. 19 is a schematic diagram illustrating vortices generated around the protrusion.

Fig. 20 is a schematic diagram illustrating a view of the vortices generated by the protrusion in the embodiment 1-4 according to the present invention. Fig. 20 (A) shows a front view in which a passage is viewed from a front side and Fig. 20 (B) shows a side view in which the passage is viewed from a lateral side.

Fig. 21 shows a perspective view illustrating an important part of a dust flocculating duct of an embodiment 1-5 according to the present invention.

Fig. 22 shows a front view illustrating the important part of the dust flocculating duct of the embodiment 1-5.

Fig. 23 shows a cross-sectional side view illustrating the dust flocculating duct of the embodiment 1-5.

Fig. 24 is a schematic diagram illustrating a gas flow around a protrusion in the dust flocculating duct of the embodiment 1-5.

Fig. 25 shows a perspective view illustrating an important part of a dust flocculating duct of an embodiment 1-6 according to the present invention.

Fig. 26 shows a front view illustrating the important part of the dust flocculating duct of the embodiment 1-6.

Fig. 27 shows a cross-sectional side view illustrating the dust flocculating duct of the embodiment 1-6.

Fig. 28 is a schematic diagram illustrating a view of vortices generated around protrusions in the dust flocculating duct of the embodiment 1-6.

Fig. 29 shows a perspective view in which an important part of a dust flocculating duct of an embodiment 1-7 according to the present invention is viewed in a perspective manner.

Fig. 30 shows a front view illustrating the important part of the dust flocculating duct of the embodiment 1-7.

Fig. 31 is a diagram illustrating a protrusion in the embodiment 1-7. Fig. 31 (A) shows a bottom view of the protrusion, Fig. 31 (B) shows a side view of the protrusion, and Fig. 31 (C) shows a front view of the protrusion.

Fig. 32 is a schematic diagram illustrating a gas flow around the protrusion of the embodiment 1-7.

Fig. 33 is a schematic diagram illustrating a view of vortices generated by the protrusions in the embodiment 1-7 according to the present invention.

Fig. 34 shows a perspective view in which an important part of a dust flocculating duct of an embodiment 1-8 according to the present invention is viewed in a perspective manner.

Fig. 35 shows a front view illustrating the important part of the dust flocculating duct of the embodiment 1-8.

Fig. 36 shows a cross-sectional side view of the dust flocculating duct of the embodiment 1-8.

Fig. 37 shows a top view (A) and a lateral view (B) of a shape of a protrusion in the embodiment 1-8.

Fig. 38 shows a side view (A) of shapes of parts of the protrusions of the embodiment 1-8 and a view (B) of the protrusions which are viewed from an upstream side toward a downstream side of a gas flow in a perspective manner.

Fig. 39 shows a perspective view in which an important part of a dust flocculating duct of an embodiment 1-9 is viewed in a perspective manner.

Fig. 40 shows a front view illustrating the important part of the dust flocculating duct of the embodiment 1-9.

Fig. 41 shows a cross-sectional side view illustrating the important part of the dust flocculating duct of the embodiment 1-9.

Fig. 42 shows a perspective view in which an important part of a dust flocculating duct of an embodiment 1-10 is viewed in a perspective manner.

Fig. 43 shows a front view illustrating the important part of the dust flocculating duct of the embodiment 1-10.

Fig. 44 shows a cross-sectional side view of the dust flocculating duct of the embodiment 1-10.

Fig. 45 is a schematic diagram illustrating another arrangement of protrusions in the embodiment 1-10.

Fig. 46 is a schematic diagram illustrating further another arrangement of the protrusions in the embodiment 1-10.

Fig. 47 is a schematic diagram illustrating still another arrangement of the protrusions in the embodiment 1-10.

Fig. 48 is a schematic diagram illustrating yet another arrangement of the protrusions in the embodiment 1-10.

Fig. 49 is a schematic diagram illustrating the other arrangement of the protrusions in the embodiment 1-10.

Fig. 50 is a diagram illustrating an arrangement of neighboring protrusions in the dust flocculating duct of the embodiment 1-10.

Fig. 51 shows a perspective view in which an important part of a dust flocculating duct of an embodiment 1-11 is viewed in a perspective manner.

Fig. 52 shows a front view illustrating the important part of the dust flocculating duct of the embodiment 1-11.

Fig. 53 shows a cross-sectional side view of the dust flocculating duct of the embodiment 1-11.

Fig. 54 is a diagram illustrating a whole of a vacuum cleaner which comprises a dust flocculating duct according to the present invention.

Fig. 55 is an explanatory diagram illustrating a configuration of a main body of the vacuum cleaner which comprises the dust flocculating duct according to the present invention.

Fig. 56 is a schematic explanatory diagram illustrating a view of a gas flow in the vicinity of an inlet of a passage.

Fig. 57 is a schematic explanatory diagram illustrating a view of the gas flow in the vicinity of the inlet of the passage whose portion of an edge face of the inlet is formed so as to be round.

Fig. 58 is a schematic diagram illustrating a whole of a vacuum cleaner which comprises a dust flocculating duct according to the present invention.

Fig. 59 is a diagram illustrating a dust flocculating duct as one embodiment according to the present invention.

Fig. 60 is a diagram illustrating shapes of protrusions provided in a frictional electrification passage part as an embodiment 3-1-1 according to the present invention.

Fig. 61 is a graph showing a relationship between a curvature radius (mm) of each of tips of the protrusions and an intensity (V/mm) of an electric field concentrated on the tips of the protrusions in a case where a surface potential of an inner wall of the dust flocculating duct is the same.

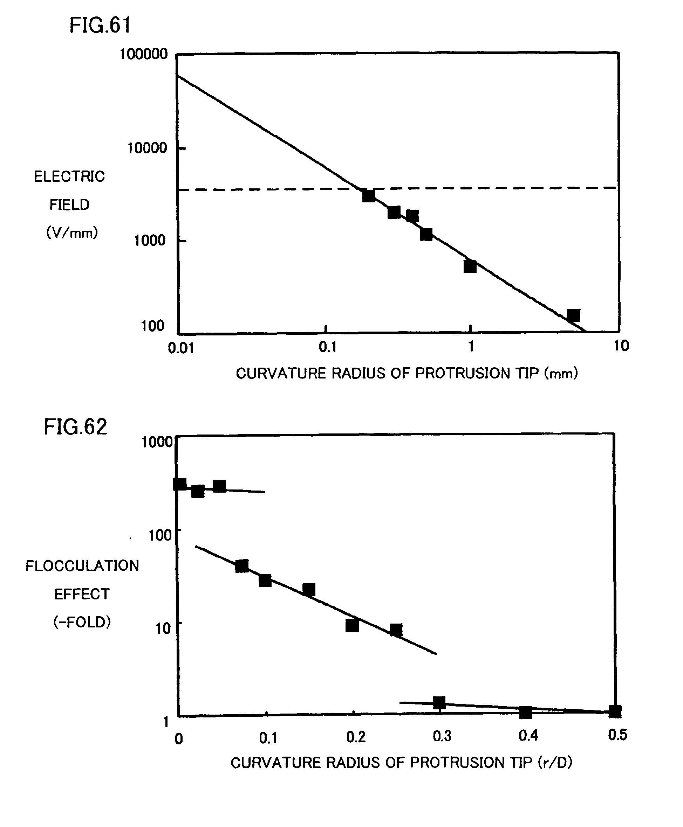

Fig. 62 is a graph showing a relationship between a dimensionless curvature radius (r/D) obtained by rendering, as being dimensionless, a curvature radius r (mm) at each of the tips of the protrusions by a diameter D (mm) of a pipe in a case where a velocity of a wind circulating through the dust flocculating duct is the same; and a dimensionless flocculation effect (-fold) obtained by dividing a flocculation effect attained by a dust flocculating duct comprising the protrusions, each of which has the dimensionless curvature radius of r/D, on the inner wall of the dust flocculating duct, by a flocculation effect attained by a dust flocculating duct having no protrusions on the inner wall of the dust flocculating duct.

Fig. 63 shows a perspective view in which an important part of a dust flocculating duct of an embodiment 3-1-A according to the present invention, in which protrusions each having another shape are disposed, is viewed in a perspective manner.

Fig. 64 shows a front view illustrating the important part of the dust flocculating duct of the embodiment 3-1-A according to the present invention, in which the protrusions each having the another shape are disposed.

Fig. 65 shows a cross-sectional side view illustrating the dust flocculating duct of the embodiment 3-1-A according to the present invention, in which the protrusions each having the another shape are disposed.

Fig. 66 is a diagram showing a distance between protrusions, measured in a direction perpendicular to a core axis in an embodiment 3-2-3.

Fig. 67 shows a cross-sectional front view of an important part of a dust flocculating duct of an embodiment 3-3-1.

Fig. 68 shows a cross-sectional front view of the important part of the dust flocculating duct of the embodiment 3-3-1.

Fig. 69 shows a cross-sectional front view of the important part of the dust flocculating duct of the embodiment 3-3-1.

Fig. 70 shows a cross-sectional front view of an important part of a dust flocculating duct of an embodiment 3-3-3.

Fig. 71 shows a cross-sectional front view of the important part of the dust flocculating duct of the embodiment 3-3-3.

Fig. 72 shows a cross-sectional view of an important part of a dust flocculating duct of an embodiment 3-3-4.

Fig. 73 shows a cross-sectional view of an important part of a dust flocculating duct having no protrusions provided on a wall surface of a bent passage thereof.

Fig. 74 shows a cross-sectional front view of an important part of a dust flocculating duct of an embodiment 3-3-5.

Fig. 75 shows a cross-sectional front view of an important part of a dust flocculating duct of an embodiment 3-3-6.

Fig. 76 is a schematic diagram illustrating a whole of a conventional vacuum cleaner, as a comparison machine, which comprises a cyclone dust collecting chamber.

Fig. 77 is a schematic diagram illustrating a whole of a vacuum cleaner which comprises a dust flocculating duct according to the present invention.

Fig. 78 is a graph showing relationships between sizes and the numbers of particulates contained in an exhaust air, obtained by examining the conventional vacuum cleaner which comprises the cyclone dust collecting chamber and the vacuum cleaner which comprises the cyclone dust collecting chamber and the dust flocculating duct according to the present invention.

Fig. 79 is a graph showing relationships between reduction ratios (%) of the particulates contained in exhaust airs and pressure losses (Pa), obtained by examining the conventional vacuum cleaner which comprises the cyclone dust collecting chamber and the vacuum cleaner which comprises the cyclone dust collecting chamber and the dust flocculating duct according to the present invention.

Fig. 80 is a graph showing relationships between sizes and the numbers of particulates contained in an exhaust air, obtained by examining the conventional vacuum cleaner which comprises the cyclone dust collecting chamber and the vacuum cleaner which comprises the cyclone dust collecting chamber and the dust flocculating duct according to the present invention.

Fig. 81 is a graph showing relationships between sizes and the numbers of particulates contained in an exhaust air, obtained by examining the conventional vacuum cleaner which comprises the cyclone dust collecting chamber and the vacuum cleaner which comprises the cyclone dust collecting chamber and the dust flocculating duct according to the present invention.

Fig. 82 is a graph showing relationships between reduction ratios (%) of the particulates contained in the exhaust airs and pressure losses (Pa), obtained by examining the conventional vacuum cleaner which comprises the cyclone dust collecting chamber and the vacuum cleaner which comprises the cyclone dust collecting chamber and the dust flocculating duct according to the present invention.

Fig. 83 is a graph showing relationships between sizes and the numbers of particulates contained in an exhaust air, obtained by examining the conventional vacuum cleaner which comprises the cyclone dust collecting chamber and the vacuum cleaner which comprises the cyclone dust collecting chamber and the dust flocculating duct according to the present invention.

EXPLANATION OF REFERENCE NUMERALS

10, 20, 30, 40, 50, 60, 70, 80, 90, 100, 110, 120, 200: dust flocculating duct, 11, 21, 31, 41, 51, 61, 71, 81, 91, 101, 111, 121, 201: passage, 12, 22, 32, 42, 52, 62, 72, 82, 92, 102, 112, 122, 202: wall, 13, 23, 33: swirling part, 13a, 13b, 13c, 13d, 23a, 23b, 23c, 23d: plane, 43, 53, 63a, 63b, 63c, 63d, 73a, 73b, 83, 93, 103, 113, 123, 203: protrusions, 94: round portion, 210: electrification part, 211a: first electrification part, 211b: second electrification part, 212: power source, 501: suction inlet, 502:extension pipe, 561: dust collecting unit, 567: electric blower.

BEST MODE FOR CARRYING OUT THE INVENTION

Hereinafter, an embodiment of the present invention will be described with reference to drawings.

Fig. 2 is a schematic diagram illustrating a manner in which particulates are flocculated in a case where a gas flow inside a passage has a laminar flow velocity distribution.

As shown in Fig. 2, the gas P flows into the passage 1 in a direction indicated by an arrow. When the gas flow Q inside the passage 1 is laminar, a variation in the velocity of the gas flow Q occurs due to an influence of friction of the gas with an inner surface of the wall 2 of the passage 1 and an influence of a viscosity of gas passing through the passage 1, whereby a velocity gradient 4 among boundary layers develops. Dust 5a which flows into the passage 1 together with the gas P and dust 5b which flows into the passage 1 behind the dust 5a approaches each other due to differences of the velocities of the gas flow Q as indicated by a long dashed double-short dashed line and the particulates mutually contact one another and are flocculated.

In a case where a flow inside the passage 1 is a turbulent flow, not only because a velocity distribution of the turbulent flow is uneven but also because follow-up properties of the particulates, resulting when the particulates circulate in accordance with a temporal variation in the velocity of the turbulent flow, vary depending on an inertial force of each of the particulates, the particulates are flocculated. It is considered that the uneven velocity distribution of the turbulent flow occurs when a phenomenon similar to in the case of the laminar flow partially occurs.

In each case, since in a mechanism of increasing a probability with which the particulates in the dust mutually contact one another, shearing of the flow is dominant, the mutual flocculation of the particulates can be promoted by actively providing the gas flow with the velocity distribution.

However, when the flow in the passage is the laminar flow, a magnitude and a direction of a force which the velocity distribution exerts on the particulates vary depending on diameters of the particulates. Therefore, the particulates having various sizes are not evenly distributed inside the passage and a bias in the distribution occurs in accordance with the diameters of the particulates. The above-mentioned particulate diameter distribution occurring inside the passage exerts an influence on the probability with which the particulates mutually contact one another. This will be described hereinafter.

Fig. 3 is a schematic diagram illustrating an influence which a velocity gradient exerts on particulates having large diameters in a case where the gas flow inside the passage has the laminar flow velocity distribution.

As shown in Fig. 3, since a velocity of the gas flow Q is high around a central portion of the passage 1, drag occurring on a particulate 5 is also large. On the other hand, since the velocity of the gas flow Q decreases in accordance with a decrease in a distance to the wall 2 of the passage 1, drag occurring on the particulate 5 is also small. When the diameter of the particulate 5 in the dust, which flows inside the passage 1 together with the gas P, is large, the particulate 5 is strongly influenced by the velocity gradient 4 generated inside the passage 1. In other words, since drag of the particulate 5 which acts on the side of the central portion of the passage 1 is large and drag of the particulate 5 which acts on the side of the wall 2 of the passage 1 is small, a rotative force applied from the central portion to the wall side of the passage 1 is exerted on the particulate 5 due to a difference between the drags occurring on the central portion side and the wall side. As a result, the particulate 5 moves in a direction V, namely, a direction toward the wall 2 of the passage 1. As a result, the particulates having the large diameters are collected on the side of the wall 2 of the passage 1.

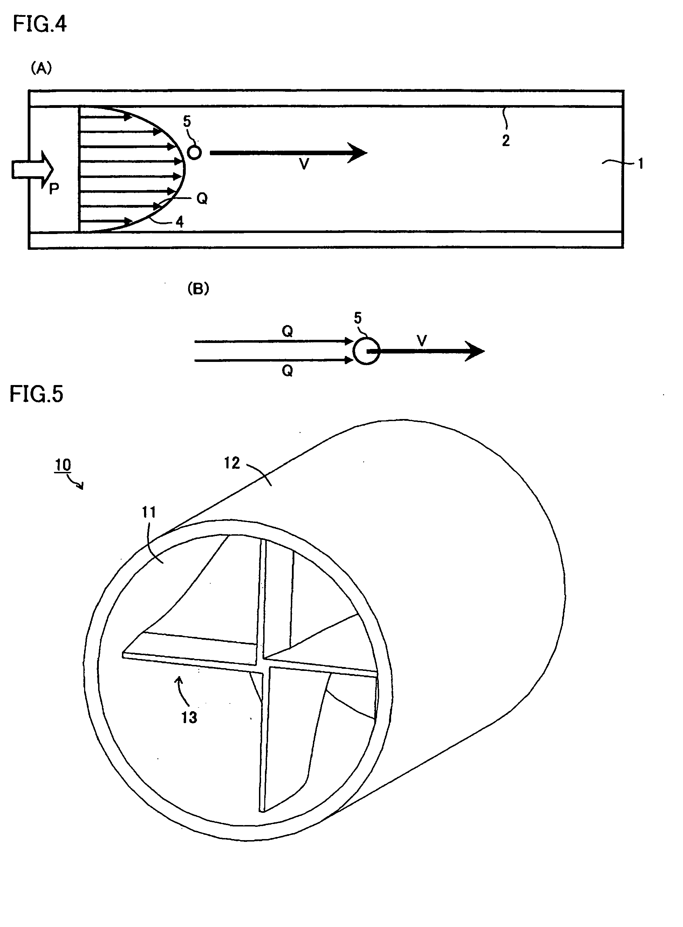

Fig. 4 is a schematic diagram illustrating an influence which the velocity gradient exerts on particulates having small diameters in a case where the gas flow inside the passage has the laminar flow velocity distribution.

As shown in Fig. 4, when a diameter of the particulate 5 is small, there is only a little difference among velocities of the gas flow Q surrounding the particulate 5. Therefore, an influence of the velocity gradient 4 generated inside the passage 1, which is exerted on the particulate 5, is weak, and the particulate 5 moves straight forward in a direction V without largely changing the direction in which the particulate 5 moves forward when the particulate enters the passage 1. Therefore, the particulates having relatively small diameters are collected in the central portion of the passage 1.

As a result, a probability with which the particulates having the small diameters in the central portion of the passage 1 mutually contact one another is reduced. Further, the particulates respectively having the diameters which are different from each other are away from each other, that is, the particulates having the small diameters are in the central portion of the passage 1 and the particulates having the large diameters are around the wall 2 of the passage 1. Therefore, a probability with which the particulates having large surface areas and the large diameters and the particulates having the small diameters contact one another is also reduced, whereby an overall probability with which the particulates mutually contact one another is reduced.

In consideration of these, it can be said that in order to enhance an efficiency at which the particulates are mutually flocculated, the following three points are important.

(1) To form a field of a turbulent flow velocity.

(2) To actively provide a velocity distribution.

(3) To make a particulate diameter distribution even.

In order to concurrently realize all of these three points, it is considered that a part for generating turbulence in the gas flow, namely, a vortex generating part, is provided in the duct.

On the other hand, it is considered that when the particulates mutually collide with one another, the particulates having mutually collided with one another are flocculated due to forces generated among the particulates. It is considered that since in general, each of these forces is in inverse proportion to the power of each of the distances among the particulates, a value of each of the forces becomes extremely large in accordance with a decrease in each of the distances among the particulates. Therefore, it is considered that because in order to disperse the particulates which have mutually contacted one another once and have been flocculated, an external force exceeding each of the forces generated upon the collision of the particulates is thought to be required, a state of the flocculation continues to be maintained.

Further, because a degree to which each of the above-mentioned forces is exerted as an attractive force increases in accordance with an increase in a size of each of the particulates, it further hardly occurs that the particulates having the small diameters, which have collided with the particulates having the large diameters and have been flocculated, are dispersed.

In addition, when the mutual flocculation of the particulates occurs, because the particulates having the apparently large diameters increase, a probability with which the particulates mutually contact one another further increases.

Based on the above-described consideration, embodiments of the present invention will be described hereinafter.

(Embodiment 1-1)

Fig. 5 is a diagram illustrating a dust flocculating duct of an embodiment 1-1 according to the present invention.

As shown in Fig. 5, the dust flocculating duct 10 comprises a passage 11, a wall 12, and a swirling part 13 as a vortex generating part. The passage 11 is formed by the wall 12 which is of a cylindrical shape. Driven by a driving source (for example, a fan, a blower, etc.) not shown, air and other fluids containing particulates to be flocculated (dust and other fine particulates) circulates through the passage 11.

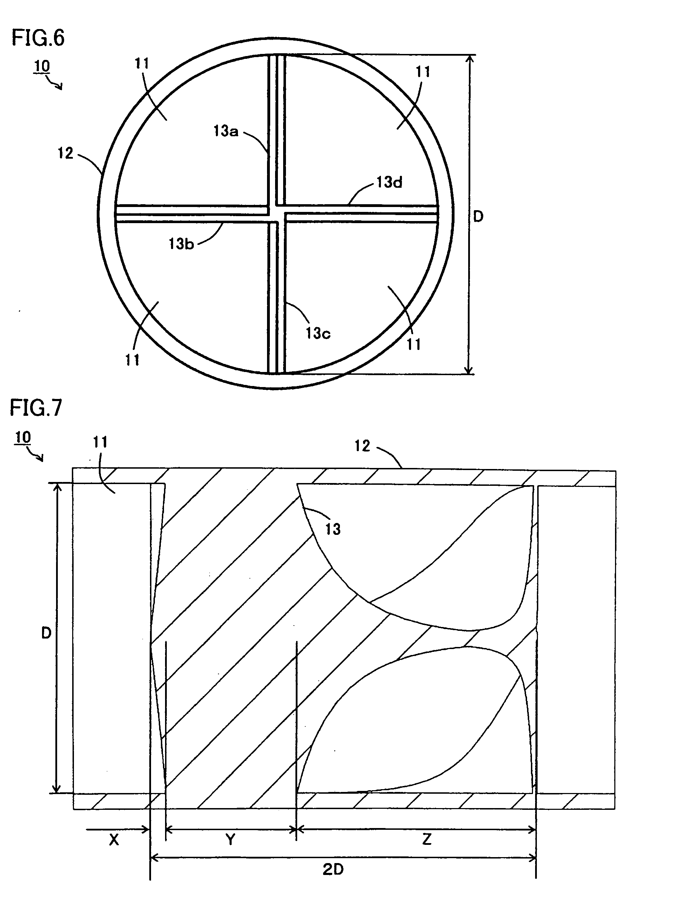

Fig. 6 shows a front view of the dust flocculating duct of the embodiment 1-1 according to the present invention.

As shown in Fig. 5 and Fig. 6, the swirling part 13 includes, as wall portions, four planes: a plane 13a, a plane 13b, a plane 13c, and a plane 13d. The plane 13a, plane 13b, plane 13c, and plane 13d are disposed so as to allow spacings, each of which forms 90 degrees of an interior angle counterclockwise on a cross sectional plane of the passage 1, which is viewed from an upstream side thereof. The respective planes are formed so as to be perpendicular to an inner surface of the wall 12 and are connected with one another at a center of the passage 11. A front view of the swirling part 13 is cross-shaped. Spaces which are each partitioned by the neighboring two planes of the swirling part 13 and the inner surface of the wall 12 form the passage 11.

The respective planes (13a, 13b, 13c, and 13d) of the swirling part 13 are formed such that skew angles on a cross-shaped cross section increase gradually in accordance with an increase in proximity to a downstream side.

In addition, when a representative length of a passage width on a plane perpendicular to a flow direction of the swirling part 13 (a length of a side in a case of a square passage and a diameter in a case of a circular passage) is supposed to be D, the swirling part 13 is skewed such that the cross-shaped cross section thereof rotates by a quarter (rotation of 90 degrees) clockwise in a traveling direction along a distance D traveled in a flow direction. In this embodiment, a swirling direction of a gas flow, which is viewed from the upstream side, is clockwise. However, the swirling direction of the gas flow may be either clockwise or counterclockwise.

Fig. 7 shows a cross-sectional side view of the dust flocculating duct of the embodiment 1-1 according to the present invention. Gas flows into the passage from a left side in Fig. 7.

As shown in Fig. 7, the passage 11 has three segments along a direction thereof an inflow segment X, an approach segment Y, and a swirling segment Z. A length in the flow direction of the swirling part 13 is set to be 2D (double the representative length of the passage width).

The gas having flowed into the passage 11 first passes the inflow segment X. In the inflow segment X, the gas flow is caused to enter the swirling part 13 in a state where there is a decreased resistance. Next, the gas passes the approach segment Y.

In the approach segment Y, the gas flow having flowed into the swirling part 13 is caused to stably adhere to the wall 12 and the planes (13a, 13b, 13c, and 13d) to suppress an abrupt change. Thereafter, the gas passes the swirling segment Z. In the swirling segment Z, a shearing force is applied to the gas flow. The skew angles on the cross-shaped cross section of the swirling segment Z increase gradually from the upstream of the flow toward the downstream of the flow. Since a traveling distance of the gas increases in accordance with a decrease in a distance between the gas and the wall 12, the applied swirling force increases.

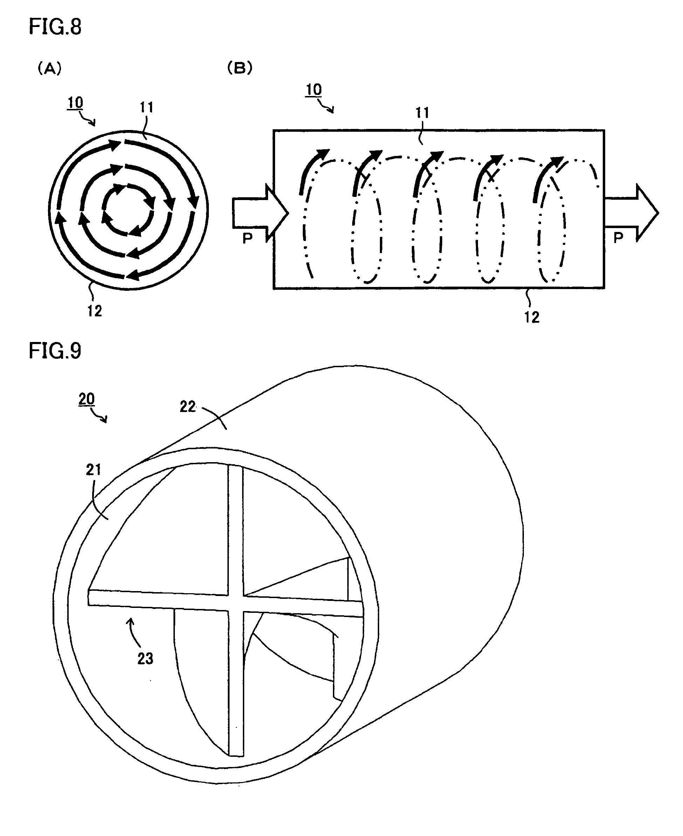

Fig. 8 is a schematic diagram illustrating a view of vortices generated by the swirling part of the embodiment 1-1 according to the present invention. Fig. 8 (A) shows a front view of the passage and Fig. 8 (B) shows a side view of the passage.

As shown in Fig. 8, the gas P having flowed into the swirling part 13 travels in directions indicated by arrows in Fig. 8 through the whole inside of the passage 11 along a shape of the swirling segment Z in a swirling manner as indicated by an alternate long and two short dashes line.

As described above, since the shearing force is continuously applied to the particulates having flowed into the swirling segment Z, strengths of vortices generated on the downstream side can be maximized. A probability with which the particulates contained in the gas inside the passage 11 collide with one another is greatly influenced by the shearing force of the flow. Therefore, the strengths of the vortices generated on the downstream side are maximized by invariably continuing to apply the shearing force of the flow as described above, thereby effectively allowing an increase in the probability with which the particulates contact one another. Moreover, since a further large velocity gradient is formed in the vicinity of the wall 12, the probability with which the particulates collide with one another in the vicinity of the wall 12 is the highest.

In the swirling part 13 of the embodiment 1-1, the vortices which largely swirl along a whole inner diameter direction of the passage 11 can be formed by the swirling segment Z. Therefore, since a centrifugal force can be applied to the particulates flowing through a central portion of the passage 11, the particulates can be diffused to a side of the wall 12, whereby the particulates which have varying diameters and are separated so as to be present in the central portion of the passage 11 and in the vicinity of the wall 12 can be mixed.

In such a manner, the particulates having small surface areas can be caused to collide with the particulates having large surface areas, thereby allowing a dramatic increase in the probability with which the particulates contact one another.

In this way, the gas circulating through the passage 11 and the dust contained in the gas sequentially undergo: a step at which the dust is guided into the passage 11 by the gas flow; a step at which the dust is transported through an inside of the passage 11 by the gas flow traveling forward (in the inflow segment X); a step at which the dust circulates along the wall 12 of the passage 11 (in the approach segment Y); a step at which the dust collides with the swirling part 13 protruding from the wall 12 of the passage 11 (in the swirling segment Z); a step at which the dust is caught up in vortical flows generated downstream of the swirling part 13 and circulates (in the swirling segment Z); a step at which the dust is caused to collide with a wall surface of the passage by the vortical flows a plurality of times (in the swirling segment Z); a step at which a plurality of pieces of the dust are caused to collide with one another by the vortical flows (in a downstream portion of the swirling segment Z); a step at which the plurality of pieces of the dust in collision with one another form dust masses (clusters) (in the downstream portion of the swirling segment Z); and a step at which the dust masses are transported through the inside of the passage by the gas flow (in the swirling segment Z and in a portion downstream from the swirling segment Z).

As described above, the dust flocculating duct 10 comprises: the passage 11 for circulating the gas therethrough; the wall 12 forming the passage 11; and the vortex generating part for generating the vortices in the gas flowing through the passage 11. The vortex generating part is disposed on the inner surface of the wall 12 and includes the swirling part 13 having the wall portions which protrude from the inner surface of the wall 12 toward the inside of the passage 11 so as to swirl the gas flow in the passage 11. By employing the above-described configuration, the dust flocculating duct which has a simple configuration and is capable of facilitating the flocculation by increasing the number of times when the particulates in the dust collide with one another, of decreasing the number of particulates, and of increasing apparent diameters of the particulates can be provided.

In addition, when the turbulence generating part of the present embodiment is viewed from a different point of view, it can be considered that the individual small passages which are partitioned by the planes are apparently formed through dividing the inside of the passage 11 by the planes (13a, 13b, 13c, and 13d) and the small passages are disposed so as to have the shortest distances thereamong. In other words, a plurality of small passages are formed so as to be bundled together in a group.

As described above, in the dust flocculating duct 10, the plurality of planes (13a, 13b, 13c, and 13d) are formed, the passage 11 is divided into the plurality of the independent small passages by the plurality of planes (13a, 13b, 13c, and 13d), and the small passages are formed to be skewed along the gas flow so as to swirl the gas flow.

By employing the above-described configuration, as compared with a case where the passage is not divided into the small passages, an influence of the shearing force which the wall surface exerts on the gas increases, thereby allowing enhancement of a dust flocculating power. In addition, swirling flows formed in the respective small passages collide with one another on downstream sides of end portions of the small passages, and as a result, the particulates caught up in the swirling flows can be caused to efficiently collide with one another.

In addition, in the dust flocculating duct 10, the skew angles of the small passages are small on the upstream side and gradually increase in accordance with an increase in proximity to the downstream side.

By employing the above-mentioned configuration, a force of swirling the gas can be increased.

In the present embodiment, as a method for dividing the passage 11, the four flat plates are disposed so as to form right angles on the cross section thereof and the wall portions are formed so as to be skewed along the passage 11. However, the method is not limited thereto. An appropriate shape of the passage 11 may be selected depending on an intended use from among, for example, a passage formed so as to have flat plates, the number of which is increased, and to have a grid-like wall portion; an aggregate of small passages having circular cross sections; a honeycomb structure; a corrugated structure, etc.

In other words, in a dust flocculating method of the embodiment 1-1 according to the present invention, when the dust is transported through the passage 11 by the gas flow, the dust masses (clusters) are formed by generating the vortices in the gas flow.

In the dust flocculating method of the embodiment 1-1 according to the present invention, the vortices are generated along the surface of the wall 12 inside the passage 11.

Thus, the dust flocculating method in which a simple configuration is realized and which facilitates flocculation of particulates by increasing the number of times when the particulates are caused to collide with one another and allows a reduction in the number of the particulates and an increase in an apparent diameter of each of the particulates can be provided.

In other words, the dust flocculating method according to the present invention comprises: a step at which the dust is guided into the passage 11 by the gas flow; a step at which the dust is transported through an inside of the passage 11 by the gas flow traveling forward; a step at which the dust circulates along the wall 12 of the passage 11; a step at which the dust collides with the swirling part 13 as projections protruding from the wall 12 of the passage 11; a step at which the dust is caught up in vortical flows generated downstream of the swirling part 13 and circulates; a step at which the dust is caused to collide with the surface of the wall 12 of the passage 11 by the vortical flows a plurality of times; a step at which a plurality of pieces of the dust are caused to collide with one another by the vortical flows; a step at which the plurality of pieces of the dust in collision with one another form the dust masses (clusters); and a step at which the dust masses are transported through the inside of the passage 11 by the gas flow.

In this way, the dust flocculating method in which the simple configuration is realized; the flocculation can be facilitated by increasing the number of times when the particulates in the dust collide with one another; the number of particulates can be decreased; and the apparent diameters of the particulates can be increased can be provided.


(Embodiment 1-2)

Fig. 9 shows a perspective view illustrating an important part of a dust flocculating duct of an embodiment 1-2 according to the present invention.

As shown in Fig. 9, the dust flocculating duct 20 comprises: a passage 21; a wall 22; and a swirling part 23 as a vortex generating part. The passage 21 is formed by the wall 22 which is of cylindrical shape.

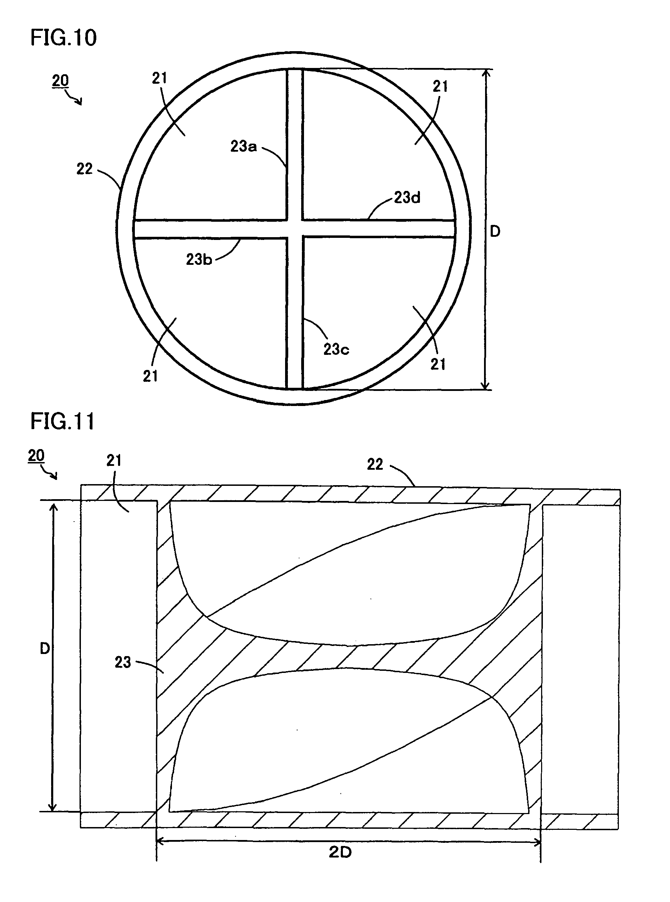

Fig. 10 shows a front view of the dust flocculating duct of the embodiment 1-2 according to the present invention.

As shown in Fig. 9 and Fig. 10, the swirling part 23 includes, as wall portions, four planes: a plane 23a, a plane 23b, a plane 23c, and a plane 23d. The plane 23a, plane 23b, plane 23c, and plane 23d are disposed so as to allow spacings, each of which forms 90 degrees of an interior angle counterclockwise on a cross-sectional plane of the passage 21, which is viewed from an upstream side thereof. The respective planes are formed so as to be perpendicular to an inner surface of the wall 22 and are connected with one another at a center of the passage 21. A front view of the swirling part 23 is cross-shaped. Spaces which are each partitioned by the neighboring two planes of the swirling part 23 and the inner surface of the wall 22 form the passage 21.

Fig. 11 shows a cross-sectional side view of the dust flocculating duct of the embodiment 1-2 according to the present invention. Gas flows into the passage from a left side in Fig. 11.

As shown in Fig. 11, the respective planes (23a, 23b, 23c, and 23d) of the swirling part 23 are formed such that a skew angle of the cross-shaped cross section is constant from the upstream of a flow toward the downstream of the flow.

In addition, when a representative length of a passage width on a plane perpendicular to a flow direction of the swirling part 23 (a length of a side in a case of a square passage and a diameter in a case of a circular passage) is supposed to be D, the swirling part 13 is skewed such that the cross-shaped cross section thereof rotates by a quarter (rotation of 90 degrees) clockwise in a traveling direction along a distance D traveled in a flow direction. In this embodiment, a swirling direction of a gas flow, which is viewed from an upstream side, is clockwise. However, the swirling direction of the gas flow may be either clockwise or counterclockwise.

In the swirling part 23 of the embodiment 1-2, as similarly to in the embodiment 1-1, the gas flow having entered the swirling part 23 travels through the whole inside of the passage along a shape of the swirling part 23 in a swirling manner. In the swirling part 23, as compared with the swirling part 13 of the embodiment 1-1, intensities of vortices generated downstream of the turbulence generating part are decreased whereas a pressure loss is drastically reduced.

Accordingly, in a case where an output and a static pressure rise of a driving source (for example, a fan, a blower, or the like) for generating the flow circulating in the swirling part 23 are small or where the driving source is susceptible to the pressure loss, performance of a whole system including the dust flocculating duct 20 and the driving source can be enhanced by using the dust flocculating duct 20, as compared with a case where the dust flocculating duct 10 of the embodiment 1-1 is used.

In recent years, it has been demanded to reduce power consumption. Therefore, since in a vacuum cleaner or the like, it is needed to maintain a quantity of gas flow while a reduction in power consumption is realized, it is required to minimize a loss in the passage. By using the dust flocculating duct 20 of the embodiment 1-2 according to the present invention in an extension pipe or the like in a vacuum cleaner, it is made possible to provide a vacuum cleaner which is capable of efficiently flocculating dust inside the extension pipe and of efficiently collecting the dust with low power consumption while the quantity of gas flow is maintained.

The flow circulating an inside of the passage 21 is skewed by the swirling part 23. In other words, when the swirling part 23 imparts swirling to the flow, the skew angle of the cross-shaped cross section is constant from the upstream toward the downstream in the dust flocculating duct 20. Therefore, since the swirling part 23 does not impart, to the flow, a swirling angle larger than the skew angle, a length of the swirling part 23 in a flow direction, which allows the flow inside the passage 21 to circulate in substantially the same direction as a direction in which the swirling part 23 is skewed at the above-mentioned skew angle of the cross-shaped cross section thereof, is sufficient. If the swirling part 23 is extended in the flow direction so as to exceed the above-mentioned length, a pressure loss is immoderately increased by friction with the wall 22, which is unfavorable.

For the above-described reason, in the embodiment 1-2, the length of the swirling part 23 in the flow direction is set to be 2D. However, a favorable dimension varies depending on a velocity of the flow circulating through the inside of the swirling part 23, a viscosity of a fluid circulating through the inside of the swirling part 23, and other specific physical property values. When the length of the swirling part 23 is set to be approximately 0.5D through 3D, generally favorable dust flocculating performance can be obtained.

In addition, for the above-mentioned reason, it is preferable that the angle on the cross-shaped cross section, at which the swirling part 23 is skewed, is set to be formed by rotation of one sixth (rotation of 60 degrees) through rotation of one third (rotation of 120 degrees) in a traveling direction along a distance D traveled in a flow direction. In a case where the angle on the cross-shaped cross section, at which the swirling part 23 is skewed, is set to be formed by rotation of a degree smaller than the rotation of one sixth (rotation of 60 degrees) in the traveling direction for the distance D traveled in the flow direction, the flow cannot be provided with effective swirling. In addition, in a case where the angle on the cross-shaped cross section, at which the swirling part 23 is skewed, is set to be formed by rotation of a degree larger than rotation of one third (120 degrees) in the traveling direction for the distance D traveled in the flow direction, an extremely large pressure loss which causes the flow of the gas to be stemmed occurs, thereby drastically reducing performance of a whole system including the dust flocculating duct 20 and the driving source.

As described above, the dust flocculating duct 20 comprises: the passage 21 for circulating the gas therethrough; the wall 22 forming the passage 21; and the vortex generating part for generating the vortices in the gas flowing through the passage 21. The vortex generating part is disposed on the inner surface of the wall 22 and includes the swirling part 23 having the wall portions which protrude from the inner surface of the wall 22 toward the inside of the passage 21 so as to swirl the gas flow in the passage 21. By employing the above-described configuration, the dust flocculating duct which has a simple configuration and is capable of facilitating the flocculation by increasing the number of times when the particulates in the dust collide with one another, of decreasing the number of particulates, and of increasing apparent diameters of the particulates can be provided.

In other words, in a dust flocculating method of the embodiment 1-2 according to the present invention, when the dust is transported through the passage 21 by the gas flow, the dust masses (clusters) are formed by generating the vortices in the gas flow.

In the dust flocculating method of the embodiment 1-2 according to the present invention, the vortices are generated along the surface of the wall 22 inside the passage 21.

In this way, the dust flocculating method in which a simple configuration is realized; the flocculation can be facilitated by increasing the number of times when the particulates in the dust collide with one another; the number of particulates can be decreased; and apparent diameters of the particulates can be increased can be provided.

In other words, the dust flocculating method according to the present invention comprises: a step at which the dust is guided into the passage 21 by the gas flow; a step at which the dust is transported through an inside of the passage 21 by the gas flow traveling forward; a step at which the dust circulates along the wall 22 of the passage 21; a step at which the dust collides with the swirling part 23 as projections protruding from the wall 22 of the passage 21; a step at which the dust is caught up in vortical flows generated downstream of the swirling part 23 and circulates; a step at which the dust is caused to collide with the surface of the wall 22 of the passage 21 by the vortical flows a plurality of times; a step at which a plurality of pieces of the dust are caused to collide with one another by the vortical flows; a step at which the plurality of pieces of the dust in collision with one another form the dust masses (clusters); and a step at which the dust masses are transported through the inside of the passage 21 by the gas flow.

In this way, the dust flocculating method in which the simple configuration is realized; the flocculation can be facilitated by increasing the number of times when the particulates in the dust collide with one another; the number of particulates can be decreased; and the apparent diameters of the particulates can be increased can be provided.

(Embodiment 1-3)

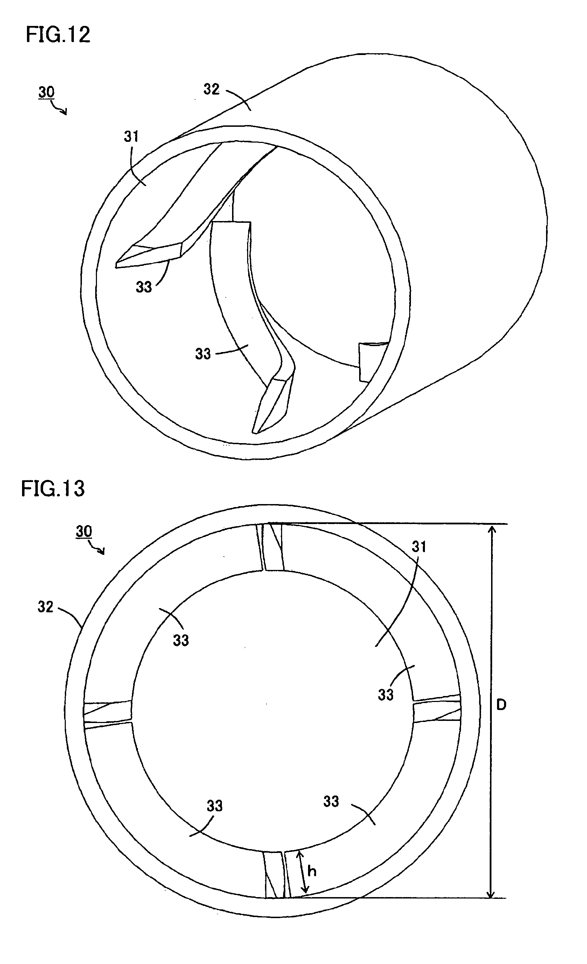

Fig. 12 shows a perspective view illustrating an important of a dust flocculating duct of an embodiment 1-3 according to the present invention.

As shown in Fig. 12, in the embodiment 1-3, swirling parts 33 are provided, instead of the swirling part 13 of the embodiment 1-1. The swirling parts 33 are disposed so as to be of a shape, as a whole, having a cross-shaped cross section obtained by hollowing out a central portion of the cross-shaped cross section of the swirling parts 13. In the shape of the swirling parts, the swirling parts 33 are present on an inner surface of a wall 32 of a passage 31 of the dust flocculating duct 30 whereas the swirling parts 33 are not present in a central portion of the passage 31. The passage 31 is divided into four small passages by the swirling parts 33. The four small passages communicate with one another in the central portion of the passage 31.

Fig. 13 shows a front view illustrating an important part of the dust flocculating duct of the embodiment 1-3 according to the present invention.

As shown in Fig. 13, when a representative length of a passage width on a plane perpendicular to a flow direction of the passage 31 (a length of a side in a case of a square passage and a diameter in a case of a circular passage) is supposed to be D, a height h of each of the swirling parts 33 from the inner surface of the wall 32 is set to be (1/8)D. The other parts are the same as those in the dust flocculating duct 10 of the embodiment 1-1.

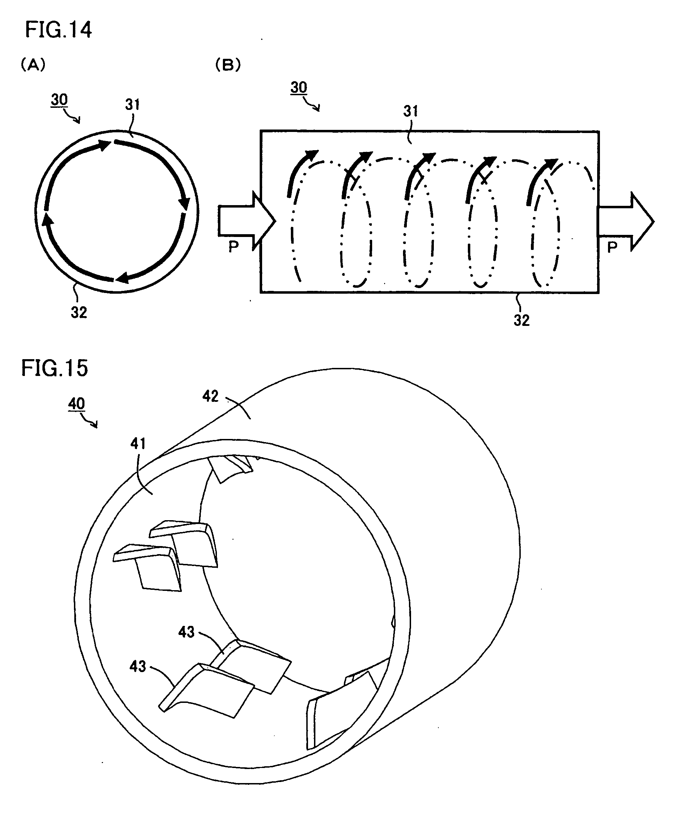

Fig. 14 is a schematic diagram illustrating a view of vortices generated by the swirling parts of the embodiment 1-3 according to the present invention. Fig. 14 (A) shows a front view of the passage and Fig. 14 (B) shows a side view of the passage.

As shown in Fig. 14, gas P having flowed into the passage 31 travels in directions indicated by arrows in Fig. 14 through the whole inside of the passage 31 along the shape of the swirling parts 33 in a swirling manner as indicated by an alternate long and two short dashes line.

In the dust flocculating duct 30, a gas flow circulating in the vicinity of the inner surface of the wall 32 of the passage 31 is provided with swirls by the swirling parts 33 and is largely swirled. However, swirls with which a gas flow circulating in a central portion of the passage 31 is provided by the swirling parts 33 are small. Accordingly, as compared with the dust flocculating duct 10 of the embodiment 1-1 and the dust flocculating duct 20 of the embodiment 1-2, intensities of vortices generated downstream of the swirling parts 33 are decreased whereas a pressure loss caused by the swirling parts 33 is drastically reduced.

As described above, in the dust flocculating duct 30, the plurality of small passages communicate with one another in th central portion of the passage 31, thereby allowing a drastic reduction in the pressure loss in the passage 31.

Accordingly, in a case where an output and a static pressure rise of a driving source (for example, a fan, a blower, or the like) for generating the flow circulating around the swirling parts 33 are small or where the driving source is susceptible to the pressure loss, performance of a whole system including the dust flocculating duct 30 and the driving source can be enhanced, as compared with a case where the dust flocculating duct 10 of the embodiment 1-1 or the dust flocculating duct 20 of the embodiment 1-2 is used.

In recent years, it has been demanded to reduce power consumption. Therefore, since in a vacuum cleaner or the like, it is needed to maintain a quantity of gas flow while a reduction in power consumption is realized, it is required to minimize a loss in the passage. By using the dust flocculating duct 30 of the embodiment 1-3 according to the present invention in an extension pipe or the like in a vacuum cleaner, it is made possible to provide a vacuum cleaner which is capable of efficiently flocculating dust inside the extension pipe and of efficiently collecting the dust with low power consumption while the quantity of gas flow is maintained.

The height h of each of the swirling parts 33 from the wall 32 is set to be the above-mentioned dimension for the following reason.

A velocity distribution of the flow circulating through the passage 31 is influenced by friction with the inner surface of the wall 32 of the passage 31 and a viscosity of a fluid circulating an inside of the passage 31, thereby resulting in a high velocity of the flow in the vicinity of the central portion of the passage 31 and in a low velocity of the flow in the vicinity of the inner surface of the wall 32 of the passage 31, that is, an uneven velocity distribution occurs due to occurrence of a boundary layer in the vicinity of the inner surface of the wall 32 of the passage 31. In particular, in a case where sizes of particulates (dust and other fine particulates) to be flocculated are mainly in micrometer order, the below-described phenomenon occurs. Specifically, the particulates to be flocculated receive forces by being caused to continuously collide with molecules of air and are transported from an upstream side to a downstream side. At this time, a velocity of the molecules of air which collide with one particulate to be flocculated is high on a side of the central portion of the passage and low on a side of the wall surface of the passage. Under the above-mentioned conditions, the particulates to be flocculated receive forces going toward a direction of the wall surface of the passage. Due to this shearing force of the flow, a density of a distribution of the particulates to be flocculated becomes low in the vicinity of the central portion of the passage and high in the vicinity of the wall surface of the passage. In other words, many of the particulates to be flocculated circulate in the vicinity of the wall surface of the passage. In the case where the sizes of particulates to be flocculated are mainly in micrometer order as mentioned above, a phenomenon that particularly in an area from the wall surface of the passage having a representative length of a passage width of D to a position which is (1/8)D distant from the wall surface of the passage, a density of a distribution of the particulates to be flocculated is high is observed. Accordingly, when the swirling parts 33 are provided in the area from the wall surface of the passage to the position which is (1/8)D distant from the wall surface of the passage, an effect of generating turbulence in the gas flow can be most exhibited.

As described above, in the dust flocculating duct 30, because the height of each of the swirling parts 33 from the wall 32 is one eighth of a representative length of a cross section which is perpendicular to a direction of the flow of the gas passing through the passage 31, a foreign substance is hardly caught by the swirling parts 33.

In the dust flocculating duct 30 of the embodiment 1-3, swirls can be imparted to the flow in the vicinity of the wall surface of the passage where many particulates to be flocculated circulate and swirls are not imparted to the flow in the central portion of the passage where not many particulates to be flocculated circulate. In this way, swirls can be effectively imparted to the particulates to be flocculated. In addition, since what causes the pressure loss is not disposed in the central portion of the passage where a velocity of the flow of the fluid is the highest, flocculating performance is not impaired and the pressure loss caused by the swirling parts 33 is drastically reduced.

As described above, the dust flocculating duct 30 comprises: the passage 31 for circulating the gas therethrough; the wall 32 forming the passage 31; and the vortex generating part for generating the vortices in the gas flowing through the passage 31. The vortex generating part is disposed on the inner surface of the wall 32 and includes the swirling parts 33 having the wall portions which protrude from the inner surface of the wall 32 toward the inside of the passage 31 so as to swirl the gas flow in the passage 31. By employing the above-described configuration, the dust flocculating duct which has a simple configuration and is capable of facilitating the flocculation by increasing the number of times when the particulates in the dust collide with one another, of decreasing the number of particulates, and of increasing apparent diameters of the particulates can be provided.

In other words, in a dust flocculating method of the embodiment 1-3 according to the present invention, when the dust is transported through the passage 31 by the gas flow, the dust masses (clusters) are formed by generating the vortices in the gas flow.

In the dust flocculating method of the embodiment 1-3 according to the present invention, the vortices are generated along the surface of the wall 32 inside the passage 31.

In this way, the dust flocculating method in which a simple configuration is realized; the flocculation is facilitated by increasing the number of times when the particulates in the dust collide with one another; the number of particulates is decreased; and apparent diameters of the particulates are increased can be provided.

In other words, the dust flocculating method according to the present invention comprises: a step at which the dust is guided into the passage 31 by the gas flow; a step at which the dust is transported through an inside of the passage 31 by the gas flow traveling forward; a step at which the dust circulates along the wall 32 of the passage 31; a step at which the dust collides with the swirling parts 33 as projections protruding from the wall 32 of the passage 31; a step at which the dust is caught up in vortical flows generated downstream of the swirling parts 33 and circulates; a step at which the dust is caused to collide with the surface of the wall 32 of the passage 31 by the vortical flows a plurality of times; a step at which a plurality of pieces of the dust are caused to collide with one another by the vortical flows; a step at which the plurality of pieces of the dust in collision with one another form the dust masses (clusters); and a step at which the dust masses are transported through the inside of the passage 31 by the gas flow.

In this way, the dust flocculating method in which the simple configuration is realized; the flocculation can be facilitated by increasing the number of times when the particulates in the dust collide with one another; the number of particulates can be decreased; and the apparent diameters of the particulates can be increased can be provided.

(Embodiment 1-4)

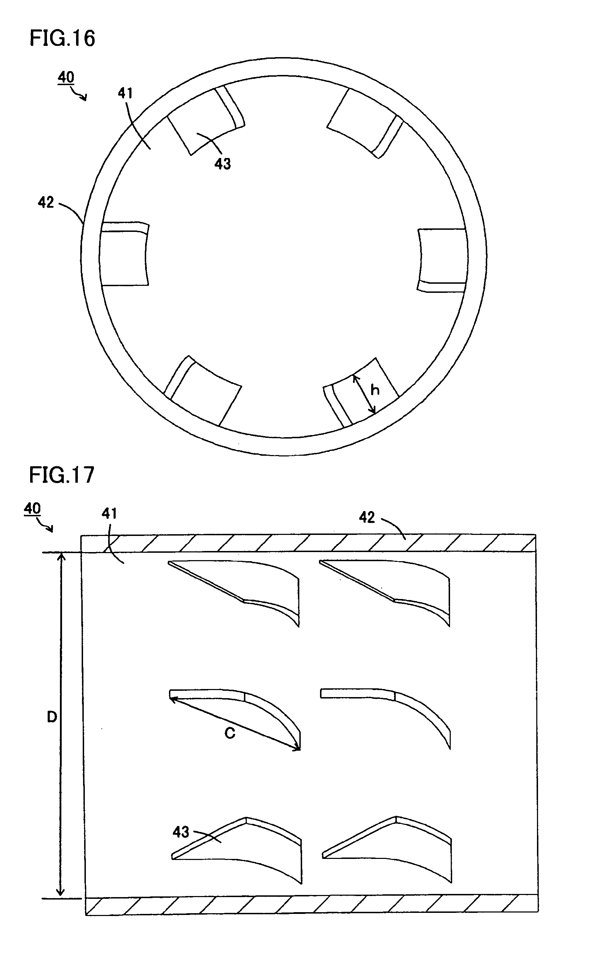

Fig. 15 shows a perspective view illustrating an important part of a dust flocculating duct of an embodiment 1-4 according to the present invention. Fig. 16 shows a front view illustrating the important part of the dust flocculating duct of the embodiment 1-4. Fig. 17 shows a cross-sectional side view illustrating the dust flocculating duct of the embodiment 1-4.

As shown in Fig. 15 through Fig. 17, the dust flocculating duct 40 includes: a passage 41; a wall 42; and a plurality of protrusions 43 as vortex generating parts. The passage 41 is formed by a cylindrical-shaped wall 42. The protrusions 43 are wing-shaped. The protrusion 43 is of a shape in which when a representative length of a passage width on a plane perpendicular to the flow direction of the passage 41 (a length of a side in a case of a square passage and a diameter in a case of a circular passage) is supposed to be D, a chord length C is (3/8)D; a stagger angle (an angle formed between a wing chord and the flow direction) is 22.5 degrees which is formed in a counterclockwise manner when the protrusion 43 is viewed from an upstream side to a downstream side; a maximum warping position is located 0.65C from an anterior edge; a portion thereof on the downstream side is convexed; and a height h is (1/8)D. The protrusions 43 are disposed in a grouping manner. In one group, six protrusions 43 are disposed in an evenly spaced manner so as to be present in the same plane perpendicular to the flow direction, that is, the six protrusions 43 are disposed so as to be evenly spaced, each with 60 degrees of an interior angle on a cross section of the dust flocculating duct 40, on the inner surface of the wall 42 of the cylindrical pipe shaped passage 41.

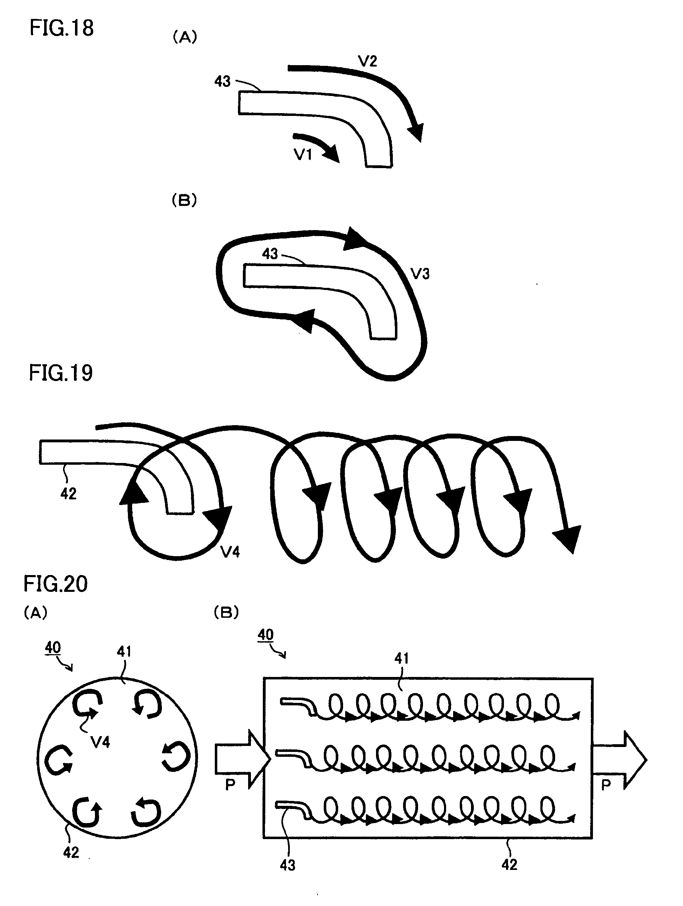

Fig. 18 is a schematic diagram illustrating a gas flow around a protrusion in the dust flocculating duct of the embodiment 1-4.

As shown in Fig. 18 (A), a flow velocity V1 of a flow along a depression side surface of the wing-shaped protrusion 43 is slightly lower than a flow velocity of a fluid circulating through the passage 41 because the flow is stemmed by collision of the flow against the protrusion 43. Conversely, a flow velocity V2 of a flow along a projection side surface of the protrusion 43 is slightly higher than the flow velocity of the fluid passing through the inside of the passage. Therefore, as shown in Fig. 18 (B), when a relative velocity in an area surrounding the protrusion 43 with reference to the flow velocity of the fluid circulating through the passage 41 is considered, a circulation V3 which circulates around the protrusion 43 from an upstream side to a downstream side of the passage 41 on a projection side surface of the protrusion 43 and from the downstream side to the upstream side of the passage 41 on a depression side surface of the protrusion 43 occurs.

Fig. 19 is a schematic diagram illustrating vortices generated around the protrusion.

As shown in Fig. 19, due to the circulation V3 shown in Fig. 18 (B) around the protrusion 43, an intense horseshoe vortex V4 occurs from a wing tip of the protrusions 43 having the wing shape. The horseshoe vortex V4 moves downstream along the wall 42 of the passage 41 on the downstream side of the protrusions 43. This horseshoe vortex V4 imparts an intense swirl to the flow circulating downstream of the protrusion 43.

In the dust flocculating duct 40 of the embodiment 1-4, since a wing height h of the protrusion 43 is (1/8)D, a diameter of the horseshoe vortex V4 immediately after the occurrence of the horseshoe vortex V4 is (1/8)D or slightly larger than (1/8)D though depending on the flow velocity of the fluid circulating through the passage 41. As mentioned above, in the case where the sizes of particulates to be flocculated are mainly in micrometer order, the phenomenon that particularly in the area from an inner surface of the wall 42 of the passage 41 having a diameter D to a position which is (1/8)D distant from the inner surface of the wall 42, the density of distribution of the particulates to be flocculated is high is observed. Therefore, the protrusion 43 is set such that the area from the inner surface of the wall 42 of the passage 41 to the position which is (1/8)D distant from the inner surface of the wall 42, where the density of distribution of the particulates to be flocculated is high, is particularly actively agitated by the horseshoe vortex V4.

As described above, in the dust flocculating duct 40, because the height of the protrusion 43 from the wall 42 is one eighth of a representative length of a cross section which is perpendicular to a direction of the flow of the gas passing through the passage 41, a foreign substance is hardly caught by the protrusion 43.

Fig. 20 is a schematic diagram illustrating a view of the vortices generated by the protrusion in the embodiment 1-4 according to the present invention. Fig. 20 (A) shows a front view in which the passage is viewed from a front side and Fig. 20 (B) shows a side view in which the passage is viewed from a lateral side.

As shown in Fig. 20, in the dust flocculating duct 40, when gas P flows into the passage 41, since the protrusions 43 are disposed at six positions of the inner surface of the wall 42 of the passage 41, six horseshoe vortices V4 which swirl in the same direction occur in a substantially even-spaced manner in the vicinity of the inner surface of the wall 42 of the passage 41. In addition, since the neighboring vortices swirl in the same direction, when a flow line vector on a plane perpendicular to the direction of the flow is considered, one side of a flow in a plane, on which the vortices neighbor each other, swirls from a central portion of the passage in a direction toward the wall surface, another side thereof swirls from the wall surface of the passage in a direction toward the central portion of the passage, and the one side and the another side of the flow collide with each other. Thus, a probability with which the particulates of the fine dust transported by the flows of the respective vortices collide with one another is further enhanced.

As described above, in the dust flocculating duct 40, the plurality of protrusions 43 are disposed, thereby generating a large number of the vortices inside the passage 41 and allowing the dust flocculation effect to be enhanced.

Accordingly, by using the dust flocculating duct 40 of the embodiment 1-4, the probability with which the particulates of the fine dust transported by the flows collide with one another is more enhanced than that attained by using the dust flocculating duct 30 of the embodiment 1-3, thereby drastically boosting dust flocculating performance. Since the height of the protrusion 43 is the same as that of the swirling part 33 of the embodiment 1-3, the pressure loss is also substantially the same as that in the dust flocculating duct 30 of the embodiment 1-3. Accordingly, by using the dust flocculating duct 40 of the embodiment 1-4 according to the present invention, further higher performance can be obtained than that obtained by using the dust flocculating duct 30 of the embodiment 1-3.

As described above, in the dust flocculating duct 40, the vortex generating part includes the protrusions 43, and the protrusions 43 are formed so as to project from the inner surface of the wall 42 and to make the velocity of the gas passing around the protrusion 43 uneven.

By employing the above-described configuration, the dust circulating through the dust flocculating duct 40 sequentially undergoes: a step at which the dust is guided into the passage 41 by the gas flow; a step at which the dust is transported through an inside of the passage 41 by the gas flow traveling forward; a step at which the dust is caught up in vortical flows generated downstream of the protrusions 43 protruding from the wall 42 of the passage 41 and circulates; a step at which a plurality of pieces of the dust are caused to collide with one another by the vortical flows; a step at which the plurality of pieces of the dust in collision with one another form the dust masses (clusters); and a step at which the dust masses are transported through the inside of the passage 41 by the gas flow.

In this way, the dust flocculating duct 40 which has a simple configuration, is capable of facilitating the flocculation by increasing the number of times when the particulates in the dust collide with one another, of decreasing the number of particulates, and of increasing apparent diameters of the particulates can be provided.

As described above, in the dust flocculating duct 40, the plurality of protrusions 43 are disposed along the direction of the gas flow in the passage 41 such that at least one part of one of the protrusions 43 overlaps another of the protrusions 43 when viewed from the upstream side toward the downstream side of the passage 41 in a perspective manner.

This allows the gas flowing through the passage 41 to easily pass around the protrusions 43, thereby enabling efficient generation of the vortices.

In addition, in the dust flocculating duct 40, the protrusions 43 are disposed so as to wholly overlap each other when viewed from the upstream side toward the downstream side of the passage 41 in the perspective manner.

By employing the above-described configuration, an area where the gas can circulate, which is viewed from the upstream side toward the downstream side of the passage 41 in the perspective manner, can be ensured to be large, thereby allowing a reduction in the pressure loss in the passage 41.

In other words, in a dust flocculating method of the embodiment 1-4 according to the present invention, when the dust is transported through the passage 41 by the gas flow, dust masses (clusters) are formed by generating the vortices in the gas flow.

In the dust flocculating method of the embodiment 1-4 according to the present invention, the vortices are generated along the surface of the wall 42 inside the passage 41.

In this way, the dust flocculating method in which a simple configuration is realized; the flocculation can be facilitated by increasing the number of times when the particulates in the dust collide with one another; the number of particulates can be decreased; and apparent diameters of the particulates can be increased can be provided.

In other words, the dust flocculating method of the embodiment 1-4 according to the present invention comprises: a step at which the dust is guided into the passage 41 by the gas flow; a step at which the dust is transported through an inside of the passage 41 by the gas flow traveling forward; a step at which the dust is caught up in vortical flows generated downstream of the protrusions 43 as projections protruding from an inner surface of the wall 42 of the passage 41 and circulates; a step at which a plurality of pieces of the dust are caused to collide with one another by the vortical flows; a step at which the plurality of pieces of the dust in collision with one another form the dust masses (clusters); and a step at which the dust masses are transported through the inside of the passage 41 by the gas flow.

In this way, the dust flocculating method in which a simple configuration is realized; the flocculation can be facilitated by increasing the number of times when the particulates in the dust collide with one another; the number of particulates can be decreased; and apparent diameters of the particulates can be increased can be provided.

(Embodiment 1-5)

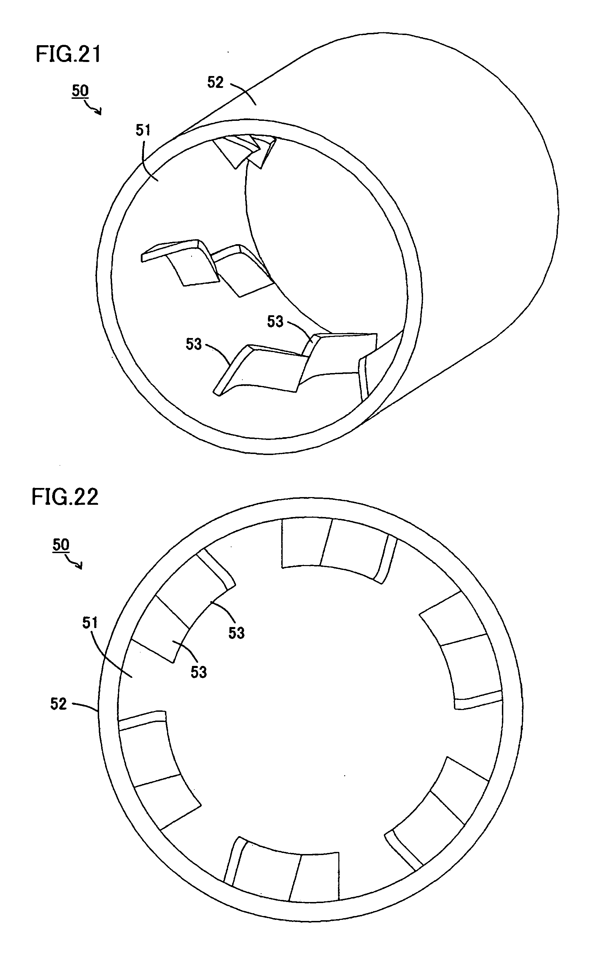

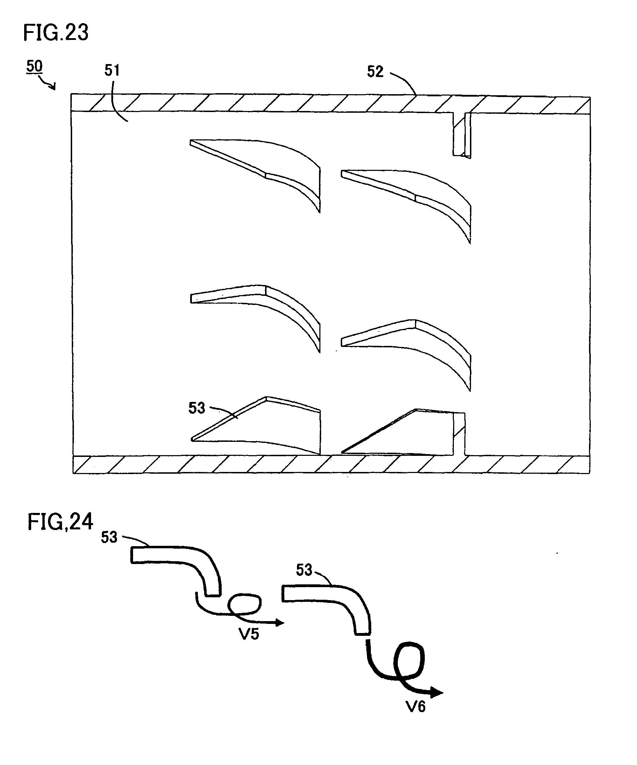

Fig. 21 shows a perspective view illustrating an important part of a dust flocculating duct of an embodiment 1-5 according to the present invention. Fig. 22 shows a front view illustrating the important part of the dust flocculating duct of the embodiment 1-5. Fig. 23 shows a cross-sectional side view illustrating the dust flocculating duct of the embodiment 1-5.

As shown in Fig. 21 through Fig. 23, in the dust flocculating duct 50 of the embodiment 1-5, protrusions 53 are disposed, instead of the protrusions 43 in the embodiment 1-4. Each of the protrusions 53 is of a wing shape which is the same as the shape of each of the protrusions 43 in the embodiment 1-4 but the protrusions 53 are disposed in a manner different from the manner in which the protrusions 43 are disposed.

In the dust flocculating duct 50, pairs of protrusions 53, each of which neighbors each other in a direction of a passage, are disposed from an upstream side toward a downstream side of the passage in a step-like manner. The pairs of protrusions 53 disposed in the step-like manner are disposed such that the two protrusions 53 of each of the pairs partially overlap each other when viewed from the upstream side. In other words, the pairs of protrusions 53 disposed in the step-like manner are disposed such that if a virtual line of a gas flow is drawn so as to span from a terminal end of one of the pair of protrusions 53, which is disposed on the upstream side, toward the downstream, the virtual line intersects another of the pair of protrusions 53, which is disposed on the downstream side. The other parts of the dust flocculating duct 50 of the embodiment 1-5 are the same as those of the dust flocculating duct 40 of the embodiment 1-4.

In the dust flocculating duct 50 of the embodiment 1-5, a horseshoe vortex V5 which has occurred on the one of the pair of protrusions 53, which is disposed on the upstream side, is further intensified on the another of the pair of protrusions 53, which is disposed on the downstream side, whereby a further intense horseshoe vortex V6 is generated. While the vortices are moving downstream, the vortices gradually attenuate. However, since the vortices generated in the dust flocculating duct 50 are more intense than the vortices generated in the dust flocculating duct 40, a distance (outreach) from a point at which the attenuation of the vortices starts to a point at which the attenuation of the vortices finishes is long, whereby influences of the vortices can be exerted on the further downstream. In the vicinity of a wall 52 of the passage 51, six horseshoe vortices which swirl in the same direction occur in a substantially even-spaced manner.

Fig. 24 is a schematic diagram illustrating a gas flow around a protrusion in the dust flocculating duct of the embodiment 1-5.

As shown in Fig. 24, since the pairs of the protrusions 53 are disposed in the step-like manner, a horseshoe vortex V5 generated on the upstream side is caught up in a vortex generated on the protrusion 53 downstream side, thereby allowing an intense horseshoe vortex V6 to be effectively generated.

Further, since the neighboring vortices swirl in the same direction, when flow line vectors on a plane perpendicular to the direction of the flow are considered, one vector of a flow in a plane, on which the vortices neighbor each other, swirls from a central portion of the passage in a direction toward the wall surface and another vector thereof swirls from the wall surface of the passage in a direction toward the central portion of the passage. In such a manner, the one vector and the another vector of the flow collide with each other. Thus, a probability with which the particulates of the fine dust transported by the flows of the respective vortices collide with one another is further enhanced.

Accordingly, by using the dust flocculating duct 50 of the embodiment 1-5, the further intense vortices can be generated. Therefore, the outreach of each of the vortices is long and thereby, the probability with which the particulates of the fine dust transported by the flow can be further increased, whereby a capability of flocculating the dust can be drastically enhanced. In addition, friction of the flow is reduced in the dust flocculating duct 50 of the embodiment 1-5 as compared with the dust flocculating duct 40 of the embodiment 1-4, thereby allowing a reduction in a pressure loss.

As described above, in the dust flocculating duct 50, the plurality of protrusions 53 are disposed along the direction of the gas flow in the passage 51 so as to at least partially overlap each other when viewed from the upstream side toward the downstream side of the passage 51 in a perspective manner.

This allows the gas flowing through the passage 51 to easily pass around the protrusions 53, thereby enabling efficient generation of the vortices.

In addition, in the dust flocculating duct 50, the protrusions 53 are disposed so as to partially overlap each other when viewed from the upstream side toward the downstream side of the passage 51 in the perspective manner.

By employing the above-described configuration, the vortices generated from the protrusions 53 located on the upstream side are captured by the protrusions 53 located on the downstream side, thereby forming the vortices. Therefore, intensities of the vortices can be made higher than those of the vortices formed by protrusions 53 which singly function. In other words, owing to a relationship of a disposition of the protrusions 53 located on the upstream side and the protrusions 53 located on the downstream side, while an advantage of enhancing the intensities of the vortices, which is obtained if further large protrusions were formed in a singly functioning manner, is ensured, a possibility of dirt clogging occurring in a case where the large protrusions are formed can be decreased and even when a length of the passage 51 is shortened, a dust flocculation effect can be obtained.

In addition, before the intensities of the vortices are attenuated due to influences such as a frictional resistance caused by a viscosity of the gas flowing along the passage 51 and a frictional resistance with a surface of a wall 52, the vortices generated by the protrusions 53, which respectively neighbor each other, can be caused to mutually collide with each other, thereby enhancing a probability with which the particulates of dust mutually collide with one another.

In the dust flocculating duct 50 of the embodiment 1-5, the pressure loss is equal to that in the dust flocculating duct 40 of the embodiment 1-4. However, the probability with which the particulates of the fine dust collide with one another is increased by approximately 30 % as compared with the probability attained by the dust flocculating duct 40 of the embodiment 1-4. By using the dust flocculating duct 50 of the embodiment 1-5, a dust flocculating duct which achieves further high performance can be obtained.

In other words, in a dust flocculating method of the embodiment 1-5 according to the present invention, when the dust is transported through the passage 51 by the gas flow, dust masses (clusters) are formed by generating the vortices in the gas flow.

In the dust flocculating method of the embodiment 1-5 according to the present invention, the vortices are generated along the surface of the wall 52 inside the passage 51.

In this way, the dust flocculating method in which a simple configuration is realized; the flocculation can be facilitated by increasing the number of times when the particulates in the dust collide with one another; the number of particulates can be decreased; and apparent diameters of the particulates can be increased can be provided.

In other words, the dust flocculating method of the embodiment 1-5 according to the present invention comprises: a step at which the dust is guided into the passage 51 by the gas flow; a step at which the dust is transported through an inside of the passage 51 by the gas flow traveling forward; a step at which the dust is caught up in vortical flows generated downstream of the protrusions 53 as projections protruding from the wall 52 of the passage 51 and circulates; a step at which a plurality of pieces of the dust are caused to collide with one another by the vortical flows; a step at which the plurality of pieces of the dust in collision with one another form the dust masses (clusters); and a step at which the dust masses are transported through the inside of the passage 51 by the gas flow.

In this way, the dust flocculating method in which a simple configuration is realized; the flocculation can be facilitated by increasing the number of times when the particulates in the dust collide with one another; the number of particulates can be decreased; and apparent diameters of the particulates can be increased can be provided.

(Embodiment 1-6)

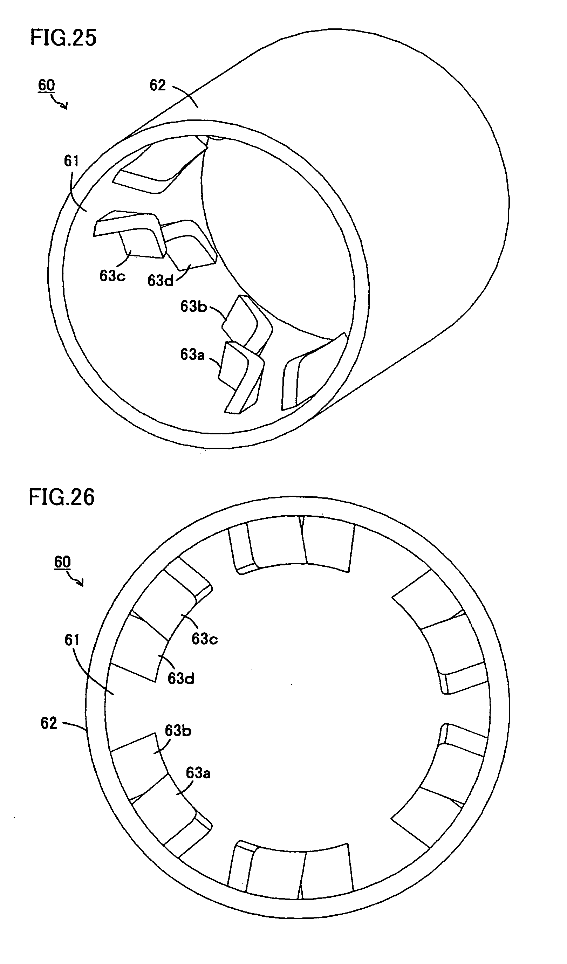

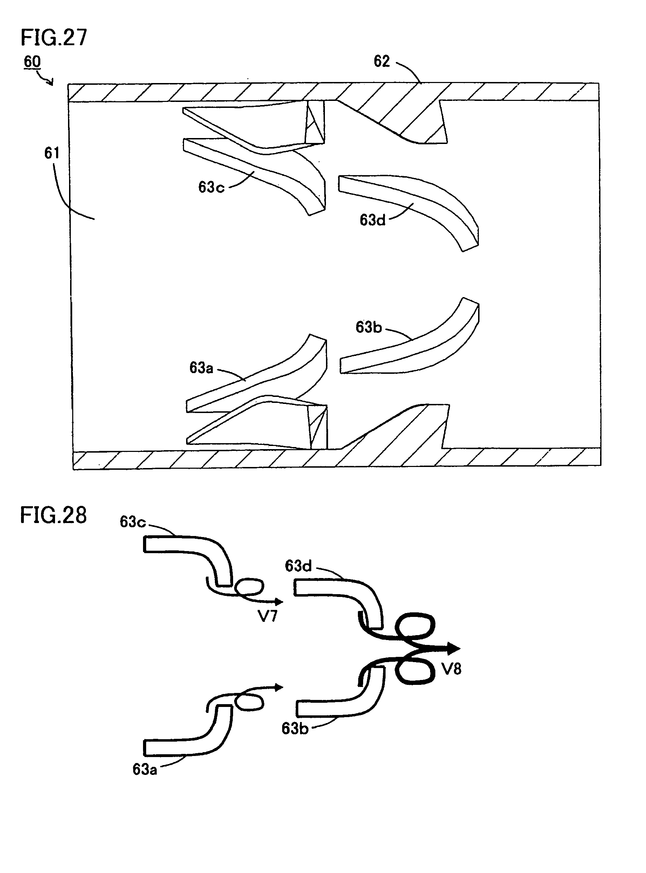

Fig. 25 shows a perspective view illustrating an important part of a dust flocculating duct of an embodiment 1-6 according to the present invention. Fig. 26 shows a front view illustrating the important part of the dust flocculating duct of the embodiment 1-6. Fig. 27 shows a cross-sectional side view illustrating the dust flocculating duct of the embodiment 1-6.

As shown in Fig. 25 through Fig. 27, in the dust flocculating duct 60 of the embodiment 1-6, quartets, each of which is composed of a protrusion 63a, a protrusion 63b, a protrusion 63c, and a protrusion 63d, are disposed, instead of the protrusions 53 in the embodiment 1-5. Each of the protrusions (63a, 63b, 63c, and 63d) is of the same shape as that of the protrusion 53, namely, the wing shape and the number of the protrusions (63a, 63b, 63c, and 63d) disposed is the same as the number of the protrusions 53 disposed. However, the protrusion 63a and protrusion 63c which neighbor each other are disposed so as to form stagger angles (each of which is an angle formed between a wing chord and a direction of a flow) in a manner opposite to each other; and the protrusion 63b and the protrusion 63d which neighbor each other are also disposed in the same manner as mentioned above. In other words, the protrusions (63a, 63b, 63c, and 63d) have curved shapes so as to form depressions. Two protrusions which neighbor each other in a direction intersecting a direction of a gas flow are disposed such that two depressions of the two protrusions face each other. On a wall 62 of a passage 61, three protrusions 63a are disposed in a circumferential direction of the cross section perpendicularly intersecting the direction of the gas flow in an evenly spaced manner, each with a stagger angle of 22.5 degrees which is formed in a clockwise manner when each of the protrusions 63a is viewed from an upstream side to a downstream side; respectively between the protrusions 63a, three protrusions 63c are disposed in an evenly spaced manner, each with a stagger angle of 22.5 degrees which is formed in a counterclockwise manner when each of the protrusions 63c is viewed from the upstream side toward the downstream side. On each of the downstream sides of the protrusions 63a and the protrusions 63c, three protrusions 63b are disposed in the circumferential direction of the cross section perpendicularly intersecting the direction of the gas flow in an evenly spaced manner, each with a stagger angle of 22.5 degrees which is formed in a clockwise manner when each of the protrusions 63b is viewed from the upstream side toward the downstream side; and respectively between the three protrusions 63b, three protrusions 63d are disposed, each with a stagger angle of 22.5 degrees which is formed in a counterclockwise when each of the protrusions 63d is viewed from the upstream side toward the downstream side. Along the direction of the gas flow, each of the protrusions 63b is disposed on a downstream side of each of the protrusions 63a, and each of the protrusions 63d is disposed on a downstream side of each of the protrusions 63c. The four protrusions are disposed such that a distance between the depressions of the protrusion 63a and the protrusion 63c is larger than a distance between the depressions of the protrusion 63b and the protrusion 63d.

In the dust flocculating duct 60 of the embodiment 1-6, the same horseshoe vortices as those generated on the protrusions 43 in the embodiment 1-4 are generated on the protrusions (63a, 63b, 63c, and 63d) and the horseshoe vortices move downstream along a downstream portion of a wall 62 of a passage 61, thereby imparting intense swirls to a flow circulating downstream of the protrusions.

Fig. 28 is a schematic diagram illustrating a view of the vortices generated around the protrusions in the dust flocculating duct of the embodiment 1-6.

As shown in Fig. 28, inside the passage 61 of the dust flocculating duct 60 of the embodiment 1-6, 12 protrusions are disposed so as to each mutually face toward opposite directions. Therefore, in the vicinity of an inner surface of the wall 62 of the passage 61, six horseshoe vortices V7 are generated. Pairs of neighboring vortices of the six horseshoe vortices V7 each swirl in respectively opposite directions. The horseshoe vortices V7 generated on the protrusion 63a and the protrusion 63c on the upstream side are caught up in a gas flow passing between the protrusion 63b and the protrusion 63d on the downstream side, and thereby, an intense horseshoe vortex V8 is generated. Further, since the protrusion 63b and the protrusion 63d are disposed so as to face toward the opposite directions, the vortices generated between the protrusion 63b and the protrusion 63d on the downstream side act so as to mutually intensify each other, thereby allowing the further intense horseshoe vortex V8 to be generated.

In addition, since the neighboring vortices each swirl in the opposite directions, when flow line vectors on a plane perpendicular to the direction of the flow are considered, one vector of a flow in a plane, on which the vortices neighbor each other, swirls from a central portion of the passage in a direction toward the wall surface and another vector thereof also swirls in the same direction; and the one vector thereof swirls from the wall surface of the passage in a direction toward the central portion of the passage and the another vector thereof also swirls in the same direction. Therefore, the vectors of the flow can smoothly converge, thereby decreasing a frictional resistance caused by a viscosity of the flow. Thus, in the passage 61 in the embodiment 1-6, a pressure loss due to the vortices is reduced as compared with the passage 51 in the embodiment 1-5.

As described above, in the dust flocculating duct 60, each of the protrusions (63a, 63b, 63c, and 63d) is of the shape which has a curved portion so as to form the depression, and the two protrusions which neighbor in the direction intersecting the direction of the gas flow are disposed such that the two depressions of the two neighboring protrusions face each other. In other words, in the dust flocculating duct 60, the protrusions (63a, 63b, 63c, and 63d) change directions in which the flow of the gas entering the passage 61 swirls, and the directions of the gas flow which the neighboring protrusions 63a and 63c as well as the neighboring protrusions 63b and 63d change are opposite to each other. By employing the above-described configuration, the vortices generated on the neighboring protrusions move downstream while swirling in the opposite directions. Therefore, in the plane on which the vortices neighbor each other, the gas flows which form these vortices travel in the same direction. Accordingly, the vortices generated on the neighboring protrusions smoothly converge, thereby reducing the frictional resistance caused by the viscosity of the flow. Thus, the pressure loss inside the passage 61 can be reduced.

Accordingly, through using the dust flocculating duct 60 of the embodiment 1-6, a friction of the flow can be reduced as compared with the dust flocculating duct 40 of the embodiment 1-4, thereby allowing the pressure loss to be further reduced. A probability with which the particulates of the fine dust collide with one another due to the friction of the flow is reduced by approximately 5 % as compared with the dust flocculating duct 40 of the embodiment 1-4. However, the pressure loss is reduced by approximately 10 % as compared with the dust flocculating duct 40 of the embodiment 1-4. Therefore, the embodiment 1-6 realizes the dust flocculating duct 60 attaining higher performance than that attained by the dust flocculating duct 40 of the embodiment 1-4.

In other words, in a dust flocculating method of the embodiment 1-6 according to the present invention, when the dust is transported through the passage 61 by the gas flow, dust masses (clusters) are formed by generating the vortices in the gas flow.

In the dust flocculating method of the embodiment 1-6 according to the present invention, the vortices are generated along the surface of the wall 62 inside the passage 61.

In this way, the dust flocculating method in which a simple configuration is realized; the flocculation can be facilitated by increasing the number of times when the particulates in the dust collide with one another; the number of particulates can be decreased; and apparent diameters of the particulates can be increased can be provided.

In other words, the dust flocculating method of the embodiment 1-6 according to the present invention comprises: a step at which the dust is guided into the passage 61 by the gas flow; a step at which the dust is transported through an inside of the passage 61 by the gas flow traveling forward; a step at which the dust is caught up in vortical flows generated downstream of the protrusions 63a, 63b, 63c, and 63d as projections protruding from the wall 62 of the passage 61 and circulates; a step at which a plurality of pieces of the dust are caused to collide with one another by the vortical flows; a step at which the plurality of pieces of the dust in collision with one another form the dust masses (clusters); and a step at which the dust masses are transported through the inside of the passage 61 by the gas flow.

In this way, the dust flocculating method in which a simple configuration is realized; the flocculation can be facilitated by increasing the number of times when the particulates in the dust collide with one another; the number of particulates can be decreased; and apparent diameters of the particulates can be increased can be provided.

(Embodiment 1-7)

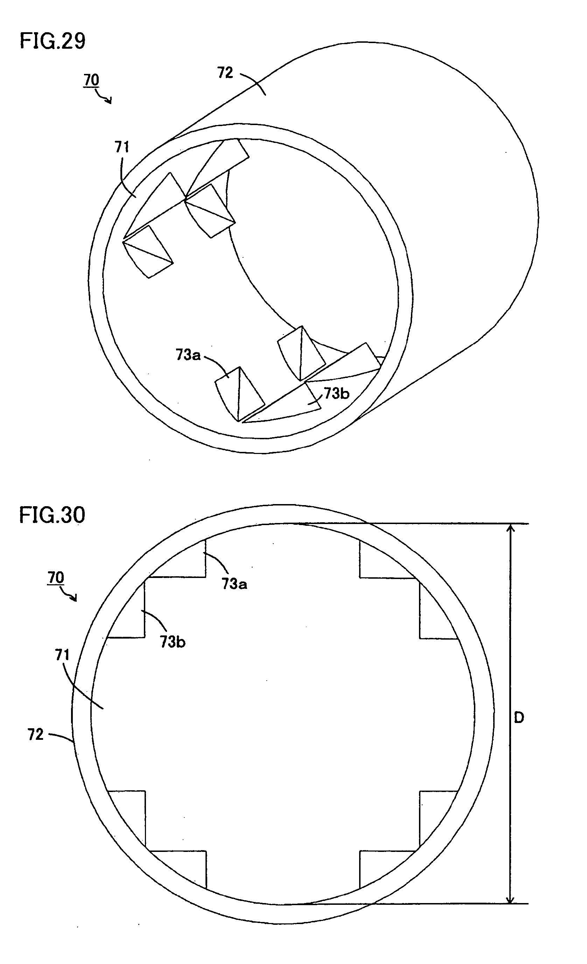

Fig. 29 shows a perspective view in which an important part of a dust flocculating duct of an embodiment 1-7 according to the present invention is viewed in a perspective manner. Fig. 30 shows a front view illustrating the important part of the dust flocculating duct of the embodiment 1-7.

As shown in Fig. 29 and Fig. 30, in the dust flocculating duct 70 of the embodiment 1-7 according to the present invention, a plurality of protrusions 73a and a plurality of protrusions 73b are disposed on an inner surface of a wall 72 of a passage 71, instead of the protrusions 43 in the embodiment 1-4. Each of the protrusions 73a and protrusions 73b has a triangular bottom.

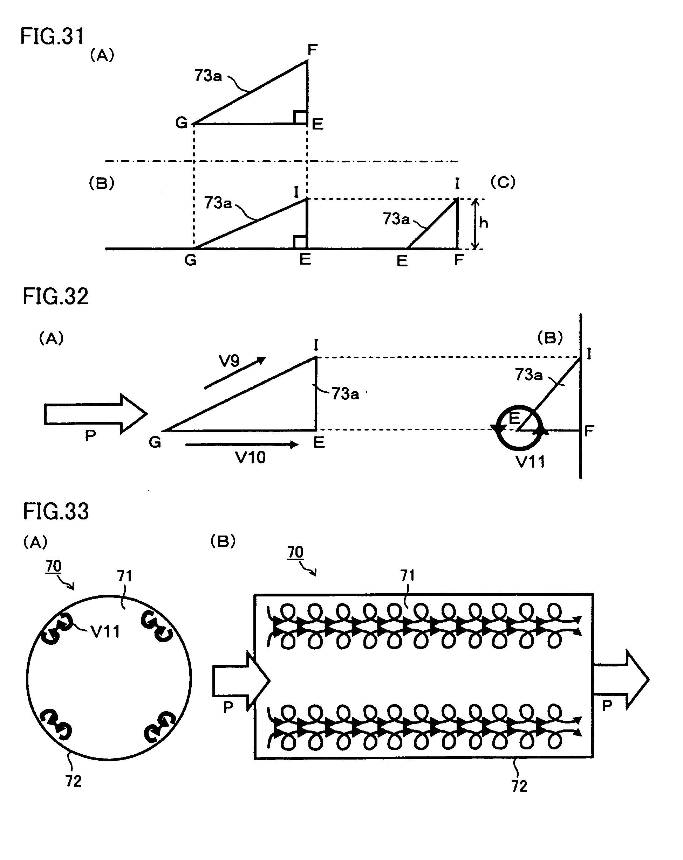

Fig. 31 is a diagram illustrating the protrusion in the embodiment 1-7. Fig. 31 (A) shows a bottom view of the protrusion, Fig. 31 (B) shows a side view of the protrusion, and Fig. 31 (C) shows a front view of the protrusion. It is supposed that an upstream side of the passage is a front side.

As shown in Fig. 31, the bottom of the protrusion 73a is of a right triangle EFG whose respective sides has lengths with EF : FG : GE = 1 : 2 : $\sqrt{3}$. The bottom EFG of the protrusion 73a is jointed to an inner surface of a wall 72 of a passage 71 such that among respective apices of the right triangle, the apex G having an angle of 30 degrees is disposed on an upstream side of a flow and the side EF spanning between the apex having an angle of 60 degrees and the apex having an angle of 90 degrees is disposed so as to be perpendicular to a flow direction. The remaining one apex I of the protrusion 73a is formed so as to project into the passage 71 from the wall 72.

The protrusion 73a is of a shape in which when a representative length of a passage width on a plane perpendicular to the flow direction of the passage 71 (a length of a side in a case of a square passage and a diameter in a case of a circular passage) is supposed to be D, a length GE in the flow direction is $(3/8)D$; an angle formed by the flow direction and a hypotenuse is 30 degrees in a clockwise manner when the protrusion 73a is viewed from the upstream side to a downstream side; and a height h of the protrusion 73a is $(1/8)D$. In a shape of the protrusion 73b which neighbors the protrusion 73a, an angle formed by the flow direction and a hypotenuse is 30 degrees in a counterclockwise manner when the protrusion 73b is viewed from the upstream side toward the downstream side. On the wall 72 of the passage 71, four protrusions 73a are disposed in an evenly-spaced manner; four protrusions 73b are disposed respectively between the two protrusions 73a; and the protrusions 73a and the protrusions 73b are disposed so as to each face toward opposite directions.

Fig. 32 is a schematic diagram illustrating a gas flow around the protrusion of the embodiment 1-7.

As shown in Fig. 32, a flow velocity V9 of a flow along a hypotenuse GI of the protrusion 73a is slightly lower than a flow velocity P of a fluid circulating through the passage 71 because the flow is stemmed by collision of the flow against the protrusion 73a. On the other hand, a flow velocity V10 of a flow along the side GE, in the flow direction, of the protrusion 73a is the substantially same as the flow velocity P of the fluid circulating through the inside the passage 71. Therefore, when a relative velocity in an area surrounding the protrusion 73a with reference to the flow velocity of the fluid circulating through the passage 71 is considered, a circulation which circulates around the protrusion 73a from the upstream side toward the downstream side of the passage 71 on the side GE in the flow direction and from the downstream side to the upstream side of the passage 71 on a hypotenuse FG occurs. Due to this circulation, a horseshoe vortex V11 is generated from the apex of the protrusion 73a which is triangular pyramid-shaped and the horseshoe vortex V11 moves downstream along a downstream portion of the wall 72 of the passage 71. This horseshoe vortex 11 imparts a swirl to the flow circulating downstream of the protrusion 73a. Although also on the protrusion 73b, a horseshoe vortex is formed as similarly to on the protrusion 73a, a direction in which the horseshoe vortex swirls on the protrusion 73b is opposite to the direction in which the horseshoe vortex on the protrusion 73a swirls.

In the embodiment 1-7, since each of the heights h of the protrusion 73a and the protrusion 73b is $(1/8)D$, a diameter of the horseshoe vortex V11 immediately after the occurrence of the horseshoe vortex is $(1/8)D$ or slightly larger than $(1/8)D$ though depending on the flow velocity of the fluid circulating through the passage 71. As mentioned above, in the case where the sizes of particulates to be flocculated are mainly in micrometer order, the phenomenon that particularly in the area from the wall 72 of the passage 71 having the diameter D to a position which is $(1/8)D$ distant from the wall 72, the density of distribution of the particulates to be flocculated is high is observed. Therefore, the protrusions 73a and the protrusions 73b in the embodiment 1-7 actively agitate the gas passing the area from the wall 72 of the passage 71 to the position which is $(1/8)D$ distant from the wall 72, where the density of distribution of the particulates to be flocculated is high, by generating the horseshoe vortices.

As described above, in the dust flocculating duct 70, because each of the heights of the protrusion 73a and the protrusion 73b from the wall 72 is one eighth of a representative length of a cross section which is perpendicular to a direction of the flow of the gas passing through the passage 71, a foreign substance is hardly caught by the protrusion 73a and the protrusion 73b.

Fig. 33 is a schematic diagram illustrating a view of the vortices generated by the protrusions in the embodiment 1-7 according to the present invention. Fig. 33 (A) shows a view in which the passage is viewed from a front side and Fig. 33 (B) shows a view in which the passage is viewed from a lateral side.

As shown in Fig. 33, in the vicinity of the wall 72 of the passage 71, eight horseshoe vortices V11 are generated and pairs of neighboring vortices of the eight horseshoe vortices V11 each swirl in respectively opposite directions. Since the neighboring vortices each swirl in the opposite directions, when flow line vectors on a plane perpendicular to the direction of the flow are considered, one vector of a flow in a plane, on which the vortices neighbor each other, swirls from a central portion of the passage in a direction toward the wall surface and another vector thereof also swirls in the same direction; and the one vector thereof swirls from the wall surface of the passage in a direction toward the central portion of the passage and the another vector thereof also swirls in the same direction. Therefore, the vectors of the flow can smoothly converge, thereby decreasing a frictional resistance caused by a viscosity of the flow. Thus, in the dust flocculating duct 70 in the embodiment 1-7, a pressure loss due to the vortices is reduced.

In a case where a rod-like foreign substance having a length of D and a thickness of 0.05D is mixed in a fluid circulating through the passage 71, for example, in the embodiment 1-1 through the embodiment 1-6, since each of the swirling parts and the protrusions of the dust flocculating duct is of a shape having a curved portion and in particular, each of the protrusions has a depression on an upstream side thereof and a projection on a downstream side thereof, one end of the rod-like foreign substance is caught by one of the vortex generating parts and another end of the rod-like foreign substance is caught by another of the vortex generating part, whereby a failure that the dust flocculating duct is clogged with the foreign substance is likely to occur. On the other hand, in the dust flocculating duct 70 of the embodiment 1-7, the protrusion 73a has no depression and on each of the protrusion 73a and the protrusion 73b, an oblique surface is formed, instead of the depressed surface of the protrusion 43 in the embodiment 1-4, whereby the above-mentioned rod-like foreign substance or the like is hardly caught by the protrusions.

As described above, in the dust flocculating duct 70, an area of a cross section of each of the protrusions 73a and the protrusions 73b in a direction perpendicular to the direction of the gas flow is small on the upstream side and large on the downstream side. This causes a foreign substance to be hardly caught by the protrusions 73a and the protrusions 73b.

Accordingly, by using the dust flocculating duct 70 of the embodiment 1-7, the substantially same effect as that attained by the embodiment 1-5 can be attained. Moreover, for example, in a case where the rod-like foreign substance or the like is likely to be mixed in the flow, since the failure that the rod-like foreign substance is caught by the turbulence generating parts can be prevented, a highly reliable dust flocculating duct can be obtained as compared with the dust flocculating ducts of the embodiment 1-1 through the embodiment 1-6.

In other words, in a dust flocculating method of the embodiment 1-7 according to the present invention, when the dust is transported through the passage 71 by the gas flow, dust masses (clusters) are formed by generating the vortices in the gas flow.

In the dust flocculating method of the embodiment 1-7 according to the present invention, the vortices are generated along the surface of the wall 72 inside the passage 71.

In this way, the dust flocculating method in which a simple configuration is realized; the flocculation can be facilitated by increasing the number of times when the particulates in the dust collide with one another; the number of particulates can be decreased; and apparent diameters of the particulates can be increased can be provided.

In other words, the dust flocculating method of the embodiment 1-7 according to the present invention comprises: a step at which the dust is guided into the passage 71 by the gas flow; a step at which the dust is transported through an inside of the passage 71 by the gas flow traveling forward; a step at which the dust is caught up in vortical flows generated downstream of the protrusions 73a and 73b as projections protruding from the wall 72 of the passage 71 and circulates; a step at which a plurality of pieces of the dust are caused to collide with one another by the vortical flows; a step at which the plurality of pieces of the dust in collision with one another form the dust masses (clusters); and a step at which the dust masses are transported through the inside of the passage 71 by the gas flow.

In this way, the dust flocculating method in which a simple configuration is realized; the flocculation is facilitated by increasing the number of times when the particulates in the dust collide with one another; the number of particulates is decreased; and apparent diameters of the particulates are increased can be provided.

(Embodiment 1-8)

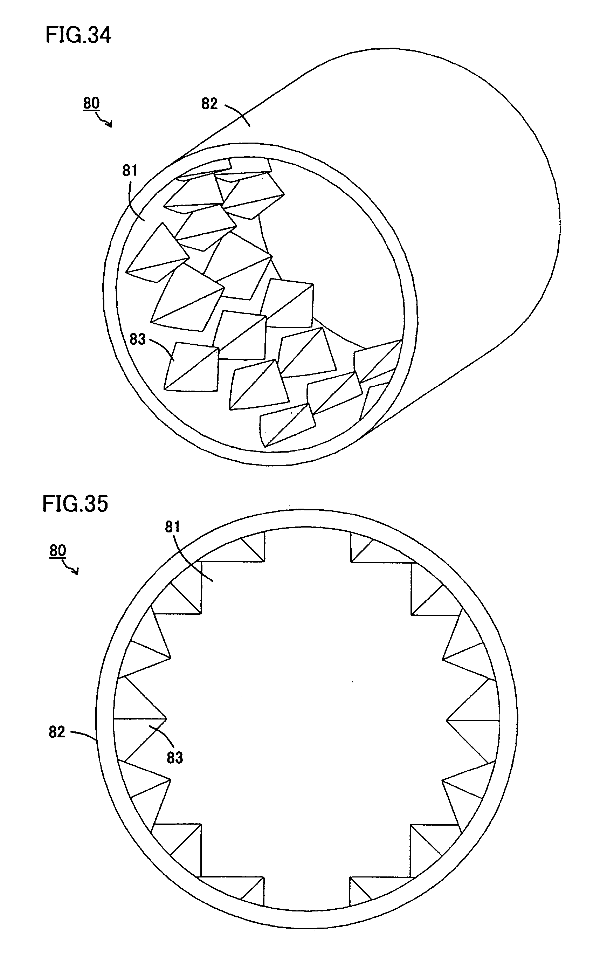

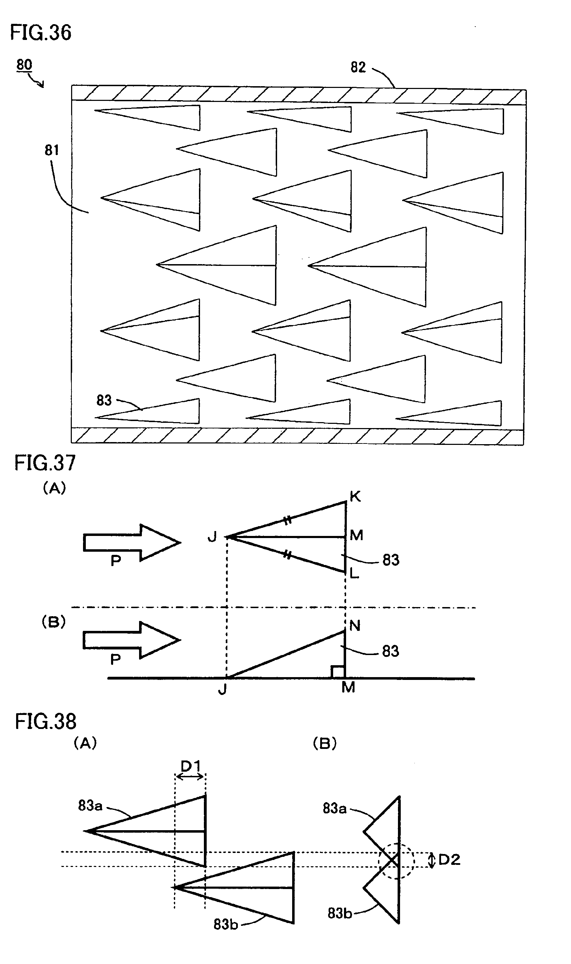

Fig. 34 shows a perspective view in which an important part of a dust flocculating duct of an embodiment 1-8 according to the present invention is viewed in a perspective manner. Fig. 35 shows a front view illustrating the important part of the dust flocculating duct of the embodiment 1-8. Fig. 36 shows a cross-sectional side view of the dust flocculating duct of the embodiment 1-8.

As shown in Fig. 34 through Fig. 36, in the embodiment 1-8, a plurality of protrusions 83 are disposed, instead of the protrusions 73a and the protrusions 73b in the embodiment 1-7. Each of the protrusions 83 is of a triangular pyramid shape.

Fig. 37 shows a top view (A) and a lateral view (B) of a shape of each of the protrusions in the embodiment 1-8.

As shown in Fig. 37, each of the protrusions 83 is of a triangular pyramid-shape whose bottom JKL is of an isosceles triangle with a base KL : a height JM = 1 : 2. The bottom JKL is jointed to a wall surface of the passage such that the smallest angle J of the isosceles triangle of the bottom is disposed on an upstream side of a flow and the base KL is disposed so as to be perpendicular to a flow direction. When an apex of the triangular pyramid-shaped protrusion is supposed to be N, the protrusion is formed such that a perpendicular spanning from the apex N to the isosceles triangle of the bottom passes M, that is, such that NM is perpendicular to JM and KL, respectively. The protrusion is of a shape in which when a representative length of a passage width on a plane perpendicular to a flow direction of a passage 81 (a length of a side in a case of a square passage and a diameter in a case of a circular passage) is supposed to be D, a length JM in the flow direction is $(1/2)D$; and a triangular pyramid height NM is $(1/8)D$.

In addition, on an inner surface of a wall 82 of a passage 81, a large number of protrusions 83 are disposed in a regular manner. In the dust flocculating duct 80, the plurality of protrusions 83 are disposed at intervals of $(3/2)JM$ in the flow direction and at intervals of $(3/2)KL$ in a direction perpendicular to the flow direction. The plurality of protrusions 83 are disposed such that with respect to one of the protrusions 83, another of the protrusions 83 is disposed so as to be $(3/4)JM$ displaced from the one of the protrusions 83 in the flow direction and further another of the protrusions 83 is disposed so as to be $(3/4)KL$ displaced from the one of the protrusions 83 in the direction perpendicular to the flow direction; and the other protrusions 83 are disposed in the same manner. In other words, the plurality of protrusions 83 are disposed in a manner of the so-called staggered arrangement and in a multistage manner such that when it is supposed that one pitch in the flow direction is (3/2)JM and one pitch in the direction perpendicular to the flow direction is (3/2)KL, the protrusions 83 are disposed so as to be 0.5 pitch displaced, each in the flow direction and the direction perpendicular to the flow direction, from one another.

Fig. 38 shows a side view (A) of shapes of parts of the protrusions of the embodiment 1-8 and a view (B) of the protrusions which are viewed from an upstream side toward a downstream side of a gas flow in a perspective manner.

As shown in Fig. 38 (A), the protrusion 83a on the upstream side and the protrusion 83b on the downstream side are disposed such that an upstream end portion of the protrusion 83b located on the downstream side is located a given width D1 upstream of a downstream end portion of the protrusion 83a located on the upstream side. In addition, as shown in Fig. 38 (B), when these protrusions 83 are viewed in a perspective manner, the plurality of protrusions 83 are disposed so as not to completely overlap each other and such that the protrusion 83a and the protrusion 83b which neighbor each other overlap each other by a given width D2 when viewed from the upstream side toward the downstream side in the perspective manner. In Fig. 38 (B), an overlapping portion is indicated by being enclosed with a broken line. The other parts are the same as those of the embodiment 1-5.

In the dust flocculating duct 80 of the embodiment 1-8, a flow circulating in the vicinity of the inner surface of the wall 82 of the passage 81 is lifted up to a side of an apex N with respect to the bottom of the triangular pyramid due to slopes of surfaces JNK and JNL of the protrusion 83 which is triangular pyramid-shaped and is wound up to a side of a central portion of the passage, generating weak twin vortices on a downstream side of the apex N. The flow circulating through the dust flocculating duct 80 of the embodiment 1-8 is sequentially agitated such that the flow is agitated by weak twin vortices, generated by the protrusion 83 which the flow first meets, and circulates downstream; the flow is agitated again by weak twin vortices, generated by the protrusion 83 which the flow next meets, and circulates further downstream; and the flow is agitated further again by weak twin vortices, generated by the protrusion 83 which the flow further next meets. Such agitation is repeated at the plurality of protrusions 83. As mentioned above, in the case where the sizes of particulates to be flocculated are mainly in micrometer order, a phenomenon that particularly in an area from the wall 82 of the passage 81 having the diameter D to a position which is (1/8)D distant from the wall 82, a density of distribution of the particulates to be flocculated is high is observed. Therefore, the plurality of protrusions 83 disposed in the multistage manner in the embodiment 1-8 actively agitate the area from the wall 82 of the passage 81 to the position which is (1/8)D distant from the wall 82, where the density of distribution of the particulates to be flocculated is high, by using the plurality of twin vortices.

As described above, in the dust flocculating duct 80, because each of the heights of the protrusions 83 from the wall 82 is less than or equal to one eighth of a representative length of a cross section which is perpendicular to the direction of the flow of the gas passing through the passage 81, a foreign substance is hardly caught by the protrusions 83.

In addition, when the plurality of protrusions 83 are viewed from the upstream side in the perspective manner, the plurality of protrusions 83 are disposed so as not to completely overlap each other but such that the neighboring protrusions 83 only partially overlap each other. Therefore, the flow circulating along the wall 82 of the passage 81 invariably meets the protrusions 83. Thereafter, the flow circulating along the wall 82 of the passage 81 passes through the dust flocculating duct 80 while circulating downstream and accordingly meeting the protrusions 83 repeatedly.

As described above, in the dust flocculating duct 80, the plurality of protrusions 83 are disposed along the direction of the gas flow in the passage 81 so as to at least partially overlap each other when viewed from the upstream side toward the downstream side of the passage 81 in the perspective manner. This allows the gas flowing through the passage 81 to easily pass around the protrusions 83, thereby enabling efficient generation of the vortices.

In addition, in the dust flocculating duct 80, the protrusions 83 are disposed so as to partially overlap each other when viewed from the upstream side toward the downstream side of the passage 81 in the perspective manner.

By employing the above-described configuration, the vortices generated from the protrusions 83a located on the upstream side are captured by the protrusions 83b located on the downstream side, thereby forming the vortices. Therefore, intensities of the vortices can be made higher than those of the vortices formed by protrusions 83 which singly function. In other words, owing to a relationship of a disposition of the protrusions 83a located on the upstream side and the protrusions 83b located on the downstream side, while an advantage of enhancing the intensities of the vortices, which is obtained if further large protrusions were formed in a singly functioning manner, is ensured, a possibility of dirt clogging occurring in a case where the large protrusions are formed can be decreased and even when a length of the passage 81 is shortened, a dust flocculation effect can be obtained.

In addition, before the intensities of the vortices are attenuated due to influences such as a frictional resistance caused by a viscosity of the gas flowing along the passage 81 and a frictional resistance with a surface of a wall 82, the vortices generated by the protrusions 83 which respectively neighbor each other can be caused to mutually collide with each other, thereby enhancing a probability with which the particulates of dust mutually collide with one another.

In addition, in the dust flocculating duct 80, an upstream end portion of each of the protrusions 83b located on the downstream side of the gas flow is disposed so as to be located more upstream than a downstream end portion of each of the protrusions 83a located on the upstream side of the gas flow.

By employing the above-described configuration, before the intensities of the vortices generated from the protrusions 83a located on the upstream side are attenuated due to influences such as a frictional resistance caused by a viscosity of the gas flowing along the passage 81 and a frictional resistance with a surface of the wall 82, the vortices generated from the protrusions 83a can be caused to collide with the vortices generated from the protrusions 83b, thereby allowing effective further enhancement of the probability with which the particulates of dust collide with one another.

Furthermore, as compared with a case where the upstream end portion of each of the protrusions 83b located on the downstream side of the gas flow is not disposed so as to be located more upstream than the downstream end portion of each of the protrusions 83a located on the upstream side of the gas flow, distances between protrusions 83 can be further shortened, whereby a further large number of protrusions 83 can be formed in the short dust flocculating duct 81.

Accordingly, in the dust flocculating duct 80 of the embodiment 1-8, the gas flow circulating in the area from the wall 82 of the passage 81 to the position which is (1/8)D distant from the wall 82 can be most efficiently agitated and the number of the generated twin vortices can be increased.

As described above, in the dust flocculating duct 80, the plurality of protrusions 83 are disposed along the direction of the gas flow in the passage 81 so as to partially overlap each other when viewed from the upstream side toward the downstream side of the passage 81 in the perspective manner. This allows the gas flowing through the passage 81 to easily pass around the protrusions 83, thereby enabling efficient generation of the vortices.

In addition, in a case where a foreign substance or the like (for example, a cloth-like or mesh-like material such as a handkerchief and pantyhose), for example, which is of a soft cloth-like material and has a size substantially equal to the diameter of the passage 81 is mixed in a fluid circulating through the dust flocculating duct 80, for example, in the embodiment 1-1 through the embodiment 1-7, each of the protrusions in the dust flocculating duct is of a shape having a curved portion or a rectangular portion and the cloth-like foreign substance is easily caught by the vortex generating parts, whereby a failure that the dust flocculating duct is clogged with the foreign substance is likely to occur. In the embodiment 1-8, since the protrusions 83 are formed as the smooth triangular pyramid-shaped protrusions on the upstream side of the flow, the above-mentioned cloth-like foreign substance or the like is hardly caught by the protrusions 83.

Accordingly, by using the dust flocculating duct 80 of the embodiment 1-8, sufficient flocculation performance can be attained through the agitation by the large number of twin vortices. Moreover, for example, in a case where the cloth-like foreign substance or the like is likely to be mixed in the flow, since the failure that the cloth-like foreign substance is caught by the turbulence generating parts can be prevented, a highly reliable dust flocculating duct 80 can be obtained as compared with the dust flocculating ducts of the embodiment 1-1 through the embodiment 1-7.

In other words, in a dust flocculating method of the embodiment 1-8 according to the present invention, when the dust is transported through the passage 81 by the gas flow, dust masses (clusters) are formed by generating the vortices in the gas flow.

In the dust flocculating method of the embodiment 1-8 according to the present invention, the vortices are generated along the surface of the wall 82 inside the passage 81.

In this way, the dust flocculating method in which a simple configuration is realized; the flocculation can be facilitated by increasing the number of times when the particulates in the dust collide with one another; the number of particulates can be decreased; and apparent diameters of the particulates can be increased can be provided.

In other words, the dust flocculating method of the embodiment 1-8 according to the present invention comprises: a step at which the dust is guided into the passage 81 by the gas flow; a step at which the dust is transported through an inside of the passage 81 by the gas flow traveling forward; a step at which the dust is caught up in vortical flows generated downstream of the protrusions 83 as projections protruding from the wall 82 of the passage 81 and circulates; a step at which a plurality of pieces of the dust are caused to collide with one another by the vortical flows; a step at which the plurality of pieces of the dust in collision with one another form the dust masses (clusters); and a step at which the dust masses are transported through the inside of the passage 81 by the gas flow.

In this way, the dust flocculating method in which a simple configuration is realized; the flocculation can be facilitated by increasing the number of times when the particulates in the dust collide with one another; the number of particulates can be decreased; and apparent diameters of the particulates can be increased can be provided.

(Embodiment 1-9)

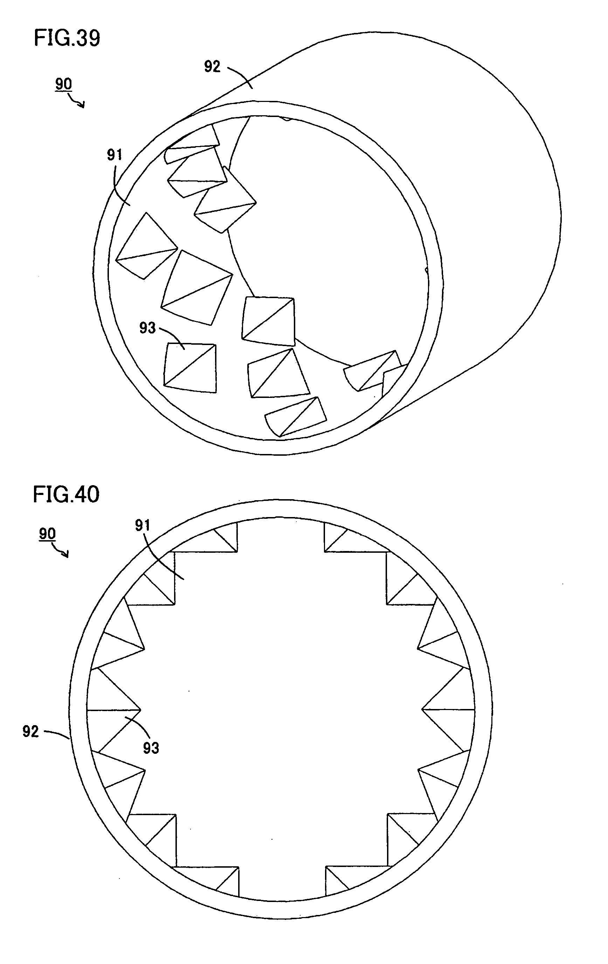

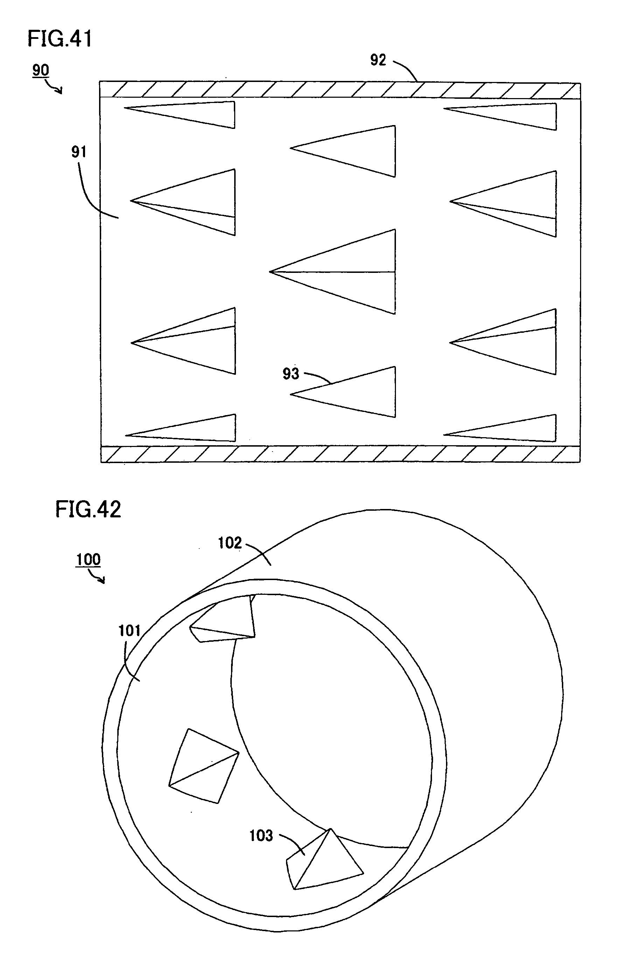

Fig. 39 shows a perspective view in which an important part of a dust flocculating duct of an embodiment 1-9 is viewed in a perspective manner. Fig. 40 shows a front view illustrating the important part of the dust flocculating duct of the embodiment 1-9. Fig. 41 shows a cross-sectional side view illustrating the important part of the dust flocculating duct of the embodiment 1-9.

As shown in Fig. 39 through Fig. 41, in the dust flocculating duct 90 of the embodiment 1-9, a plurality of protrusions 93 are disposed on an inner surface of a wall 92 of a passage 91, instead of the protrusions 83 in the embodiment 1-8. Each of the protrusions 93 is of the same shape as that of each of the protrusions 83 in the embodiment 1-8, namely, a triangular pyramid shape but the protrusions 93 are arranged or disposed in a different manner. In other words, in the embodiment 1-9, the protrusions 93 of which the number is one third of the number of the protrusions 83 in the embodiment 1-8 are disposed in a manner corresponding to the manner in which the protrusions 83 are arranged when viewed from an upstream side in a perspective manner. In other words, when viewed from the upstream side in the perspective manner, the plurality of protrusions 93 are disposed so as not to completely overlap each other but such that neighboring protrusions 93 only partially overlap each other. In addition, the protrusions 93 are disposed such that the number of protrusions 93 which are present on a plane perpendicular to a flow direction is as small as possible and the plurality of the protrusions 93 disposed so as to be present on the plane perpendicular to the flow direction are disposed so as to be as distant from one another as possible. The other parts are the same as those of the embodiment 1-8.

In the dust flocculating duct 90 of the embodiment 1-9 according to the present invention, the substantially same twin vortices as those generated on the protrusions 83 of the embodiment 1-8 are generated by the protrusions 93. When the plurality of protrusions 93 are viewed from an upstream side in a perspective manner, the plurality of protrusions 93 are disposed so as not to completely overlap each other but such that neighboring protrusions 93 only partially overlap each other. Therefore, the flow circulating along the wall 92 of the passage 91 invariably passes the protrusions 93. However, since the number of the protrusions 93 is one third of the number of the protrusions 83 in the embodiment 1-8, the number of times when the flow circulating along the wall 92 of the passage 91 meets the turbulence protrusion 93 is one third of the number of times in the embodiment 1-8 and the number of the twin vortices generated is also one third of the number of vortices generated in the embodiment 1-8, thereby reducing a probability with which the particulates to be flocculated collide with one another.

However, the protrusions 93 in the embodiment 1-9 have the below-described advantage. Specifically, in the dust flocculating duct 80 of the embodiment 1-8, the large number of the protrusions 83 are disposed so as to be present on the plane perpendicular to the flow direction. An area of the passage 81 on the plane perpendicular to the flow direction and at positions of surfaces ΔNKL of the protrusions 83 decreases by (the number of the protrusions 83 disposed so as to be present on the same plane perpendicular to the flow direction) × (areas of the surfaces ΔNKL) from an area of the passage 81 on the other plane perpendicular to the flow direction. Therefore, since the larger the number of the protrusions 83 disposed so as to be present on the same plane perpendicular to the flow direction is, the smaller the area of the passage on the same plane perpendicular to the flow direction is, a pressure loss in the dust flocculating duct 80 increases. In contrast to this, in the dust flocculating duct 90 of the embodiment 1-9, the protrusions 93 are disposed such that the number of protrusions 93 which are present on the plane perpendicular to the flow direction is as small as possible and the plurality of the protrusions 93 disposed so as to be present on the plane perpendicular to the flow direction are disposed so as to be as distant from one another as possible. Therefore, a decrease in an area of the passage at positions where the protrusions 93 are present is small, and a pressure loss in the dust flocculating duct 90 is also small accordingly.

In other words, for example, when a length of the passage 91 in a flow direction in the embodiment 1-9 is tripled and the number of the protrusions 93 disposed in the embodiment 1-9 is set to be the same as the number of the protrusions 83 disposed in the embodiment 1-8, the probability in the embodiment 1-9 with which the particulates to be flocculated collide with one another is substantially equal to that in the dust flocculating duct 80 of the embodiment 1-8. However, because an area of the inner surface of the wall 92, where the protrusions 93 are disposed, decreases to a small extent, the pressure loss in the dust flocculating duct 90 whose length is tripled is also small.

Accordingly, by using the dust flocculating duct 90 of the embodiment 1-9, a great effect of reducing the pressure loss can be attained. For example, by using the dust flocculating duct 90 whose length is tripled, the pressure loss can be reduced without deteriorating performance of flocculation caused when the particulates collide with one another, as compared with the pressure loss in the dust flocculating duct 80 of the embodiment 1-8. Therefore, for example, in a case where an output and a static pressure rise of a driving source (for example, a fan, a blower, or the like) for generating a flow circulating in the passage 91 are small or where the driving source is susceptible to the pressure loss, performance of a whole system including the dust flocculating duct 90 and the driving source is enhanced.

In other words, in a dust flocculating method of the embodiment 1-9 according to the present invention, when the dust is transported through the passage 91 by the gas flow, dust masses (clusters) are formed by generating the vortices in the gas flow.

In the dust flocculating method of the embodiment 1-9 according to the present invention, the vortices are generated along the surface of the wall 92 inside the passage 91.

In this way, the dust flocculating method in which a simple configuration is realized; the flocculation can be facilitated by increasing the number of times when the particulates in the dust collide with one another; the number of particulates can be decreased; and apparent diameters of the particulates can be increased can be provided.

In other words, the dust flocculating method of the embodiment 1-9 according to the present invention comprises: a step at which the dust is guided into the passage 91 by the gas flow; a step at which the dust is transported through an inside of the passage 91 by the gas flow traveling forward; a step at which the dust is caught up in vortical flows generated downstream of the protrusions 93 as projections protruding from the wall 92 of the passage 91 and circulates; a step at which a plurality of pieces of the dust are caused to collide with one another by the vortical flows; a step at which the plurality of pieces of the dust in collision with one another form the dust masses (clusters); and a step at which the dust masses are transported through the inside of the passage 91 by the gas flow.

In this way, the dust flocculating method in which a simple configuration is realized; the flocculation can be facilitated by increasing the number of times when the particulates in the dust collide with one another; the number of particulates can be decreased; and apparent diameters of the particulates can be increased can be provided.

(Embodiment 1-10)

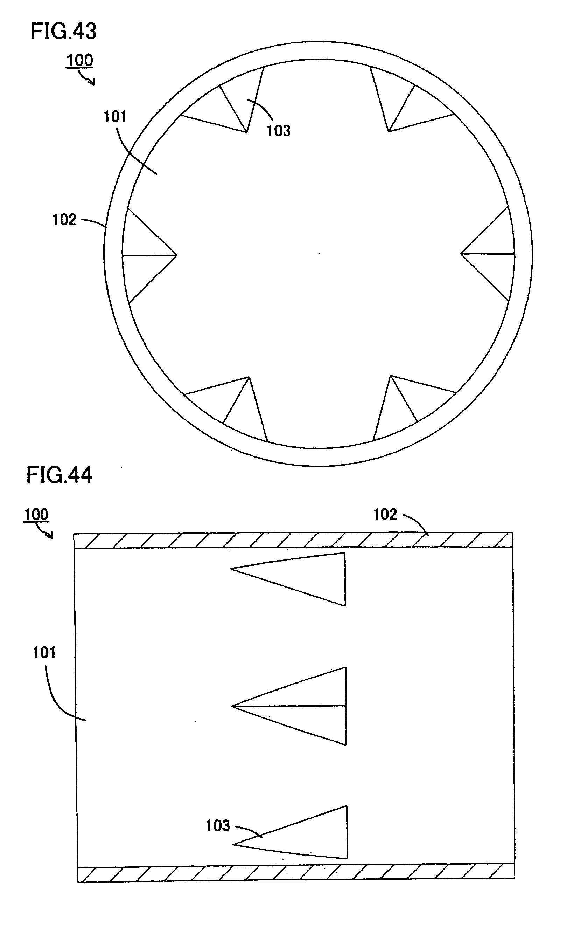

Fig. 42 shows a perspective view in which an important part of a dust flocculating duct of an embodiment 1-10 is viewed in a perspective manner. Fig. 43 shows a front view illustrating an important part of a dust flocculating duct of the embodiment 1-10. Fig. 44 shows a cross-sectional side view of the dust flocculating duct of the embodiment 1-10.

As shown in Fig. 42 through Fig. 44, in the dust flocculating duct 100 of the embodiment 1-10, a plurality of protrusions 103 are provided on an inner surface of a wall 102 of a passage 101, instead of the protrusions 93 in the embodiment 1-9. Each of the protrusions 103 is formed so as to be of the same triangular pyramid shape as that of each of the protrusions 83 in the embodiment 1-8 but an arrangement or a disposition thereof is different from that of the embodiment 1-8. In other words, when viewed from an upstream side, the plurality of protrusions 103 are disposed so as not to overlap each other and the neighboring protrusions 103 are disposed in an evenly-spaced manner. In addition, a configuration of the plurality of protrusions 103 may be provided such that the plurality of protrusions 103 are not disposed on a plane in a direction perpendicular to a flow direction. The other parts are the same as those of the embodiment 1-8.

In the dust flocculating duct 100 of the embodiment 1-10, the substantially same twin vortices as those in the embodiment 1-8 are generated by the protrusions 103. However, because the number of the protrusions 103 is small, as compared with that of the protrusions 83 in the embodiment 1-8, and the plurality of protrusions 103 are disposed so as not to overlap each other when viewed from the upstream side, many parts of a flow circulating along the wall 102 of the passage 101 each meet one of the protrusions 103 once and a part, which circulates between one of the protrusions 103 and another of the protrusions 103, of the many parts of the flow never meets any one of the protrusions 103. Therefore, in the dust flocculating duct 100 of the embodiment 1-10, agitation which can be imparted to the flow is drastically reduced, as compared with the dust flocculating duct 80 of the embodiment 1-8.

However, the dust flocculating duct 100 of the embodiment 1-10 has an advantage that a method of molding the dust flocculating duct 100 is extremely easy. In other words, when viewed from the upstream side, the plurality of protrusions 103 are disposed so as not to overlap each other and the neighboring protrusions 103 are disposed in an evenly-spaced manner. Therefore, for example, in a case where the dust flocculating duct 100 is formed through resin-molding, a molding die is configured such that the upstream side of the dust flocculating duct 100 is set on a movable side of the molding die and a downstream side of the dust flocculating duct 100 is set on a fixed side of the molding die, thereby allowing the dust flocculating duct 100 to be integrally molded without requiring a complicated configuration of the molding die.

In addition, for example, in a case where a foreign substance (for example, something like a milk bottle cap) which is of a plate-like shape and has an area approximate to an area of a cross section of the passage 101 or the like is mixed in a fluid circulating through the dust flocculating duct 100, for example, in the dust flocculating ducts of the embodiment 1-3 through the embodiment 1-9, since a plurality of turbulence generating parts are disposed so as to be present in the plane in the direction perpendicular to the flow direction, an edge of the plate-like shaped foreign substance having the area approximate to the area of the cross section of the passage is highly likely to be caught concurrently by the plurality of protrusions and thereby, a failure that the dust flocculating duct is clogged with the foreign substance is likely to occur. However, in the embodiment 1-10, since the configuration of the plurality of protrusions 103 is provided such that the plurality of protrusions 103 are not disposed so as to be present in the plane in the direction perpendicular to the flow direction, the plate-like shaped foreign substance, having the area approximate to the area of the cross section of the passage 101, or the like is hardly caught by the plurality of protrusions.

Accordingly, not only moldability of the dust flocculating duct 100 of the embodiment 1-10 is excellent but also, for example, in the case where the plate-like shaped foreign substance, having the area approximate to the area of the cross section of the passage, or the like is likely to be mixed in the flow, the failure that the foreign substance is caught by the turbulence generating parts and thereby, the dust flocculating duct is clogged with the foreign substance can be prevented. As described above, the dust flocculating duct having both the extremely high moldability and extremely high reliability can be obtained.

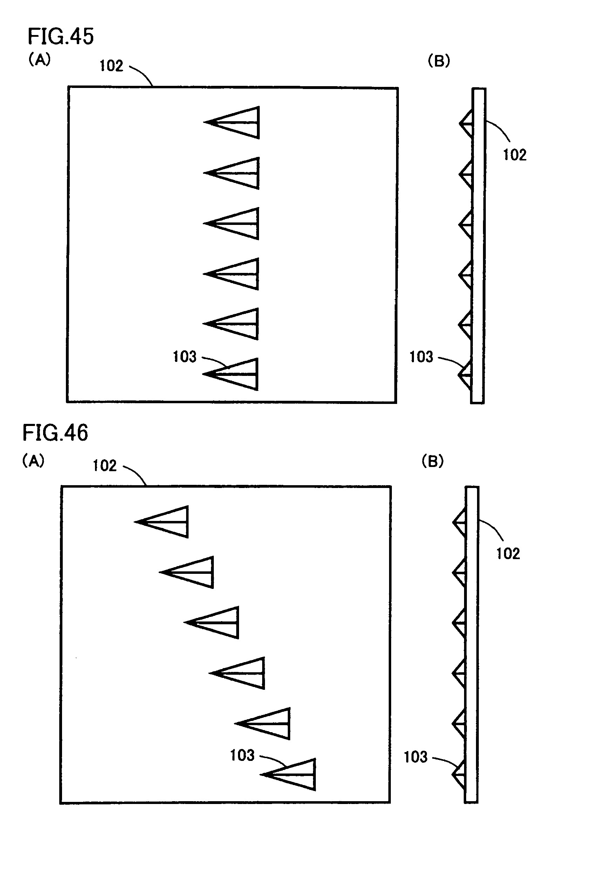

Fig. 45 through Fig. 49 are schematic diagrams illustrating the other arrangements of the protrusions in the embodiment 1-10. In each of Fig. 45 through Fig. 49, a diagram (A) with the protrusions viewed in a direction perpendicular to a direction of a passage and a schematic diagram (B) with the protrusions viewed from the upstream side of the flow are shown.

As shown in Fig. 45, a plurality of protrusions 103 are disposed on an inner circumferential surface in the direction perpendicular to the flow. In a case where the protrusions are disposed so as to be close to one another or in a cylindrical-shaped duct, when the plurality of protrusions 103 are disposed in a plane in the direction perpendicular to the flow, preferably each with approximately 90 degrees of an interior angle on the cross section of the passage, both extremely high moldability and extremely high reliability can be concurrently attained.

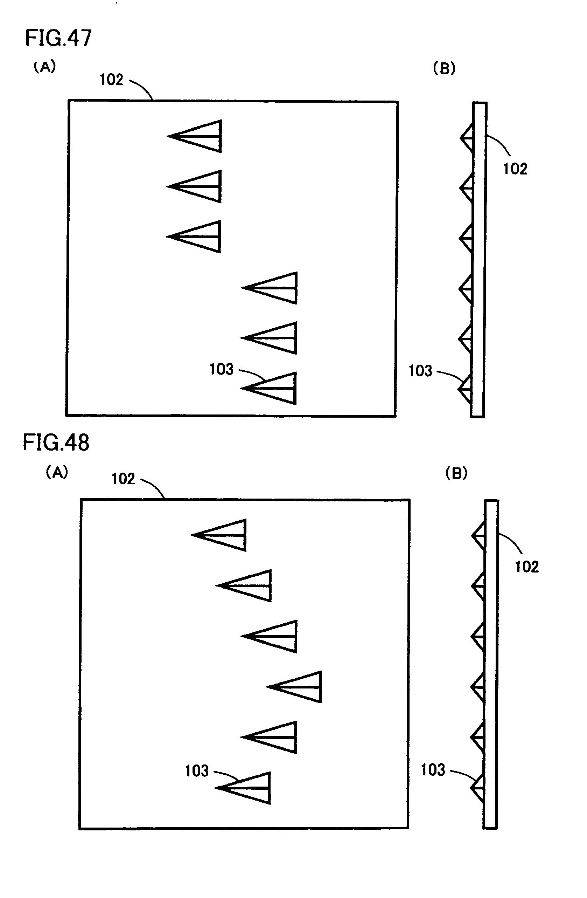

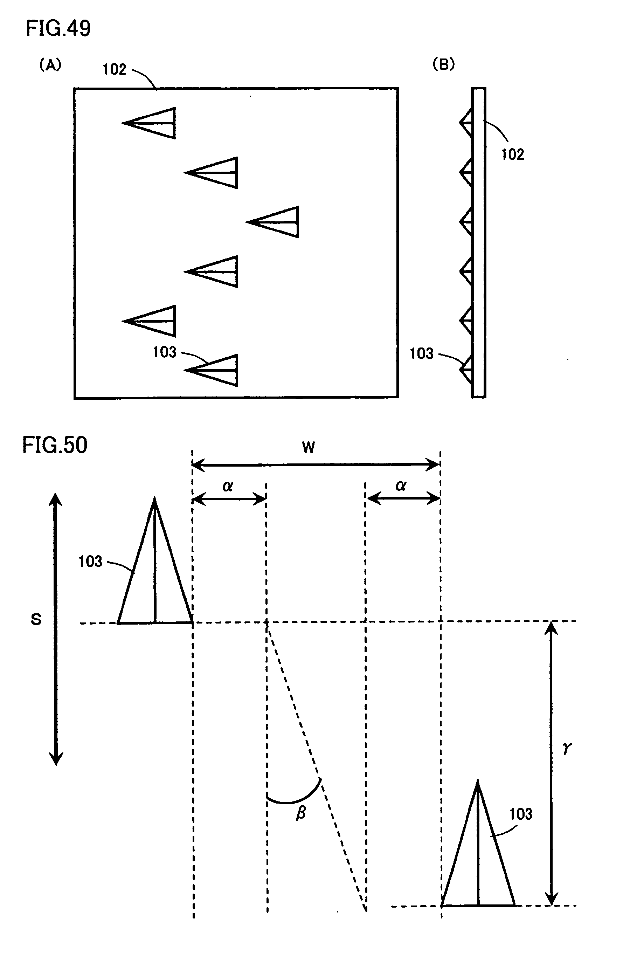

As shown in Fig. 46, a configuration of the protrusions 103 is provided such that neighboring protrusions 103 are slightly displaced from each other to avoid mutual overlapping of the neighboring protrusions 103, thereby preventing the duct from being clogged with the foreign substance due to the protrusions. As a configuration which allows the same effect as mentioned above to be attained, as shown in Fig. 47, a configuration is provided such that the protrusion are divided into several groups and the groups are mutually displaced from one another in the direction of the flow. As shown in Fig. 48 and Fig. 49, a sawtooth-like arrangement can be shown in an illustrative manner. By employing any of these arrangements of the protrusions 103, extremely high moldability can be attained.

Fig. 50 is a diagram illustrating an arrangement of neighboring protrusions in the dust flocculating duct of the embodiment 1-10.

As shown in Fig. 50, when the protrusions 103 are disposed so as not to overlap each other in a projection plane which is viewed from a direction parallel to the direction of the flow and a distance between the neighboring protrusions 103 is supposed to be W, W is expressed by the following equation.

$$W = 2\alpha + \gamma\tan\beta \ (\text{note: } \alpha, \ \beta, \text{ and } \gamma \text{ are any positive integers.})$$

With respect to the protrusions 103, it is supposed that $\alpha$ and $\beta$ are greater than or equal to 3 mm, respectively, and $\gamma$ (mm) is any number.

When the dust flocculating duct 100 is produced by using a molding die which is separated in a direction S parallel to the gas flow, the passage 101 and the protrusions 103 can be simultaneously molded. This allows a molding cost to be drastically reduced. Regarding the distance between the protrusions 103, by ensuring a lower limit of W (mm), the protrusions can be disposed so as not to overlap each other in the projection plane perpendicular to the gas flow and a strength in portions of the molding die, which come between the protrusions, can be ensured.

In other words, in a dust flocculating method of the embodiment 1-10 according to the present invention, when the dust is transported through the passage 101 by the gas flow, dust masses (clusters) are formed by generating the vortices in the gas flow.

In the dust flocculating method of the embodiment 1-10 according to the present invention, the vortices are generated along the surface of the wall 102 inside the passage 101.

In this way, the dust flocculating method in which a simple configuration is realized; the flocculation can be facilitated by increasing the number of times when the particulates in the dust collide with one another; the number of particulates can be decreased; and apparent diameters of the particulates can be increased can be provided.

In other words, the dust flocculating method of the embodiment 1-10 according to the present invention comprises: a step at which the dust is guided into the passage 101 by the gas flow; a step at which the dust is transported through an inside of the passage 101 by the gas flow traveling forward; a step at which the dust is caught up in vortical flows generated downstream of the protrusions 103 as projections protruding from the wall 102 of the passage 101 and circulates; a step at which a plurality of pieces of the dust are caused to collide with one another by the vortical flows; a step at which the plurality of pieces of the dust in collision with one another form the dust masses (clusters); and a step at which the dust masses are transported through the inside of the passage 101 by the gas flow.

In this way, the dust flocculating method in which a simple configuration is realized; the flocculation can be facilitated by increasing the number of times when the particulates in the dust collide with one another; the number of particulates can be decreased; and apparent diameters of the particulates can be increased can be provided.

(Embodiment 1-11)

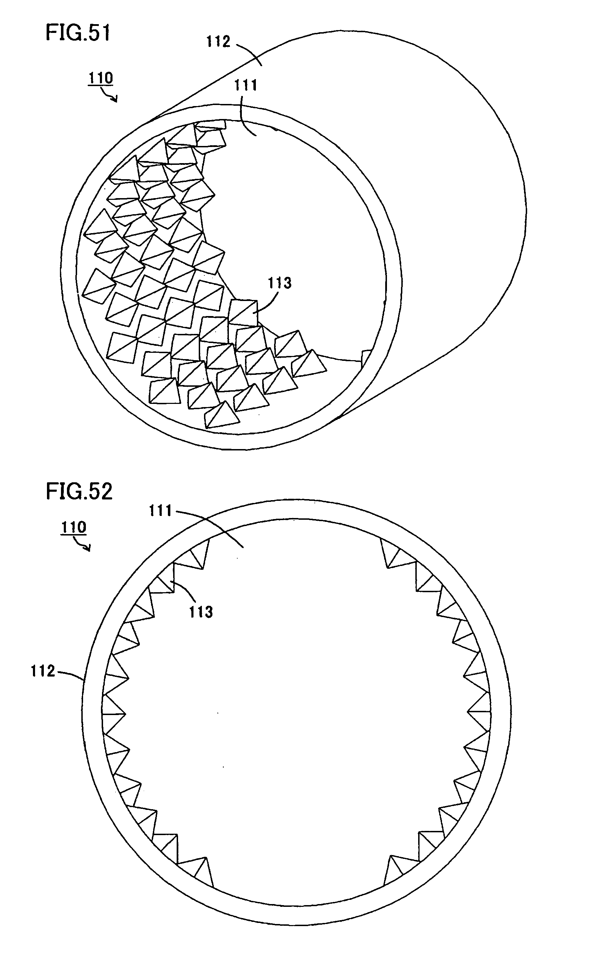

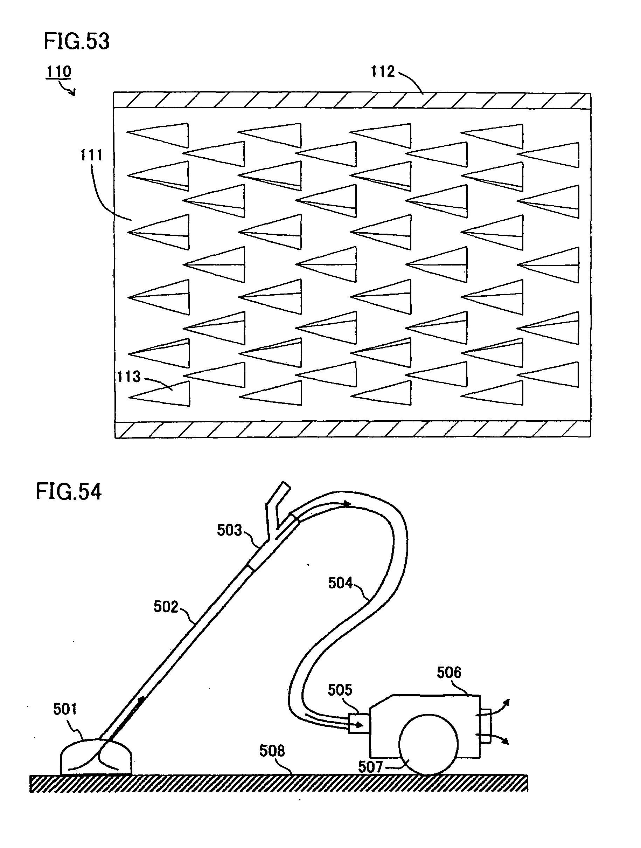

Fig. 51 shows a perspective view in which an important part of a dust flocculating duct of an embodiment 1-11 is viewed in a perspective manner. Fig. 52 shows a front view illustrating an important part of the dust flocculating duct of the embodiment 1-11. Fig. 53 shows a cross-sectional side view of the dust flocculating duct of the embodiment 1-11.

As shown in Fig. 51 through Fig. 53, in the embodiment 1-11 according to the present invention, a plurality of protrusions 113 are provided on a wall 112 of a passage 111, instead of the protrusions 83 in the embodiment 1-8. Each of the protrusions 113 is of a triangular pyramid shape (a length, in a flow direction, of JM=(1/4)D; and a height of a triangular pyramid of NM=(1/16)D) which is a similar figure of each of the protrusions in the embodiment 1-8 and has a size of 1/2 of a size of each of the protrusions 83 in the embodiment 1-8. Also in an arrangement thereof, the protrusions 113 are disposed in a 1/2-similar manner. The number of the triangular pyramid shaped protrusions 113 is set to be approximately four times the number of those in the embodiment 1-8. The other parts are the same as those in the embodiment 1-8.

In the dust flocculating duct 110 of the embodiment 1-11, twin vortices, each of which has a size of 1/2 of a size of each of the vortices generated by the protrusions 83 in the embodiment 1-8 and has a shape substantially similar to each of the vortices generated by the protrusions 83 in the embodiment 1-8, are generated by the protrusions 113. Intensities of the twin vortices generated by one of the protrusions 113 are reduced as compared with those of the twin vortices generated by one of the protrusions 83 in the embodiment 1-8. However, since a large number of the protrusions 113 are provided, agitation substantially similar to the agitation imparted in the embodiment 1-8 can be imparted to a flow.

As described above, in a case where sizes of particulates to be flocculated are mainly in micrometer order, a phenomenon that particularly in an area from the wall surface of the passage 111 having a diameter D to a position which is (1/8)D distant from the wall surface, a density of distribution of the particulates to be flocculated is high is observed. However, in the embodiment 1-11, since the plurality of protrusions 113 are disposed in a multistage manner so as to each have the height (1/16)D, in the area from the wall 112 of the passage 111 having the diameter D to the position (1/8)D, where the density of distribution of the particulates to be flocculated is particularly high, there is a limitation that only a half of such an area can be actively agitated.

However, the protrusions 113 in the embodiment 1-11 have the following advantage: since each of the protrusions 113 has the height of (1/16)D which is 1/2 of the height of each of the protrusions 83 in the embodiment 1-8, a reduction of a passage area due to the protrusions 113 disposed so as to be present in the same plane in the direction perpendicular to the flow is 1/4 of that in the embodiment 1-8, thereby markedly reducing also a pressure loss in the dust flocculating duct 110, as compared with that in the dust flocculating duct 80 in the embodiment 1-8.

Furthermore, in the embodiment 1-11, owing to the height of (1/16)D which each of the protrusions 113 has, the twin vortices generated by the protrusions 113 exert an influence on a velocity boundary layer which develops on the wall 112 of the passage 111 of the dust flocculating duct 110, thereby attaining an effect that a thickness of the velocity boundary layer is decreased.

In general, in the vicinity of the wall surface in the passage, due to a viscosity of a fluid circulating through the passage, the velocity boundary layer develops. A flow velocity in the boundary layer is low as compared with that in a middle portion of the passage and a resistance against a flow in the boundary layer is high. In other words, when the boundary layer develops and the thickness of the boundary layer increases, an area of a region which allows an easy flow decreases and an behavior observed as if an apparent area of a cross section of the passage decreased is exhibited. Accordingly, when the boundary layer develops and the thickness of the boundary layer increases, the pressure loss of the passage increases.

Because the twin vortices generated by the protrusions 113 in the embodiment 1-11 are small in scale and generated in the vicinity of the wall surface, the twin vortices generated by the protrusions 113 suppress the development of the above-mentioned boundary layer, thereby decreasing the resistance against the flow around the wall surface of the passage and drastically reducing the pressure loss in the passage 111.

For example, in a case where a diameter D of the passage 111 is 40 mm and a representative velocity of the flow is 25 m/second at ordinary temperatures and pressures, the experimental result showed a relationship: (a pressure loss due to a portion in which turbulence occurs) < (an effect of suppressing the development of the boundary layer due to the portion in which turbulence occurs) and despite the presence of the large number of the protrusions 113, the dust flocculating duct 110 having a smaller pressure loss than that of a duct having no protrusions was obtained.

In addition, also in a case where a foreign substance or the like is mixed in the fluid circulating through the dust flocculating duct 110, because the height of each of the protrusions 113 is 1/2 of the height of each of the protrusions 83 in the embodiment 1-8, the foreign substance is hardly caught by the protrusions 113, as compared with the protrusions 83 in the embodiment 1-8.

Accordingly, through using the dust flocculating duct 110 of the embodiment 1-11, sufficient flocculation performance is attained owing to the agitation by the large number of the twin vortices and further, a duct frictional resistance can be reduced, thereby obtaining the dust flocculating duct 110 which allows the pressure loss to be drastically reduced. In addition, for example, also in a case the foreign substance or the like is likely to be mixed in the flow, a failure that the foreign substance is caught by the protrusions 113 and causes clogging can be substantially completely prevented, thereby obtaining the dust flocculating duct 110 which realizes extremely high reliability.

Moreover, by forming the turbulence generating parts such that respective sides of which each of the turbulence generating parts is made up are made round so as to each have a radius of one mm, the clogging of the dirt can be drastically reduced, although this is not described in each of the embodiments. Furthermore, by eliminating any acute-angle groove, the dust flocculating duct having excellent maintainability can be configured.

In other words, in a dust flocculating method of the embodiment 1-11 according to the present invention, when the dust is transported through the passage 111 by the gas flow, dust masses (clusters) are formed by generating the vortices in the gas flow.

In the dust flocculating method of the embodiment 1-11 according to the present invention, the vortices are generated along the surface of the wall 112 inside the passage 111.

In this way, the dust flocculating method in which a simple configuration is realized; the flocculation can be facilitated by increasing the number of times when the particulates in the dust collide with one another; the number of particulates can be decreased; and apparent diameters of the particulates can be increased can be provided.

In other words, the dust flocculating method of the embodiment 1-11 according to the present invention comprises: a step at which the dust is guided into the passage 111 by the gas flow; a step at which the dust is transported through an inside of the passage 111 by the gas flow traveling forward; a step at which the dust is caught up in vortical flows generated downstream of the protrusions 113 as projections protruding from the wall 112 of the passage 111 and circulates; a step at which a plurality of pieces of the dust are caused to collide with one another by the vortical flows; a step at which the plurality of pieces of the dust in collision with one another form the dust masses (clusters); and a step at which the dust masses are transported through the inside of the passage 111 by the gas flow.

In this way, the dust flocculating method in which a simple configuration is realized; the flocculation can be facilitated by increasing the number of times when the particulates in the dust collide with one another; the number of particulates can be decreased; and apparent diameters of the particulates can be increased can be provided.

(Embodiment 1-12)

A dust flocculating duct of an embodiment 1-12 according to the present invention has any of the swirling part (s) in the embodiment 1-1 through the embodiment 1-3 or any of the protrusions in the embodiment 1-4 through the embodiment 1-11 on a part of an upstream side of a passage thereof. A part of a downstream side of the passage, the swirling part(s), or the protrusions have a first electrification part for positively contact-electrifying dust contained in gas circulating through the passage and a second electrification part for negatively contact-electrifying the dust contained in the gas circulating through the passage. The first electrification part and the second electrification part are disposed so as to face each other.

Inside the passage, vortices are formed by the swirling part(s) or the protrusions. Particulates in the dust are caught up in the vortices, thereby increasing a probability with which the particulates collide with one another. The particulates in collision with one another are flocculated and form particulate masses (clusters). Here, in order to further increase the probability with which the particulates collide with one another, a wall surface of the passage is formed of a functional material which imparts an electric charge to the particulates by contact and the particulates are caused to contact the wall surface, thereby electrifying the particulates. Since a Coulomb force is exerted between the electrified particulates, the particulates attract one another, thereby allowing a drastic increase in the collision probability. In addition, by forming the vortices, the probability with which the particulates caught up in the vortices contact the wall surface of the passage is drastically increased, thereby allowing the particulates to be efficiently electrified.

Here, provided that all the particulates being present inside the passage are efficiently electrified by forming the vortices, attract one another due to the Coulomb force exerted between the particulates, collide with one another, and are flocculated, a time period from when the dust particulates flow into the passage to when the dust particulates collide with one another and are flocculated is obtained based on a balance of the Coulomb force exerted between the dust particulates and a resistive force which a fluid exerts on the dust.

A viscous drag of air is deemed as the fluid resistive force exerted on the dust particulates. The fluid motion is supposed to be steady and thus, the other forces (a force due to a pressure gradient, a reactive force applied to the particulates due to a velocity variation, and Basset term which is a force associated with an energy loss caused by surface friction) are disregarded. In addition, since an image force is sufficiently small as compared with the Coulomb force, the image force is disregarded (The First Edition of Basic Aerosol Science, P17, published by Morikita Publishing Co., Ltd.).

The Coulomb force Fq(N) exerted between the dust particulates is expressed by the following equation.

$$Fq=(q_1 \cdot q_2)/(4\pi\varepsilon_o \cdot r^2)$$

Here, $q_1$ and $q_2$ represent electric charge amounts (C) which are charged to the dust particulates through electrification, r represents a distance (m) between the dust particulates.

It is supposed that each of theoretical limit values of the electric charge amounts which are charged to the dust particulates is a maximum surface charge density of 26.5 $\mu C/m^2$ which is derived from a dielectric breakdown voltage of 3MV/m in air. It is supposed that each of the electric charge amounts charged to the dust particulates is approximately half of the air dielectric breakdown limit.

The fluid resistive force Fr(N) exerted on the dust particulates is expressed by the following equation (The First Edition of Powder Engineering, P91, published by Ohmsha, Ltd.).

$$Fr=3\pi\eta \cdot Vr \cdot Dp/Cc$$

Here, n represents a viscosity of the air: $1.8 \times 10^{-5}$(kg·m$^{-1}$·s$^{-1}$); Vr represents a relative velocity (m/s) of the dust particulates to the fluid; Dp represents a diameter (m) of each of the dust particulates; and Cc represents a Cunningham correction coefficient. A mean free path of the air at ordinary temperatures and pressures is $\lambda_{air}=6.5 \times 10^{-8}$(m). When it is supposed that the total number of the dust particulates flowing into the passage for approximately 120 seconds is 100 trillion, an average distance between the dust particulates is calculated to be 0.025mm. The dust particulates flowing into the passage collide with the surface of the passage wall and are electrified so as to have the electric charge amount of approximately half of the air dielectric breakdown limit. The electrified particulates attract one another due to the Coulomb force occurring between the positively or negatively electrified dust particulates, collide with one another, and are mutually flocculated. The time period required from when the dust particulates flow into the passage to when the dust particulates collide with one another and are flocculated is calculated to be 0.14 second from the above-mentioned equation.

Accordingly, in order to attain a minimum requirement that as a time period for forming the dust masses, the time period required from when the dust particulates flow into the passage to when the dust particulates collide with one another and are flocculated is 0.14 second or more, it is required to set a length of a gas duct to be 1.4 meters or more. In the present embodiment, a length of the dust flocculating duct is set to be 3 meters. Accordingly, the sufficient time period for forming the dust masses is provided.

The time period required to when the dust particulates collide with one another is shortened in accordance with an increase in the electric charge amount q, with a decrease in the distance r between the dust particulates (increasing the total number of the dust particulates to be inputted), and with a decrease in the diameter Dp of each of the dust particulates.

In addition, since by providing the vortex generating part(s), the distance between the dust particulates can be forcedly decreased by the generated vortices, thereby allowing an effective collision and flocculation.

In the above-described configuration, the gas flowing into the dust flocculating duct of the embodiment 1-12 passes through the dust flocculating duct while undergoing the following steps: a step at which the dust is guided into the passage by the gas flow; a step at which the dust is transported through an inside of the passage by the gas flow traveling forward; a step at which the dust circulates along the wall surface of the passage; a step at which the dust is caused to collide with the protrusions projecting from the wall surface of the passage; a step at which the dust is caught up in vortical flows generated downstream of the protrusions and circulates; a step at which the dust is caused to collide with the wall surface of the passage by the vortical flows a plurality of times; a step at which a plurality of pieces of the dust are caused to collide with one another by the vortical flows; a step at which the plurality of pieces of the dust in collision with one another form the dust masses (clusters); and a step at which the dust masses are transported through the inside of the passage by the gas flow.

At this time, the gas flow circulating through the first electrification part and the second electrification part is controlled in the below-described manner. Specifically, when the dust is transported through the inside of the passage by the gas flow, gas flow control is performed so as to electrify the dust by causing the dust to collide with the surface of the wall and the protrusion and thereafter, so as to cause the particulates of the dust to collide with one another; and a period of causing a plurality of pieces of the dust in collision with one another to form dust masses (clusters) is provided.

In the above-described manner, collision of the dust which has been caused to collide with the first electrification part and been positively electrified and the dust which has not collided with the first electrification part is facilitated. When the former dust and the latter dust collide with each other, dielectric polarization occurs on a surface of the latter dust due to the electric charge of the former dust and a strong bonding force is generated between the former dust and the latter dust due to an electrostatic force. Due to this bonding force, a first dust mass in which the plurality of pieces of dust have been flocculated is generated. The first dust mass has been positively electrified as a whole. By the same mechanism as that by which the first dust mass is generated, a second dust mass which has been negatively electrified as a whole is generated by the second electrification part.

Further gas flow control is performed so as to cause positively electrified first dust mass generated by the first electrification part and negatively electrified second dust mass generated by the second electrification part to collide with each other; and a period of bonding the first dust mass and the second dust mass in collision with each other due to an electrostatic force and of forming further large dust masses (large clusters) is provided.

By performing the gas flow control as described above, collision of the first dust mass which has been positively electrified as a whole and the second dust mass which has been negatively electrified as a whole is facilitated.

Upon the collision of the first dust mass and the second dust mass, due to a strong electrostatic force generated from the positive electric charge which the former dust mass has and the negative electric charge which the latter dust mass has, a further strong bonding force is generated between the former dust mass and the latter dust mass. Due to this bonding force, a large dust mass in which the plurality of dust masses have been further flocculated is generated.

By performing the gas flow control as described above, the flocculation of fine dust, which is caused by the collision, is repeated, thereby forming large dust masses (large clusters).

As described above, in the dust flocculating duct, the wall and/or the vortex generating part(s) have/has the first electrification part for positively contact-electrifying the dust contained in the gas circulating through the passage and the second electrification part for negatively electrifying the dust contained in the gas circulating through the passage and the first electrification part and the second electrification part are disposed so as to face each other. By employing the above-described configuration, when the dust is transported by the gas flow through the passage, the dust contacts the first electrification part or the second electrification part and is positively or negatively electrified by the first electrification part for positively contact-electrifying the dust or the second electrification part for negatively contact-electrifying the dust, whereby the positively or negatively electrified dust can be caused to form the dust masses (clusters). This causes the positively or negatively electrified dust to adsorb each other by electrostatic action, thereby causing the dust to form the dust masses (clusters).

On the inner surface of the wall of the passage, the plurality of protrusions are provided. The plurality of protrusions are disposed such that the plurality of protrusions partially overlap each other when viewed from an upstream side of the dust flocculating duct in a perspective manner, whereby the dust is caused to easily collide with the wall surface or the protrusions.

As described above, in the dust flocculating duct having both of the vortex generating part(s) and the electrification parts, since the vortex generating part(s) protrude(s) toward an inside of the passage, the particulates easily contact the inner wall. Further, an area of the wall surface is increased owing to the vortex generating part(s), thereby allowing an increase in the probability with which the particulates collide with the wall surface. Since the probability with which the particulates collide with the wall surface can be increased by the vortices generated by the vortex generating part(s), the number of times when the particulates contact the inner wall can be increased. Since this allows the particulates in the dust to be further easily electrified, the dust particulates are further easily flocculated and the generation of the dust masses is facilitated.

In a case where as another embodiment according to the embodiment 1-12, each of the dust flocculating ducts of the embodiment 1-1 through the embodiment 1-3 is formed by using an electrification member, as the plurality of small passages partitioned by the swirling part, first small passages for positively contact-electrifying the dust contained in the gas circulating through the passage and second small passages for negatively contact-electrifying the dust contained in the gas circulating through the passage may be included, and the first small passages and the second small passages may be disposed so as to neighbor each other, respectively.

For example, a small passage enclosed by the plane 13a, the plane 13b, and the wall 12 in the embodiment 1-1 and a small passage enclosed by the plane 13c, the plane 13d, and the wall 12 in the embodiment 1-1 are supposed to be the first small passages; and a small passage enclosed by the plane 13b, the plane 13c, and the wall 12 and a small passage enclosed by the plane 13d, the plane 13a, and the wall 12 are supposed to be the second small passages.

As described above, by dividing the passage 11 into the small passages, as compared with a case where the passage 11 is not divided into the small passages, an influence of shearing which is exerted on the gas by the wall 12 is increased and thereby, a power of flocculating the dust can be enhanced. In addition, swirling flows formed in the respective small passages collide with one another on a downstream side of end portions of the small passages and as a result, the particulates caught up in the swirling flows can be caused to efficiently collide with one another.

In a case where as further another embodiment according to the embodiment 1-12, each of the dust flocculating ducts of the embodiment 1-4 through the embodiment 1-11 is formed by using an electrification member, as the protrusions, first protrusions for positively contact-electrifying the dust contained in the gas circulating through the passage and second protrusions for negatively contact-electrifying the dust contained in the gas circulating through the passage may be included, and the first protrusions and the second protrusions may be disposed such that each of the first protrusions and each of the second protrusions face each other, respectively.

For example, the protrusions 63a and the protrusions 63d in the embodiment 1-6 are supposed to be the first protrusions, and the protrusions 63c and the protrusions 63d in the embodiment 1-6 are supposed to be the second protrusions.

As described above, by using the protrusions 63a and protrusions 63d for positively contact-electrifying the dust and the protrusions 63c and protrusions 63d for negatively contact-electrifying the dust, when the dust is transported by the gas flow through the passage, the dust contacts the first protrusions or the second protrusions and is positively or negatively electrified, whereby the positively or negatively electrified dust can be caused to form the dust masses (clusters). This causes the positively or negatively electrified dust to adsorb each other by electrostatic action, thereby causing the dust to form the dust masses (clusters).

In addition, it is preferable in the dust flocculating duct of the embodiment 1-12 that the protrusions are made of the same material as the material forming the wall.

This allows a flocculation effect to be enhanced since the particulates in the dust contained the gas circulating through the inside of the passage are electrified by the collision with either of the wall or the protrusions.

(Embodiment 1-13)

A dust flocculating duct of an embodiment 1-13 according to the present invention has any of the swirling part (s) in the embodiment 1-1 through the embodiment 1-3 or any of the protrusions in the embodiment 1-4 through the embodiment 1-11 on a part of an upstream side of a passage thereof. A part of a downstream side of the passage, the swirling part(s), or the protrusions are made of a material which is capable of positively or negatively contact-electrifying dust contained in gas circulating through the passage.

In the dust flocculating duct having the above-described configuration, sequentially performed are a step at which the dust is guided into the passage by a gas flow; a step at which the dust is transported through an inside of the passage by the gas flow traveling forward; a step at which the dust circulates along a wall surface of the passage; a step at which the dust is caused to collide with the protrusions projecting from the wall surface of the passage; a step at which the dust is caught up in vortical flows generated downstream of the protrusions and circulates; a step at which the dust is caused to collide with the wall surface of the passage by the vortical flows a plurality of times; a step at which a plurality of pieces of the dust are caused to collide with one another by the vortical flows; a step at which the plurality of pieces of the dust in collision with one another form the dust masses (clusters); and a step at which the dust masses are transported through the inside of the passage by the gas flow.

At this time, the gas flow circulating through the dust flocculating duct is controlled in the below-described manner. Specifically, when the dust is transported through the inside of the passage by the gas flow, gas flow control is performed so as to electrify the dust by causing the dust to collide with the surface of the wall and the protrusion and thereafter, so as to cause the particulates of the dust to collide with one another; and a period of causing a plurality of pieces of the dust in collision with one another to form dust masses (clusters) is provided

This facilitates collision of the dust which has collided with the dust flocculating duct and been positively or negatively electrified and the dust which has not collided with the dust flocculating duct. When the former dust and the latter dust collide with each other, dielectric polarization occurs on a surface of the latter dust due to the electric charge of the former dust and a strong bonding force is generated between the former dust and the latter dust due to an electrostatic force. Due to this bonding force, dust masses (clusters) in which the plurality of pieces of dust have been flocculated are generated.

By performing the gas flow control as described above, fine dust is flocculated by the collision, thereby forming dust masses (clusters).

In a case where as another embodiment according to the embodiment 1-13, each of the dust flocculating ducts of the embodiment 1-1 through the embodiment 1-3 is formed of an electrification material, the swirling part(s) may be formed of a material which is capable of positively or negatively contact-electrifying the dust contained in the gas circulating through the small passages.

For example, the swirling part 13 in the dust flocculating duct of the embodiment 1-1 is formed of the material which is capable of positively or negatively contact-electrifying the dust contained in the gas circulating through the small passages.

In a case where the passage is divided into the small passages, as compared with a case where the passage is not divided, a probability with which the particulates collide with the swirling part is increased. The passage 11 is divided into the small passages by the swirling part 13 and the swirling part 13 is made of the material which is capable of positively or negatively contact-electrifying the dust contained in the gas circulating through the small passages, thereby allowing an increase in an electrification amount charged in the particulates and enhancement of a dust flocculation effect.

In a case where as further another embodiment according to the embodiment 1-13, each of the dust flocculating ducts of the embodiment 1-4 through the embodiment 1-11 is formed of an electrification member, the protrusions may be formed of a material which is capable of positively or negatively contact-electrifying the dust contained in the gas circulating through the passage.

For example, the protrusions 43 of the embodiment 1-4 are formed of the material which is capable of positively or negatively contact-electrifying the dust contained in the gas circulating through the passage 41.

This facilitates collision of the dust which has collided with the protrusions 43 of the dust flocculating duct 40 and been positively or negatively electrified and the dust which has not collided with the protrusions 43 of the dust flocculating duct 40. When the former dust and the latter dust collide with each other, dielectric polarization occurs on a surface of the dust which has not collided with the protrusions 43 of the dust flocculating duct 40 due to the electric charge of the dust which has collided with the protrusions 43 of the dust flocculating duct 40 and been positively or negatively electrified, and a strong bonding force is generated between the former dust and the latter dust due to an electrostatic force. Due to this bonding force, dust masses (clusters) in which the plurality of pieces of dust have been flocculated are generated.

By performing the gas flow control as described above, fine dust is easily flocculated by the collision and the dust masses (clusters) are easily formed.

In addition, it is preferable in the dust flocculating duct of the embodiment 1-13 that the protrusions are formed of the same material as the material forming the wall.

This allows a flocculation effect to be enhanced since the particulates in the dust contained the gas circulating through the inside of the passage are electrified by the collision with either of the wall or the protrusions.

As described above, the present invention relates to the mechanism of flocculating the fine particulates. Since an efficiency of collecting the fine particulates can be enhanced by utilizing this mechanism, the dust flocculating duct according to the present invention is applicable to a vacuum cleaner, an air cleaner, an air conditioner, etc.

(Embodiment 1-14)

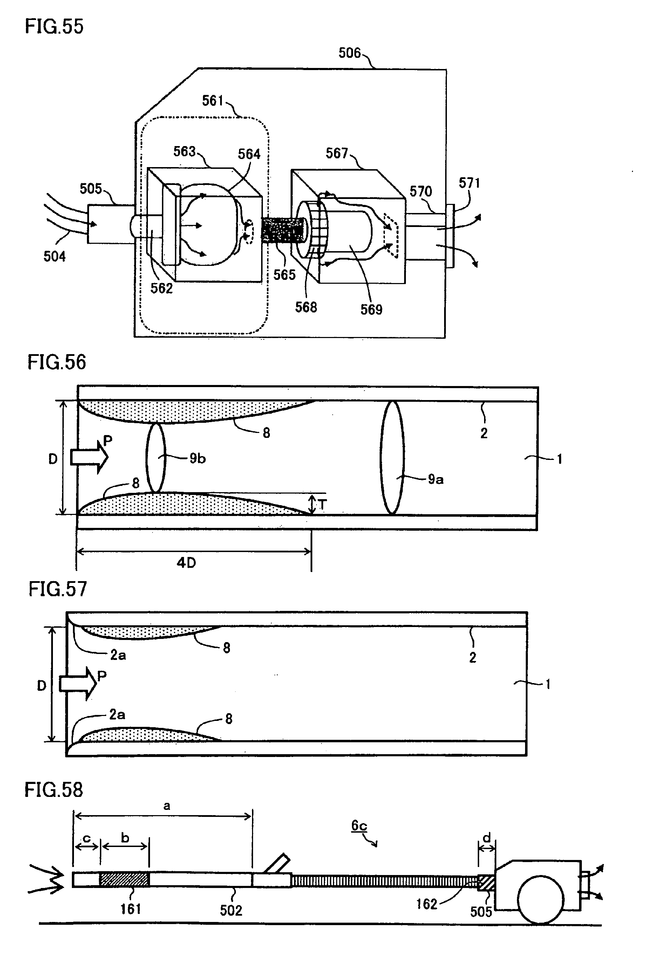

Fig. 54 is a diagram illustrating a whole of a vacuum cleaner which comprises a dust flocculating duct according to the present invention, as an embodiment 1-14 according to the present invention. Fig. 55 is an explanatory diagram illustrating a configuration of a main body of the vacuum cleaner according to the present invention, which comprises the dust flocculating duct according to the present invention.

As shown in Fig. 54 and Fig. 55, a suction inlet 501 connects to an extension pipe 502, a connecting pipe 503 having a handle, and a bendable suction hose 504 in order and communicates via a joining section 505 with the vacuum cleaner main body 506. In the vacuum cleaner main body 506, an electric blower 567, a dust collecting unit 561, a dust collecting case 563, a HEPA filter 570, a cord reel (not shown), a control circuit (not shown) for controlling a supply of an electric power to the electric blower 567, and the like are contained. Upon driving the electric blower 567, air is sucked from the suction inlet 501 and the air containing the dust passes through the extension pipe 502 which comprises the dust flocculating duct, according to the present invention, serving as a gas duct; the connecting pipe 503; and the suction hose 504 and is transported to the vacuum cleaner main body 506. The dust sucked into the vacuum cleaner main body 506 passes through the dust collecting unit 561, the electric blower 567, and the HEPA filter 570 and is discharged from an exhaust part 571. Among the particulates of the dust which has been sucked from the suction inlet 501 as mentioned above, the particulates having large sizes are accumulated in the dust collecting unit 561. The air from which the dust has been removed and which has been clean passes through an inside of an electric motor 569 to cool the electric blower 567 and is discharged out of the vacuum cleaner main body 506. On side surfaces of the vacuum cleaner main body 506, wheels 507 which support the vacuum cleaner main body 506 and allow the vacuum cleaner main body 506 to be movable on a floor surface 508 are provided in a rotatable manner.

Upon driving the electric blower 567, a fan 568 generates a suction gas flow, the air containing the dust is fed via the suction hose 504 and a main body joining section 505 into the vacuum cleaner main body 506, and the air is blown toward the connecting part 562, the dust collecting filter 564, the connecting part 565, the fan 568, the electric motor main body 569, the HEPA filter 570, and the exhaust outlet 571. At this time, since the air containing fine dust and dust masses are transported while being mixed with the gas flow at midstream of the transportation, the particulates of the dust and the dust masses contact, suck, and adsorb one another, thereby causing the dust masses in the present invention to grow so as to be further large.

Since each of the sizes of the largely grown dust masses become larger than a mesh size of the dust collecting filter 564, the dust masses are collected by the dust collecting filter 564. Since by employing a configuration in which a plurality of electrification parts are provided or which allows the fine dust to contact the electrification part many times, each of the sizes of the collected dust masses becomes larger than the mesh size of the dust collecting filter 564. In such a case, the HEPA filter 570 is not needed.

In a case where the dust masses do not grow so as to have each of the sizes of the dust masses, which is larger than the mesh size of the dust collecting filter 564, the dust masses may pass through the filter 564. In such a case, the dust masses may be collected by using the HEPA filter 570.

As described above, the vacuum cleaner has the electric blower 567, the extension pipe 502 communicating via the suction inlet 501 with the electric blower 567, and the dust collecting unit 561. The vacuum cleaner in which the dust is sucked from the suction inlet 501 by the gas flow generated by the electric blower 567 and the dust passing through the extension pipe 502 is collected in the dust collecting unit 561 comprises the extension pipe 502 including the dust flocculating duct of any of the embodiments according to the present invention, whereby the sucked dust is flocculated in the extension pipe 502 of the vacuum cleaner and the dust can grow to be dust masses (clusters). These dust masses are caused to appropriately grow, thereby increasing a mass (weight) of each of the dust masses and causing the clusters to grow. The mass (weight) of each of the dust masses is increased, whereby, for example, in a cyclone vacuum cleaner, the dust masses can be collected through centrifugal separation. In addition, in a filter-type vacuum cleaner, since each of sizes of the dust masses can be made larger than a mesh size of a filter, the dust can be collected by a filter having a large mesh size. In each case, since a pressure loss in suction gas hardly occurs, a dust suction power (power) of the vacuum cleaner main body is hardly reduced.

(Embodiment 1-15)

Fig. 56 is a schematic explanatory diagram illustrating a view of a gas flow in the vicinity of an inlet of a passage.

As shown in Fig. 56, when gas P flows into the passage 1, a direction in which the gas P flows cannot be suddenly changed. Therefore, in a case where a portion of an edge face of an inlet of the passage 1 is not formed so as to be round, a part of the gas flow is exfoliated from a wall 2 of the passage 1 and a contracted flow 8 which forms vortices in the vicinity of the inlet of the passage 1 is generated. In the passage which is a circular pipe having a diameter D, the contracted flow 8 whose length from the inlet of the passage 1 is approximately 4D is generated. A region 9a shows an example of a region which has no contracted flow 8 inside the passage 1 and a region 9b shows a region whose contracted flow 8 is the largest inside the passage 1. It is supposed that a height of the contracted flow 8 from the wall 2 of the passage 1 at a position of the region 9b is T. When the contracted flow 8 is generated inside the passage 1, as it can be seen that the region 9b is smaller than the region 9a, it occurs as if an internal diameter of the passage 1 was decreased and a pressure loss is incurred. In the region 9b, it can be considered as if the internal diameter of the passage 1 was (D-2T).

In order to prevent such a pressure loss, the round portion is formed at an inlet portion of the circular pipe in order to suppress development of the contracted flow.

Fig. 57 is a schematic explanatory diagram illustrating a view of the gas flow in the vicinity of the inlet of the passage whose portion of the edge face of the inlet is formed so as to be round.

As shown in Fig. 57, by forming the round portion 2a on the edge face of the inlet of the passage 1, the contracted flow 8 can be suppressed, as compared with an inside of a passage having no round portion 2a.

In order to sufficiently obtain an effect of agitation of the gas flow, which is attained by a vortex generating part (s), it is required to dispose the vortex generating part(s) in a region other than a region where the contracted flow 8 is generated. If the vortex generating part(s) is/are disposed in the region of the contracted flow 8, the effect of the generation of the vortices cannot be sufficiently exhibited. Therefore, it is preferable that the vortex generating part(s) is/are disposed more downstream than a position where the gas flow exfoliated from the wall 2 in the vicinity of the inlet of the passage 1 adheres again to the wall 2.

As described above, in the dust flocculating duct of the embodiment 1-15, the vortex generating part(s) is/are disposed in the region having no contracted flow in the passage, thereby enhancing the effect of the generation of the vortices.

However, in a case where it is required that the vortex generating part(s) is/are disposed in the region of the contracted flow 8, it is necessary to ensure a height of the vortex generating part(s), which is greater than or equal to a height of the region of the contracted flow in a radial direction.

Here, a position, where the vortex generating part(s) is/are disposed, for maximally obtaining the effect of the agitation of the gas flow will be described. A circular pipe having a diameter D of 40 mm was used as the passage. Fine powder was caused to flow into the circular pipe at a representative flow velocity of 20m/second at ordinary temperatures and pressures, and a distance X from the inlet to a position where the gas flow adhered again to a pipe wall was visually examined.

A relationship between a size of the round portion and the distance X from the inlet of the passage to the position where the vortex generating part(s) is/are disposed is shown in Table 1. A0 shows a cross-sectional area of the region 9a of the circular pipe. A1 shows a cross-sectional area of the region 9b which is a minimum portion of a portion where the gas flow circulates, with the contracted flow region generated in the circular pipe.

[Table 1]

| R (mm) | None | 5 (D/8) | 10 (D/4) |
|---|---|---|---|
| Loss coefficient ξ | 0.56 | 0.28 | 0.01 |
| Contraction coefficient Cc: A1/A0 | 0.57 | 0.65 | 0.9 |
| Distance X from inlet | 4D | D | 0 |

In a case where the circular pipe has no round portion, a loss coefficient $\xi$ of the gas flow flowing into the circular pipe is 0.56 and a contraction coefficient Cc can be obtained from an equation $Cc=(1+\sqrt{\xi})^{-1}$ and is 0.57. It is considered that the height T of the region of the contracted flow in the radial direction in this case is approximately 4.9 mm. If the height of the vortex generating part(s) is 5 mm, when the vortex generating part(s) is/are disposed in the contracted flow region, the vortex generating part (s) is/are completely buried in a vortex region, whereby a desired effect cannot be exhibited. However, when the vortex generating part(s) is/are disposed in the above-mentioned region other than the region, where the contracted flow 8 is generated, so as to ensure a distance X of 160 mm (4D) from the inlet of the pipe, the vortex generating part(s) can be disposed immediately ahead of a position where the gas flow adheres again to the wall, thereby allowing the desired effect to be attained (refer to "Mechanical Engineering, Reference Guide, New Version, the Fourth Printing, A5-77").

In the dust flocculating duct of the embodiment 1-15, it is preferable that the vortex generating part(s) is/are disposed in a position four times as distant from an inlet of the passage as a representative length of a cross section of the passage. This allows the vortex generating part(s) to be disposed in a position having no contracted flow. Thus, the effect of the generation of the vortices, which is attained by the vortex generating part(s), can be enhanced.

In a case where a radium R of the round portion is 5 mm, the loss coefficient $\xi$ of the gas flowing into the circular pipe is 0.28 and the contracted coefficient Cc is 0.65. It is considered that the height of the contracted flow in the radial direction in this case is 3.9 mm. It was visually confirmed that the position where the gas flow adhered again to the wall was a position 40 mm distant from the pipe inlet. In order to dispose the vortex generating part(s) in the region other than the region where the contracted flow is generated, it is required to ensure a distance X of 40mm from the pipe inlet. By ensuring this distance, the vortex generating part(s) can be disposed immediately ahead of the position where the gas flow adheres again to the wall, thereby allowing the desired effect to be attained.

In a case where the radius R of the round portion is 10 mm, even when the agitating part(s) is/are disposed immediately around the inlet of the circular pipe, the desired effect can be attained.

In the dust flocculating duct of the embodiment 1-15, it is preferable that the edge face of the inlet of the passage is formed so as to have the round portion and the vortex generating part(s) is/are disposed in the vicinity of the inlet of the passage.

Since by forming the round portion at the edge face of the inlet of the passage, the contracted flow generated inside the passage is made small, even when the vortex generating part(s) is/are disposed in the vicinity of the inlet, the effect of generating the vortices is hardly subjected to an influence of the contracted flow.

In a case where the round portion is formed, when a size of the radius R of the round portion is expressed as R=βD by using any coefficient β, β is set in a range of 0<β≦ 1/4, and a relationship of the round portion and the distance X from the inlet can be derived as shown in the following equation.

$$X=(70\beta^2-33\beta+4)D$$

However, development of the contracted flow is greatly influenced by physical property values of air of ambient atmosphere, such as an atmospheric pressure, a humidity, and a temperature in a measurement environment. In addition, the development of the contracted flow is also greatly influenced by a representative flow velocity of the flow and a change in the Reynolds number specified by the representative length of the cross section of the gas duct. In general, when the Reynolds number increases, the development of the contracted flow is suppressed and the distance X can be decreased.

As described above, in the dust flocculating duct of the embodiment 1-15, it is preferable that when the representative length of the cross section perpendicular to the direction of the gas flow is supposed to be D, the radius of the round portion formed at the edge face of the inlet of the passage is supposed to be R, a ratio of R to D (R/D) is supposed to be β, the distance from the inlet of the passage to the vortex generating part(s) is X, and a condition 0<β≦ 1/4 is satisfied, X is a value expressed by $(70\beta^2-33\beta+4)D$.

By making the setting as described above, the vortex generating part(s) can be disposed in the region other than the region where the contracted flow is generated inside the passage.

(Embodiment 1-16)

Fig. 58 is a diagram illustrating a whole of a vacuum cleaner in an embodiment 1-16 according to the present invention, which comprises a dust flocculating duct according to the present invention.

As shown in Fig. 58, the vacuum cleaner 6c comprises as a passage unit: an upstream side dust flocculating duct 161 which is located downstream from a tip of an upstream side of an extension pipe 502 having a length a so as to have a distance c from the tip of the upstream side of the extension pipe 502; and a downstream side dust flocculating duct 162 in a main body joining section 505 which is located further downstream from the upstream side dust flocculating duct 161. The upstream side dust flocculating duct 161 is the dust flocculating duct of the embodiment 1-12 having a length b and has a wall which is formed by disposing a first electrification part for positively electrifying dust and a second electrification part for negatively electrifying the dust so as to face each other. The downstream side dust flocculating duct 162 has a length d and is any of the dust flocculating ducts of the embodiments 1-1 through 1-11.

An effect attained by using the upstream side dust flocculating duct 161 is the same as that attained in the embodiment 1-12. In other words, since the upstream side dust flocculating duct 161 is formed by using a functional material which allows particulates to be electrified, the upstream side dust flocculating duct 161 electrifies the dust particulates by causing the dust particulates to collide with a wall surface and effectively enhances a probability with which the dust particulates collide with one another, by utilizing the Coulomb force generated between the electrified dust.

In such a manner, in the upstream side dust flocculating duct 161, the probability with which the particulates mutually collide with one another is increased. The probability of contacting an inner wall surface is increased, and the number of electrified particulates and an electric charge amount of the particulates are increased.

Further, action of vortices generated by a vortex generating part(s) which the upstream side dust flocculating duct 161 disposed in the extension pipe 502 has allows an increase in a probability with which the particulates collide with one another and an increase in a probability with which the dust particulates collide with the inner wall surface, thereby increasing the number of electrified particulates and the electric charge amount of the particulates. The particulates in the extension pipe 502 are agitated by the vortex generating part(s), thereby electrifying all of the particulates.

In such a manner, the probability with which the particulates are caused to collide with one another by the vortex generating part(s) is increased, thereby promoting the mutual collision of the particulates.

In the downstream side dust flocculating duct 162, the collision probability is increased by effectively agitating the dust particulates and all of the dust particulates electrified in the upstream side dust flocculating duct 161 are flocculated. The downstream side dust flocculating duct 162 is formed by using a material which hardly gives and receives any electric charge even when the particulates collide with the wall surface.

Among the particulates electrified in the upstream side dust flocculating duct 161, the particulates which do not mutually collide with one another by the time when the particulates reach the downstream side dust flocculating duct 162 are also present. In addition, since an intensity of each of vortices decreases in accordance with an increase in a distance from the dust flocculating duct, a capability of the agitation is weakened and the probability with which the particulates mutually collide with one another is also reduced. Therefore, the downstream side dust flocculating duct 162 is provided as a part of the dust flocculating duct, which is not formed of the functional material which easily electrifies the particulates, thereby enhancing the probability with which the particulates electrified in the upstream side dust flocculating duct 161 mutually collide with one another and further promoting the flocculation of the particulates.

As described above, the particulates are rendered in a state of being electrified and are effectively caused to collide with one another, thereby allowing the particulates to be efficiently flocculated.

When the downstream side dust flocculating duct 162 is formed by using a functional material which exhibits an effect of newly electrifying the dust particulates electrified either positively or negatively in the upstream side dust flocculating duct 161, in a case where the dust particulates are electrified so as to have the same polarity by the upstream side dust flocculating duct 161 and the downstream side dust flocculating duct 162, an electric charge amount in the particulates is further increased and the Coulomb force which is further strong can be produced, whereas in a case where the dust particulates are electrified by the upstream side dust flocculating duct 161 and the downstream side dust flocculating duct 162 so as to have polarities which are different from each other, the electric charge of the particulates is neutralized.

As another example in which the electric charge of the particulates is neutralized, there is a case where a functional material which positively electrifies the particulates and a functional material which negatively electrifies the particulates are disposed in the passage unit in a direction, in which gas flows, in an evenly-spaced and alternate manner, and a swirling flow in the whole passage is generated with a swirling center around a center of the passage, which is arranged by providing protrusions. The dust particulates contact the wall surface which causes the particulates to be positively electrified and thereby, are positively electrified, and next, the positively electrified particulate contacts the wall surface which causes the particulates to be negatively electrified and thereby, are negatively electrified. As a result, the electric charge of the dust particulates is neutralized.

In addition, also in a case where the passage is divided into two portions in a direction parallel to a direction of the gas flow inside the passage unit, and each of the functional materials which each electrify the particulates positively and negatively is disposed on each of the sides of the two portions with the same ratio of the disposed functional materials, and a swirling flow is generated by providing protrusions, similarly, the dust particulates first contacts the wall surface which causes the particulates to be positively electrified and thereby, are positively electrified, and next, the positively electrified particulate contacts the wall surface which causes the particulates to be negatively electrified and thereby, are negatively electrified. As a result, the electric charge of the dust particulates is neutralized.

However, as in the present embodiment, the downstream side dust flocculating duct 162 is formed by the material which hardly gives and receives the electric charge and all of the particulates are caused to mutually collide with one another by the action of the vortices generated by the downstream side dust flocculating duct without neutralizing in the downstream side dust flocculating duct 162 the electric charge of the dust particulates, which has been imparted by the upstream side dust flocculating duct 161, thereby allowing the dust masses (clusters) to be effectively formed.

(Embodiment 2-1)

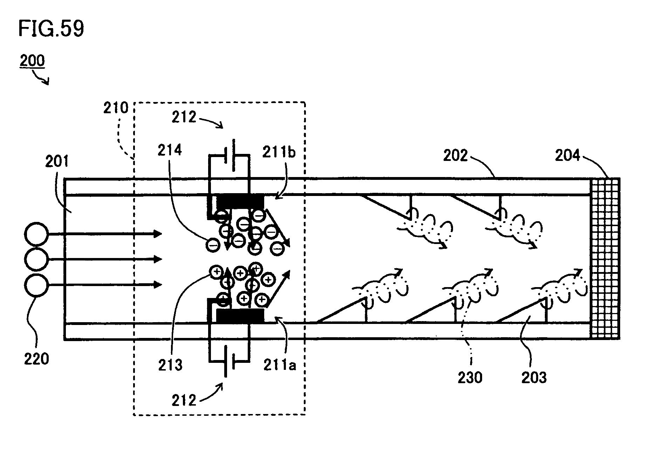

Fig. 59 is a diagram illustrating a whole of a dust flocculating duct as one embodiment according to the present invention.

As shown in Fig. 59, the dust flocculating duct 200 comprises a passage 201, a wall 202, an electrification part 210, protrusions 203 as vortex generating parts, and a filter 204. The passage 201 is formed by the wall 202 which is cylindrical-shaped. Air and other fluids containing dust (fine particulates) 220 circulate through the passage 201, driven by a driving source (for example, a fan, a blower, etc.) not shown. The electrification part 210 includes a first electrification part 211a as an electrode for positively electrifying the dust 220 contained in gas circulating through the passage 201 and a second electrification part 211b as an electrode for negatively electrifying the dust contained in the gas circulating through the passage. The first electrification part 211a and the second electrification part 211b are disposed to as to face each other. The first electrification part 211a and the second electrification part 211b are connected to power sources 212, respectively. In the dust flocculating duct 200, the electrification part 210 is disposed on an upstream side of the passage 201, the protrusions 203 are disposed on an downstream side, and the filter 204 is disposed on an end portion of the downstream side of the passage 201.

As the vortex generating parts, any of swirling part(s) in the below-described embodiment 2-A through embodiment 2-C or any of protrusions of the below described embodiment 2-D through embodiment 2-K are adopted.

In the electrification part 210, due to a corona discharge or the like, a dielectric breakdown is caused in the gas present between the electrodes of the first electrification part 211a and the second electrification part 211b by a potential difference between the electrodes, and electrons are discharged. By causing the electrons to collide with air molecules in the vicinity, the electrification part 210 generates positive air ions 213 and negative air ions 214. By filling the passage 201 with the positive air ions 213 and the negative air ions 214, the positive air ions 213 and the negative air ions 214 are caused to collide with the dust 220 flowing therein, thereby allowing the dust 220 to be electrified. Therefore, in order to cause the dust 220 to efficiently form dust masses (clusters), it is required to avoid mutual collision of the air ions (213, 214) which have not yet collided with the dust 220 and to cause as many air ions (213, 214) as possible to collide with the dust 220. In order to avoid the mutual collision of the air ions (213, 214), since it is ideal that a gas flow in the electrification part 210 is in a laminar flow state, it is preferable that the electrification part 210 is disposed on an upstream side of the protrusions 203.

Accordingly, in the dust flocculating duct 200, the electrification part 200 is disposed on the upstream side of the passage 201 and the protrusions 203 are disposed on the downstream side of the passage 201. By employing the above-mentioned configuration, the dust masses (clusters) can be efficiently formed.

In a case where the electrification part 210 is disposed on the downstream side of the protrusions 203, the positive air ions 213 and the negative air ions 214 are caught up in vortices 230 generated by the protrusions 203 and a probability with which the respective air ions mutually collide with each other before the collision with the dust 220 and lose electric charges is increased. Therefore, the number of the air ions (213, 214) being present is relatively decreased and an efficiency of electrifying the dust 220 is reduced.

In addition, in a case where a material of which a surface of the wall 202 or the protrusions 203 are formed is a functional material which is capable of positively and negatively electrifying the dust 220, since the dust 220 is electrified by contact with the surface of the wall 202 or the protrusions 203, it is required to increase the number of times of the contact and it is ideal that the gas flow is in a state of turbulence. Therefore, in a case where the dust 220 is contact-electrified, it is preferable that the downstream side of the protrusions 203 is formed of the functional material.

By employing the above-described configuration, the gas flowing into the dust flocculating duct 200 undergoes the following steps while passing through the dust flocculating duct 200. Specifically, sequentially performed are a step at which the dust 220 is guided into the passage 201 by the gas flow; a step at which the dust 220 is transported through an inside of the passage 201 by the gas flow traveling forward; a step at which the dust 220 circulates along the surface of the wall 202 of the passage 201; a step at which the dust 220 is electrified by the electrification part 210; a step at which the dust 220 is caught up in flows of the vortices 230 generated downstream of the protrusions 203 and circulates; a step at which a plurality of pieces of the dust 220 are caused to collide with one another by the flows of the vortices 230; a step at which the plurality of pieces of the dust 220 in collision with one another form the dust masses (clusters); and a step at which the dust masses are transported through the inside of the passage 201 by the gas flow.

At this time, the gas flow circulating through the first electrification part 211a and the second electrification part 211b is controlled in the below-described manner. Specifically, when the dust 220 is transported through the inside of the passage 201 by the gas flow, a period in which after the dust 220 has been electrified, gas flow control for causing pieces of the dust 220 to collide with one another is performed and the plurality of pieces of the dust 220 in collision with one another form the dust masses (clusters) is provided.

In the above-described manner, collision of the dust which has been positively electrified by the first electrification part 211a and the dust which has not been electrified by the first electrification part 211a is facilitated. When the former dust and the latter dust collide with each other, dielectric polarization occurs on a surface of the latter dust due to the electric charge of the former dust and a strong bonding force is generated between the former dust and the latter dust due to an electrostatic force. Due to this bonding force, a first dust mass in which the plurality of pieces of dust have been flocculated is generated. The first dust mass has been positively electrified as a whole. By the same mechanism as that by which the first dust mass is generated, a second dust mass which has been negatively electrified as a whole is generated by the second electrification part 211b.

Further gas flow control is performed so as to cause positively electrified first dust mass generated by the first electrification part 211a and negatively electrified second dust mass generated by the second electrification part 211b to collide with each other; and a period of bonding the first dust mass and the second dust mass in collision with each other due to an electrostatic force and of forming further large dust masses (large clusters) is provided.

By performing the gas flow control as described above, collision of the first dust mass which has been positively electrified as a whole and the second dust mass which has been negatively electrified as a whole is facilitated.

Upon the collision of the first dust mass and the second dust mass, due to a strong electrostatic force generated from the positive electric charge which the former dust mass has and the negative electric charge which the latter dust mass has, a further strong bonding force is generated between the former dust mass and the latter dust mass. Due to this bonding force, a large dust mass in which the plurality of dust masses have been further flocculated is generated.

By performing the gas flow control as described above, the flocculation of fine dust, which is caused by the collision, is repeated, thereby forming large dust masses (large clusters).

As described above, the dust flocculating duct 200 comprises: the passage 201 through which the gas circulates; the wall 202 forming the passage 201; the protrusions 203 for generating the vortices in the gas circulating through the passage 201; and the electrification part 210 for positively and negatively electrifying the dust 220 contained in the gas flowing through the passage 201. The electrification part 210 includes the first electrification part 211a for positively electrifying the dust 220 contained in the gas flowing through the passage 201 and second electrification part 211b for negatively electrifying the dust 220 contained in the gas flowing through the passage 201 which are connected to the power sources 212, respectively. The protrusions 203 are disposed on the inner surface of the wall 202 so as to provide the gas flow in the vicinity of the wall 202 with an uneven velocity distribution.

In the gas flowing into the passage 201, the vortices 230 are formed by the protrusions 203, disposed on the wall 202 of the passage 201, so as to provide the gas flow in the vicinity of the wall 202 with the uneven velocity distribution. This causes the pieces of the dust 220 contained in the gas to collide with one another and to be flocculated, thereby forming the dust masses (clusters).

In the present invention, in order to effectively form the vortices 230, the protrusions 203 are formed not only on the portion on which the exfoliation occurs but also a portion on which the exfoliation has disappeared.

In addition, when the dust 220 is transported through the passage 201 by the gas flow, the dust 220 is electrified by the electrification part 210 for positively and negatively electrifying the dust 220, and the positively or negatively electrified dust can be caused to form the dust masses (clusters). This causes the positively or negatively electrified dust to adsorb each other by electrostatic action, thereby causing the dust to form the dust masses (clusters).

In this way, the dust flocculating duct 200 which has a simple configuration, facilitates the flocculation by increasing the number of times when the particulates in the dust collide with one another, decreases the number of particulates, and increases apparent diameters of the particulates can be provided.

As described above, the present invention relates to a mechanism of flocculating the fine particulates. Since an efficiency of collecting the fine particulates can be enhanced by utilizing this mechanism, the dust flocculating duct according to the present invention is applicable to a vacuum cleaner, an air cleaner, an air conditioner, etc.

As a specific form of the vortex generating parts in the dust flocculating duct according to the present invention, the vortex generating parts of the below described embodiment 2-A through embodiment 2-K are adopted. The dust flocculating duct of each of the embodiment 2-A through embodiment 2-K comprises the same electrification part as that of the embodiment 2-1. In the descriptions in the embodiment 2-A through embodiment 2-K, portions where in the dust flocculating duct, the vortex generating part (s) is/are disposed will be described.

(Embodiment 2-A)

Fig. 5 is a diagram illustrating a dust flocculating duct of an embodiment 2-A according to the present invention.

As shown in Fig. 5, the dust flocculating duct 10 comprises a passage 11, a wall 12, and a swirling part 13 as a vortex generating part. The passage 11 is formed by the wall 12 which is of a cylindrical shape. Driven by a driving source (for example, a fan, a blower, etc.) not shown, air and other fluids containing particulates to be flocculated (dust and other fine particulates) circulates through the passage 11.

Fig. 6 shows a front view of the dust flocculating duct of the embodiment 2-A according to the present invention.

As shown in Fig. 5 and Fig. 6, the swirling part 13 includes, as wall portions, four planes: a plane 13a, a plane 13b, a plane 13c, and a plane 13d. The plane 13a, plane 13b, plane 13c, and plane 13d are disposed so as to allow spacings, each of which forms 90 degrees of an interior angle counterclockwise on a cross sectional plane of the passage 1, which is viewed from an upstream side thereof. The respective planes are formed so as to be perpendicular to an inner surface of the wall 12 and are connected with one another at a center of the passage 11. A front view of the swirling part 13 is cross-shaped. Spaces which are each partitioned by the neighboring two planes of the swirling part 13 and the inner surface of the wall 12 form the passage 11.

The respective planes (13a, 13b, 13c, and 13d) of the swirling part 13 are formed such that skew angles on a cross-shaped cross section increase gradually from the upstream side toward a downstream side.

In addition, when a representative length of a passage width on a plane perpendicular to a flow direction of the swirling part 13 (a length of a side in a case of a square passage and a diameter in a case of a circular passage) is supposed to be D, the swirling part 13 is skewed such that the cross-shaped cross section thereof rotates by a quarter (rotation of 90 degrees) clockwise in a traveling direction along a distance D traveled in a flow direction. In this embodiment, a swirling direction of a gas flow, which is viewed from the upstream side, is clockwise. However, the swirling direction of the gas flow may be either clockwise or counterclockwise.

Fig. 7 shows a cross-sectional side view of the dust flocculating duct of the embodiment 2-A according to the present invention. Gas flows into the passage from a left side in Fig. 7.

As shown in Fig. 7, the passage 11 has three segments along a direction thereof: an inflow segment X, an approach segment Y, and a swirling segment Z. A length in the flow direction of the swirling part 13 is set to be 2D (double the representative length of the passage width).

The gas having flowed into the passage 11 first passes the inflow segment X. In the inflow segment X, the gas flow is caused to enter the swirling part 13 in a state where there is a decreased resistance. Next, the gas passes the approach segment Y.

In the approach segment Y, the gas flow having flowed into the swirling part 13 is caused to stably adhere to the wall 12 and the planes (13a, 13b, 13c, and 13d) to suppress an abrupt change. Thereafter, the gas passes the swirling segment Z. In the swirling segment Z, a shearing force is applied to the gas flow. The skew angles on the cross-shaped cross section of the swirling segment Z increase gradually from the upstream of the flow toward the downstream of the flow. Since a traveling distance of the gas increases in accordance with a decrease in a distance between the gas and the wall 12, the applied swirling force increases.

Fig. 8 is a schematic diagram illustrating a view of vortices generated by the swirling part of the embodiment 2-A according to the present invention. Fig. 8 (A) shows a front view of the passage and Fig. 8 (B) shows a side view of the passage.

As shown in Fig. 8, the gas P having flowed into the swirling part 13 travels in directions indicated by arrows in Fig. 8 through the whole inside of the passage 11 along a shape of the swirling segment Z in a swirling manner as indicated by an alternate long and two short dashes line.

As described above, since the shearing force is continuously applied to the particulates having flowed into the swirling segment Z, strengths of vortices generated on the downstream side can be maximized. A probability with which the particulates contained in the gas inside the passage 11 collide with one another is greatly influenced by the shearing force of the flow. Therefore, the strengths of the vortices generated on the downstream side are maximized by invariably continuing to apply the shearing force of the flow as described above, thereby effectively allowing an increase in the probability with which the particulates contact one another. Moreover, since a further large velocity gradient is formed in the vicinity of the wall 12, the probability with which the particulates collide with one another in the vicinity of the wall 12 is the highest.

In the swirling part 13 of the embodiment 2-A, the vortices which largely swirl along a whole inner diameter direction of the passage 11 can be formed by the swirling segment Z. Therefore, since a centrifugal force can be applied to the particulates flowing through a central portion of the passage 11, the particulates can be diffused to a side of the wall 12, whereby the particulates which have varying diameters and are separated so as to be present in the central portion of the passage 11 and in the vicinity of the wall 12 can be mixed.

In such a manner, the particulates having small surface areas can be caused to collide with the particulates having large surface areas, thereby allowing a dramatic increase in the probability with which the particulates contact one another.

In this way, the gas circulating through the passage 11 and the dust contained in the gas sequentially undergo: a step at which the dust is guided into the passage 11 by the gas flow; a step at which the dust is transported through an inside of the passage 11 by the gas flow traveling forward (in the inflow segment X); a step at which the dust circulates along the wall 12 of the passage 11 (in the approach segment Y); a step at which the dust collides with the swirling part 13 protruding from the wall 12 of the passage 11 (in the swirling segment Z); a step at which the dust is caught up in vortical flows generated downstream of the swirling part 13 and circulates (in the swirling segment Z); a step at which the dust is caused to collide with a wall surface of the passage by the vortical flows a plurality of times (in the swirling segment Z); a step at which a plurality of pieces of the dust are caused to collide with one another by the vortical flows (in a downstream portion of the swirling segment Z); a step at which the plurality of pieces of the dust in collision with one another form dust masses (clusters) (in the downstream portion of the swirling segment Z); and a step at which the dust masses are transported through the inside of the passage by the gas flow (in the swirling segment Z and in a portion downstream from the swirling segment Z).

As described above, the dust flocculating duct 10 comprises: the passage 11 for circulating the gas therethrough; the wall 12 forming the passage 11; and the vortex generating part for generating the vortices in the gas flowing through the passage 11. The vortex generating part is disposed on the inner surface of the wall 12 and includes the swirling part 13 having the wall portions which protrude from the inner surface of the wall 12 toward the inside of the passage 11 so as to swirl the gas flow in the passage 11. By employing the above-described configuration, the dust flocculating duct which has a simple configuration and is capable of facilitating the flocculation by increasing the number of times when the particulates in the dust collide with one another, of decreasing the number of particulates, and of increasing apparent diameters of the particulates can be provided.

In addition, when the turbulence generating part of the present embodiment is viewed from a different point of view, it can be considered that the individual small passages which are partitioned by the planes are apparently formed through dividing the inside of the passage 11 by the planes (13a, 13b, 13c, and 13d) and the small passages are disposed so as to have the shortest distances thereamong. In other words, a plurality of small passages are formed so as to be bundled together in a group.

As described above, in the dust flocculating duct 10, the plurality of planes (13a, 13b, 13c, and 13d) are formed, the passage 11 is divided into the plurality of the independent small passages by the plurality of planes (13a, 13b, 13c, and 13d), and the small passages are formed to be skewed along the gas flow so as to swirl the gas flow.

By employing the above-described configuration, as compared with a case where the passage is not divided into the small passages, an influence of the shearing force which the wall surface exerts on the gas increases, thereby allowing enhancement of a dust flocculating power. In addition, swirling flows formed in the respective small passages collide with one another on downstream sides of end portions of the small passages, and as a result, the particulates caught up in the swirling flows can be caused to efficiently collide with one another.

In addition, in the dust flocculating duct 10, the skew angles of the small passages are small on the upstream side and gradually increase in accordance with an increase in proximity to the downstream side.

By employing the above-mentioned configuration, a force of swirling the gas can be increased.

In the present embodiment, as a method for dividing the passage 11, the four flat plates are disposed so as to form right angles on the cross section thereof and the wall portions are formed so as to be skewed along the passage 11. However, the method is not limited thereto. An appropriate shape of the passage 11 may be selected depending on an intended use from among, for example, a passage formed so as to have flat plates, the number of which is increased, and to have a grid-like wall portion; an aggregate of small passages having circular cross sections; a honeycomb structure; a corrugated structure, etc.

(Embodiment 2-B)

Fig. 9 shows a perspective view illustrating an important part of a dust flocculating duct of an embodiment 2-B according to the present invention.

As shown in Fig. 9, the dust flocculating duct 20 comprises: a passage 21; a wall 22; and a swirling part 23 as a vortex generating part. The passage 21 is formed by the wall 22 which is of cylindrical shape.

Fig. 10 shows a front view of the dust flocculating duct of the embodiment 2-B according to the present invention.

As shown in Fig. 9 and Fig. 10, the swirling part 23 includes, as wall portions, four planes: a plane 23a, a plane 23b, a plane 23c, and a plane 23d. The plane 23a, plane 23b, plane 23c, and plane 23d are disposed so as to allow spacings, each of which forms 90 degrees of an interior angle counterclockwise on a cross-sectional plane of the passage 21, which is viewed from an upstream side thereof. The respective planes are formed so as to be perpendicular to an inner surface of the wall 22 and are connected with one another at a center of the passage 21. A front view of the swirling part 23 is cross-shaped. Spaces which are each partitioned by the neighboring two planes of the swirling part 23 and the inner surface of the wall 22 form the passage 21.

Fig. 11 shows a cross-sectional side view of the dust flocculating duct of the embodiment 2-B according to the present invention. Gas flows into the passage from a left side in Fig. 11.

As shown in Fig. 11, the respective planes (23a, 23b, 23c, and 23d) of the swirling part 23 are formed such that a skew angle of the cross-shaped cross section is constant from the upstream of a flow toward the downstream of the flow.

In addition, when a representative length of a passage width on a plane perpendicular to a flow direction of the swirling part 23 (a length of a side in a case of a square passage and a diameter in a case of a circular passage) is supposed to be D, the swirling part 13 is skewed such that the cross-shaped cross section thereof rotates by a quarter (rotation of 90 degrees) clockwise in a traveling direction along a distance D traveled in a flow direction. In this embodiment, a swirling direction of a gas flow, which is viewed from an upstream side, is clockwise. However, the swirling direction of the gas flow may be either clockwise or counterclockwise.

In the swirling part 23 of the embodiment 2-B, as similarly to in the embodiment 2-A, the gas flow having entered the swirling part 23 travels through the whole inside of the passage along a shape of the swirling part 23 in a swirling manner. In the swirling part 23, as compared with the swirling part 13 of the embodiment 2-A, intensities of vortices generated downstream of the turbulence generating part are decreased whereas a pressure loss is drastically reduced.

Accordingly, in a case where an output and a static pressure rise of a driving source (for example, a fan, a blower, or the like) for generating the flow circulating in the swirling part 23 are small or where the driving source is susceptible to the pressure loss, performance of a whole system including the dust flocculating duct 20 and the driving source can be enhanced by using the dust flocculating duct 20, as compared with a case where the dust flocculating duct 10 of the embodiment 2-A is used.

In recent years, it has been demanded to reduce power consumption. Therefore, since in a vacuum cleaner or the like, it is needed to maintain a quantity of gas flow while a reduction in power consumption is realized, it is required to minimize a loss in the passage. By using the dust flocculating duct 20 of the embodiment 2-B according to the present invention in an extension pipe or the like in a vacuum cleaner, it is made possible to provide a vacuum cleaner which is capable of efficiently flocculating dust inside the extension pipe and of efficiently collecting the dust with low power consumption while the quantity of gas flow is maintained.

The flow circulating an inside of the passage 21 is skewed by the swirling part 23. In other words, when the swirling part 23 imparts swirling to the flow, the skew angle of the cross-shaped cross section is constant from the upstream toward the downstream in the dust flocculating duct 20. Therefore, since the swirling part 23 does not impart, to the flow, a swirling angle larger than the skew angle, a length of the swirling part 23 in a flow direction, which allows the flow inside the passage 21 to circulate in substantially the same direction as a direction in which the swirling part 23 is skewed at the above-mentioned skew angle of the cross-shaped cross section thereof, is sufficient. If the swirling part 23 is extended in the flow direction so as to exceed the above-mentioned length, a pressure loss is immoderately increased by friction with the wall 22, which is unfavorable.

For the above-described reason, in the embodiment 2-B, the length of the swirling part 23 in the flow direction is set to be 2D. However, a favorable dimension varies depending on a velocity of the flow circulating through the inside of the swirling part 23, a viscosity of a fluid circulating through the inside of the swirling part 23, and other specific physical property values. When the length of the swirling part 23 is set to be approximately 0.5D through 3D, generally favorable dust flocculating performance can be obtained.

In addition, for the above-mentioned reason, it is preferable that the angle on the cross-shaped cross section, at which the swirling part 23 is skewed, is set to be formed by rotation of one sixth (rotation of 60 degrees) through rotation of one third (rotation of 120 degrees) in a traveling direction along a distance D traveled in a flow direction. In a case where the angle on the cross-shaped cross section, at which the swirling part 23 is skewed, is set to be formed by rotation of a degree smaller than the rotation of one sixth (rotation of 60 degrees) in the traveling direction for the distance D traveled in the flow direction, the flow cannot be provided with effective swirling. In addition, in a case where the angle on the cross-shaped cross section, at which the swirling part 23 is skewed, is set to be formed by rotation of a degree larger than rotation of one third (120 degrees) in the traveling direction for the distance D traveled in the flow direction, an extremely large pressure loss which causes the flow of the gas to be stemmed occurs, thereby drastically reducing performance of a whole system including the dust flocculating duct 20 and the driving source.

As described above, the dust flocculating duct 20 comprises: the passage 21 for circulating the gas therethrough; the wall 22 forming the passage 21; and the vortex generating part for generating the vortices in the gas flowing through the passage 21. The vortex generating part is disposed on the inner surface of the wall 22 and includes the swirling part 23 having the wall portions which protrude from the inner surface of the wall 22 toward the inside of the passage 21 so as to swirl the gas flow in the passage 21. By employing the above-described configuration, the dust flocculating duct which has a simple configuration and is capable of facilitating the flocculation by increasing the number of times when the particulates in the dust collide with one another, of decreasing the number of particulates, and of increasing apparent diameters of the particulates can be provided.

(Embodiment 2-C)

Fig. 12 shows a perspective view illustrating an important of a dust flocculating duct of an embodiment 2-C according to the present invention.

As shown in Fig. 12, in the embodiment 2-C, swirling parts 33 are provided, instead of the swirling part 13 of the embodiment 2-A. The swirling parts 33 are disposed so as to be of a shape, as a whole, having a cross-shaped cross section obtained by hollowing out a central portion of the cross-shaped cross section of the swirling parts 13. In the shape of the swirling parts, the swirling parts 33 are present on an inner surface of a wall 32 of a passage 31 of the dust flocculating duct 30 whereas the swirling parts 33 are not present in a central portion of the passage 31. The passage 31 is divided into four small passages by the swirling parts 33. The four small passages communicate with one another in the central portion of the passage 31.

Fig. 13 shows a front view illustrating an important part of the dust flocculating duct of the embodiment 2-C according to the present invention.

As shown in Fig. 13, when a representative length of a passage width on a plane perpendicular to a flow direction of the passage 31 (a length of a side in a case of a square passage and a diameter in a case of a circular passage) is supposed to be D, a height h of each of the swirling parts 33 from the inner surface of the wall 32 is set to be (1/8)D. The other parts are the same as those in the dust flocculating duct 10 of the embodiment 2-A.

Fig. 14 is a schematic diagram illustrating a view of vortices generated by the swirling parts of the embodiment 2-C according to the present invention. Fig. 14 (A) shows a front view of the passage and Fig. 14 (B) shows a side view of the passage.

As shown in Fig. 14, gas P having flowed into the passage 31 travels in directions indicated by arrows in Fig. 14 through the whole inside of the passage 31 along the shape of the swirling parts 33 in a swirling manner as indicated by an alternate long and two short dashes line.

In the dust flocculating duct 30, a gas flow circulating in the vicinity of the inner surface of the wall 32 of the passage 31 is provided with swirls by the swirling parts 33 and is largely swirled. However, swirls with which a gas flow circulating in a central portion of the passage 31 is provided by the swirling parts 33 are small. Accordingly, as compared with the dust flocculating duct 10 of the embodiment 2-A and the dust flocculating duct 20 of the embodiment 2-B, intensities of vortices generated downstream of the swirling parts 33 are decreased whereas a pressure loss caused by the swirling parts 33 is drastically reduced.

As described above, in the dust flocculating duct 30, the plurality of small passages communicate with one another in the central portion of the passage 31, thereby allowing a drastic reduction in the pressure loss in the passage 31.

Accordingly, in a case where an output and a static pressure rise of a driving source (for example, a fan, a blower, or the like) for generating the flow circulating around the swirling parts 33 are small or where the driving source is susceptible to the pressure loss, performance of a whole system including the dust flocculating duct 30 and the driving source can be enhanced, as compared with a case where the dust flocculating duct 10 of the embodiment 2-A or the dust flocculating duct 20 of the embodiment 2-B is used.

In recent years, it has been demanded to reduce power consumption. Therefore, since in a vacuum cleaner or the like, it is needed to maintain a quantity of gas flow while a reduction in power consumption is realized, it is required to minimize a loss in the passage. By using the dust flocculating duct 30 of the embodiment 2-C according to the present invention in an extension pipe or the like in a vacuum cleaner, it is made possible to provide a vacuum cleaner which is capable of efficiently flocculating dust inside the extension pipe and of efficiently collecting the dust with low power consumption while the quantity of gas flow is maintained.

The height h of each of the swirling parts 33 from the wall 32 is set to be the above-mentioned dimension for the following reason.

A velocity distribution of the flow circulating through the passage 31 is influenced by friction with the inner surface of the wall 32 of the passage 31 and a viscosity of a fluid circulating an inside of the passage 31, thereby resulting in a high velocity of the flow in the vicinity of the central portion of the passage 31 and in a low velocity of the flow in the vicinity of the inner surface of the wall 32 of the passage 31, that is, an uneven velocity distribution occurs due to occurrence of a boundary layer in the vicinity of the inner surface of the wall 32 of the passage 31. In particular, in a case where sizes of particulates (dust and other fine particulates) to be flocculated are mainly in micrometer order, the below-described phenomenon occurs. Specifically, the particulates to be flocculated receive forces by being caused to continuously collide with molecules of air and are transported from an upstream side to a downstream side. At this time, a velocity of the molecules of air which collide with one particulate to be flocculated is high on a side of the central portion of the passage and low on a side of the wall surface of the passage. Under the above-mentioned conditions, the particulates to be flocculated receive forces going toward a direction of the wall surface of the passage. Due to this shearing force of the flow, a density of a distribution of the particulates to be flocculated becomes low in the vicinity of the central portion of the passage and high in the vicinity of the wall surface of the passage. In other words, many of the particulates to be flocculated circulate in the vicinity of the wall surface of the passage. In the case where the sizes of particulates to be flocculated are mainly in micrometer order as mentioned above, a phenomenon that particularly in an area from the wall surface of the passage having a representative length of a passage width of D to a position which is (1/8)D distant from the wall surface of the passage, a density of a distribution of the particulates to be flocculated is high is observed. Accordingly, when the swirling parts 33 are provided in the area from the wall surface of the passage to the position which is (1/8)D distant from the wall surface of the passage, an effect of generating turbulence in the gas flow can be most exhibited.

As described above, in the dust flocculating duct 30, because the height of each of the swirling parts 33 from the wall 32 is one eighth of a representative length of a cross section which is perpendicular to a direction of the flow of the gas passing through the passage 31, a foreign substance is hardly caught by the swirling parts 33.

In the dust flocculating duct 30 of the embodiment 2-C, swirls can be imparted to the flow in the vicinity of the wall surface of the passage where many particulates to be flocculated circulate and swirls are not imparted to the flow in the central portion of the passage where not many particulates to be flocculated circulate. In this way, swirls can be effectively imparted to the particulates to be flocculated. In addition, since what causes the pressure loss is not disposed in the central portion of the passage where a velocity of the flow of the fluid is the highest, flocculating performance is not impaired and the pressure loss caused by the swirling parts 33 is drastically reduced.

As described above, the dust flocculating duct 30 comprises: the passage 31 for circulating the gas therethrough; the wall 32 forming the passage 31; and the vortex generating part for generating the vortices in the gas flowing through the passage 31. The vortex generating part is disposed on the inner surface of the wall 32 and includes the swirling parts 33 having the wall portions which protrude from the inner surface of the wall 32 toward the inside of the passage 31 so as to swirl the gas flow in the passage 31. By employing the above-described configuration, the dust flocculating duct which has a simple configuration and is capable of facilitating the flocculation by increasing the number of times when the particulates in the dust collide with one another, of decreasing the number of particulates, and of increasing apparent diameters of the particulates can be provided.

(Embodiment 2-D)

Fig. 15 shows a perspective view illustrating an important part of a dust flocculating duct of an embodiment 2-D according to the present invention. Fig. 16 shows a front view illustrating the important part of the dust flocculating duct of the embodiment 2-D. Fig. 17 shows a cross-sectional side view illustrating the dust flocculating duct of the embodiment 2-D.

As shown in Fig. 15 through Fig. 17, the dust flocculating duct 40 includes: a passage 41; a wall 42; and a plurality of protrusions 43 as vortex generating parts. The passage 41 is formed by a cylindrical-shaped wall 42. The protrusions 43 are wing-shaped. The protrusion 43 is of a shape in which when a representative length of a passage width on a plane perpendicular to the flow direction of the passage 41 (a length of a side in a case of a square passage and a diameter in a case of a circular passage) is supposed to be D, a chord length C is (3/8)D; a stagger angle (an angle formed between a wing chord and the flow direction) is 22.5 degrees which is formed in a counterclockwise manner when the protrusion 43 is viewed from an upstream side to a downstream side; a maximum warping position is located 0.65C from an anterior edge; a portion thereof on the downstream side is convexed; and a height h is (1/8)D. The protrusions 43 are disposed in a grouping manner. In one group, six protrusions 43 are disposed in an evenly spaced manner so as to be present in the same plane perpendicular to the flow direction, that is, the six protrusions 43 are disposed so as to be evenly spaced, each with 60 degrees of an interior angle on a cross section of the dust flocculating duct 40, on the inner surface of the wall 42 of the cylindrical pipe shaped passage 41.

Fig. 18 is a schematic diagram illustrating a gas flow around a protrusion in the dust flocculating duct of the embodiment 2-D.

As shown in Fig. 18 (A), a flow velocity V1 of a flow along a depression side surface of the wing-shaped protrusion 43 is slightly lower than a flow velocity of a fluid circulating through the passage 41 because the flow is stemmed by collision of the flow against the protrusion 43. Conversely, a flow velocity V2 of a flow along a projection side surface of the protrusion 43 is slightly higher than the flow velocity of the fluid passing through the inside of the passage. Therefore, as shown in Fig. 18 (B), when a relative velocity in an area surrounding the protrusion 43 with reference to the flow velocity of the fluid circulating through the passage 41 is considered, a circulation V3 which circulates around the protrusion 43 from an upstream side to a downstream side of the passage 41 on a projection side surface of the protrusion 43 and from the downstream side to the upstream side of the passage 41 on a depression side surface of the protrusion 43 occurs.

Fig. 19 is a schematic diagram illustrating vortices generated around the protrusion.

As shown in Fig. 19, due to the circulation V3 shown in Fig. 18 (B) around the protrusion 43, an intense horseshoe vortex V4 occurs from a wing tip of the protrusions 43 having the wing shape. The horseshoe vortex V4 moves downstream along the wall 42 of the passage 41 on the downstream side of the protrusions 43. This horseshoe vortex V4 imparts an intense swirl to the flow circulating downstream of the protrusion 43.

In the dust flocculating duct 40 of the embodiment 2-D, since a wing height h of the protrusion 43 is (1/8)D, a diameter of the horseshoe vortex V4 immediately after the occurrence of the horseshoe vortex V4 is (1/8)D or slightly larger than (1/8)D though depending on the flow velocity of the fluid circulating through the passage 41. As mentioned above, in the case where the sizes of particulates to be flocculated are mainly in micrometer order, the phenomenon that particularly in the area from an inner surface of the wall 42 of the passage 41 having a diameter D to a position which is (1/8)D distant from the inner surface of the wall 42, the density of distribution of the particulates to be flocculated is high is observed. Therefore, the protrusion 43 is set such that the area from the inner surface of the wall 42 of the passage 41 to the position which is (1/8)D distant from the inner surface of the wall 42, where the density of distribution of the particulates to be flocculated is high, is particularly actively agitated by the horseshoe vortex V4.

As described above, in the dust flocculating duct 40, because the height of the protrusion 43 from the wall 42 is one eighth of a representative length of a cross section which is perpendicular to a direction of the flow of the gas passing through the passage 41, a foreign substance is hardly caught by the protrusion 43.

Fig. 20 is a schematic diagram illustrating a view of the vortices generated by the protrusion in the embodiment 2-D according to the present invention. Fig. 20 (A) shows a front view in which the passage is viewed from a front side and Fig. 20 (B) shows a side view in which the passage is viewed from a lateral side.

As shown in Fig. 20, in the dust flocculating duct 40, when gas P flows into the passage 41, since the protrusions 43 are disposed at six positions of the inner surface of the wall 42 of the passage 41, six horseshoe vortices V4 which swirl in the same direction occur in a substantially even-spaced manner in the vicinity of the inner surface of the wall 42 of the passage 41. In addition, since the neighboring vortices swirl in the same direction, when a flow line vector on a plane perpendicular to the direction of the flow is considered, one side of a flow in a plane, on which the vortices neighbor each other, swirls from a central portion of the passage in a direction toward the wall surface, another side thereof swirls from the wall surface of the passage in a direction toward the central portion of the passage, and the one side and the another side of the flow collide with each other. Thus, a probability with which the particulates of the fine dust transported by the flows of the respective vortices collide with one another is further enhanced.

As described above, in the dust flocculating duct 40, the plurality of protrusions 43 are disposed, thereby generating a large number of the vortices inside the passage 41 and allowing the dust flocculation effect to be enhanced.

Accordingly, by using the dust flocculating duct 40 of the embodiment 2-D, the probability with which the particulates of the fine dust transported by the flows collide with one another is more enhanced than that attained by using the dust flocculating duct 30 of the embodiment 2-C, thereby drastically boosting dust flocculating performance. Since the height of the protrusion 43 is the same as that of the swirling part 33 of the embodiment 2-C, the pressure loss is also substantially the same as that in the dust flocculating duct 30 of the embodiment 2-C. Accordingly, by using the dust flocculating duct 40 of the embodiment 2-D according to the present invention, further higher performance can be obtained than that obtained by using the dust flocculating duct 30 of the embodiment 2-C.

As described above, in the dust flocculating duct 40, the vortex generating part includes the protrusions 43, and the protrusions 43 are formed so as to project from the inner surface of the wall 42 and to make the velocity of the gas passing around the protrusion 43 uneven.

By employing the above-described configuration, the dust circulating through the dust flocculating duct 40 sequentially undergoes: a step at which the dust is guided into the passage 41 by the gas flow; a step at which the dust is transported through an inside of the passage 41 by the gas flow traveling forward; a step at which the dust is caught up in vortical flows generated downstream of the protrusions 43 protruding from the wall 42 of the passage 41 and circulates; a step at which a plurality of pieces of the dust are caused to collide with one another by the vortical flows; a step at which the plurality of pieces of the dust in collision with one another form the dust masses (clusters); and a step at which the dust masses are transported through the inside of the passage 41 by the gas flow.

In this way, the dust flocculating duct 40 which has a simple configuration, is capable of facilitating the flocculation by increasing the number of times when the particulates in the dust collide with one another, of decreasing the number of particulates, and of increasing apparent diameters of the particulates can be provided.

(Embodiment 2-E)

Fig. 21 shows a perspective view illustrating an important part of a dust flocculating duct of an embodiment 2-E according to the present invention. Fig. 22 shows a front view illustrating the important part of the dust flocculating duct of the embodiment 2-E. Fig. 23 shows a cross-sectional side view illustrating the dust flocculating duct of the embodiment 2-E.

As shown in Fig. 21 through Fig. 23, in the dust flocculating duct 50 of the embodiment 2-E, protrusions 53 are disposed, instead of the protrusions 43 in the embodiment 2-D. Each of the protrusions 53 is of a wing shape which is the same as the shape of each of the protrusions 43 in the embodiment 2-D but the protrusions 53 are disposed in a manner different from the manner in which the protrusions 43 are disposed.

In the dust flocculating duct 50, pairs of protrusions 53, each of which neighbors each other in a direction of a passage, are disposed from an upstream side toward a downstream side of the passage in a step-like manner. The pairs of protrusions 53 disposed in the step-like manner are disposed such that the two protrusions 53 of each of the pairs partially overlap each other when viewed from the upstream side. In other words, the pairs of protrusions 53 disposed in the step-like manner are disposed such that if a virtual line of a gas flow is drawn so as to span from a terminal end of one of the pair of protrusions 53, which is disposed on the upstream side, toward the downstream, the virtual line intersects another of the pair of protrusions 53, which is disposed on the downstream side. The other parts of the dust flocculating duct 50 of the embodiment 2-E are the same as those of the dust flocculating duct 40 of the embodiment 2-D.

In the dust flocculating duct 50 of the embodiment 2-E, a horseshoe vortex which has occurred on the one of the pair of protrusions 53, which is disposed on the upstream side, is further intensified on the another of the pair of protrusions 53, which is disposed on the downstream side, whereby a further intense horseshoe vortex is generated. While the vortices are moving downstream, the vortices gradually attenuate. However, since the vortices generated in the dust flocculating duct 50 are more intense than the vortices generated in the dust flocculating duct 40, a distance (outreach) from a point at which the attenuation of the vortices starts to a point at which the attenuation of the vortices finishes is long, whereby influences of the vortices can be exerted on the further downstream. In the vicinity of an inner surface of a wall 52 of the passage 51, six horseshoe vortices which swirl in the same direction occur in a substantially even-spaced manner.

Fig. 24 is a schematic diagram illustrating a gas flow around a protrusion in the dust flocculating duct of the embodiment 2-E.

As shown in Fig. 24, since the pairs of the protrusions 53 are disposed in the step-like manner, a horseshoe vortex V5 generated on the upstream side is caught up in a vortex generated on the protrusion 53 downstream side, thereby allowing an intense horseshoe vortex V6 to be effectively generated.

Further, since the neighboring vortices swirl in the same direction, when flow line vectors on a plane perpendicular to the direction of the flow are considered, one vector of a flow in a plane, on which the vortices neighbor each other, swirls from a central portion of the passage in a direction toward the wall surface and another vector thereof swirls from the wall surface of the passage in a direction toward the central portion of the passage. In such a manner, the one vector and the another vector of the flow collide with each other. Thus, a probability with which the particulates of the fine dust transported by the flows of the respective vortices collide with one another is further enhanced.

Accordingly, by using the dust flocculating duct 50 of the embodiment 2-E, the further intense vortices can be generated. Therefore, the outreach of each of the vortices is long and thereby, the probability with which the particulates of the fine dust transported by the flow can be further increased, whereby a capability of flocculating the dust can be drastically enhanced. In addition, friction of the flow is reduced in the dust flocculating duct 50 of the embodiment 2-E as compared with the dust flocculating duct 40 of the embodiment 2-D, thereby allowing a reduction in a pressure loss.

In the dust flocculating duct 50 of the embodiment 2-E, the pressure loss is equal to that in the dust flocculating duct 40 of the embodiment 2-D. However, the probability with which the particulates of the fine dust collide with one another is increased by approximately 30 % as compared with the probability attained by the dust flocculating duct 40 of the embodiment 2-D. By using the dust flocculating duct 50 of the embodiment 2-E, a dust flocculating duct which achieves further high performance can be obtained.

(Embodiment 2-F)

Fig. 25 shows a perspective view illustrating an important part of a dust flocculating duct of an embodiment 2-F according to the present invention. Fig. 26 shows a front view illustrating the important part of the dust flocculating duct of the embodiment 2-F. Fig. 27 shows a cross-sectional side view illustrating the dust flocculating duct of the embodiment 2-F.

As shown in Fig. 25 through Fig. 27, in the dust flocculating duct 60 of the embodiment 2-F, quartets, each of which is composed of a protrusion 63a, a protrusion 63b, a protrusion 63c, and a protrusion 63d, are disposed, instead of the protrusions 53 in the embodiment 2-E. Each of the protrusions (63a, 63b, 63c, and 63d) is of the same shape as that of the protrusion 53, namely, the wing shape and the number of the protrusions (63a, 63b, 63c, and 63d) disposed is the same as the number of the protrusions 53 disposed. However, the protrusion 63a and protrusion 63c which neighbor each other are disposed so as to form stagger angles (each of which is an angle formed between a wing chord and a direction of a flow) in a manner opposite to each other; and the protrusion 63b and the protrusion 63d which neighbor each other are also disposed in the same manner as mentioned above. In other words, the protrusions (63a, 63b, 63c, and 63d) have curved shapes so as to form depressions. Two protrusions which neighbor each other in a direction intersecting a direction of a gas flow are disposed such that two depressions of the two protrusions face each other. On a wall 62 of a passage 61, three protrusions 63a are disposed in a circumferential direction of the cross section perpendicularly intersecting the direction of the gas flow in an evenly spaced manner, each with a stagger angle of 22.5 degrees which is formed in a clockwise manner when each of the protrusions 63a is viewed from an upstream side to a downstream side; respectively between the protrusions 63a, three protrusions 63c are disposed in an evenly spaced manner, each with a stagger angle of 22.5 degrees which is formed in a counterclockwise manner when each of the protrusions 63c is viewed from the upstream side toward the downstream side. On each of the downstream sides of the protrusions 63a and the protrusions 63c, three protrusions 63b are disposed in the circumferential direction of the cross section perpendicularly intersecting the direction of the gas flow in an evenly spaced manner, each with a stagger angle of 22.5 degrees which is formed in a clockwise manner when each of the protrusions 63b is viewed from the upstream side toward the downstream side; and respectively between the three protrusions 63b, three protrusions 63d are disposed, each with a stagger angle of 22.5 degrees which is formed in a counterclockwise when each of the protrusions 63d is viewed from the upstream side toward the downstream side. Along the direction of the gas flow, each of the protrusion 63b is disposed on a downstream side of each of the protrusions 63a, and each of the protrusions 63d is disposed on a downstream side of each of the protrusions 63c. The four protrusions are disposed such that a distance between the depressions of the protrusion 63a and the protrusion 63c is larger than a distance between the depressions of the protrusion 63b and the protrusion 63d.

In the dust flocculating duct 60 of the embodiment 2-F, the same horseshoe vortices as those generated on the protrusions 43 in the embodiment 2-D are generated on the protrusions (63a, 63b, 63c, and 63d) and the horseshoe vortices move downstream along a downstream portion of a wall 62 of a passage 61, thereby imparting intense swirls to a flow circulating downstream of the protrusions.

Fig. 28 is a schematic diagram illustrating a view of the vortices generated around the protrusions in the dust flocculating duct of the embodiment 2-F.

As shown in Fig. 28, inside the passage 61 of the dust flocculating duct 60 of the embodiment 2-F, 12 protrusions are disposed so as to each mutually face toward opposite directions. Therefore, in the vicinity of an inner surface of the wall 62 of the passage 61, six horseshoe vortices V7 are generated. Pairs of neighboring vortices of the six horseshoe vortices V7 each swirl in respectively opposite directions. The horseshoe vortices V7 generated on the protrusion 63a and the protrusion 63c on the upstream side are caught up in a gas flow passing between the protrusion 63b and the protrusion 63d on the downstream side, and thereby, an intense horseshoe vortex V8 is generated. Further, since the protrusion 63b and the protrusion 63d are disposed so as to face toward the opposite directions, the vortices generated between the protrusion 63b and the protrusion 63d on the downstream side act so as to mutually intensify each other, thereby allowing the further intense horseshoe vortex V8 to be generated.

In addition, since the neighboring vortices each swirl in the opposite directions, when flow line vectors on a plane perpendicular to the direction of the flow are considered, one vector of a flow in a plane, on which the vortices neighbor each other, swirls from a central portion of the passage in a direction toward the wall surface and another vector thereof also swirls in the same direction; and the one vector thereof swirls from the wall surface of the passage in a direction toward the central portion of the passage and the another vector thereof also swirls in the same direction. Therefore, the vectors of the flow can smoothly converge, thereby decreasing a frictional resistance caused by a viscosity of the flow. Thus, in the passage 61 in the embodiment 2-F, a pressure loss due to the vortices is reduced as compared with the passage 51 in the embodiment 2-E.

As described above, in the dust flocculating duct 60, each of the protrusions (63a, 63b, 63c, and 63d) is of the shape which has a curved portion so as to form the depression, and the two protrusions which neighbor in the direction intersecting the direction of the gas flow are disposed such that the two depressions of the two neighboring protrusions face each other. In other words, in the dust flocculating duct 60, the protrusions (63a, 63b, 63c, and 63d) change directions in which the flow of the gas entering the passage 61 swirls, and the directions of the gas flow which the neighboring protrusions 63a and 63c as well as the neighboring protrusions 63b and 63d change are opposite to each other. By employing the above-described configuration, the vortices generated on the neighboring protrusions move downstream while swirling in the opposite directions. Therefore, in the plane on which the vortices neighbor each other, the gas flows which form these vortices travel in the same direction. Accordingly, the vortices generated on the neighboring protrusions smoothly converge, thereby reducing the frictional resistance caused by the viscosity of the flow. Thus, the pressure loss inside the passage 61 can be reduced.

Accordingly, through using the dust flocculating duct 60 of the embodiment 2-F, a friction of the flow can be reduced as compared with the dust flocculating duct 40 of the embodiment 2-D, thereby allowing the pressure loss to be further reduced. A probability with which the particulates of the fine dust collide with one another due to the friction of the flow is reduced by approximately 5 % as compared with the dust flocculating duct 40 of the embodiment 2-D. However, the pressure loss is reduced by approximately 10 % as compared with the dust flocculating duct 40 of the embodiment 2-D. Therefore, the embodiment 2-F realizes the dust flocculating duct 60 attaining higher performance than that attained by the dust flocculating duct 40 of the embodiment 2-D.

(Embodiment 2-G)

Fig. 29 shows a perspective view in which an important part of a dust flocculating duct of an embodiment 2-G according to the present invention is viewed in a perspective manner. Fig. 30 shows a front view illustrating the important part of the dust flocculating duct of the embodiment 2-G.

As shown in Fig. 29 and Fig. 30, in the dust flocculating duct 70 of the embodiment 2-G according to the present invention, a plurality of protrusions 73a and a plurality of protrusions 73b are disposed on an inner surface of a wall 72 of a passage 71, instead of the protrusions 43 in the embodiment 2-D. Each of the protrusions 73a and protrusions 73b has a triangular bottom.

Fig. 31 is a diagram illustrating the protrusion in the embodiment 2-G. Fig. 31 (A) shows a bottom view of the protrusion, Fig. 31 (B) shows a side view of the protrusion, and Fig. 31 (C) shows a front view of the protrusion. It is supposed that an upstream side of the passage is a front side.

As shown in Fig. 31, the bottom of the protrusion 73a is of a right triangle EFG whose respective sides has lengths with EF : FG : GE = 1 : 2 : √3. The bottom EFG of the protrusion 73a is jointed to an inner surface of a wall 72 of a passage 71 such that among respective apices of the right triangle, the apex G having an angle of 30 degrees is disposed on an upstream side of a flow and the side EF spanning between the apex having an angle of 60 degrees and the apex having an angle of 90 degrees is disposed so as to be perpendicular to a flow direction. The remaining one apex I of the protrusion 73a is formed so as to project into the passage 71 from the wall 72.

The protrusion 73a is of a shape in which when a representative length of a passage width on a plane perpendicular to the flow direction of the passage 71 (a length of a side in a case of a square passage and a diameter in a case of a circular passage) is supposed to be D, a length GE in the flow direction is (3/8)D; an angle formed by the flow direction and a hypotenuse is 30 degrees in a clockwise manner when the protrusion 73a is viewed from the upstream side to a downstream side; and a height h of the protrusion 73a is (1/8)D. In a shape of the protrusion 73b which neighbors the protrusion 73a, an angle formed by the flow direction and a hypotenuse is 30 degrees in a counterclockwise manner when the protrusion 73b is viewed from the upstream side toward the downstream side. On the wall 72 of the passage 71, four protrusions 73a are disposed in an evenly-spaced manner; four protrusions 73b are disposed respectively between the two protrusions 73a; and the protrusions 73a and the protrusions 73b are disposed so as to each face toward opposite directions.

Fig. 32 is a schematic diagram illustrating a gas flow around the protrusion of the embodiment 2-G.

As shown in Fig. 32, a flow velocity V9 of a flow along a hypotenuse GI of the protrusion 73a is slightly lower than a flow velocity P of a fluid circulating through the passage 71 because the flow is stemmed by collision of the flow against the protrusion 73a. On the other hand, a flow velocity V10 of a flow along the side GE, in the flow direction, of the protrusion 73a is the substantially same as the flow velocity P of the fluid circulating through the inside the passage 71. Therefore, when a relative velocity in an area surrounding the protrusion 73a with reference to the flow velocity of the fluid circulating through the passage 71 is considered, a circulation which circulates around the protrusion 73a from the upstream side toward the downstream side of the passage 71 on the side GE in the flow direction and from the downstream side to the upstream side of the passage 71 on a hypotenuse FG occurs. Due to this circulation, a horseshoe vortex V11 is generated from the apex of the protrusion 73a which is triangular pyramid-shaped and the horseshoe vortex V11 moves downstream along a downstream portion of the wall 72 of the passage 71. This horseshoe vortex 11 imparts a swirl to the flow circulating downstream of the protrusion 73a. Although also on the protrusion 73b, a horseshoe vortex is formed as similarly to on the protrusion 73a, a direction in which the horseshoe vortex swirls on the protrusion 73b is opposite to the direction in which the horseshoe vortex on the protrusion 73a swirls.

In the embodiment 2-G, since each of the heights h of the protrusion 73a and the protrusion 73b is (1/8)D, a diameter of the horseshoe vortex V11 immediately after the occurrence of the horseshoe vortex is (1/8)D or slightly larger than (1/8)D though depending on the flow velocity of the fluid circulating through the passage 71. As mentioned above, in the case where the sizes of particulates to be flocculated are mainly in micrometer order, the phenomenon that particularly in the area from the wall 72 of the passage 71 having the diameter D to a position which is (1/8)D distant from the wall 72, the density of distribution of the particulates to be flocculated is high is observed. Therefore, the protrusions 73a and the protrusions 73b in the embodiment 2-G actively agitate the gas passing the area from the wall 72 of the passage 71 to the position which is (1/8)D distant from the wall 72, where the density of distribution of the particulates to be flocculated is high, by generating the horseshoe vortices.

As described above, in the dust flocculating duct 70, because each of the heights of the protrusion 73a and the protrusion 73b from the wall 72 is one eighth of a representative length of a cross section which is perpendicular to a direction of the flow of the gas passing through the passage 71, a foreign substance is hardly caught by the protrusion 73a and the protrusion 73b.

Fig. 33 is a schematic diagram illustrating a view of the vortices generated by the protrusions in the embodiment 2-G according to the present invention. Fig. 33 (A) shows a view in which the passage is viewed from a front side and Fig. 33 (B) shows a view in which the passage is viewed from a lateral side.

As shown in Fig. 33, in the vicinity of the wall 72 of the passage 71, eight horseshoe vortices V11 are generated and pairs of neighboring vortices of the eight horseshoe vortices V11 each swirl in respectively opposite directions. Since the neighboring vortices each swirl in the opposite directions, when flow line vectors on a plane perpendicular to the direction of the flow are considered, one vector of a flow in a plane, on which the vortices neighbor each other, swirls from a central portion of the passage in a direction toward the wall surface and another vector thereof also swirls in the same direction; and the one vector thereof swirls from the wall surface of the passage in a direction toward the central portion of the passage and the another vector thereof also swirls in the same direction. Therefore, the vectors of the flow can smoothly converge, thereby decreasing a frictional resistance caused by a viscosity of the flow. Thus, in the dust flocculating duct 70 in the embodiment 2-G, a pressure loss due to the vortices is reduced.

In a case where a rod-like foreign substance having a length of D and a thickness of 0.05D is mixed in a fluid circulating through the passage 71, for example, in the embodiment 2-A through the embodiment 2-F, since each of the swirling parts and the protrusions of the dust flocculating duct is of a shape having a curved portion and in particular, each of the protrusions has a depression on an upstream side thereof and a projection on a downstream side thereof, one end of the rod-like foreign substance is caught by one of the vortex generating parts and another end of the rod-like foreign substance is caught by another of the vortex generating part, whereby a failure that the dust flocculating duct is clogged with the foreign substance is likely to occur. On the other hand, in the dust flocculating duct 70 of the embodiment 2-G, the protrusion 73a has no depression and on each of the protrusion 73a and the protrusion 73b, an oblique surface is formed, instead of the depressed surface of the protrusion 43 in the embodiment 2-D, whereby the above-mentioned rod-like foreign substance or the like is hardly caught by the protrusions.

As described above, in the dust flocculating duct 70, an area of a cross section of each of the protrusions 73a and the protrusions 73b in a direction perpendicular to the direction of the gas flow is small on the upstream side and large on the downstream side. This causes a foreign substance to be hardly caught by the protrusions 73a and the protrusions 73b.

Accordingly, by using the dust flocculating duct 70 of the embodiment 2-G, the substantially same effect as that attained by the embodiment 2-E can be attained. Moreover, for example, in a case where the rod-like foreign substance or the like is likely to be mixed in the flow, since the failure that the rod-like foreign substance is caught by the turbulence generating parts can be prevented, a highly reliable dust flocculating duct can be obtained as compared with the dust flocculating ducts of the embodiment 2-A through the embodiment 2-F.

(Embodiment 2-H)

Fig. 34 shows a perspective view in which an important part of a dust flocculating duct of an embodiment 2-H according to the present invention is viewed in a perspective manner. Fig. 35 shows a front view illustrating the important part of the dust flocculating duct of the embodiment 2-H. Fig. 36 shows a cross-sectional side view of the dust flocculating duct of the embodiment 2-H.

As shown in Fig. 34 through Fig. 36, in the embodiment 2-H, a plurality of protrusions 83 are disposed, instead of the protrusions 73a and the protrusions 73b in the embodiment 2-G. Each of the protrusions 83 is of a triangular pyramid shape.

Fig. 37 shows a top view (A) and a lateral view (B) of a shape of each of the protrusions in the embodiment 2-H.

As shown in Fig. 37, each of the protrusions 83 is of a triangular pyramid-shape whose bottom JKL is of an isosceles triangle with a base KL : a height JM = 1 : 2. The bottom JKL is jointed to a wall surface of the passage such that the smallest angle J of the isosceles triangle of the bottom is disposed on an upstream side of a flow and the base KL is disposed so as to be perpendicular to a flow direction. When an apex of the triangular pyramid-shaped protrusion is supposed to be N, the protrusion is formed such that a perpendicular spanning from the apex N to the isosceles triangle of the bottom passes M, that is, such that NM is perpendicular to JM and KL, respectively. The protrusion is of a shape in which when a representative length of a passage width on a plane perpendicular to a flow direction of a passage 81 (a length of a side in a case of a square passage and a diameter in a case of a circular passage) is supposed to be D, a length JM in the flow direction is (1/2)D; and a triangular pyramid height NM is (1/8)D.

In addition, on an inner surface of a wall 82 of a passage 81, a large number of protrusions 83 are disposed in a regular manner. In the dust flocculating duct 80, the plurality of protrusions 83 are disposed at intervals of (3/2)JM in the flow direction and at intervals of (3/2)KL in a direction perpendicular to the flow direction. The plurality of protrusions 83 are disposed such that with respect to one of the protrusions 83, another of the protrusions 83 is disposed so as to be (3/4)JM displaced from the one of the protrusions 83 in the flow direction and further another of the protrusions 83 is disposed so as to be (3/4)KL displaced from the one of the protrusions 83 in the direction perpendicular to the flow direction; and the other protrusions 83 are disposed in the same manner. In other words, the plurality of protrusions 83 are disposed in a manner of the so-called staggered arrangement and in a multistage manner such that when it is supposed that one pitch in the flow direction is (3/2)JM and one pitch in the direction perpendicular to the flow direction is (3/2)KL, the protrusions 83 are disposed so as to be 0.5 pitch displaced, each in the flow direction and the direction perpendicular to the flow direction, from one another.

When these protrusions 83 are viewed from an upstream side in a perspective manner, the plurality of protrusions 83 are disposed so as not to completely overlap one another but such that neighboring protrusions 83 only partially overlap each other. The other parts of the embodiment 2-H are the same as those of the embodiment 2-E.

In the dust flocculating duct 80 of the embodiment 2-H, a flow circulating in the vicinity of the inner surface of the wall 82 of the passage 81 is lifted up to a side of an apex N with respect to the bottom of the triangular pyramid due to slopes of surfaces JNK and JNL of the protrusion 83 which is triangular pyramid-shaped and is wound up to a side of a central portion of the passage, generating weak twin vortices on a downstream side of the apex N. The flow circulating through the dust flocculating duct 80 of the embodiment 2-H is sequentially agitated such that the flow is agitated by weak twin vortices, generated by the protrusion 83 which the flow first meets, and circulates downstream; the flow is agitated again by weak twin vortices, generated by the protrusion 83 which the flow next meets, and circulates further downstream; and the flow is agitated further again by weak twin vortices, generated by the protrusion 83 which the flow further next meets. Such agitation is repeated at the plurality of protrusions 83. As mentioned above, in the case where the sizes of particulates to be flocculated are mainly in micrometer order, a phenomenon that particularly in an area from the wall 82 of the passage 81 having the diameter D to a position which is (1/8)D distant from the wall 82, a density of distribution of the particulates to be flocculated is high is observed. Therefore, the plurality of protrusions 83 disposed in the multistage manner in the embodiment 2-H actively agitate the area from the wall 82 of the passage 81 to the position which is (1/8)D distant from the wall 82, where the density of distribution of the particulates to be flocculated is high, by using the plurality of twin vortices.

As described above, in the dust flocculating duct 80, because each of the heights of the protrusions 83 from the wall 82 is less than or equal to one eighth of a representative length of a cross section which is perpendicular to the direction of the flow of the gas passing through the passage 81, a foreign substance is hardly caught by the protrusions 83.

In addition, when the plurality of protrusions 83 are viewed from the upstream side in the perspective manner, the plurality of protrusions 83 are disposed so as not to completely overlap each other but such that the neighboring protrusions 83 only partially overlap each other. Therefore, the flow circulating along the wall 82 of the passage 81 invariably meets the protrusions 83. Thereafter, the flow circulating along the wall 82 of the passage 81 passes through the dust flocculating duct 80 while circulating downstream and accordingly meeting the protrusions 83 repeatedly.

As described above, in the dust flocculating duct 80, the plurality of protrusions 83 are disposed along the direction of the gas flow in the passage 81 so as to partially overlap each other when viewed from the upstream side toward the downstream side of the passage 81 in the perspective manner. This allows the gas flowing through the passage 81 to easily pass around the protrusions 83, thereby enabling efficient generation of the vortices.

Accordingly, in the dust flocculating duct 80 of the embodiment 2-H, the gas flow circulating in the area from the wall 82 of the passage 81 to the position which is (1/8)D distant from the wall 82 can be most efficiently agitated and the number of the generated twin vortices can be increased.

As described above, in the dust flocculating duct 80, the plurality of protrusions 83 are disposed along the direction of the gas flow in the passage 81 so as to partially overlap each other when viewed from the upstream side toward the downstream side of the passage 81 in the perspective manner. This allows the gas flowing through the passage 81 to easily pass around the protrusions 83, thereby enabling efficient generation of the vortices.

In addition, in a case where a foreign substance or the like (for example, a cloth-like or mesh-like material such as a handkerchief and pantyhose), for example, which is of a soft cloth-like material and has a size substantially equal to the diameter of the passage 81 is mixed in a fluid circulating through the dust flocculating duct 80, for example, in the embodiment 2-A through the embodiment 2-G, each of the protrusions in the dust flocculating duct is of a shape having a curved portion or a rectangular portion and the cloth-like foreign substance is easily caught by the vortex generating parts, whereby a failure that the dust flocculating duct is clogged with the foreign substance is likely to occur. In the embodiment 2-H, since the protrusions 83 are formed as the smooth triangular pyramid-shaped protrusions on the upstream side of the flow, the above-mentioned cloth-like foreign substance or the like is hardly caught by the protrusions 83.

Accordingly, by using the dust flocculating duct 80 of the embodiment 2-H, sufficient flocculation performance can be attained through the agitation by the large number of twin vortices. Moreover, for example, in a case where the cloth-like foreign substance or the like is likely to be mixed in the flow, since the failure that the cloth-like foreign substance is caught by the turbulence generating parts can be prevented, a highly reliable dust flocculating duct 80 can be obtained as compared with the dust flocculating ducts of the embodiment 2-A through the embodiment 2-G.

(Embodiment 2-1)

Fig. 39 shows a perspective view in which an important part of a dust flocculating duct of an embodiment 2-1 is viewed in a perspective manner. Fig. 40 shows a front view illustrating the important part of the dust flocculating duct of the embodiment 2-1. Fig. 41 shows a cross-sectional side view illustrating the important part of the dust flocculating duct of the embodiment 2-I.

As shown in Fig. 39 through Fig. 41, in the dust flocculating duct 90 of the embodiment 2-I, a plurality of protrusions 93 are disposed on an inner surface of a wall 92 of a passage 91, instead of the protrusions 83 in the embodiment 2-H. Each of the protrusions 93 is of the same shape as that of each of the protrusions 83 in the embodiment 2-H, namely, a triangular pyramid shape but the protrusions 93 are arranged or disposed in a different manner. In other words, in the embodiment 2-1, the protrusions 93 of which the number is one third of the number of the protrusions 83 in the embodiment 2-H are disposed in a manner corresponding to the manner in which the protrusions 83 are arranged when viewed from an upstream side in a perspective manner. In other words, when viewed from the upstream side in the perspective manner, the plurality of protrusions 93 are disposed so as not to completely overlap each other but such that neighboring protrusions 93 partially overlap each other. In addition, the protrusions 93 are disposed such that the number of protrusions 93 which are present on a plane perpendicular to a flow direction is as small as possible and the plurality of the protrusions 93 disposed so as to be present on the plane perpendicular to the flow direction are disposed so as to be as distant from one another as possible. The other parts are the same as those of the embodiment 2-H.

In the dust flocculating duct 90 of the embodiment 2-I according to the present invention, the substantially same twin vortices as those generated on the protrusions 83 of the embodiment 2-H are generated on the protrusions 93. When the plurality of protrusions 93 are viewed from an upstream side in a perspective manner, the plurality of protrusions 93 are disposed so as not to completely overlap each other but such that neighboring protrusions 93 only partially overlap each other. Therefore, the flow circulating along the wall 92 of the passage 91 invariably passes the protrusions 93. However, since the number of the protrusions 93 is one third of the number of the protrusions 83 in the embodiment 2-H, the number of times when the flow circulating along the wall 92 of the passage 91 meets the turbulence protrusion 93 is one third of the number of times in the embodiment 2-H and the number of the twin vortices generated is also one third of the number of vortices generated in the embodiment 1-8, thereby reducing a probability with which the particulates to be flocculated collide with one another.

However, the protrusions 93 in the embodiment 2-I have the below-described advantage. Specifically, in the dust flocculating duct 80 of the embodiment 2-H, the large number of the protrusions 83 are disposed so as to be present on the plane perpendicular to the flow direction. An area of the passage 81 on the plane perpendicular to the flow direction and at positions of surfaces ∆NKL of the protrusions 83 decreases by (the number of the protrusions 83 disposed so as to be present on the same plane perpendicular to the flow direction) × (areas of the surfaces ∆NKL) from an area of the passage 81 on the other plane perpendicular to the flow direction. Therefore, since the larger the number of the protrusions 83 disposed so as to be present on the same plane perpendicular to the flow direction is, the smaller the area of the passage on the same plane perpendicular to the flow direction is, a pressure loss in the dust flocculating duct 80 increases. In contrast to this, in the dust flocculating duct 90 of the embodiment 2-I, the protrusions 93 are disposed such that the number of protrusions 93 which are present on the plane perpendicular to the flow direction is as small as possible and the plurality of the protrusions 93 disposed so as to be present on the plane perpendicular to the flow direction are disposed so as to be as distant from one another as possible. Therefore, a decrease in an area of the passage at positions where the protrusions 93 are present is small, a pressure loss in the dust flocculating duct 90 is also small accordingly.

In other words, for example, when a length of the passage 91 in a flow direction in the embodiment 2-I is tripled and the number of the protrusions 93 disposed in the embodiment 2-I is set to be the same as the number of the protrusions 83 disposed in the embodiment 2-H, the probability in the embodiment 2-I with which the particulates to be flocculated collide with one another is substantially equal to that in the dust flocculating duct 80 of the embodiment 2-H. However, because an area of the inner surface of the wall 92, where the protrusions 93 are disposed, decreases to a small extent, the pressure loss in the dust flocculating duct 90 whose length is tripled is also small.

Accordingly, by using the dust flocculating duct 90 of the embodiment 2-I, a great effect of reducing the pressure loss can be attained. For example, by using the dust flocculating duct 90 whose length is tripled, the pressure loss can be reduced without deteriorating performance of flocculation caused when the particulates collide with one another, as compared with the pressure loss in the dust flocculating duct 80 of the embodiment 2-H. Therefore, for example, in a case where an output and a static pressure rise of a driving source (for example, a fan, a blower, or the like) for generating a flow circulating in the passage 91 are small or where the driving source is susceptible to the pressure loss, performance of a whole system including the dust flocculating duct 90 and the driving source is enhanced.

(Embodiment 2-J)

Fig. 42 shows a perspective view in which an important part of a dust flocculating duct of an embodiment 2-J is viewed in a perspective manner. Fig. 43 shows a front view illustrating an important part of a dust flocculating duct of the embodiment 2-J. Fig. 44 shows a cross-sectional side view of the dust flocculating duct of the embodiment 2-J.

As shown in Fig. 42 through Fig. 44, in the dust flocculating duct 100 of the embodiment 2-J, a plurality of protrusions 103 are provided on an inner surface of a wall 102 of a passage 101, instead of the protrusions 93 in the embodiment 2-I. Each of the protrusions 103 is formed so as to be of the same triangular pyramid shape as that of each of the protrusions 83 in the embodiment 2-H but an arrangement or a disposition thereof is different from that of the embodiment 2-H. In other words, when viewed from an upstream side, the plurality of protrusions 103 are disposed so as not to overlap each other and the neighboring protrusions 103 are disposed in an evenly-spaced manner. In addition, a configuration of the plurality of protrusions 103 may be provided such that the plurality of protrusions 103 are not disposed on a plane in a direction perpendicular to a flow direction. The other parts are the same as those of the embodiment 2-H.

In the dust flocculating duct 100 of the embodiment 2-J, the substantially same twin vortices as those in the embodiment 2-H are generated by the protrusions 103. However, because the number of the protrusions 103 is small, as compared with that of the protrusions 83 in the embodiment 2-H, and the plurality of protrusions 103 are disposed so as not to overlap each other when viewed from the upstream side, many parts of a flow circulating along the wall 102 of the passage 101 each meet one of the protrusions 103 once and a part, which circulates between one of the protrusions 103 and another of the protrusions 103, of the many parts of the flow never meets any one of the protrusions 103. Therefore, in the dust flocculating duct 100 of the embodiment 2-J, agitation which can be imparted to the flow is drastically reduced, as compared with the dust flocculating duct 80 of the embodiment 2-H.

However, the dust flocculating duct 100 of the embodiment 2-J has an advantage that a method of molding the dust flocculating duct 100 is extremely easy. In other words, when viewed from the upstream side, the plurality of protrusions 103 are disposed so as not to overlap each other and the neighboring protrusions 103 are disposed in an evenly-spaced manner. Therefore, for example, in a case where the dust flocculating duct 100 is formed through resin-molding, a molding die is configured such that the upstream side of the dust flocculating duct 100 is set on a movable side of the molding die and a downstream side of the dust flocculating duct 100 is set on a fixed side of the molding die, thereby allowing the dust flocculating duct 100 to be integrally molded without requiring a complicated configuration of the molding die.

In addition, for example, in a case where a foreign substance (for example, something like a milk bottle cap) which is of a plate-like shape and has an area approximate to an area of a cross section of the passage 101 or the like is mixed in a fluid circulating through the dust flocculating duct 100, for example, in the dust flocculating ducts of the embodiment 2-C through the embodiment 2-I, since a plurality of turbulence generating parts are disposed so as to be present in the plane in the direction perpendicular to the flow direction, an edge of the plate-like shaped foreign substance having the area approximate to the area of the cross section of the passage is highly likely to be caught concurrently by the plurality of protrusions and thereby, a failure that the dust flocculating duct is clogged with the foreign substance is likely to occur. However, in the embodiment 2-J, since the configuration of the plurality of protrusions 103 is provided such that the plurality of protrusions 103 are not disposed so as to be present in the plane in the direction perpendicular to the flow direction, the plate-like shaped foreign substance, having the area approximate to the area of the cross section of the passage 101, or the like is hardly caught by the plurality of protrusions.

Accordingly, not only moldability of the dust flocculating duct 100 of the embodiment 2-J is excellent but also for example, in the case where the plate-like shaped foreign substance, having the area approximate to the area of the cross section of the passage, or the like is likely to be mixed in the flow, the failure that the foreign substance is caught by the turbulence generating parts and thereby, the dust flocculating duct is clogged with the foreign substance can be prevented. As described above, the dust flocculating duct having both the extremely high moldability and extremely high reliability can be obtained.

Fig. 45 through Fig. 49 are schematic diagrams illustrating the other arrangements of the protrusions in the embodiment 2-J. In each of Fig. 45 through Fig. 49, a diagram (A) with the protrusions viewed in a direction perpendicular to a direction of a passage and a schematic diagram (B) with the protrusions viewed from the upstream side of the flow are shown.

As shown in Fig. 45, a plurality of protrusions 103 are disposed on an inner circumferential surface in the direction perpendicular to the flow. In a case where the protrusions are disposed so as to be close to one another or in a cylindrical-shaped duct, when the plurality of protrusions 103 are disposed in a plane in the direction perpendicular to the flow, preferably each with approximately 90 degrees of an interior angle on the cross section of the passage, both extremely high moldability and extremely high reliability can be concurrently attained.

As shown in Fig. 46, a configuration of the protrusions 103 is provided such that neighboring protrusions 103 are slightly displaced from each other to avoid mutual overlapping of the neighboring protrusions 103, thereby preventing the duct from being clogged with the foreign substance due to the protrusions. As a configuration which allows the same effect as mentioned above to be attained, as shown in Fig. 47, a configuration is provided such that the protrusion are divided into several groups and the groups are mutually displaced from one another in the direction of the flow. As shown in Fig. 48 and Fig. 49, a sawtooth-like arrangement can be shown in an illustrative manner. By employing any of these arrangements of the protrusions 103, extremely high moldability can be attained.

Fig. 50 is a diagram illustrating an arrangement of neighboring protrusions in the dust flocculating duct of the embodiment 2-J.

As shown in Fig. 50, when the protrusions 103 are disposed so as not to overlap each other in a projection plane which is viewed from a direction parallel to the direction of the flow and a distance between the neighboring protrusions 103 is supposed to be W, W is expressed by the following equation.

$$W = 2\alpha + \gamma \tan\beta \text{ (note: } \alpha, \beta, \text{ and } \gamma \text{ are any positive integers.)}$$

With respect to the protrusions 103, it is supposed that α and β are greater than or equal to 3 mm, respectively, and γ (mm) is any number.

When the dust flocculating duct 100 is produced by using a molding die which is separated in a direction S parallel to the gas flow, the passage 101 and the protrusions 103 can be simultaneously molded. This allows a molding cost to be drastically reduced. Regarding the distance between the protrusions 103, by ensuring a lower limit of W (mm), the protrusions can be disposed so as not to overlap each other in the projection plane perpendicular to the gas flow and a strength in portions of the molding die, which come between the protrusions, can be ensured.

(Embodiment 2-K)

Fig. 51 shows a perspective view in which an important part of a dust flocculating duct of an embodiment 2-K is viewed in a perspective manner. Fig. 52 shows a front view illustrating an important part of the dust flocculating duct of the embodiment 2-K. Fig. 53 shows a cross-sectional side view of the dust flocculating duct of the embodiment 2-K.

As shown in Fig. 51 through Fig. 53, in the embodiment 2-K according to the present invention, a plurality of protrusions 113 are provided on a wall 112 of a passage 111, instead of the protrusions 83 in the embodiment 2-H. Each of the protrusions 113 is of a triangular pyramid shape (a length, in a flow direction, of JM=(1/4)D; and a height of a triangular pyramid of NM=(1/16)D) which is a similar figure of each of the protrusions in the embodiment 2-H and has a size of 1/2 of a size of each of the protrusions 83 in the embodiment 2-H. Also in an arrangement thereof, the protrusions 113 are disposed in a 1/2-similar manner. The number of the triangular pyramid shaped protrusions 113 is set to be approximately four times the number of those in the embodiment 2-H. The other parts are the same as those in the embodiment 2-H.

In the dust flocculating duct 110 of the embodiment 2-K, twin vortices, each of which has a size of 1/2 of a size of each of the vortices generated by the protrusions 83 in the embodiment 2-H and has a shape substantially similar to each of the vortices generated by the protrusions 83 in the embodiment 1-8, are generated by the protrusions 113. Intensities of the twin vortices generated by one of the protrusions 113 are reduced as compared with those of the twin vortices generated by one of the protrusions 83 in the embodiment 2-H. However, since a large number of the protrusions 113 are provided, agitation substantially similar to the agitation imparted in the embodiment 2-H can be imparted to a flow.

As described above, in a case where sizes of particulates to be flocculated are mainly in micrometer order, a phenomenon that particularly in an area from the wall surface of the passage 111 having a diameter D to a position which is (1/8)D distant from the wall surface, a density of distribution of the particulates to be flocculated is high is observed. However, in the embodiment 2-K, since the plurality of protrusions 113 are disposed in a multistage manner so as to each have the height (1/16)D, in the area from the wall 112 of the passage 111 having the diameter D to the position (1/8)D, where the density of distribution of the particulates to be flocculated is particularly high, there is a limitation that only a half of such an area can be actively agitated.

However, the protrusions 113 in the embodiment 2-K have the following advantage: since each of the protrusions 113 has the height of (1/16)D which is 1/2 of the height of each of the protrusions 83 in the embodiment 2-H, a reduction of a passage area due to the protrusions 113 disposed so as to be present in the same plane in the direction perpendicular to the flow is 1/4 of that in the embodiment 2-H, thereby markedly reducing also a pressure loss in the dust flocculating duct 110, as compared with that in the dust flocculating duct 80 in the embodiment 2-H.

Furthermore, in the embodiment 2-K, owing to the height of (1/16)D which each of the protrusions 113 has, the twin vortices generated by the protrusions 113 exert an influence on a velocity boundary layer which develops on the wall 112 of the passage 111 of the dust flocculating duct 110, thereby attaining an effect that a thickness of the velocity boundary layer is decreased.

In general, in the vicinity of the wall surface in the passage, due to a viscosity of a fluid circulating through the passage, the velocity boundary layer develops. A flow velocity in the boundary layer is low as compared with that in a middle portion of the passage and a resistance against a flow in the boundary layer is high. In other words, when the boundary layer develops and the thickness of the boundary layer increases, an area of a region which allows an easy flow decreases and an behavior observed as if an apparent area of a cross section of the passage decreased is exhibited. Accordingly, when the boundary layer develops and the thickness of the boundary layer increases, the pressure loss of the passage increases.

Because the twin vortices generated by the protrusions 113 in the embodiment 2-K are small in scale and generated in the vicinity of the wall surface, the twin vortices generated by the protrusions 113 suppress the development of the above-mentioned boundary layer, thereby decreasing the resistance against the flow around the wall surface of the passage and drastically reducing the pressure loss in the passage 111.

For example, in a case where a diameter D of the passage 111 is 40 mm and a representative velocity of the flow is 25 m/second at ordinary temperatures and pressures, the experimental result showed a relationship: (a pressure loss due to a portion in which turbulence occurs) < (an effect of suppressing the development of the boundary layer due to the portion in which turbulence occurs) and despite the presence of the large number of the protrusions 113, the dust flocculating duct 110 having a smaller pressure loss than that of a duct having no protrusions was obtained.

In addition, also in a case where a foreign substance or the like is mixed in the fluid circulating through the dust flocculating duct 110, because the height of each of the protrusions 113 is 1/2 of the height of each of the protrusions 83 in the embodiment 2-H, the foreign substance is hardly caught by the protrusions 113, as compared with the protrusions 83 in the embodiment 2-H.

Accordingly, through using the dust flocculating duct 110 of the embodiment 2-K, sufficient flocculation performance is attained owing to the agitation by the large number of the twin vortices and further, a duct frictional resistance can be reduced, thereby obtaining the dust flocculating duct 110 which allows the pressure loss to be drastically reduced. In addition, for example, also in a case the foreign substance or the like is likely to be mixed in the flow, a failure that the foreign substance is caught by the protrusions 113 and causes clogging can be substantially completely prevented, thereby obtaining the dust flocculating duct 110 which realizes extremely high reliability.

Moreover, by forming the turbulence generating parts such that respective sides of which each of the turbulence generating parts is made up are made round so as to each have a radius of one mm, the clogging of the dirt can be drastically reduced, although this is not described in each of the embodiments. Furthermore, by eliminating any acute-angle groove, the dust flocculating duct having excellent maintainability can be configured.

As described above, the present invention relates to the mechanism of flocculating the fine particulates. Since an efficiency of collecting the fine particulates can be enhanced by utilizing this mechanism, the dust flocculating duct according to the present invention is applicable to a vacuum cleaner, an air cleaner, an air conditioner, etc.

(Embodiment 2-2)

Fig. 54 is a diagram illustrating a whole of a vacuum cleaner which comprises a dust flocculating duct according to the present invention, as an embodiment 2-2 according to the present invention. Fig. 55 is an explanatory diagram illustrating a configuration of a main body of the vacuum cleaner according to the present invention, which comprises the dust flocculating duct according to the present invention.

As shown in Fig. 54 and Fig. 55, a suction inlet 501 connects to an extension pipe 502, a connecting pipe 503 having a handle, and a bendable suction hose 504 in order and communicates via a joining section 505 with the vacuum cleaner main body 506. In the vacuum cleaner main body 506, an electric blower 567, a dust collecting unit 561, a dust collecting case 563, a HEPA filter 570, a cord reel (not shown), a control circuit (not shown) for controlling a supply of an electric power to the electric blower 567 and an electrification part in the dust flocculating duct, and the like are contained. Upon driving the electric blower 567, air is sucked from the suction inlet 501 and the air containing the dust passes through the extension pipe 502 which comprises the dust flocculating duct, according to the present invention, serving as a gas duct; the connecting pipe 503; and the suction hose 504 and is transported to the vacuum cleaner main body 506. The dust sucked into the vacuum cleaner main body 506 passes through the dust collecting unit 561, the electric blower 567, and the HEPA filter 570 and is discharged from an exhaust part 571. Among the particulates of the dust which has been sucked from the suction inlet 501 as mentioned above, the particulates having large sizes are accumulated in the dust collecting unit 561. The air from which the dust has been removed and which has been clean passes through an inside of an electric motor 569 to cool the electric blower 567 and is discharged out of the vacuum cleaner main body 506. On side surfaces of the vacuum cleaner main body 506, wheels 507 which support the vacuum cleaner main body 506 and allow the vacuum cleaner main body 506 to be movable on a floor surface 508 are provided in a rotatable manner.

Upon driving the electric blower 567, a fan 568 generates a suction gas flow, the air containing the dust is fed via the suction hose 504 and a main body joining section 505 into the vacuum cleaner main body 506, and the air is blown toward the connecting part 562, the dust collecting filter 564, the connecting part 565, the fan 568, the electric motor main body 569, the HEPA filter 570, and the exhaust outlet 571. At this time, since the air containing fine dust and dust masses are transported while being mixed with the gas flow at midstream of the transportation, the particulates of the dust and the dust masses contact, suck, and adsorb one another, thereby causing the dust masses in the present invention to grow so as to be further large.

Since each of the sizes of the largely grown dust masses become larger than a mesh size of the dust collecting filter 564, the dust masses are collected by the dust collecting filter 564. Since by employing a configuration in which a plurality of electrification parts are provided or which allows the fine dust to contact the electrification part many times, each of the sizes of the collected dust masses becomes larger than the mesh size of the dust collecting filter 564. In such a case, the HEPA filter 570 is not needed.

In a case where the dust masses do not grow so as to have each of the sizes of the dust masses, which is larger than the mesh size of the dust collecting filter 564, the dust masses may pass through the filter 564. In such a case, the dust masses may be collected by using the HEPA filter 570.

As described above, the vacuum cleaner has the electric blower 567, the extension pipe 502 communicating via the suction inlet 501 with the electric blower 567, and the dust collecting unit 561. The vacuum cleaner in which the dust is sucked from the suction inlet 501 by the gas flow generated by the electric blower 567 and the dust passing through the extension pipe 502 is collected in the dust collecting unit 561 comprises the extension pipe 502 including the dust flocculating duct of any of the embodiments according to the present invention, whereby the sucked dust is flocculated in the extension pipe 502 of the vacuum cleaner and the dust can grow to be dust masses (clusters). These dust masses are caused to appropriately grow, thereby increasing a mass (weight) of each of the dust masses and causing the clusters to grow. The mass (weight) of each of the dust masses is increased, whereby, for example, in a cyclone vacuum cleaner, the dust masses can be collected through centrifugal separation. In addition, in a filter-type vacuum cleaner, since each of sizes of the dust masses can be made larger than a mesh size of a filter, the dust can be collected by a filter having a large mesh size. In each case, since a pressure loss in suction gas hardly occurs, a dust suction power (power) of the vacuum cleaner main body is hardly reduced.

(Embodiment 3-1)

Dust is transported by a gas flow through a frictional electrification passage part which is made of a material having a contact potential difference sufficiently larger than a contact potential difference of the dust or through a frictional electrification passage part which is made of a material having a contact potential difference sufficiently smaller than the contact potential of the dust from an upstream side to a downstream side.

Thus, when a wall surface of the frictional electrification passage part is made of the material having the contact potential difference sufficiently larger than the contact potential difference of the dust, the dust in collision and contact with the frictional electrification passage part is deprived of electrons by the frictional electrification passage part having the larger contact potential difference, comes to have a positive electric charge, and therefore, is positively electrified. In addition, when the wall surface of the frictional electrification passage part is made of the material having the contact potential difference sufficiently smaller than the contact potential difference of the dust, the dust in collision and contact with the frictional electrification passage part deprives the frictional electrification passage part having the lower contact potential difference of the electrons, comes to have a negative electric charge, and therefore, is negatively electrified.

In a case where the frictional electrification passage part is provided with protrusions, a surface area of the frictional electrification passage part is increased and the collision of the dust and the frictional electrification passage part is promoted. At the same time, flow turbulence and vortices are generated on the downstream side of the protrusions, the collision of the dust riding on the flow turbulence and the vortices with the wall surface of the frictional electrification passage part is promoted, thereby facilitating the frictional electrification of the dust.

These positively electrified dust and negatively electrified dust, while adsorbing dust which is not electrified, grow to be dust masses (small clusters). Further, the dust masses (small clusters) having electric charges which are opposite to each other mutually collide with and contact one another due to the Coulomb force (attractive force) and grow to be further large dust masses (large clusters).

This is a dust flocculation effect, attained by the above-described configuration. This allows the dust, having grown as the further large dust masses in clusters, to be more efficiently separated or collected by, for example, a centrifugal separator or a filter which is provided further downstream of the passage, than the dust which has not become clusters.

At this time, when the wall surface of the frictional electrification passage part is made of the material having the contact potential difference sufficiently larger than the contact potential difference of the dust, the frictional electrification passage part deprives the dust of the electrons one after another through the collision with the dust, and the negative electric charge is gradually accumulated. When the wall surface of the frictional electrification passage part is made of the material having the contact potential difference sufficiently larger than the contact potential difference of the dust, the frictional electrification passage part is deprived of the electrons by the dust one after another through the collision with the dust, and the positive electric charge is gradually accumulated.

When the electric charge is accumulated in the frictional electrification passage part and an amount of the accumulated electric charge exceeds a certain level, a dielectric breakdown is caused at a certain portion of the frictional electrification part, and a phenomenon that an electric discharge into air occurs and the accumulated electric charge is released occurs.

When the phenomenon of the electric discharge occurs, a portion of a base point on the frictional electrification passage part, at which the electric discharge occurs, is destroyed and lost upon the electric discharge, and a hole is bored therein.

Then, because tips of the protrusions are destroyed and lost upon the electric discharge, heights of the protrusions are gradually impaired.

When the heights of the protrusions are impaired, the above-described dust flocculation effect attained by the protrusions is impaired, and a failure that performance of the dust flocculating duct is gradually deteriorated is incurred.

In the meantime, regarding what portion is more likely to be the base point of the electric discharge, it is known that a portion having a rough surface, namely, a portion where minute pointed extremities protuberate is more likely to be the base point of the electric discharge. Therefore, for example, in a case where the frictional electrification passage part has the protrusions, the phenomenon of the electric discharge occurs from the tips of the protrusions. For example, Japanese Patent Application Laid-Open Publication No. 2004-101411 discloses that when each of the tips of the protrusions is formed so as to have a round portion with a radius less than or equal to 0.1 mm, an electric field is concentrated and the phenomenon of the electric discharge easily occurs.

In addition, it is also well-known that when the phenomenon of the electric discharge occurs, the portion of the base point of the electric discharge is destroyed and lost upon the electric discharge.

Therefore, in order to avoid the occurrence of the electric discharge, pointed extremities of the tips of the protrusions provided in the frictional electrification passage part are removed and round portions are formed. This allows suppression of the electric discharge from the protrusions in the frictional electrification passage part even in a case where the electric charge is accumulated in the frictional electrification passage part, whereby the failure that the performance of the dust flocculating duct is gradually deteriorated can be obviated.

In a case where measures to avoid the accumulation of the electric charge in the frictional electrification passage part (for example, grounding, neutralization of a home electric appliance, etc.) are devised, the above-described measure is not needed. However, in general, such measures lead to a complicated configuration, whereby an increase in a cost may result or a disadvantage in terms of a price may be brought about to a user.

(Embodiment 3-1-1)

Fig. 39 shows a perspective view in which an important part of a dust flocculating duct of an embodiment 3-1-1 is viewed in a perspective manner. Fig. 40 shows a front view illustrating the important part of the dust flocculating duct of the embodiment 3-1-1. Fig. 41 shows a cross-sectional side view illustrating the important part of the dust flocculating duct of the embodiment 3-1-1.

As shown in Fig. 39 through Fig. 41, in the dust flocculating duct 90 of the embodiment3-1-1, a plurality of protrusions 93 are disposed on an inner surface of a wall 92 of a passage 91. Each of the protrusions 93 is of a triangular pyramid shape, and when viewed from the upstream side in the perspective manner, the plurality of protrusions 93 are disposed so as not to completely overlap each other and neighboring protrusions 93 only partially overlap each other. In addition, the protrusions 93 are disposed such that the number of protrusions 93 which are present on a plane perpendicular to a flow direction is as small as possible and the plurality of the protrusions 93 disposed so as to be present on the plane perpendicular to the flow direction are disposed so as to be as distant from one another as possible.

In the dust flocculating duct 90 of the embodiment 3-1-1 according to the present invention, twin vortices are generated by the protrusions 93. When the plurality of protrusions 93 are viewed from an upstream side in a perspective manner, the plurality of protrusions 93 are disposed so as not to completely overlap each other but such that neighboring protrusions 93 only partially overlap each other. Therefore, the flow circulating along the wall 92 of the passage 91 invariably passes the protrusions 93.

The protrusions 93 in the embodiment 3-1-1 have the below-described advantage. Specifically, in the dust flocculating duct 90 of the embodiment 3-1-1, the protrusions 93 are disposed such that the number of protrusions 93 which are present on the plane perpendicular to the flow direction is as small as possible and the plurality of the protrusions 93 disposed so as to be present on the plane perpendicular to the flow direction are disposed so as to be as distant from one another as possible. Therefore, a decrease in an area of the passage at positions where the protrusions 93 are present is small, and a pressure loss in the dust flocculating duct 90 is also small accordingly.

Accordingly, by using the dust flocculating duct 90 of the embodiment 3-1-1, a great effect of reducing the pressure loss can be attained. For example, by using the dust flocculating duct 90 whose length is tripled, the pressure loss can be reduced without deteriorating performance of flocculation caused when the particulates collide with one another. Therefore, for example, in a case where an output and a static pressure rise of a driving source (for example, a fan, a blower, or the like) for generating a flow circulating in the passage 91 are small or where the driving source is susceptible to the pressure loss, performance of a whole system including the dust flocculating duct 90 and the driving source is enhanced.

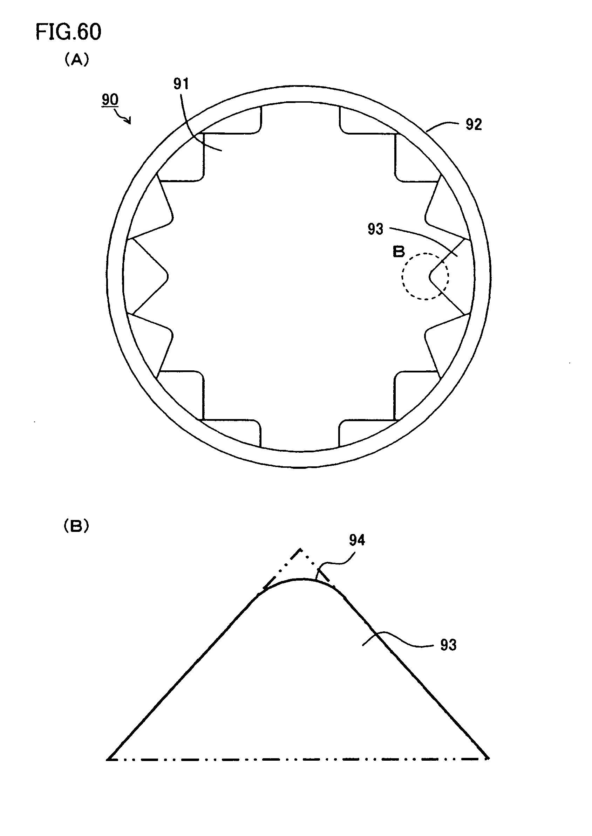

Fig. 60 is a diagram illustrating shapes of the protrusions provided in the frictional electrification passage part as the embodiment 3-1-1 according to the present invention. A portion B shown in Fig. 60 (A) is enlarged and shown in Fig. 60 (B).

In order to examine the dust flocculating duct which comprises the frictional electrification passage part in which the dust is electrified and the electrified dust and the other dust are caused to collide with each other, thereby promoting the formation of dust masses (clusters), in a process in which the dust is transported by a gas flow from an upstream side to a downstream side, a wind with a velocity of v=25m/second was circulated through a dust flocculating duct having a diameter of $\varphi$40mm, which is formed of, for example, one kind of a material (for example, an ABS resin) and the dust was continuously circulated therethrough. At this time, a surface potential of approximately 20 kV was observed on an inner wall of the dust flocculating duct.

As shown in Fig. 60, in a case where the protrusions 93 (for example, a height of 1/8D=5mm) are disposed on the inner surface of the wall 92 of the passage 91 of the dust flocculating duct 90, an electric field is concentrated on tips of the protrusions 93. An intensity of this concentration of the electric field varies depending on a curvature of each of the tips of the protrusions 93.

Fig. 61 is a graph showing a relationship between a curvature radius (mm) of each of the tips of the protrusions and the intensity (V/mm) of the electric field concentrated on the tips of the protrusions in a case where a surface potential of the inner wall of the dust flocculating duct is the same. Vertical and horizontal axes are logarithmic.

In Fig. 61, it can be seen that the electric field tends to be concentrated on the tips of the protrusions in accordance with a decrease in the curvature radius. Here, a value with which a dielectric breakdown of air occurs is 3550 V/mm (this value varies depending on a temperature and a humidity). In Fig. 61, the value is shown by drawing a broken line.

Here, when the intensity of the electric field reaches the value of the dielectric breakdown of the air, a position where the electric field is concentrated becomes a base point and a phenomenon of an electric discharge occurs. When the electric discharge occurs as mentioned above, the tips of the protrusions are lost and heights of the protrusions are impaired, thereby impairing a dust flocculation effect. Therefore, it is required to avoid the occurrence of the phenomenon of the electric discharge. In Fig. 61, it can be perceived that the curvature radius of each of the tips of the protrusions, which does not allow the intensity of the electric field concentrated on the tips of the protrusions to exceed the value 3550V/mm with which the dielectric breakdown of air occurs, is approximately 0.2 mm.

Therefore, the curvature radius of each of the tips of the protrusions should be greater than or equal to 0.2 mm. However, when allowance in consideration of the variation in the value of the dielectric breakdown of the air due to the temperature and the humidity is made, it is preferable to select a further large curvature radius, for example, 1 mm since the intensity of the electric field in a case of the curvature radius of 0.2 mm shown in Fig. 61 can be lowered to approximately 1/5 by selecting the curvature radius of 1 mm.

As described above, the dust flocculating duct 90 comprises the passage 91 through which the gas containing the dust circulates and the frictional electrification passage part in which the dust flowing through the passage 91 is electrified and the electrified dust and the other dust are caused to collide with each other, thereby promoting the formation of the dust masses (clusters). The frictional electrification passage part has the wall 92 forming the frictional electrification passage part and the protrusions 93 having projected top edge portions are disposed on the inner surface of the wall 92. At the top edge portions of the protrusions 93, round portions 94 are formed and a radius of each of the round portions 94 is greater than or equal to 0.2 mm.

By employing the above-described configuration, even in a case where the electric charge is accumulated in the frictional electrification passage part, the concentration of the electric field on the top edge portions of the protrusions 93 of the frictional electrification passage part can be prevented. Thus, since the electric discharge from the top edge portions can be prevented, it can be prevented that the top edge portions are lost. Accordingly, the failure that the heights of the protrusions 93 are gradually impaired, the dust flocculation effect of the protrusions 93 is impaired, and the performance of the dust flocculating duct is gradually deteriorated can be obviated.

In addition, in a case where molded components made of a resin are used as the protrusions 93, in order to easily mold such components, it is only required to set the curvature radius of each of the top edge portions to be greater than or equal to 0.2 mm. Therefore, a cost of manufacturing the dust flocculating duct 90 comprising the frictional electrification passage part can be reduced.

By employing the above-described configuration, the dust flocculating duct 90 which has a simple configuration and is capable of facilitating the flocculation by increasing the number of times when the particulates in the dust collide with one another, of decreasing the number of particulates, and of increasing apparent diameters of the particulates can be provided.

(Embodiment 3-1-2)

An embodiment 3-1-2 according to the present invention is different from the embodiment 3-1-1 in that when a length of the shortest part of a diameter of a cross section perpendicular to a direction in which gas flows through a passage is supposed to be D and a radius of each of round portions formed on edge faces at top edge portions of protrusions is supposed to be R, a condition R $\leqq$ 0.25D is satisfied.

This allows easy collision of the protrusions and dust transported by a gas flow which circulates through a dust flocculating duct.

In a case where R is greater than 0.25D, since the gas flow flows smoothly along round surfaces of the protrusions, the collision of the dust transported by the gas flow and the protrusions hardly occurs, thereby reducing a dust flocculation effect of the dust flocculating duct.

(Embodiment 3-1-3)

An embodiment 3-1-3 according to the present invention is different from the embodiment 3-1-1 in that when a length of the shortest part of a diameter of a cross section perpendicular to a direction in which gas flows through a passage is supposed to be D and a radius of each of round portions formed on edge faces at top edge portions of protrusions is supposed to be R, it is preferable that a condition $R \leqq 0.05D$ is satisfied.

Since this allows efficient generation of vortices on downstream sides of protrusions, collision of dust transported by a gas flow which circulates through a dust flocculating duct and a wall surface of a frictional electrification passage part can be further promoted, thereby allowing an increase in an electric charge amount of the dust and further enhancement of a dust flocculation effect attained by the dust flocculating duct.

In order to examine the dust flocculating duct which comprises the frictional electrification passage part in which the dust is electrified and the electrified dust and the other dust are caused to collide with each other, thereby promoting the formation of dust masses (clusters), in a process in which the dust is transported by a gas flow from an upstream side to an downstream side, for example, as shown in Fig. 60, protrusions each having a height 5 mm (1/8D) are provided on an inner wall of the dust flocculating duct having a diameter of $\varphi$40mm and a wind with a velocity of v=25m/second is circulated therethrough. At this time, the flow behind the protrusions is agitated by the protrusions. An intensity of this agitation varies depending on a curvature of each of the tips of the protrusions.

Fig. 62 is a graph showing a relationship between a dimensionless curvature radius (r/D) obtained by rendering, as being dimensionless, a curvature radius r (mm) at each of the tips of the protrusions by a diameter D (mm) of the pipe in a case where a velocity of a wind circulating through the dust flocculating duct is the same; and a dimensionless flocculation effect (-fold) obtained by dividing a flocculation effect attained by a dust flocculating duct comprising the protrusions, each of which has the dimensionless curvature radius of r/D, on the inner wall of the dust flocculating duct, by a flocculation effect attained by a dust flocculating duct having no protrusions on the inner wall of the dust flocculating duct. A vertical axis is logarithmic.

In Fig. 62, it can be perceived that a flocculation effect comes to be impaired in accordance with an increase in a curvature radius of each of the tips of the protrusions. In addition, it can be perceived that as a trend, there are three regions broadly classified.

First, in a region where r/D is greater than or equal to 0.3 in the graph, the curvature radius of each of the tips of the protrusions is excessively large with respect to a height of each of the protrusions, the flow runs along the tips of the protrusions, and turbulence is hardly generated behind the protrusions. Therefore, a probability with which pieces of dust collide with one another is small and the attained dust flocculation effect is also small.

Next, in a region where r/D is around 0.25 in the graph, the dust flocculation effect sharply increases. When the curvature radius is around 0.25, the flow along the wall surface is exfoliated at the tips of the protrusions and the turbulence is generated behind the protrusions. Therefore,, the probability with which the pieces of dust collide with one another dramatically increases and the attained dust flocculation effect also dramatically increases.

In a region where r/D is 0.05 through 0.25 in the graph, the exfoliation occurring at the tips of the protrusions gradually increases in accordance with a decrease in r/D. Therefore, the probability with which the pieces of dust collide with one another gradually increases and the attained dust flocculation effect also gradually increases.

Further, in a region where r/D is around 0.05 in the graph, the dust flocculation effect further sharply increases. When the curvature radius is around 0.05, the flow along the wall surface is sheared into right and left at the tips of the protrusions and intense vortical flows are generated behind the protrusions. Therefore, the probability with which the pieces of dust collide with one another further dramatically increases and the attained dust flocculation effect also further dramatically increases.

In a region where r/D is less than or equal to 0.05 in the graph, regardless of whether r/D is large or small, the intense vortical flows are invariably generated behind the protrusions. Therefore, a high probability with which the pieces of dust collide with one another can be obtained and a high dust flocculation effect can be attained.

(Embodiment 3-1-4)

An embodiment 3-1-4 according to the present invention is different from the embodiment 3-1-1 in that a frictional electrification passage part in a dust flocculating duct is formed of a material which is capable of easily electrifying dust contained in gas circulating through a passage.

This allows the dust to be efficiently electrified, whereby pieces of the dust can be flocculated so as to be clusters and dust masses can be further efficiently formed. Accordingly, a dust flocculation effect attained by the dust flocculating duct can be further enhanced.

(Embodiment 3-1-5)

An embodiment 3-1-5 according to the present invention is different from the embodiment 3-1-1 in that it is preferable that a frictional electrification passage part in a dust flocculating duct includes a first frictional electrification part having a contact potential difference higher than a contact potential difference of predetermined dust circulating through a passage and a second frictional electrification part having a contact potential difference lower than the contact potential difference of the predetermined dust circulating through the passage and the first frictional electrification part and the second frictional electrification part are disposed so as to face each other.

This allows the dust to be efficiently electrified, also the positively electrified dust and negatively electrified dust to be further flocculated due to the Coulomb force, and further large dust masses to be efficiently formed. Accordingly, a dust flocculation effect attained by the dust flocculating duct can be further increasingly enhanced.

The above-described embodiment 3-1-1 through the embodiment 3-1-5 are applied to an embodiment 3-1-A through an embodiment 3-1-J.

(Embodiment 3-1-A)

Fig. 29 shows a perspective view in which an important part of a dust flocculating duct of an embodiment 3-1-A according to the present invention is viewed in a perspective manner. Fig. 30 shows a front view illustrating the important part of the dust flocculating duct of the embodiment 3-1-A.

As shown in Fig. 29 and Fig. 30, in the dust flocculating duct 70 of the embodiment 3-1-A according to the present invention, a plurality of protrusions 73a and a plurality of protrusions 73b are disposed on an inner surface of a wall 72 of a passage 71. Each of the protrusions 73a and protrusions 73b has a triangular bottom.

Fig. 31 is a diagram illustrating the protrusion in the embodiment 3-1-A. Fig. 31 (A) shows a bottom view of the protrusion, Fig. 31 (B) shows a side view of the protrusion, and Fig. 31 (C) shows a front view of the protrusion. It is supposed that an upstream side of the passage is a front side.

As shown in Fig. 31, the bottom of the protrusion 73a is of a right triangle EFG whose respective sides has lengths with EF : FG : GE = $1 : 2 : \sqrt{3}$. The bottom EFG of the protrusion 73a is jointed to an inner surface of a wall 72 of a passage 71 such that among respective apices of the right triangle, the apex G having an angle of 30 degrees is disposed on an upstream side of a flow and the side EF spanning between the apex having an angle of 60 degrees and the apex having an angle of 90 degrees is disposed so as to be perpendicular to a flow direction. The remaining one apex I of the protrusion 73a is formed so as to project into the passage 71 from the wall 72.

The protrusion 73a is of a shape in which when a representative length of a passage width on a plane perpendicular to the flow direction of the passage 71 (a length of a side in a case of a square passage and a diameter in a case of a circular passage) is supposed to be D, a length GE in the flow direction is (3/8)D; an angle formed by the flow direction and a hypotenuse is 30 degrees in a clockwise manner when the protrusion 73a is viewed from the upstream side to a downstream side; and a height h of the protrusion 73a is (1/8)D. In a shape of the protrusion 73b which neighbors the protrusion 73a, an angle formed by the flow direction and a hypotenuse is 30 degrees in a counterclockwise manner when the protrusion 73b is viewed from the upstream side toward the downstream side. On the wall 72 of the passage 71, four protrusions 73a are disposed in an evenly-spaced manner; four protrusions 73b are disposed respectively between the two protrusions 73a; and the protrusions 73a and the protrusions 73b are disposed so as to each face toward opposite directions.

Fig. 32 is a schematic diagram illustrating a gas flow around the protrusion of the embodiment 3-1-A.

As shown in Fig. 32, a flow velocity V9 of a flow along a hypotenuse GI of the protrusion 73a is slightly lower than a flow velocity P of a fluid circulating through the passage 71 because the flow is stemmed by collision of the flow against the protrusion 73a. On the other hand, a flow velocity V10 of a flow along the side GE, in the flow direction, of the protrusion 73a is the substantially same as the flow velocity P of the fluid circulating through the inside the passage 71. Therefore, when a relative velocity in an area surrounding the protrusion 73a with reference to the flow velocity of the fluid circulating through the passage 71 is considered, a circulation which circulates around the protrusion 73a from the upstream side toward the downstream side of the passage 71 on the side GE in the flow direction and from the downstream side to the upstream side of the passage 71 on a hypotenuse FG occurs. Due to this circulation, a horseshoe vortex V11 is generated from the apex of the protrusion 73a which is triangular pyramid-shaped and the horseshoe vortex V11 moves downstream along a downstream portion of the wall 72 of the passage 71. This horseshoe vortex 11 imparts a swirl to the flow circulating downstream of the protrusion 73a. Although also on the protrusion 73b, a horseshoe vortex is formed as similarly to on the protrusion 73a, a direction in which the horseshoe vortex swirls on the protrusion 73b is opposite to the direction in which the horseshoe vortex on the protrusion 73a swirls.

In the embodiment 3-1-A, since each of the heights h of the protrusion 73a and the protrusion 73b is (1/8)D, a diameter of the horseshoe vortex V11 immediately after the occurrence of the horseshoe vortex is (1/8)D or slightly larger than (1/8)D though depending on the flow velocity of the fluid circulating through the passage 71. As mentioned above, in the case where the sizes of particulates to be flocculated are mainly in micrometer order, the phenomenon that particularly in the area from the wall 72 of the passage 71 having the diameter D to a position which is (1/8)D distant from the wall 72, the density of distribution of the particulates to be flocculated is high is observed. Therefore, the protrusions 73a and the protrusions 73b in the embodiment 3-1-A actively agitate the gas passing the area from the wall 72 of the passage 71 to the position which is (1/8)D distant from the wall 72, where the density of distribution of the particulates to be flocculated is high, by generating the horseshoe vortices.

As described above, in the dust flocculating duct 70, because each of the heights of the protrusion 73a and the protrusion 73b from the wall 72 is one eighth of a representative length of a cross section which is perpendicular to a direction of the flow of the gas passing through the passage 71, a foreign substance is hardly caught by the protrusion 73a and the protrusion 73b.

Fig. 33 is a schematic diagram illustrating a view of the vortices generated by the protrusions in the embodiment 3-1-A according to the present invention. Fig. 33 (A) shows a view in which the passage is viewed from a front side and Fig. 33 (B) shows a view in which the passage is viewed from a lateral side.

As shown in Fig. 33, in the vicinity of the wall 72 of the passage 71, eight horseshoe vortices V11 are generated and pairs of neighboring vortices of the eight horseshoe vortices V11 each swirl in respectively opposite directions. Since the neighboring vortices each swirl in the opposite directions, when flow line vectors on a plane perpendicular to the direction of the flow are considered, one vector of a flow in a plane, on which the vortices neighbor each other, swirls from a central portion of the passage in a direction toward the wall surface and another vector thereof also swirls in the same direction; and the one vector thereof swirls from the wall surface of the passage in a direction toward the central portion of the passage and the another vector thereof also swirls in the same direction. Therefore, the vectors of the flow can smoothly converge, thereby decreasing a frictional resistance caused by a viscosity of the flow. Thus, in the dust flocculating duct 70 in the embodiment 3-1-A, a pressure loss due to the vortices is reduced.

In a case where a rod-like foreign substance having a length of D and a thickness of 0.05D is mixed in a fluid circulating through the passage 71, for example, when each of the protrusions of the dust flocculating duct is of a shape having a curved portion, one end of the rod-like foreign substance is caught by one of the protrusions and another end of the rod-like foreign substance is caught by another of the protrusions, whereby a failure that the dust flocculating duct is clogged with the foreign substance is likely to occur. On the other hand, in the dust flocculating duct 70 of the embodiment 3-1-A, the protrusion 73a has no depression and on each of the protrusion 73a and the protrusion 73b, an oblique surface is formed, whereby the above-mentioned rod-like foreign substance or the like is hardly caught by the protrusions.

As described above, in the dust flocculating duct 70, an area of a cross section of each of the protrusions 73a and the protrusions 73b in a direction perpendicular to the direction of the gas flow is small on the upstream side and large on the downstream side. This causes a foreign substance to be hardly caught by the protrusions 73a and the protrusions 73b.

Accordingly, by using the dust flocculating duct 70 of the embodiment 3-1-A, for example, in a case where the rod-like foreign substance or the like is likely to be mixed in the flow, since the failure that the rod-like foreign substance is caught by the turbulence generating parts can be prevented, a highly reliable dust flocculating duct can be obtained.

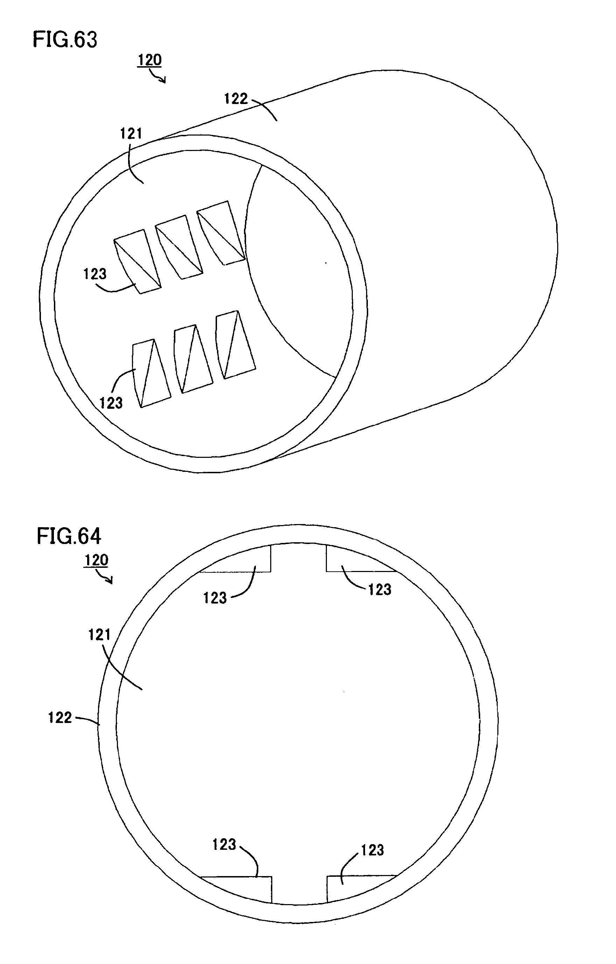

The shape of each of the protrusions in the dust flocculating duct 70 of the embodiment 3-1-A may be of a shape shown in Fig. 63 through Fig. 65.

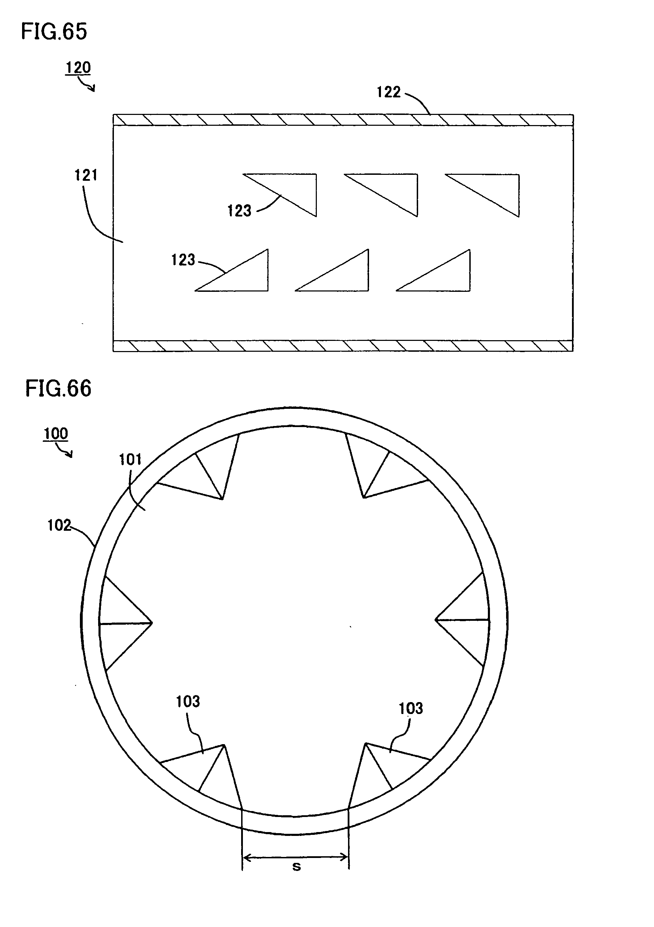

Fig. 63 shows a perspective view in which an important part of the dust flocculating duct 70 of the embodiment 3-1-A according to the present invention, in which protrusions each having another shape are disposed, is viewed in a perspective manner. Fig. 64 shows a front view illustrating the important part of the dust flocculating duct of the embodiment 3-1-A according to the present invention, in which the protrusions each having the another shape are disposed. Fig. 65 shows a cross-sectional side view illustrating the dust flocculating duct of the embodiment 3-1-A according to the present invention, in which the protrusions each having the another shape are disposed.

As shown in Fig. 63 through Fig. 65, in a passage 121 of the dust flocculating duct 120, protrusions 123 are disposed on an inner surface of a wall 122 of the passage 121.

(Embodiment 3-1-B)

Fig. 34 shows a perspective view in which an important part of a dust flocculating duct of an embodiment 3-1-B according to the present invention is viewed in a perspective manner. Fig. 35 shows a front view illustrating the important part of the dust flocculating duct of the embodiment 3-1-B. Fig. 36 shows a cross-sectional side view of the dust flocculating duct of the embodiment 3-1-B.

As shown in Fig. 34 through Fig. 36, in the embodiment 3-1-B, a plurality of protrusions 83 are disposed, instead of the protrusions 73a and the protrusions 73b in the embodiment 3-1-A. Each of the protrusions 83 is of a triangular pyramid shape.

Fig. 37 shows a top view (A) and a lateral view (B) of a shape of each of the protrusions in the embodiment 3-1-B.

As shown in Fig. 37, each of the protrusions 83 is of a triangular pyramid-shape whose bottom JKL is of an isosceles triangle with a base KL : a height JM = 1 : 2. The bottom JKL is jointed to a wall surface of the passage such that the smallest angle J of the isosceles triangle of the bottom is disposed on an upstream side of a flow and the base KL is disposed so as to be perpendicular to a flow direction. When an apex of the triangular pyramid-shaped protrusion is supposed to be N, the protrusion is formed such that a perpendicular spanning from the apex N to the isosceles triangle of the bottom passes M, that is, such that NM is perpendicular to JM and KL, respectively. The protrusion is of a shape in which when a representative length of a passage width on a plane perpendicular to a flow direction of a passage 81 (a length of a side in a case of a square passage and a diameter in a case of a circular passage) is supposed to be D, a length JM in the flow direction is $(1/2)D$; and a triangular pyramid height NM is $(1/8)D$.

In addition, on an inner surface of a wall 82 of a passage 81, a large number of protrusions 83 are disposed in a regular manner. In the dust flocculating duct 80, the plurality of protrusions 83 are disposed at intervals of $(3/2)JM$ in the flow direction and at intervals of $(3/2)KL$ in a direction perpendicular to the flow direction. The plurality of protrusions 83 are disposed such that with respect to one of the protrusions 83, another of the protrusions 83 is disposed so as to be $(3/4)JM$ displaced from the one of the protrusions 83 in the flow direction and further another of the protrusions 83 is disposed so as to be $(3/4)KL$ displaced from the one of the protrusions 83 in the direction perpendicular to the flow direction; and the other protrusions 83 are disposed in the same manner. In other words, the plurality of protrusions 83 are disposed in a manner of the so-called staggered arrangement and in a multistage manner such that when it is supposed that one pitch in the flow direction is $(3/2)JM$ and one pitch in the direction perpendicular to the flow direction is $(3/2)KL$, the protrusions 83 are disposed so as to be 0.5 pitch displaced, each in the flow direction and the direction perpendicular to the flow direction, from one another.

When these protrusions 83 are viewed from an upstream side in a perspective manner, the plurality of protrusions 83 are disposed so as not to completely overlap each other but such that neighboring protrusions 83 only partially overlap each other.

In the dust flocculating duct 80 of the embodiment 3-1-B, a flow circulating in the vicinity of the inner surface of the wall 82 of the passage 81 is lifted up to a side of an apex N with respect to the bottom of the triangular pyramid due to slopes of surfaces JNK and JNL of the protrusion 83 which is triangular pyramid-shaped and is wound up to a side of a central portion of the passage, generating weak twin vortices on a downstream side of the apex N. The flow circulating through the dust flocculating duct 80 of the embodiment 3-1-B is sequentially agitated such that the flow is agitated by weak twin vortices, generated by the protrusion 83 which the flow first meets, and circulates downstream; the flow is agitated again by weak twin vortices, generated by the protrusion 83 which the flow next meets, and circulates further downstream; and the flow is agitated further again by weak twin vortices, generated by the protrusion 83 which the flow further next meets. Such agitation is repeated at the plurality of protrusions 83. As mentioned above, in the case where the sizes of particulates to be flocculated are mainly in micrometer order, a phenomenon that particularly in an area from the wall 82 of the passage 81 having the diameter D to a position which is $(1/8)D$ distant from the wall 82, a density of distribution of the particulates to be flocculated is high is observed. Therefore, the plurality of protrusions 83 disposed in the multistage manner in the embodiment 3-1-B actively agitate the area from the wall 82 of the passage 81 to the position which is $(1/8)D$ distant from the wall 82, where the density of distribution of the particulates to be flocculated is high, by using the plurality of twin vortices.

As described above, in the dust flocculating duct 80, because each of the heights of the protrusions 83 from the wall 82 is less than or equal to one eighth of a representative length of a cross section which is perpendicular to the direction of the flow of the gas passing through the passage 81, a foreign substance is hardly caught by the protrusions 83.

In addition, when the plurality of protrusions 83 are viewed from the upstream side in the perspective manner, the plurality of protrusions 83 are disposed so as not to completely overlap each other but such that the neighboring protrusions 83 only partially overlap each other. Therefore, the flow circulating along the wall 82 of the passage 81 invariably meets the protrusions 83. Thereafter, the flow circulating along the wall 82 of the passage 81 passes through the dust flocculating duct 80 while circulating downstream and accordingly meeting the protrusions 83 repeatedly.

As described above, in the dust flocculating duct 80, the plurality of protrusions 83 are disposed along the direction of the gas flow in the passage 81 so as to partially overlap each other when viewed from the upstream side toward the downstream side of the passage 81 in the perspective manner. This allows the gas flowing through the passage 81 to easily pass around the protrusions 83, thereby enabling efficient generation of the vortices.

Accordingly, in the dust flocculating duct 80 of the embodiment 3-1-B, the gas flow circulating in the area from the wall 82 of the passage 81 to the position which is $(1/8)D$ distant from the wall 82 can be most efficiently agitated and the number of the generated twin vortices can be increased.

As described above, in the dust flocculating duct 80, the plurality of protrusions 83 are disposed along the direction of the gas flow in the passage 81 so as to partially overlap each other when viewed from the upstream side toward the downstream side of the passage 81 in the perspective manner. This allows the gas flowing through the passage 81 to easily pass around the protrusions 83, thereby enabling efficient generation of the vortices.

In addition, in a case where a foreign substance or the like (for example, a cloth-like or mesh-like material such as a handkerchief and pantyhose), for example, which is of a soft cloth-like material and has a size substantially equal to the diameter of the passage 81 is mixed in a fluid circulating through the dust flocculating duct 80, for example, when each of the protrusions in the dust flocculating duct is of a shape having a curved portion or a rectangular portion, the cloth-like foreign substance is easily caught by the vortex generating parts, whereby a failure that the dust flocculating duct is clogged with the foreign substance is likely to occur. In the embodiment 3-1-B, since the protrusions 83 are formed as the smooth triangular pyramid-shaped protrusions on the upstream side of the flow, the above-mentioned cloth-like foreign substance or the like is hardly caught by the protrusions 83.

Accordingly, by using the dust flocculating duct 80 of the embodiment 3-1-B, sufficient flocculation performance can be attained through the agitation by the large number of twin vortices. Moreover, for example, in a case where the cloth-like foreign substance or the like is likely to be mixed in the flow, since the failure that the cloth-like foreign substance is caught by the turbulence generating parts can be prevented, a highly reliable dust flocculating duct 80 can be obtained as compared with the dust flocculating ducts of the embodiment 3-1 through the embodiment 3-1-A.

(Embodiment 3-1-C)

Fig. 42 shows a perspective view in which an important part of a dust flocculating duct of an embodiment 3-1-C is viewed in a perspective manner. Fig. 43 shows a front view illustrating an important part of a dust flocculating duct of the embodiment 3-1-C. Fig. 44 shows a cross-sectional side view of the dust flocculating duct of the embodiment 3-1-C.

As shown in Fig. 42 through Fig. 44, in the dust flocculating duct 100 of the embodiment 3-1-C, a plurality of protrusions 103 are provided on an inner surface of a wall 102 of a passage 101. Each of the protrusions 103 is formed so as to be of the same triangular pyramid shape as that of each of the protrusions 83 in the embodiment 3-1-B but an arrangement or a disposition thereof is different from that of the embodiment 3-1-B. In other words, when viewed from an upstream side, the plurality of protrusions 103 are disposed so as not to overlap each other and the neighboring protrusions 103 are disposed in an evenly-spaced manner. In addition, a configuration of the plurality of protrusions 103 may be provided such that the plurality of protrusions 103 are not disposed on a plane in a direction perpendicular to a flow direction. The other parts are the same as those of the embodiment 3-1-B.

In the dust flocculating duct 100 of the embodiment 3-1-C, the substantially same twin vortices as those in the embodiment 3-1-B are generated by the protrusions 103. However, because the number of the protrusions 103 is small, as compared with that of the protrusions 83 in the embodiment 3-1-B, and the plurality of protrusions 103 are disposed so as not to overlap each other when viewed from the upstream side, many parts of a flow circulating along the wall 102 of the passage 101 each meet one of the protrusions 103 once and a part, which circulates between one of the protrusions 103 and another of the protrusions 103, of the many parts of the flow never meets any one of the protrusions 103. Therefore, in the dust flocculating duct 100 of the embodiment 3-1-C, agitation which can be imparted to the flow is drastically reduced, as compared with the dust flocculating duct 80 of the embodiment 3-1-B.

However, the dust flocculating duct 100 of the embodiment 3-1-C has an advantage that a method of molding the dust flocculating duct 100 is extremely easy. In other words, when viewed from the upstream side, the plurality of protrusions 103 are disposed so as not to overlap each other and the neighboring protrusions 103 are disposed in an evenly-spaced manner. Therefore, for example, in a case where the dust flocculating duct 100 is formed through resin-molding, a molding die is configured such that the upstream side of the dust flocculating duct 100 is set on a movable side of the molding die and a downstream side of the dust flocculating duct 100 is set on a fixed side of the molding die, thereby allowing the dust flocculating duct 100 to be integrally molded without requiring a complicated configuration of the molding die.

In addition, for example, in a case where a foreign substance (for example, something like a milk bottle cap) which is of a plate-like shape and has an area approximate to an area of a cross section of the passage 101 or the like is mixed in a fluid circulating through the dust flocculating duct 100, for example, since a plurality of turbulence generating parts are disposed so as to be present in the plane in the direction perpendicular to the flow direction, an edge of the plate-like shaped foreign substance having the area approximate to the area of the cross section of the passage is highly likely to be caught concurrently by the plurality of protrusions and thereby, a failure that the dust flocculating duct is clogged with the foreign substance is likely to occur. However, in the embodiment 3-1-C, since the configuration of the plurality of protrusions 103 is provided such that the plurality of protrusions 103 are not disposed so as to be present in the plane in the direction perpendicular to the flow direction, the plate-like shaped foreign substance, having the area approximate to the area of the cross section of the passage 101, or the like is hardly caught by the plurality of protrusions.

Accordingly, not only moldability of the dust flocculating duct 100 of the embodiment 3-1-C is excellent but also, for example, in the case where the plate-like shaped foreign substance, having the area approximate to the area of the cross section of the passage, or the like is likely to be mixed in the flow, the failure that the foreign substance is caught by the turbulence generating parts and thereby, the dust flocculating duct is clogged with the foreign substance can be prevented. As described above, the dust flocculating duct having both the extremely high moldability and extremely high reliability can be obtained.

Fig. 45 through Fig. 49 are schematic diagrams illustrating the other arrangements of the protrusions in the embodiment 3-1-C. In each of Fig. 45 through Fig. 49, a diagram (A) with the protrusions viewed in a direction perpendicular to a direction of a passage and a schematic diagram (B) with the protrusions viewed from the upstream side of the flow are shown.

As shown in Fig. 45, a plurality of protrusions 103 are disposed on an inner circumferential surface in the direction perpendicular to the flow. In a case where the protrusions are disposed so as to be close to one another or in a cylindrical-shaped duct, when the plurality of protrusions 103 are disposed in a plane in the direction perpendicular to the flow, preferably each with approximately 90 degrees of an interior angle on the cross section of the passage, both extremely high moldability and extremely high reliability can be concurrently attained.

As shown in Fig. 46, a configuration of the protrusions 103 is provided such that neighboring protrusions 103 are slightly displaced from each other to avoid mutual overlapping of the neighboring protrusions 103, thereby preventing the duct from being clogged with the foreign substance due to the protrusions. As a configuration which allows the same effect as mentioned above to be attained, as shown in Fig. 47, a configuration is provided such that the protrusion are divided into several groups and the groups are mutually displaced from one another in the direction of the flow. As shown in Fig. 48 and Fig. 49, a sawtooth-like arrangement can be shown in an illustrative manner. By employing any of these arrangements of the protrusions 103, extremely high moldability can be attained.

Fig. 50 is a diagram illustrating an arrangement of neighboring protrusions in the dust flocculating duct of the embodiment 3-1-C.

As shown in Fig. 50, when the protrusions 103 are disposed so as not to overlap each other in a projection plane which is viewed from a direction parallel to the direction of the flow and a distance between the neighboring protrusions 103 is supposed to be W, W is expressed by the following equation.

$$W = 2\alpha + \gamma\tan\beta \ (\text{note: } \alpha, \beta, \text{ and } \gamma \text{ are any positive integers.})$$

With respect to the protrusions 103, it is supposed that a and $\beta$ are greater than or equal to 3 mm, respectively, and $\gamma$ (mm) is any number.

When the dust flocculating duct 100 is produced by using a molding die which is separated in a direction S parallel to the gas flow, the passage 101 and the protrusions 103 can be simultaneously molded. This allows a molding cost to be drastically reduced. Regarding the distance between the protrusions 103, by ensuring a lower limit of W (mm), the protrusions can be disposed so as not to overlap each other in the projection plane perpendicular to the gas flow and a strength in portions of the molding die, which come between the protrusions, can be ensured.

(Embodiment 3-1-D)

Fig. 51 shows a perspective view in which an important part of a dust flocculating duct of an embodiment 3-1-D is viewed in a perspective manner. Fig. 52 shows a front view illustrating an important part of the dust flocculating duct of the embodiment 3-1-D. Fig. 53 shows a cross-sectional side view of the dust flocculating duct of the embodiment 3-1-D.

As shown in Fig. 51 through Fig. 53, in the embodiment 3-1-D according to the present invention, a plurality of protrusions 113 are provided on a wall 112 of a passage 111, instead of the protrusions 83 in the embodiment 3-1-B. Each of the protrusions 113 is of a triangular pyramid shape (a length, in a flow direction, of JM=(1/4)D; and a height of a triangular pyramid of NM=(1/16)D) which is a similar figure of each of the protrusions in the embodiment 3-1-B and has a size of 1/2 of a size of each of the protrusions 83 in the embodiment 3-1-B. Also in an arrangement thereof, the protrusions 113 are disposed in a 1/2-similar manner. The number of the triangular pyramid shaped protrusions 113 is set to be approximately four times the number of those in the embodiment 3-1-B. The other parts are the same as those in the embodiment 3-1-B.

In the dust flocculating duct 110 of the embodiment 3-1-D, twin vortices, each of which has a size of 1/2 of a size of each of the vortices generated by the protrusions 83 in the embodiment 3-1-B and has a shape substantially similar to each of the vortices generated by the protrusions 83 in the embodiment 3-1-B, are generated by the protrusions 113. Intensities of the twin vortices generated by one of the protrusions 113 are reduced as compared with those of the twin vortices generated by one of the protrusions 83 in the embodiment 3-1-B. However, since a large number of the protrusions 113 are provided, agitation substantially similar to the agitation imparted in the embodiment 3-1-B can be imparted to a flow.

As described above, in a case where sizes of particulates to be flocculated are mainly in micrometer order, a phenomenon that particularly in an area from the wall surface of the passage 111 having a diameter D to a position which is (1/8)D distant from the wall surface, a density of distribution of the particulates to be flocculated is high is observed. However, in the embodiment 3-1-D, since the plurality of protrusions 113 are disposed in a multistage manner so as to each have the height (1/16)D, in the area from the wall 112 of the passage 111 having the diameter D to the position (1/8)D, where the density of distribution of the particulates to be flocculated is particularly high, there is a limitation that only a half of such an area can be actively agitated.

However, the protrusions 113 in the embodiment 3-1-D have the following advantage: since each of the protrusions 113 has the height of (1/16)D which is 1/2 of the height of each of the protrusions 83 in the embodiment 3-1-B, a reduction of a passage area due to the protrusions 113 disposed so as to be present in the same plane in the direction perpendicular to the flow is 1/4 of that in the embodiment 3-1-B, thereby markedly reducing also a pressure loss in the dust flocculating duct 110, as compared with that in the dust flocculating duct 80 in the embodiment 3-1-B.

Furthermore, in the embodiment 3-1-D, owing to the height of (1/16)D which each of the protrusions 113 has, the twin vortices generated by the protrusions 113 exert an influence on a velocity boundary layer which develops on the wall 112 of the passage 111 of the dust flocculating duct 110, thereby attaining an effect that a thickness of the velocity boundary layer is decreased.

In general, in the vicinity of the wall surface in the passage, due to a viscosity of a fluid circulating through the passage, the velocity boundary layer develops. A flow velocity in the boundary layer is low as compared with that in a middle portion of the passage and a resistance against a flow in the boundary layer is high. In other words, when the boundary layer develops and the thickness of the boundary layer increases, an area of a region which allows an easy flow decreases and an behavior observed as if an apparent area of a cross section of the passage decreased is exhibited. Accordingly, when the boundary layer develops and the thickness of the boundary layer increases, the pressure loss of the passage increases.

Because the twin vortices generated by the protrusions 113 in the embodiment 3-1-D are small in scale and generated in the vicinity of the wall surface, the twin vortices generated by the protrusions 113 suppress the development of the above-mentioned boundary layer, thereby decreasing the resistance against the flow around the wall surface of the passage and drastically reducing the pressure loss in the passage 111.

For example, in a case where a diameter D of the passage 111 is 40 mm and a representative velocity of the flow is 25 m/second at ordinary temperatures and pressures, the experimental result showed a relationship: (a pressure loss due to a portion in which turbulence occurs) < (an effect of suppressing the development of the boundary layer due to the portion in which turbulence occurs) and despite the presence of the large number of the protrusions 113, the dust flocculating duct 110 having a smaller pressure loss than that of a duct having no protrusions was obtained.

In addition, also in a case where a foreign substance or the like is mixed in the fluid circulating through the dust flocculating duct 110, because the height of each of the protrusions 113 is 1/2 of the height of each of the protrusions 83 in the embodiment 3-1-B, the foreign substance is hardly caught by the protrusions 113, as compared with the protrusions 83 in the embodiment 3-1-B.

Accordingly, through using the dust flocculating duct 110 of the embodiment 3-1-D, sufficient flocculation performance is attained owing to the agitation by the large number of the twin vortices and further, a duct frictional resistance can be reduced, thereby obtaining the dust flocculating duct 110 which allows the pressure loss to be drastically reduced. In addition, for example, also in a case the foreign substance or the like is likely to be mixed in the flow, a failure that the foreign substance is caught by the protrusions 113 and causes clogging can be substantially completely prevented, thereby obtaining the dust flocculating duct 110 which realizes extremely high reliability.

(Embodiment 3-1-E)

Fig. 15 shows a perspective view illustrating an important part of a dust flocculating duct of an embodiment 3-1-E according to the present invention. Fig. 16 shows a front view illustrating the important part of the dust flocculating duct of the embodiment 3-1-E. Fig. 17 shows a cross-sectional side view illustrating the dust flocculating duct of the embodiment 3-1-E.

As shown in Fig. 15 through Fig. 17, the dust flocculating duct 40 includes: a passage 41; a wall 42; and a plurality of protrusions 43 as vortex generating parts. The passage 41 is formed by a cylindrical-shaped wall 42. The protrusions 43 are wing-shaped. The protrusion 43 is of a shape in which when a representative length of a passage width on a plane perpendicular to the flow direction of the passage 41 (a length of a side in a case of a square passage and a diameter in a case of a circular passage) is supposed to be D, a chord length C is (3/8)D; a stagger angle (an angle formed between a wing chord and the flow direction) is 22.5 degrees which is formed in a counterclockwise manner when the protrusion 43 is viewed from an upstream side to a downstream side; a maximum warping position is located 0.65C from an anterior edge; a portion thereof on the downstream side is convexed; and a height h is (1/8)D. The protrusions 43 are disposed in a grouping manner. In one group, six protrusions 43 are disposed in an evenly spaced manner so as to be present in the same plane perpendicular to the flow direction, that is, the six protrusions 43 are disposed so as to be evenly spaced, each with 60 degrees of an interior angle on a cross section of the dust flocculating duct 40, on the inner surface of the wall 42 of the cylindrical pipe shaped passage 41.

Fig. 18 is a schematic diagram illustrating a gas flow around a protrusion in the dust flocculating duct of the embodiment 3-1-E.

As shown in Fig. 18 (A), a flow velocity V1 of a flow along a depression side surface of the wing-shaped protrusion 43 is slightly lower than a flow velocity of a fluid circulating through the passage 41 because the flow is stemmed by collision of the flow against the protrusion 43. Conversely, a flow velocity V2 of a flow along a projection side surface of the protrusion 43 is slightly higher than the flow velocity of the fluid passing through the inside of the passage. Therefore, as shown in Fig. 18 (B), when a relative velocity in an area surrounding the protrusion 43 with reference to the flow velocity of the fluid circulating through the passage 41 is considered, a circulation V3 which circulates around the protrusion 43 from an upstream side to a downstream side of the passage 41 on a projection side surface of the protrusion 43 and from the downstream side to the upstream side of the passage 41 on a depression side surface of the protrusion 43 occurs.

Fig. 19 is a schematic diagram illustrating vortices generated around the protrusion.

As shown in Fig. 19, due to the circulation V3 shown in Fig. 18 (B) around the protrusion 43, an intense horseshoe vortex V4 occurs from a wing tip of the protrusions 43 having the wing shape. The horseshoe vortex V4 moves downstream along the wall 42 of the passage 41 on the downstream side of the protrusions 43. This horseshoe vortex V4 imparts an intense swirl to the flow circulating downstream of the protrusion 43.

In the dust flocculating duct 40 of the embodiment 3-1-E, since a wing height h of the protrusion 43 is (1/8)D, a diameter of the horseshoe vortex V4 immediately after the occurrence of the horseshoe vortex V4 is (1/8)D or slightly larger than (1/8)D though depending on the flow velocity of the fluid circulating through the passage 41. As mentioned above, in the case where the sizes of particulates to be flocculated are mainly in micrometer order, the phenomenon that particularly in the area from an inner surface of the wall 42 of the passage 41 having a diameter D to a position which is (1/8)D distant from the inner surface of the wall 42, the density of distribution of the particulates to be flocculated is high is observed. Therefore, the protrusion 43 is set such that the area from the inner surface of the wall 42 of the passage 41 to the position which is (1/8)D distant from the inner surface of the wall 42, where the density of distribution of the particulates to be flocculated is high, is particularly actively agitated by the horseshoe vortex V4.

As described above, in the dust flocculating duct 40, because the height of the protrusion 43 from the wall 42 is one eighth of a representative length of a cross section which is perpendicular to a direction of the flow of the gas passing through the passage 41, a foreign substance is hardly caught by the protrusion 43.

Fig. 20 is a schematic diagram illustrating a view of the vortices generated by the protrusion in the embodiment 3-1-E according to the present invention. Fig. 20 (A) shows a front view in which the passage is viewed from a front side and Fig. 20 (B) shows a side view in which the passage is viewed from a lateral side.

As shown in Fig. 20, in the dust flocculating duct 40, when gas P flows into the passage 41, since the protrusions 43 are disposed at six positions of the inner surface of the wall 42 of the passage 41, six horseshoe vortices V4 which swirl in the same direction occur in a substantially even-spaced manner in the vicinity of the inner surface of the wall 42 of the passage 41. In addition, since the neighboring vortices swirl in the same direction, when a flow line vector on a plane perpendicular to the direction of the flow is considered, one side of a flow in a plane, on which the vortices neighbor each other, swirls from a central portion of the passage in a direction toward the wall surface, another side thereof swirls from the wall surface of the passage in a direction toward the central portion of the passage, and the one side and the another side of the flow collide with each other. Thus, a probability with which the particulates of the fine dust transported by the flows of the respective vortices collide with one another is further enhanced.

As described above, in the dust flocculating duct 40, the plurality of protrusions 43 are disposed, thereby generating a large number of the vortices inside the passage 41 and allowing the dust flocculation effect to be enhanced.

Accordingly, by using the dust flocculating duct 40 of the embodiment 3-1-E, the probability with which the particulates of the fine dust transported by the flows collide with one another is more enhanced than that attained by using the dust flocculating duct 30 of the embodiment 3-3, thereby drastically boosting dust flocculating performance.

As described above, in the dust flocculating duct 40, the vortex generating part includes the protrusions 43, and the protrusions 43 are formed so as to project from the inner surface of the wall 42 and to make the velocity of the gas passing around the protrusion 43 uneven.

By employing the above-described configuration, the dust circulating through the dust flocculating duct 40 sequentially undergoes: a step at which the dust is guided into the passage 41 by the gas flow; a step at which the dust is transported through an inside of the passage 41 by the gas flow traveling forward; a step at which the dust is caught up in vortical flows generated downstream of the protrusions 43 protruding from the wall 42 of the passage 41 and circulates; a step at which a plurality of pieces of the dust are caused to collide with one another by the vortical flows; a step at which the plurality of pieces of the dust in collision with one another form the dust masses (clusters); and a step at which the dust masses are transported through the inside of the passage 41 by the gas flow.

In this way, the dust flocculating duct 40 which has a simple configuration, is capable of facilitating the flocculation by increasing the number of times when the particulates in the dust collide with one another, of decreasing the number of particulates, and of increasing apparent diameters of the particulates can be provided.

(Embodiment 3-1-F)

Fig. 21 shows a perspective view illustrating an important part of a dust flocculating duct of an embodiment 3-1-F according to the present invention. Fig. 22 shows a front view illustrating the important part of the dust flocculating duct of the embodiment 3-1-F. Fig. 23 shows a cross-sectional side view illustrating the dust flocculating duct of the embodiment 3-1-F

As shown in Fig. 21 through Fig. 23, in the dust flocculating duct 50 of the embodiment 3-1-F, protrusions 53 are disposed, instead of the protrusions 43 in the embodiment 3-1-E. Each of the protrusions 53 is of a wing shape which is the same as the shape of each of the protrusions 43 in the embodiment 3-1-E but the protrusions 53 are disposed in a manner different from the manner in which the protrusions 43 are disposed.

In the dust flocculating duct 50, pairs of protrusions 53, each of which neighbors each other in a direction of a passage, are disposed from an upstream side toward a downstream side of the passage in a step-like manner. The pairs of protrusions 53 disposed in the step-like manner are disposed such that the two protrusions 53 of each of the pairs partially overlap each other when viewed from the upstream side. In other words, the pairs of protrusions 53 disposed in the step-like manner are disposed such that if a virtual line of a gas flow is drawn so as to span from a terminal end of one of the pair of protrusions 53, which is disposed on the upstream side, toward the downstream, the virtual line intersects another of the pair of protrusions 53, which is disposed on the downstream side. The other parts of the dust flocculating duct 50 of the embodiment 3-1-F are the same as those of the dust flocculating duct 40 of the embodiment 3-1-E.

In the dust flocculating duct 50 of the embodiment 3-1-F, a horseshoe vortex V5 which has occurred on the one of the pair of protrusions 53, which is disposed on the upstream side, is further intensified on the another of the pair of protrusions 53, which is disposed on the downstream side, whereby a further intense horseshoe vortex V6 is generated. While the vortices are moving downstream, the vortices gradually attenuate. However, since the vortices generated in the dust flocculating duct 50 are more intense than the vortices generated in the dust flocculating duct 40, a distance (outreach) from a point at which the attenuation of the vortices starts to a point at which the attenuation of the vortices finishes is long, whereby influences of the vortices can be exerted on the further downstream. In the vicinity of a wall 52 of the passage 51, six horseshoe vortices which swirl in the same direction occur in a substantially even-spaced manner.

Fig. 24 is a schematic diagram illustrating a gas flow around a protrusion in the dust flocculating duct of the embodiment 3-1-F.

As shown in Fig. 24, since the pairs of the protrusions 53 are disposed in the step-like manner, a horseshoe vortex V5 generated on the upstream side is caught up in a vortex generated on the protrusion 53 downstream side, thereby allowing an intense horseshoe vortex V6 to be effectively generated.

Further, since the neighboring vortices swirl in the same direction, when flow line vectors on a plane perpendicular to the direction of the flow are considered, one vector of a flow in a plane, on which the vortices neighbor each other, swirls from a central portion of the passage in a direction toward the wall surface and another vector thereof swirls from the wall surface of the passage in a direction toward the central portion of the passage. In such a manner, the one vector and the another vector of the flow collide with each other. Thus, a probability with which the particulates of the fine dust transported by the flows of the respective vortices collide with one another is further enhanced.

Accordingly, by using the dust flocculating duct 50 of the embodiment 3-1-F, the further intense vortices can be generated. Therefore, the outreach of each of the vortices is long and thereby, the probability with which the particulates of the fine dust transported by the flow can be further increased, whereby a capability of flocculating the dust can be drastically enhanced. In addition, friction of the flow is reduced in the dust flocculating duct 50 of the embodiment 3-1-F as compared with the dust flocculating duct 40 of the embodiment 3-1-E, thereby allowing a reduction in a pressure loss.

In the dust flocculating duct 50 of the embodiment 3-1-F, the pressure loss is equal to that in the dust flocculating duct 40 of the embodiment 3-1-E. However, the probability with which the particulates of the fine dust collide with one another is increased by approximately 30 % as compared with the probability attained by the dust flocculating duct 40 of the embodiment 3-1-E. By using the dust flocculating duct 50 of the embodiment 3-1-F, a dust flocculating duct which achieves further high performance can be obtained.

(Embodiment 3-1-G)

Fig. 25 shows a perspective view illustrating an important part of a dust flocculating duct of an embodiment 3-1-G according to the present invention. Fig. 26 shows a front view illustrating the important part of the dust flocculating duct of the embodiment 3-1-G. Fig. 27 shows a cross-sectional side view illustrating the dust flocculating duct of the embodiment 3-1-G.

As shown in Fig. 25 through Fig. 27, in the dust flocculating duct 60 of the embodiment 3-1-G, quartets, each of which is composed of a protrusion 63a, a protrusion 63b, a protrusion 63c, and a protrusion 63d, are disposed, instead of the protrusions 53 in the embodiment 3-1-F. Each of the protrusions (63a, 63b, 63c, and 63d) is of the same shape as that of the protrusion 53, namely, the wing shape and the number of the protrusions (63a, 63b, 63c, and 63d) disposed is the same as the number of the protrusions 53 disposed. However, the protrusion 63a and protrusion 63c which neighbor each other are disposed so as to form stagger angles (each of which is an angle formed between a wing chord and a direction of a flow) in a manner opposite to each other; and the protrusion 63b and the protrusion 63d which neighbor each other are also disposed in the same manner as mentioned above. In other words, the protrusions (63a, 63b, 63c, and 63d) have curved shapes so as to form depressions. Two protrusions which neighbor each other in a direction intersecting a direction of a gas flow are disposed such that two depressions of the two protrusions face each other. On a wall 62 of a passage 61, three protrusions 63a are disposed in a circumferential direction of the cross section perpendicularly intersecting the direction of the gas flow in an evenly spaced manner, each with a stagger angle of 22.5 degrees which is formed in a clockwise manner when each of the protrusions 63a is viewed from an upstream side to a downstream side; respectively between the protrusions 63a, three protrusions 63c are disposed in an evenly spaced manner, each with a stagger angle of 22.5 degrees which is formed in a counterclockwise manner when each of the protrusions 63c is viewed from the upstream side toward the downstream side. On each of the downstream sides of the protrusions 63a and the protrusions 63c, three protrusions 63b are disposed in the circumferential direction of the cross section perpendicularly intersecting the direction of the gas flow in an evenly spaced manner, each with a stagger angle of 22.5 degrees which is formed in a clockwise manner when each of the protrusions 63b is viewed from the upstream side toward the downstream side; and respectively between the three protrusions 63b, three protrusions 63d are disposed, each with a stagger angle of 22.5 degrees which is formed in a counterclockwise when each of the protrusions 63d is viewed from the upstream side toward the downstream side. Along the direction of the gas flow, each of the protrusions 63b is disposed on a downstream side of each of the protrusions 63a, and each of the protrusions 63d is disposed on a downstream side of each of the protrusions 63c. The four protrusions are disposed such that a distance between the depressions of the protrusion 63a and the protrusion 63c is larger than a distance between the depressions of the protrusion 63b and the protrusion 63d.

In the dust flocculating duct 60 of the embodiment 3-1-G, the same horseshoe vortices as those generated on the protrusions 43 in the embodiment 3-1-E are generated on the protrusions (63a, 63b, 63c, and 63d) and the horseshoe vortices move downstream along a downstream portion of a wall 62 of a passage 61, thereby imparting intense swirls to a flow circulating downstream of the protrusions.

Fig. 28 is a schematic diagram illustrating a view of the vortices generated around the protrusions in the dust flocculating duct of the embodiment 3-1-G.

As shown in Fig. 28, inside the passage 61 of the dust flocculating duct 60 of the embodiment 3-1-G, 12 protrusions are disposed so as to each mutually face toward opposite directions. Therefore, in the vicinity of an inner surface of the wall 62 of the passage 61, six horseshoe vortices V7 are generated. Pairs of neighboring vortices of the six horseshoe vortices V7 each swirl in respectively opposite directions. The horseshoe vortices V7 generated on the protrusion 63a and the protrusion 63c on the upstream side are caught up in a gas flow passing between the protrusion 63b and the protrusion 63d on the downstream side, and thereby, an intense horseshoe vortex V8 is generated. Further, since the protrusion 63b and the protrusion 63d are disposed so as to face toward the opposite directions, the vortices generated between the protrusion 63b and the protrusion 63d on the downstream side act so as to mutually intensify each other, thereby allowing the further intense horseshoe vortex V8 to be generated.

In addition, since the neighboring vortices each swirl in the opposite directions, when flow line vectors on a plane perpendicular to the direction of the flow are considered, one vector of a flow in a plane, on which the vortices neighbor each other, swirls from a central portion of the passage in a direction toward the wall surface and another vector thereof also swirls in the same direction; and the one vector thereof swirls from the wall surface of the passage in a direction toward the central portion of the passage and the another vector thereof also swirls in the same direction. Therefore, the vectors of the flow can smoothly converge, thereby decreasing a frictional resistance caused by a viscosity of the flow. Thus, in the passage 61 in the embodiment 3-1-G, a pressure loss due to the vortices is reduced as compared with the passage 51 in the embodiment 3-1-F.

As described above, in the dust flocculating duct 60, each of the protrusions (63a, 63b, 63c, and 63d) is of the shape which has a curved portion so as to form the depression, and the two protrusions which neighbor in the direction intersecting the direction of the gas flow are disposed such that the two depressions of the two neighboring protrusions face each other. By employing the above-described configuration, the vortices generated on the neighboring protrusions move downstream while swirling in the opposite directions. Therefore, in the plane on which the vortices neighbor each other, the gas flows which form these vortices travel in the same direction. Accordingly, the vortices generated on the neighboring protrusions smoothly converge, thereby reducing the frictional resistance caused by the viscosity of the flow. Thus, the pressure loss inside the passage 61 can be reduced.

Accordingly, through using the dust flocculating duct 60 of the embodiment 3-1-G, a friction of the flow can be reduced as compared with the dust flocculating duct 40 of the embodiment 3-1-E, thereby allowing the pressure loss to be further reduced. A probability with which the particulates of the fine dust collide with one another due to the friction of the flow is reduced by approximately 5 % as compared with the dust flocculating duct 40 of the embodiment 3-1-E. However, the pressure loss is reduced by approximately 10 % as compared with the dust flocculating duct 40 of the embodiment 3-1-E. Therefore, the embodiment 3-1-G realizes the dust flocculating duct 60 attaining higher performance than that attained by the dust flocculating duct 40 of the embodiment 3-1-E.

(Embodiment 3-1-H)

A dust flocculating duct of an embodiment 3-1-H according to the present invention has any of the protrusions in the embodiment 3-1-A through the embodiment 3-1-G on a part of an upstream side of a passage thereof. A part of a downstream side of the passage or the protrusions have a first electrification part for positively contact-electrifying dust contained in gas circulating through the passage and a second electrification part for negatively contact-electrifying the dust contained in the gas circulating through the passage. The first electrification part and the second electrification part are disposed so as to face each other.

In the above-described configuration, the gas flowing into the dust flocculating duct of the embodiment 3-1-H passes through the dust flocculating duct while undergoing the following steps: a step at which the dust is guided into the passage by the gas flow; a step at which the dust is transported through an inside of the passage by the gas flow traveling forward; a step at which the dust circulates along the wall surface of the passage; a step at which the dust is caused to collide with the protrusions projecting from the wall surface of the passage; a step at which the dust is caught up in vortical flows generated downstream of the protrusions and circulates; a step at which the dust is caused to collide with the wall surface of the passage by the vortical flows a plurality of times; a step at which a plurality of pieces of the dust are caused to collide with one another by the vortical flows; a step at which the plurality of pieces of the dust in collision with one another form the dust masses (clusters); and a step at which the dust masses are transported through the inside of the passage by the gas flow.

At this time, the gas flow circulating through the first electrification part and the second electrification part is controlled in the below-described manner. Specifically, when the dust is transported through the inside of the passage by the gas flow, gas flow control is performed so as to electrify the dust by causing the dust to collide with the surface of the wall and the protrusion and thereafter, so as to cause the particulates of the dust to collide with one another; and a period of causing a plurality of pieces of the dust in collision with one another to form dust masses (clusters) is provided.

In the above-described manner, collision of the dust which has been caused to collide with the first electrification part and been positively electrified and the dust which has not collided with the first electrification part is facilitated. When the former dust and the latter dust collide with each other, dielectric polarization occurs on a surface of the latter dust due to the electric charge of the former dust and a strong bonding force is generated between the former dust and the latter dust due to an electrostatic force. Due to this bonding force, a first dust mass in which the plurality of pieces of dust have been flocculated is generated. The first dust mass has been positively electrified as a whole. By the same mechanism as that by which the first dust mass is generated, a second dust mass which has been negatively electrified as a whole is generated by the second electrification part.

Further gas flow control is performed so as to cause positively electrified first dust mass generated by the first electrification part and negatively electrified second dust mass generated by the second electrification part to collide with each other; and a period of bonding the first dust mass and the second dust mass in collision with each other due to an electrostatic force and of forming further large dust masses (large clusters) is provided.

By performing the gas flow control as described above, collision of the first dust mass which has been positively electrified as a whole and the second dust mass which has been negatively electrified as a whole is facilitated.

Upon the collision of the first dust mass and the second dust mass, due to a strong electrostatic force generated from the positive electric charge which the former dust mass has and the negative electric charge which the latter dust mass has, a further strong bonding force is generated between the former dust mass and the latter dust mass. Due to this bonding force, a large dust mass in which the plurality of dust masses have been further flocculated is generated.

By performing the gas flow control as described above, the flocculation of fine dust, which is caused by the collision, is repeated, thereby forming large dust masses (large clusters).

As described above, in the dust flocculating duct, the wall and/or the vortex generating part(s) have/has the first electrification part for positively contact-electrifying the dust contained in the gas circulating through the passage and the second electrification part for negatively electrifying the dust contained in the gas circulating through the passage and the first electrification part and the second electrification part are disposed so as to face each other. By employing the above-described configuration, when the dust is transported by the gas flow through the passage, the dust contacts the first electrification part or the second electrification part and is positively or negatively electrified by the first electrification part for positively contact-electrifying the dust or the second electrification part for negatively contact-electrifying the dust, whereby the positively or negatively electrified dust can be caused to form the dust masses (clusters). This causes the positively or negatively electrified dust to adsorb each other by electrostatic action, thereby causing the dust to form the dust masses (clusters).

On the inner surface of the wall of the passage, the plurality of protrusions are provided. The plurality of protrusions are disposed such that the plurality of protrusions partially overlap each other when viewed from an upstream side of the dust flocculating duct in a perspective manner, whereby the dust is caused to easily collide with the wall surface or the protrusions.

As described above, in the dust flocculating duct having both of the vortex generating part(s) and the electrification parts, since the vortex generating part(s) protrude(s) toward an inside of the passage, the particulates easily contact the inner wall. Further, an area of the wall surface is increased owing to the vortex generating part(s), thereby allowing an increase in the probability with which the particulates collide with the wall surface. Since the probability with which the particulates collide with the wall surface can be increased by the vortices generated by the vortex generating part(s), the number of times when the particulates contact the inner wall can be increased. Since this allows the particulates in the dust to be further easily electrified, the dust particulates are further easily flocculated and the generation of the dust masses is facilitated.

In a case where as further another embodiment according to the embodiment 3-1-H, each of the dust flocculating ducts of the embodiment 3-1-A through the embodiment 3-1-G is formed by using an electrification member, as the protrusions, first protrusions for positively contact-electrifying the dust contained in the gas circulating through the passage and second protrusions for negatively contact-electrifying the dust contained in the gas circulating through the passage may be included, and the first protrusions and the second protrusions may be disposed such that each of the first protrusions and each of the second protrusions face each other, respectively.

For example, the protrusions 63a and the protrusions 63d in the embodiment 3-1-G are supposed to be the first protrusions, and the protrusions 63c and the protrusions 63d are supposed to be the second protrusions.

As described above, by using the protrusions 63a and protrusions 63d for positively contact-electrifying the dust and the protrusions 63c and protrusions 63d for negatively contact-electrifying the dust, when the dust is transported by the gas flow through the passage, the dust contacts the first protrusions or the second protrusions and is positively or negatively electrified, whereby the positively or negatively electrified dust can be caused to form the dust masses (clusters). This causes the positively or negatively electrified dust to adsorb each other by electrostatic action, thereby causing the dust to form the dust masses (clusters).

In addition, it is preferable in the dust flocculating duct of the embodiment 3-1-H that the protrusions are made of the same material as the material forming the wall.

This allows a flocculation effect to be enhanced since the particulates in the dust contained the gas circulating through the inside of the passage are electrified by the collision with either of the wall or the protrusions.

(Embodiment 3-1-I)

A dust flocculating duct of an embodiment 3-1-I according to the present invention has any of the protrusions in the embodiment 3-1-A through the embodiment 3-1-G on a part of an upstream side of a passage thereof. A part of a downstream side of the passage or the protrusions are made of a material which is capable of positively or negatively contact-electrifying dust contained in gas circulating through the passage.

In the dust flocculating duct having the above-described configuration, sequentially performed are a step at which the dust is guided into the passage by a gas flow; a step at which the dust is transported through an inside of the passage by the gas flow traveling forward; a step at which the dust circulates along a wall surface of the passage; a step at which the dust is caused to collide with the protrusions projecting from the wall surface of the passage; a step at which the dust is caught up in vortical flows generated downstream of the protrusions and circulates; a step at which the dust is caused to collide with the wall surface of the passage by the vortical flows a plurality of times; a step at which a plurality of pieces of the dust are caused to collide with one another by the vortical flows; a step at which the plurality of pieces of the dust in collision with one another form the dust masses (clusters); and a step at which the dust masses are transported through the inside of the passage by the gas flow.

At this time, the gas flow circulating through the dust flocculating duct is controlled in the below-described manner. Specifically, when the dust is transported through the inside of the passage by the gas flow, gas flow control is performed so as to electrify the dust by causing the dust to collide with the surface of the wall and the protrusion and thereafter, so as to cause the particulates of the dust to collide with one another; and a period of causing a plurality of pieces of the dust in collision with one another to form dust masses (clusters) is provided.

This facilitates collision of the dust which has collided with the dust flocculating duct and been positively or negatively electrified and the dust which has not collided with the dust flocculating duct. When the former dust and the latter dust collide with each other, dielectric polarization occurs on a surface of the latter dust due to the electric charge of the former dust and a strong bonding force is generated between the former dust and the latter dust due to an electrostatic force. Due to this bonding force, dust masses (clusters) in which the plurality of pieces of dust have been flocculated are generated.

By performing the gas flow control as described above, fine dust is flocculated by the collision, thereby forming dust masses (clusters).

In a case where as further another embodiment according to the embodiment 3-1-I, each of the dust flocculating ducts of the embodiment 3-1-A through the embodiment 3-1-G is formed of an electrification member, the protrusions may be formed of a material which is capable of positively or negatively contact-electrifying the dust contained in the gas circulating through the passage.

For example, the protrusions 43 of the embodiment 3-1-E are formed of the material which is capable of positively or negatively contact-electrifying the dust contained in the gas circulating through the passage 41.

This facilitates collision of the dust which has collided with the protrusions 43 of the dust flocculating duct 40 and been positively or negatively electrified and the dust which has not collided with the protrusions 43 of the dust flocculating duct 40. When the former dust and the latter dust collide with each other, dielectric polarization occurs on a surface of the dust which has not collided with the protrusions 43 of the dust flocculating duct 40 due to the electric charge of the dust which has collided with the protrusions 43 of the dust flocculating duct 40 and been positively or negatively electrified, and a strong bonding force is generated between the former dust and the latter dust due to an electrostatic force. Due to this bonding force, dust masses (clusters) in which the plurality of pieces of dust have been flocculated are generated.

By performing the gas flow control as described above, fine dust is easily flocculated by the collision and the dust masses (clusters) are easily formed.

In addition, it is preferable in the dust flocculating duct of the embodiment 3-1-I that the protrusions are formed of the same material as the material forming the wall.

This allows a flocculation effect to be enhanced since the particulates in the dust contained the gas circulating through the inside of the passage are electrified by the collision with either of the wall or the protrusions.

As described above, the present invention relates to the mechanism of flocculating the fine particulates. Since an efficiency of collecting the fine particulates can be enhanced by utilizing this mechanism, the dust flocculating duct according to the present invention is applicable to a vacuum cleaner, an air cleaner, an air conditioner, etc.

(Embodiment 3-1-J)

An experiment to examine differences in degrees to which foreign substances are prone to be caught by protrusions having varied heights was conducted. The experiment was conducted at ordinary temperatures and pressures and under conditions that a diameter D of a circular pipe was 40 mm and a representative velocity of a flow was 20 m/second. A mark $\bigcirc$ in Table 2 indicates that no catching of the foreign substances occurred all three times. A mark $\times$ in Table 2 indicates that the foreign substances were caught by triangular pyramids of the protrusions all three times. A mark $\Delta$ in Table 2 indicates that the foreign substances were caught by a turbulence generation part at least one time among three times of measurement. Here, Table 2 shows a result obtained by examining whether the foreign substances were caught by the turbulence generation part when flowing in the circular pipe as a passage and obtained by conducting suction measurement respectively three times under conditions that a bottom face of each of the triangular pyramids had the same shape; when the height h of each of the triangular pyramids as the protrusions was supposed to be $D/\alpha$, a value of $\alpha$ was changed to be 2, 4, 8, and 16; and a total of 10 kinds of the foreign substances shown in Table 2 were used. In addition, for reference sake, a measurement result obtained by using the dust flocculating duct of the embodiment 3-1-G is also shown.

[Table 2]

| Foreign substance | h D/2 | D/4 | D/8 | D/16 | Dust flocculating duct 60 |
|---|---|---|---|---|---|
| Dust with a particulate size of 1μm or less | o | o | o | o | o |
| Dust with a particulate size of 10μm or less | o | o | o | o | o |
| Dust with a particulate size of 30μm or less | o | o | o | o | o |
| Toothpick (20 pieces) | × | △ | o | o | △ |
| Matchstick (20 pieces) | × | △ | o | o | △ |
| Mixture of hair (200 hairs each with a length of 20 cm) and yarn (20 pieces of yarn each with a length of 15 cm) | × | o | o | o | o |
| Tissue paper (10 cm × 30 cm) | × | o | o | o | o |
| Dust ball (approximately φ 10 cm) | × | × | △ | o | × |
| Cloth (textile waste, 30 cm × 30 cm) | × | × | o | o | × |
| Pantyhose | × | × | o | o | × |

It was understood from the result shown in Table 2 that in a case where the height h of each of the triangular pyramids was 5 mm ((1/8)D), most of the foreign substances passed without being caught by the protrusions. In addition, in a case where each of the protrusions is of a shape such as a triangular prism whose sides, in a height direction thereof, extending from apices of a bottom face portion of each of the triangular pyramids are disposed directly in a direction perpendicular to the flow, the foreign substances are easily caught by the protrusions since the sides thereof are not oblique to the flow, unlike in the present embodiment. Table 3 shows a result of similar measurement conducted in a case where a round portion was formed on each of the sides forming the triangular pyramid.

[Table 3]

| Foreign substance \ h | D/2 | D/4 | D/8 | D/16 | Dust flocculating duct 60 |
|---|---|---|---|---|---|
| Dust with a particulate size of 1 µm or less | ○ | ○ | ○ | ○ | ○ |
| Dust with a particulate size of 10 µm or less | ○ | ○ | ○ | ○ | ○ |
| Dust with a particulate size of 30 µm or less | ○ | ○ | ○ | ○ | ○ |
| Toothpick (20 pieces) | × | △ | ○ | ○ | △ |
| Matchstick (20 pieces) | × | △ | ○ | ○ | △ |
| Mixture of hair (200 hairs each with a length of 20 cm) and yarn (20 pieces of yarn each with a length of 15 cm) | × | ○ | ○ | ○ | ○ . |
| Tissue paper (10 cm × 30 cm) | × | ○ | ○ | ○ | ○ |
| Dust ball (approximately φ 10 cm) | × | ○ | ○ | ○ | ○ |
| Cloth (textile waste, 30 cm × 30 cm) | × | △ | ○ | ○ | × |
| Pantyhose | × | △ | ○ | ○ | ·× |

As shown in Table 3, even in a case where the height h of each of the triangular pyramids was 10 mm ((1/4) D), when the round portion was formed on each of the sides forming each of the triangular pyramids, the foreign substances were hardly caught by the protrusions.

(Embodiment 3-2)

Fig. 42 shows a perspective view in which an important part of a dust flocculating duct of an embodiment 3-2 is viewed in a perspective manner. Fig. 43 shows a front view illustrating an important part of a dust flocculating duct of the embodiment 3-2. Fig. 44 shows a cross-sectional side view of the dust flocculating duct of the embodiment 3-2.

As shown in Fig. 42 through Fig. 44, in the dust flocculating duct 100 of the embodiment 3-2, a plurality of protrusions 103 are provided on an inner surface of a wall 102 of a passage 101. Each of the protrusions 103 is formed so as to be of a triangular pyramid shape but an arrangement or a disposition thereof is different. In other words, when viewed from an upstream side, the plurality of protrusions 103 are disposed so as not to overlap each other and the neighboring protrusions 103 are disposed in an evenly-spaced manner. In addition, a configuration of the plurality of protrusions 103 may be provided such that the plurality of protrusions 103 are not disposed on a plane in a direction perpendicular to a flow direction.

In the dust flocculating duct 100 of the embodiment 3-2, twin vortices are generated by the protrusions 103. Since the plurality of protrusions 103 are disposed so as not to overlap each other when viewed from the upstream side, many parts of a flow circulating along the wall 102 of the passage 101 each meet one of the protrusions 103 once and a part, which circulates between one of the protrusions 103 and another of the protrusions 103, of the many parts of the flow never meets any one of the protrusions 103.

The dust flocculating duct 100 of the embodiment 3-2 has an advantage that a method of molding the dust flocculating duct 100 is extremely easy. In other words, when viewed from the upstream side, the plurality of protrusions 103 are disposed so as not to overlap each other and the neighboring protrusions 103 are disposed in an evenly-spaced manner. Therefore, for example, in a case where the dust flocculating duct 100 is formed through resin-molding, a molding die is configured such that the upstream side of the dust flocculating duct 100 is set on a movable side of the molding die and a downstream side of the dust flocculating duct 100 is set on a fixed side of the molding die, thereby allowing the dust flocculating duct 100 to be integrally molded without requiring a complicated configuration of the molding die.

In addition, for example, in a case where a foreign substance (for example, something like a milk bottle cap) which is of a plate-like shape and has an area approximate to an area of a cross section of the passage 101 or the like is mixed in a fluid circulating through the dust flocculating duct 100, for example, since a plurality of turbulence generating parts are disposed so as to be present in the plane in the direction perpendicular to the flow direction, an edge of the plate-like shaped foreign substance having the area approximate to the area of the cross section of the passage is highly likely to be caught concurrently by the plurality of protrusions and thereby, a failure that the dust flocculating duct is clogged with the foreign substance is likely to occur. However, in the embodiment 3-2, since the configuration of the plurality of protrusions 103 is provided such that the plurality of protrusions 103 are not disposed so as to be present in the plane in the direction perpendicular to the flow direction, the plate-like shaped foreign substance, having the area approximate to the area of the cross section of the passage 101, or the like is hardly caught by the plurality of protrusions.

Accordingly, not only moldability of the dust flocculating duct 100 of the embodiment 3-2 is excellent but also, for example, in the case where the plate-like shaped foreign substance, having the area approximate to the area of the cross section of the passage, or the like is likely to be mixed in the flow, the failure that the foreign substance is caught by the turbulence generating parts and thereby, the dust flocculating duct is clogged with the foreign substance can be prevented. As described above, the dust flocculating duct having both the extremely high moldability and extremely high reliability can be obtained.

Fig. 45 through Fig. 49 are schematic diagrams illustrating the other arrangements of the protrusions in the embodiment 3-2. In each of Fig. 45 through Fig. 49, a diagram (A) with the protrusions viewed in a direction perpendicular to a direction of a passage and a schematic diagram (B) with the protrusions viewed from the upstream side of the flow are shown.

As shown in Fig. 45, a plurality of protrusions 103 are disposed on an inner circumferential surface in the direction perpendicular to the flow. In a case where the protrusions are disposed so as to be close to one another or in a cylindrical-shaped duct, when the plurality of protrusions 103 are disposed in a plane in the direction perpendicular to the flow, preferably each with approximately 90 degrees of an interior angle on the cross section of the passage, both extremely high moldability and extremely high reliability can be concurrently attained.

As shown in Fig. 46, a configuration of the protrusions 103 is provided such that neighboring protrusions 103 are slightly displaced from each other to avoid mutual overlapping of the neighboring protrusions 103, thereby preventing the duct from being clogged with the foreign substance due to the protrusions. As a configuration which allows the same effect as mentioned above to be attained, as shown in Fig. 47, a configuration is provided such that the protrusion are divided into several groups and the groups are mutually displaced from one another in the direction of the flow. As shown in Fig. 48 and Fig. 49, a sawtooth-like arrangement can be shown in an illustrative manner. By employing any of these arrangements of the protrusions 103, extremely high moldability can be attained.

Fig. 50 is a diagram illustrating an arrangement of neighboring protrusions in the dust flocculating duct of the embodiment 3-2.

As shown in Fig. 50, when the protrusions 103 are disposed so as not to overlap each other in a projection plane which is viewed from a direction parallel to the direction of the flow and a distance between the neighboring protrusions 103 is supposed to be W, W is expressed by the following equation.

$$W = 2\alpha + \gamma\tan\beta \text{ (note: } \alpha, \beta, \text{ and } \gamma \text{ are any positive integers.)}$$

With respect to the protrusions 103, it is supposed that $\alpha$ and $\beta$ are greater than or equal to 3 mm, respectively, and $\gamma$ (mm) is any number.

When the dust flocculating duct 100 is produced by using a molding die which is separated in a direction S parallel to the gas flow, the passage 101 and the protrusions 103 can be simultaneously molded. This allows a molding cost to be drastically reduced. Regarding the distance between the protrusions 103, by ensuring a lower limit of W (mm), the protrusions can be disposed so as not to overlap each other in the projection plane perpendicular to the gas flow and a strength in portions of the molding die, which come between the protrusions, can be ensured.

In a process of transporting the dust from the upstream side toward the downstream side by the gas flow, the gas flow is agitated by the protrusions formed on a wall surface, thereby causing pieces of the dust to collide with one another and promoting formation of dust masses (clusters).

By providing the dust flocculating duct comprising an agitation flocculating duct having such a function, the pieces of dust grown as the dust masses in the clusters are more efficiently separated or collected by, for example, a centrifugal separator or a filter which is provided further downstream of a passage, than pieces of the dust which are not in clusters.

The protrusions which generate intense vortices on the downstream side, rather than the protrusions which merely agitate the gas flow, can cause the pieces of dust to collide with one another and can further promote the formation of the dust masses (clusters).

In a case where the agitation flocculating duct whose wall surface has the protrusions formed thereon and which generates the intense vortices on the downstream side is provided, if a plurality of protrusions are formed in close proximity to one another without careful consideration so as to be present in a direction parallel to a core axis of the tubular duct, which extends between centers of an inlet and an outlet of the agitation flocculating duct, intensities of the vortices generated by the protrusions disposed on the upstream side of the flow may be attenuated by the protrusions disposed on the downstream side of the flow. In such a case, a flocculation effect attained by the mutual collision of the pieces of dust, which is caused by the vortices, is impaired.

In addition, if the protrusions are disposed in close proximity to one another without careful consideration so as to be present in a direction perpendicular to the core axis with respect to one of the protrusions, intensities of the vortices generated by the protrusions may be attenuated by the neighboring protrusions which are disposed so as to be present in the direction perpendicular to the core axis. Also in such a case, the flocculation effect attained by the mutual collision of the pieces of dust, which is caused by the vortices, is impaired.

Moreover, the duct having the protrusions can be easily molded by dividing the duct into two parts in the direction parallel to the core axis. However, if the duct is molded in the above-mentioned manner, two streaks in the direction parallel to the core axis appear at positions of matching surfaces on which the two parts are jointed. If the duct is molded without careful consideration, these streaks become bumps, whereby intensities of the vortices generated by the protrusions may be attenuated. Also in such a case, the flocculation effect attained by the mutual collision of the pieces of dust, which is caused by the vortices, is impaired.

In order to avoid the attenuation of the intensities of the vortices generated by the protrusions in the agitation flocculating duct, which is caused by the other protrusions disposed in close proximity to the protrusions or by the bumps appearing on the wall surface and in order to obviate the impairment of the flocculation effect attained by the mutual collision of the pieces of dust, which is caused by the vortices, the below-described configuration is preferable.

(Embodiment 3-2-1)

The above-described agitation flocculating duct 100 should not be molded by being divided into the two parts and should be molded in an integrated manner so as to be tubular.

In the above-mentioned configuration, the matching surfaces of the divided parts do not appear on the wall surface and therefore, the streaks and the bumps do not appear on the wall surface of the agitation flocculating duct, thereby allowing the attenuation of the intensities of the vortices generated by the protrusions to be avoided and the impairment of the flocculation effect attained by the mutual collision of the pieces of dust to be obviated.

(Embodiment 3-2-2)

In an agitation flocculating duct of an embodiment 3-2-2, only one protrusion should be provided, respectively, in a direction parallel to a core axis of a tubular duct, which extends between centers of an inlet and an outlet thereof.

In the above-mentioned configuration, since a plurality of protrusions are not provided in the direction parallel to the core axis with respect to one protrusion, intensities of vortices generated by protrusions disposed on an upstream side are not attenuated by protrusions disposed on a downstream side, and therefore, a flocculation effect attained by mutual collision of pieces of dust, which is caused by the vortices, is not impaired.

Fig. 66 is a diagram showing a distance between protrusions, mesured in a direction perpendicular to the core axis in the embodiment 3-2-2.

As shown in Fig. 66, in the dust flocculating duct, a plurality of protrusions 103 are disposed in the direction perpendicular to the core axis. When a width (a diameter in a case of a circular pipe; and a short side in a case of a rectangular tube having long sides and short sides) of the dust flocculating duct is supposed to be D, the distance s between the plurality of protrusions 103 in the direction perpendicular to the core axis should be $s \geqq 0.05D$.

In the above-mentioned configuration, even in a case where the plurality of protrusions are provided in the direction perpendicular to the core axis with respect to one protrusion, since the above-mentioned distance between the protrusions, which is greater than or equal to 0.05D, is provided, intensities of vortices generated by the protrusions are not attenuated by the neighboring protrusions disposed in the direction perpendicular to the core axis and therefore, a flocculation effect attained by mutual collision of pieces of dust is not impaired.

(Embodiment 3-2-3)

In an embodiment 3-2-3, a molding die used for molding a dust flocculating duct should be formed so as to be divided into an inlet side and an outlet side of the dust flocculating duct and so as to be movable.

By employing the above-mentioned configuration of the molding die, the molding die which allows integral molding of the dust flocculating duct so as to be tubular without dividing the dust flocculating duct and causes no streaks and no bumps on a wall surface of the dust flocculating duct can be obtained. Thus, the dust flocculating duct in which intensities of vortices generated by protrusions are not attenuated and which is capable of obviating a failure that a flocculation effect attained by mutual collision of pieces of dust is impaired can be easily molded.

Even in a case where a plurality of protrusions are disposed in close proximity to one another so as to be present in a direction parallel to a core axis of the dust flocculating duct with respect to one protrusion, it is likely that intensities of vortices generated by the protrusions disposed on an upstream side are not attenuated by the protrusions disposed on a downstream side or that the vortices generated by the protrusions generated on the upstream side are further intensified by the protrusions disposed on the downstream side.

Even in a case where the plurality of protrusions are disposed in close proximity to one another so as to be present in a direction perpendicular to the core axis of the dust flocculating duct with respect to one protrusion, it is likely that intensities of vortices generated by the protrusions are not attenuated by neighboring protrusions disposed in the direction perpendicular to the core axis thereof or that the vortices generated by the protrusions are further intensified by the neighboring protrusions.

In the above-described cases, it does not occur that a flocculation effect attained by mutual collision of pieces of dust, which is caused by the vortices, is impaired.

However, since in order to obviate the above-mentioned impairment of the flocculation effect, it is required to elaborately calculate an arrangement of the protrusions of the agitation flocculating duct, there newly arises a disadvantage that designing the arrangement requires time and cost.

Furthermore, in a case where a duct having the protrusions is molded by being divided into two parts in the direction parallel to the core axis and by tightly controlling molding precision of the divided parts, no streaks and no bumps in the direction parallel to the core axis appear at positions of matching surfaces.

Also in the above-described case, it does not occur that the flocculation effect attained by the mutual collision of the pieces of dust, which is caused by the vortices, is impaired.

However, since in order to obviate the above-mentioned impairment of the flocculation effect, it is required to tightly control the molding precision of the agitation flocculating duct, there newly arises a disadvantage that designing the agitation flocculating duct requires time and cost for the molding control.

The dust flocculating duct of the embodiment 3-2 will be summarized as follows.

(1) The dust flocculating duct is **characterized in that** in the dust flocculating duct which comprises the agitation flocculating duct for causing the pieces of dust to collide with one another and to grow so as to be dust masses (clusters) in the process of transporting the dust from the upstream side toward the downstream side by the gas flow, the agitation flocculating duct constitutes the tubular duct whose inlet and outlet communicate with each other and which includes the wall surface and the protrusions formed on the wall surface; and the dust flocculating duct is not divided upon molding and is integrally molded so as to be tubular.

(2) The dust flocculating duct is **characterized in that** in the dust flocculating duct, in the arrangement of the protrusions provided in the agitation flocculating duct, only one protrusion is disposed, respectively, in the direction parallel to the core axis of the tubular duct, which extends between the centers of the inlet and the outlet, and the plurality of protrusions are disposed in the direction perpendicular to the core axis; and when the width (a diameter in a case of a circular pipe; and a short side in a case of a rectangular tube having long sides and short sides) of the agitation flocculating duct is supposed to be D, the distance s between the plurality of protrusions in the direction perpendicular to the core axis is $s \geqq 0.05D$.

(3) The molding die is **characterized in that** the molding die is a die for molding the agitation flocculating duct and is formed so as to be divided into the inlet side and the outlet side of the agitation flocculating duct and so as to be movable.

(Embodiment 3-3)

In a process of transporting the dust from the upstream side toward the downstream side by the gas flow, the gas flow is agitated by the protrusions formed on a wall surface, thereby causing pieces of the dust to collide with one another and promoting formation of dust masses (clusters).

By providing the dust flocculating duct comprising an agitation flocculating duct having such a function, the pieces of dust grown as the dust masses in the clusters are more efficiently separated or collected by, for example, a centrifugal separator or a filter which is provided further downstream of a passage, than pieces of the dust which are not in clusters.

The protrusions which generate intense vortices on the downstream side, rather than the protrusions which merely agitate the gas flow, can cause the pieces of dust to collide with one another and can further promote the formation of the dust masses (clusters).

As one example of a shape of each of the protrusions which are capable of generating the intense vortices on the downstream side, cited is a triangular shape in a cross section on a plane perpendicular to a core axis of the agitation flocculating duct. In particular, protrusions, each of which has, as the triangular shape in the above-mentioned cross section, a right-left asymmetric triangular shape having different lengths of two sides extending from an apex to both ends of a base, can generate the intense vortices on the downstream side, rather than protrusions, each of which has a shape of an isosceles triangle having equal lengths of two sides extending from an apex to both ends of a base.

However, a resistance of the protrusions, which can generate the intense vortices on the downstream side, against a flow is large and there arises a disadvantage that a pressure loss in the dust flocculating duct is increased.

In other words, a resistance of the protrusions, each of which has the shape of the isosceles triangle in the cross section of each of the protrusions, against the flow is smaller than that of the protrusions, each of which has the right-left asymmetric triangular shape in the cross section of each of the protrusions, against the flow, and the pressure loss in the dust flocculating duct can be reduced.

For example, the protrusions each having the right-left asymmetric triangular shape are preferable when it is desired to enhance an agitation flocculation effect despite the increased pressure loss whereas the isosceles triangular protrusions are preferable when it is desired to not only sufficiently enhance the agitation flocculation effect but also suppress the pressure loss.

Or there may be a case where what are desired are different between areas of one agitation flocculating duct: in one area, it is desired to further enhance the agitation flocculation effect and in another area, it is desired to not only sufficiently ensure the agitation flocculation effect but also suppress the pressure loss.

For example, it is possible to meet both of the above-mentioned desires by disposing the protrusions, each of which has the right-left asymmetric triangular shape, in the former area and by disposing the protrusions, each of which has the isosceles triangle, in the latter area.

As a case where what are desired are different between the areas of one agitation flocculating duct, for example, the following three cases can be cited.

Firstly, a case where a power of a fan or a blower as a driving source which causes a gas flow to circulate through the dust flocculating duct is not sufficient can be cited.

In such a case, when the pressure loss in the agitation flocculating duct is large, a volume of the gas flow which sucks the dust and causes the dust to circulate is drastically reduced and an amount of the sucked dust is reduced. Therefore, although an agitation flocculation effect is high, an overall effect of removing the dust may be rather reduced.

In the above-described case, for example, by implementing an arrangement of protrusions in the below described embodiment 3-3-3, embodiment 3-3-5, or embodiment 3-3-6, while the pressure loss is reduced to some extent, the agitation flocculation effect can be enhanced to some extent.

By appropriately adjusting a ratio of the number of the protrusions, each of which has the right-left asymmetric triangular shape, and the number of the protrusions, each of which has the isosceles triangular shape, in consideration of the power of the fan or the blower, an overall optimum can be further enhanced.

In a case where the power of the fan or the blower as the driving source which causes the gas flow to circulate through the dust flocculating duct is sufficiently high and a higher agitation flocculation effect is desired, by implementing an arrangement of protrusions as in the below-described embodiment 3-3-2, the agitation flocculation effect can be maximally enhanced.

Secondly, a case where the dust flocculating duct is formed so as to be a bent passage can be cited.

In such a case, due to a centrifugal force, the gas flow and dust which circulate through the agitation flocculating duct may be pressed against an outside portion of an inner wall surface with respect to a center of curvature of the bent passage and may be exfoliated from an inside portion of the inner wall surface with respect to the center of curvature of the bent passage.

In the above-described case, it may occur in the gas flow and dust circulating through the agitation flocculating duct that the gas flow circulating in the vicinity of the outside portion of the inner wall surface with respect to the center of curvature of the bent passage is subjected to strong friction against the inner wall surface and a pressure loss is increased due to a friction loss on the inner wall surface and that the gas flow circulating in the vicinity of the inside portion of the inner wall surface with respect to the center of curvature of the bent passage weakens its kinetic energy, is exfoliated from the duct wall, a contracted flow is brought about in the vicinity, and a pressure loss is drastically increased.

Therefore, a desire to suppress the pressure loss on the outside portion of the inner wall surface with respect to the center of curvature of the bent passage as much as possible is aroused and a desire to generate further strong vortices in order to prevent the exfoliation of the gas flow from the inside portion of the inner wall surface with respect to the center of curvature of the bent passage is aroused.

When the pressure loss in the agitation flocculating duct is large, a volume of the gas flow which sucks the dust and causes the dust to circulate is drastically reduced and an amount of sucked dust is reduced. Therefore, even though an agitation flocculation effect is high, an overall effect of removing the dust may be rather reduced.

In such a case, for example, the protrusions, each of which has the shape of the isosceles triangle, are disposed on the outside portion of the inner wall surface with respect to the center of curvature of the bent passage and the protrusions, each of which has the right-left asymmetric triangular shape, are disposed on the inside portion of the inner wall surface with respect to the center of curvature of the bent passage.

By employing the above-described configuration, on the outside portion of the inner wall surface with respect to the center of curvature of the bent passage, a sufficient agitation flocculation effect can be attained while the pressure loss is suppressed to some extent; and on the inside portion of the inner wall surface with respect to the center of curvature of the bent passage, a higher agitation flocculation effect can be attained by generating intense vortices and the kinetic energy of the gas flow is enhanced by generating the intense vortices, the exfoliation of the gas flow from the inner wall surface is suppressed, and it can be obviated that the contracted flow is brought about in the vicinity and the pressure loss is drastically increased.

Thirdly, a case where the dust flocculating duct is formed by providing in a neighboring manner an agitation flocculating duct part made of a material which is easily positively electrified by contact and friction and an agitation flocculating duct part made of a material which is easily negatively electrified by the contact and friction can be cited.

In this case, a desire to attain a higher agitation flocculation effect in areas in close proximity to the agitation flocculating duct part made of the material which is easily positively electrified and the agitation flocculating duct part made of the material which is easily negatively electrified while an agitation flocculation effect above a certain level is attained in all areas is aroused.

The reasons for this will be described below.

First, the desire to attain the agitation flocculation effect above the certain level is aroused for the following purpose.

Specifically, there is a purpose of causing the dust transported by the gas flow to collide with the agitation flocculating duct part made of the material which is easily positively electrified by the contact and friction or with the agitation flocculating duct part made of the material which is easily negatively electrified by the contact and friction, of electrifying the dust, and of causing pieces of the dust to be mutually flocculated due to the Coulomb force.

Therefore, by generating vortices having certain intensities in the agitation flocculating duct and by causing the dust to ride on the vortices, the number of times when the dust collides with the agitation flocculating duct part is increased and thereby, an intensity of electrification of the dust is enhanced.

However, for example, although the dust which has continued to contact the agitation flocculating duct part made of the material which is easily positively electrified by the contact and friction is negatively electrified, there is a limit to an intensity of the electrification. Even if the dust is caused to continuously collide with the agitation flocculating duct part above a certain level, an intensity of the electrification is not increased above the above-mentioned limit and a pressure loss caused by an increase in the intensities of the vortices is rather increased, whereby an adverse influence is likely to be exerted. Therefore, each of the intensities of the vortices which should be generated has its optimum point. Thus, it is often the case that it is not required to obtain maximum intensities of the vortices even at the price of the increase in the pressure loss.

Next, the desire to attain the higher agitation flocculation effect in the areas in close proximity to the agitation flocculating duct part made of the material which is easily positively electrified and the agitation flocculating duct part made of the material which is easily negatively electrified is aroused for the following purpose.

Specifically, as described above, by generating the vortices, the dust circulating in the area in close proximity to the agitation flocculating duct part made of the material which is easily positively electrified is negatively electrified and the dust circulating in the area in close proximity to the agitation flocculating duct part made of the material which is easily negatively electrified is positively electrified.

In other words, in an area in close proximity to both of the agitation flocculating duct part made of the material which is easily positively electrified and the agitation flocculating duct part made of the material which is easily negatively electrified, the positively electrified dust and the negatively electrified dust are in close proximity to each other.

In order to cause the positively electrified dust and negatively electrified dust to mutually collide with each other and to be flocculated due to the Coulomb force, it is required to provide the vortices with energy enough to sufficiently electrify the dust and enough to further cause the sufficiently electrified dust to collide with other dust.

Therefore, in the area in close proximity to the agitation flocculating duct part made of the material which is easily positively electrified and the agitation flocculating duct part made of the material which is easily negatively electrified, more intense vortices are required than in an area in close proximity to only either one of the agitation flocculating duct part made of the material which is easily positively electrified and the agitation flocculating duct part made of the material which is easily negatively electrified.

In the above-described case, for example, by implementing arrangements of protrusions in the below-described embodiment 3-3-5 and embodiment 3-3-7 or the below-described embodiment 3-3-6 and embodiment 3-3-7, a desired effect can be attained.

However, if the protrusions in the below-described embodiment 3-3-3 through embodiment 3-3-5 are provided on a wall surface of the agitation flocculating duct part, which is of a shape of a circular pipe, without careful consideration, there arises a case where undercuts are caused upon die molding and the molding is impossible.

In the above-described case, by implementing an arrangement of the protrusions in the below-described embodiment 3-3-6, no undercuts are caused upon the die molding. Thus, while a sufficient agitation flocculation effect is attained, not only the pressure loss is suppressed to some extent but also moldability is sufficiently ensured. Accordingly, the dust flocculating duct having high performance can be molded at low cost without elaborating a complicated die.

(Embodiment 3-3-1)

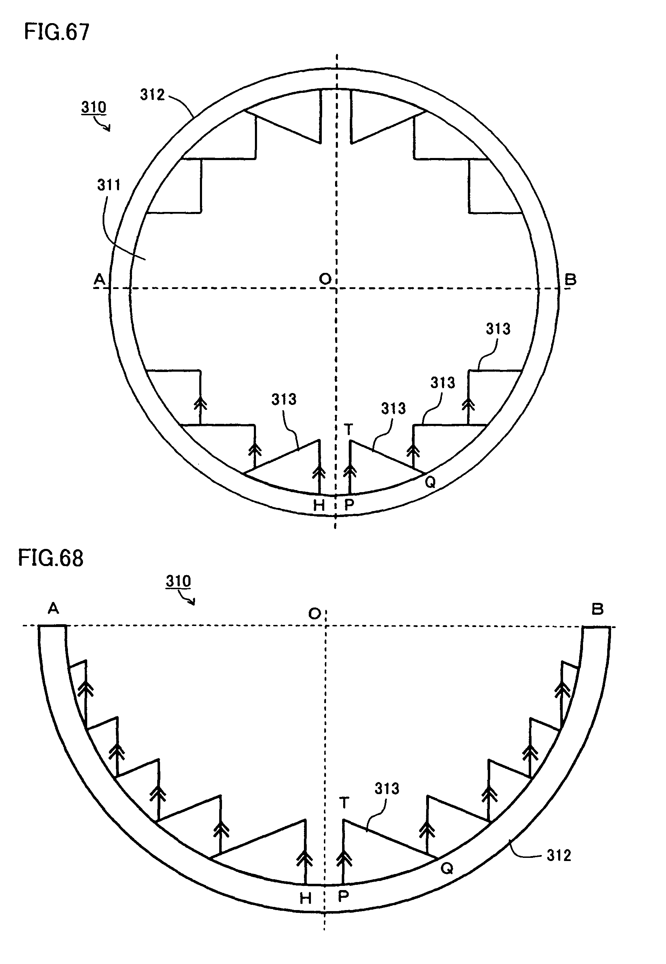

Each of Fig. 67 through Fig. 69 shows a cross-sectional front view of an important part of a dust flocculating duct of an embodiment 3-3-1.

As shown in Fig. 67 through Fig. 69, an agitation flocculating duct 310 is **characterized in that** the agitation flocculating duct 310 is used as a dust flocculating duct for, in a process of transporting dust from an upstream side to a downstream side by a gas flow, causing pieces of the dust to collide with one another and for promoting formation of dust masses (clusters), constitutes a tubular duct in which an inlet and an outlet communicate with each other, and comprises a wall surface 312 which is of a shape of a circular pipe and a plurality of protrusions 313 formed on the wall surface 312; that in the agitation flocculating duct molded by being divided into a plurality of parts on a plane passing a core axis of the tubular duct, which extends from a center of the inlet to a center of the outlet, a cross-sectional shape of each of protrusions 313 on a plane perpendicular to the core axis of the agitation flocculating duct is of a triangular shape having an apex T, vertices P and Q, and a base PQ, and each of the protrusions is disposed such that a part of the base PQ is buried in the wall surface 312 of the agitation flocculating duct 310; and that when it is supposed that the core axis is O, both ends of one part of the agitation flocculating duct 310 formed by dividing into the plurality of parts are respectively A and B, a straight line extending from A to B is AB, and a point of intersection of the wall surface of the agitation flocculating duct 310 and a perpendicular line which passes the core axis O and perpendicularly intersects the straight line AB is H, the protrusions TPQ, each of which has a cross section of a triangular shape in which conditions of TP // OH and arc HP < arc HQ are satisfied, are provided on at least one part of the wall surface 312 of the agitation flocculating duct 310.

In the above-described configuration, differences in flow velocities, dynamic pressures, and static pressures between a flow along TP and a flow along TQ among flows surrounding each of the triangular protrusions 313 (triangle TPQ) can be increased, thereby allowing intense circulation to be generated around the protrusions. As a result, intense horseshoe vortices can be generated on downstream sides of the protrusions.

In a case where the parts of the agitation flocculating duct 310 are resin-molded, if TP and OH are precisely in parallel with each other, a draft angle of a molding die cannot be set. Therefore, an inclination may be separately added.

(Embodiment 3-3-2)

An embodiment 3-3-2 is different from the embodiment 3-3-1 and **characterized in that** the protrusions 313 are provided on all areas of the wall surface 312 of the agitation flocculating duct 310.

By employing the above-mentioned configuration, each one of the protrusions 313 can generate each of the intense vortices, thereby allowing drastic enhancement of a probability with which pieces of dust circulating through the duct collide with one another.

In addition, in a case where a wall 312 of the duct is made of a material which is easily electrified, the dust is swirled by the intense vortices and can be caused to collide with the wall surface over and over again, thereby allowing further intense electrification of the dust.

Therefore, by employing the above-mentioned configuration of the agitation flocculating duct 310, an agitation flocculation effect can be maximally enhanced, thereby allowing the agitation flocculating duct 310 having an extremely high agitation flocculation effect to be obtained.

(Embodiment 3-3-3)

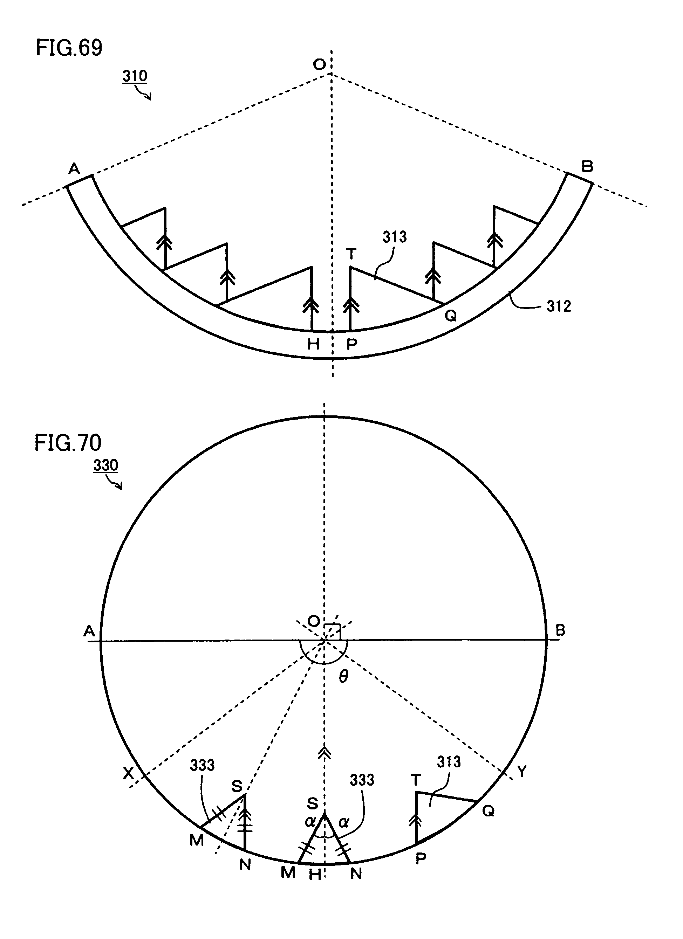

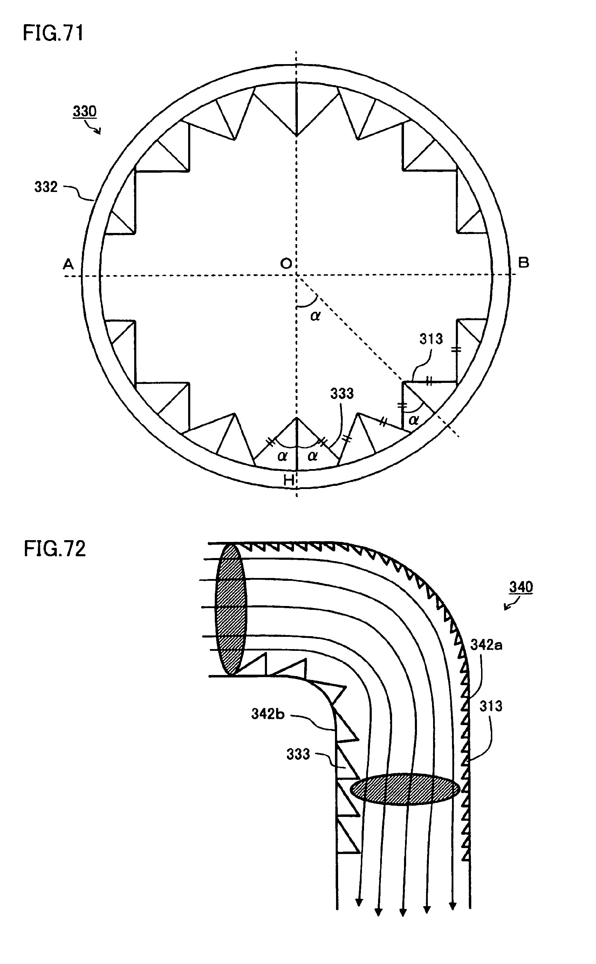

Each of Fig. 70 and Fig. 71 shows a cross-sectional front view of an important part of a dust flocculating duct of an embodiment 3-3-3.

As shown in Fig. 70 and Fig. 71, an agitation flocculating duct 330 is different from the agitation flocculating duct 310 of the embodiment 3-3-1 and **characterized in that** groups of protrusions 333, each of which has a second shape of an isosceles triangle whose apex is S, vertices are respectively M and N, and base is MN as a shape of a cross section on a plane perpendicular to a core axis of the agitation flocculating duct 330 and is provided such that a part of the base MN is buried in a wall surface 332 of the agitation flocculating duct 330, are further provided.

In the above-described configuration, differences in flow velocities, dynamic pressures, and static pressures between a flow along SM and a flow along SN among flows surrounding each of the isosceles triangular protrusions 333 (triangle SMN) are small because of SM=SN. Therefore, intense circulation is not generated around the protrusions and as a result, vortices generated on downstream sides of the protrusions are comparatively weak. However, a pressure loss is accordingly reduced drastically.

For example, in a case where a power of a fan or a blower as a driving source which causes a gas flow to circulate through the dust flocculating duct 330 is not sufficient, when the pressure loss in the agitation flocculating duct 330 is large, a volume of the gas flow which sucks the dust and causes the dust to circulate is drastically reduced and an amount of the sucked dust is reduced. Therefore, although an agitation flocculation effect is high, an overall effect of removing the dust may be rather reduced. In such a case, by employing the above-described configuration, while the pressure loss is reduced to some extent, the agitation flocculation effect can be enhanced to some extent.

By appropriately adjusting a ratio of the number of the protrusions, each of which has a right-left asymmetric triangular shape, and the number of the protrusions, each of which has the isosceles triangular shape, in consideration of the power of the fan or the blower, an overall optimum can be further enhanced.

(Embodiment 3-3-4)

Fig. 72 shows a cross-sectional view of an important part of a dust flocculating duct of an embodiment 3-3-4.

As shown in Fig. 72, an agitation flocculating duct 340 which is used as a dust flocculating duct formed so as to be a bent passage is **characterized in that** groups of protrusions 313, each of which has a first shape of a triangle TPQ, are provided on an outside portion 342a of an inner wall surface with respect to a center of curvature of the bent passage and groups of protrusions 333, each of which has a second shape of a triangle SMN, are provided on an inside portion 342b of the inner wall surface with respect to the center of curvature of the bent passage.

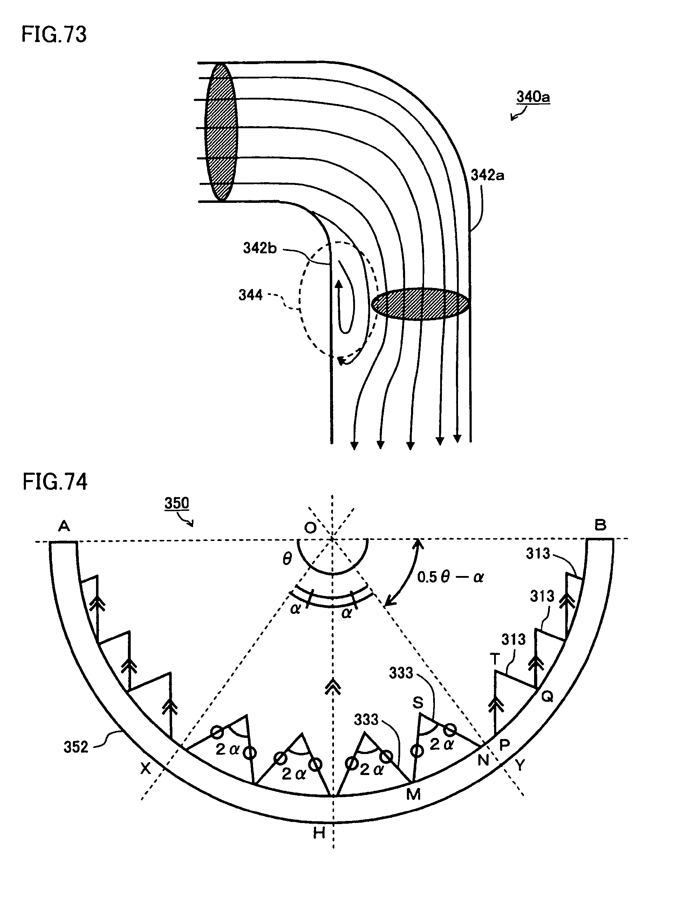

Fig. 73 shows a cross-sectional view of an important part of a dust flocculating duct in which no protrusions are provided on a wall surface of a bent passage thereof.

As shown in Fig. 73, in a case where the dust flocculating duct is formed so as to be the bent passage, due to a centrifugal force, a gas flow and dust which circulate through the agitation flocculating duct 340a may be pressed against the outside portion 342a of the inner wall surface with respect to the center of curvature of the bent passage and may be exfoliated from the inside portion 342b of the inner wall surface with respect to the center of curvature of the bent passage.

In the above-described case, it may occur in the gas flow and dust circulating through the agitation flocculating duct that the gas flow circulating in the vicinity of the outside portion 342a of the inner wall surface with respect to the center of curvature of the bent passage is subjected to strong friction against the outside portion 342a of the inner wall surface and a pressure loss is increased due to a friction loss on the inner wall surface and that the gas flow circulating in the vicinity of the inside portion 342b of the inner wall surface with respect to the center of curvature of the bent passage weakens its kinetic energy, is exfoliated from the duct wall, a contracted flow 344 is brought about therearound, and a pressure loss is drastically increased.

However, in the configuration of the embodiment 3-3-4 shown in Fig. 73, the protrusions, each of which has the shape of the isosceles triangle, are disposed on the outside portion 342a of the inner wall surface with respect to the center of curvature of the bent passage and the protrusions, each of which has the right-left asymmetric triangular shape, are disposed on the inside portion 342b of the inner wall surface with respect to the center of curvature of the bent passage. By employing the above-described configuration, on the outside portion of the inner wall surface with respect to the center of curvature of the bent passage, a sufficient agitation flocculation effect can be attained while the pressure loss is suppressed to some extent; and on the inside portion of the inner wall surface with respect to the center of curvature of the bent passage, a higher agitation flocculation effect can be attained by generating intense vortices and the kinetic energy of the gas flow is enhanced by generating the intense vortices, the exfoliation of the gas flow from the inner wall surface is suppressed, and it can be obviated that the contracted flow is brought about therearound and the pressure loss is drastically increased.

(Embodiment 3-3-5)

Fig. 74 shows a cross-sectional front view of an important part of a dust flocculating duct of an embodiment 3-3-5.

As shown in Fig. 74, an agitation flocculating duct 350 is **characterized in that** when it is supposed that on a cross section on a plane perpendicular to a core axis of the agitation flocculating duct 350, X and Y are set respectively on an arc AH and an arc BH of an arc AHB which is one part of a wall surface of the agitation flocculating duct 350 and one part of the wall surface 352 is an arc AXHYB, groups of protrusions 313, each of which has a first shape of a triangle TPQ, are provided on an arc AX and an arc BY which are both end portions of one part of the agitation flocculating duct 350; and groups of protrusions 333, each of which has a second shape of a triangle SMN, are provided on an arc XHY which is a central portion of the arc AXHYB.

By employing the above-described configuration, in the agitation flocculating duct part which has the wall surface forming the arc AXHYB, intense vortices are generated in the vicinity of the both end portions on the wall surface 352, that is, in the vicinity of the arc AX and the arc BY, and vortices slightly weaker than the above-mentioned vortices are generated in the vicinity of the central portion on the wall surface 352, that is, in the vicinity of the arc XHY.

Thus, not only in areas in the vicinity of the both end portions on the wall surface 352, that is, in the vicinity of the arc AX and the arc BY, an agitation flocculation effect can be maximally enhanced, but also in an area in the vicinity of the central portion on the wall surface 352, that is, in the vicinity of the arc XHY, while an agitation flocculation effect can be attained to some extent, a pressure loss can be suppressed.

(Embodiment 3-3-6)

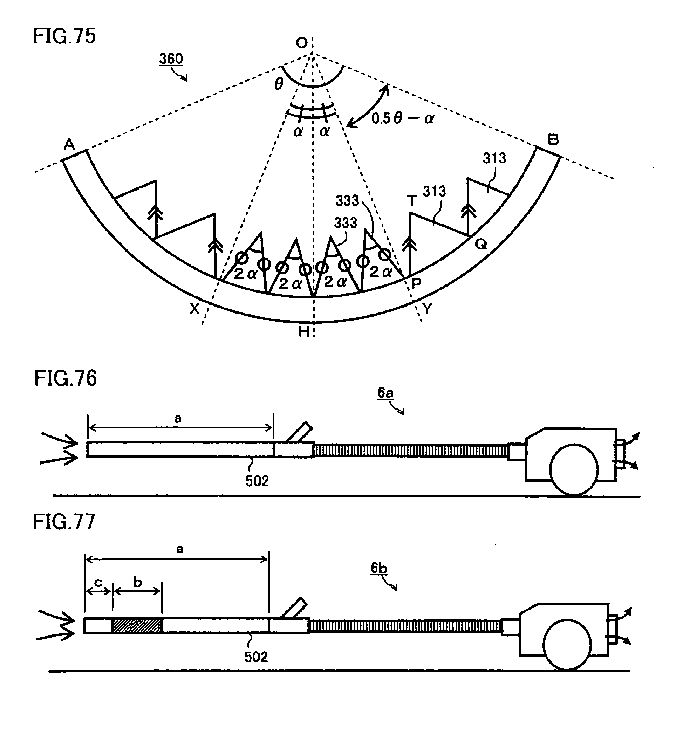

Fig. 75 shows a cross-sectional front view of an important part of a dust flocculating duct of an embodiment 3-3-6.

As shown in Fig. 75, an agitation flocculating duct 360 is **characterized in that** when it is supposed that on a cross section on a plane perpendicular to a core axis of the agitation flocculating duct 360, an angle $\angle$AOB which two lines AO and BO extending from both ends A and B to the core axis O of one part of the agitation flocculating duct 360 form is $\theta$ and an apex angle $\angle$MAN of each of protrusions 333, which has a second shape, is $2\alpha$, the protrusions 333 each having the second shape are set so as to satisfy a condition $\theta > 2\alpha$ and central angles $\angle$AOX and $\angle$BOY which an arc AX and an arc BY form with the core axis O are set so as to satisfy conditions $\angle$ AOX$\geqq$0.5$\theta$-$\alpha$ and $\angle$BOY$\geqq$0.5$\theta$-$\alpha$.

In the above-described configuration, no undercuts are caused upon die molding. Thus, the protrusions which allow a pressure loss to be suppressed to some extent and also moldability to be sufficiently ensured while attaining a sufficient agitation flocculation effect can be formed on a duct wall. Accordingly, the dust flocculating duct having high performance can be molded at low cost without elaborating a complicated die.

(Embodiment 3-3-7)

A dust flocculating duct of an embodiment 3-3-7 is **characterized in that** the dust flocculating duct is an agitation flocculating duct formed by combining a plurality of the above-described parts of the agitation flocculating duct; at least one of the plurality of the parts of the agitation flocculating duct is a first agitation flocculating duct part made of a material which is easily positively electrified by contact and friction and as one part other than said at least one of the plurality of the parts thereof, at least one of the plurality of the parts of the agitation flocculating duct is a second agitation flocculating duct part made of a material which is easily negatively electrified by the contact and friction; and the first agitation flocculating duct part and the second agitation flocculating duct part are provided so as to neighbor each other.

By employing the above-described configuration, the number of times when dust transported by a gas flow is caused to collide with the agitation flocculating duct parts by vortices generated behind protrusions is increased. Since a wall surface of the agitation flocculating duct is formed by the agitation flocculating duct part made of the material which is easily positively electrified by the contact and friction and the agitation flocculating duct part made of the material which is easily negatively electrified by the contact and friction, the dust can be electrified by causing the dust to collide with this wall surface, thereby allowing pieces of the dust to be mutually flocculated due to the Coulomb force.

Preferably, in addition to the above-described configuration, when it is supposed that on a cross section on a plane perpendicular to a core axis of the agitation flocculating duct, X and Y are set respectively on an arc AH and an arc BH of an arc AHB which is one part of a wall surface of the agitation flocculating duct and one part of the wall surface is an arc AXHYB, groups of protrusions, each of which has a first shape of a triangle TPQ, are provided on an arc AX and an arc BY which are both end portions of one part of the agitation flocculating duct; and groups of protrusions, each of which has a second shape of a triangle SMN, are provided on an arc XHY which is a central portion of the arc AXHYB, thereby allowing a further high effect to be attained.

Specifically, in the above-described configuration, not only in an area in the vicinity of the arc XHY which is a central portion on the wall surface, while an agitation flocculation effect can be attained above a certain level, a pressure loss can be suppressed, but also in areas in the vicinity of the arc AX and the arc BY which are both end portions on the wall surface, a high agitation flocculation effect can be attained.

Thus, the pressure loss is minimized in an area contributing only to the electrification of the dust and the agitation flocculation effect can be enhanced in an area contributing to the mutual collision of the pieces of dust which are electrified so as to have polarities which are different from each other, whereby the dust flocculating duct which has an extremely high frictional electrification flocculation effect while suppressing the pressure loss can be obtained.

(Embodiment 3-3-8)

In an embodiment 3-3-8, a molding die is a die which can mold the above-described agitation flocculating duct. The agitation flocculating duct which attains an extremely high agitation flocculation effect can be molded.

The above-described embodiment 3-3-1 through embodiment 3-3-8 are applicable to the below-described embodiment 3-3-A through embodiment 3-3-F.

(Embodiment 3-3-A)

Fig. 39 shows a perspective view in which an important part of a dust flocculating duct of an embodiment 3-3-A is viewed in a perspective manner. Fig. 40 shows a front view illustrating the important part of the dust flocculating duct of the embodiment 3-3-A. Fig. 41 shows a cross-sectional side view illustrating the important part of the dust flocculating duct of the embodiment 3-3-A.

As shown in Fig. 39 through Fig. 41, in the dust flocculating duct 90 of the embodiment 3-3-A, a plurality of protrusions 93 are disposed on an inner surface of a wall 92 of a passage 91. Each of the protrusions 93 is of a triangular pyramid shape. When viewed from an upstream side in a perspective manner, the plurality of protrusions 93 are disposed so as not to completely overlap each other but such that neighboring protrusions 93 only partially overlap each other. In addition, the protrusions 93 are disposed such that the number of protrusions 93 which are present on a plane perpendicular to a flow direction is as small as possible and the plurality of the protrusions 93 disposed so as to be present on a plane perpendicular to a flow direction are disposed so as to be as distant from one another as possible.

In the dust flocculating duct 90 of the embodiment 3-3-A according to the present invention, twin vortices are generated by the protrusions 93. When the plurality of protrusions 93 are viewed from an upstream side in a perspective manner, the plurality of protrusions 93 are disposed so as not to completely overlap each other but such that neighboring protrusions 93 only partially overlap each other. Therefore, the flow circulating along the wall 92 of the passage 91 invariably passes the protrusions 93.

The protrusions 93 in the embodiment 3-3-A have the below-described advantage. Specifically, in the dust flocculating duct 90 of the embodiment 3-3-A, the protrusions 93 are disposed such that the number of protrusions 93 which are present on the plane perpendicular to the flow direction is as small as possible and the plurality of the protrusions 93 disposed so as to be present on the plane perpendicular to the flow direction are disposed so as to be as distant from one another as possible. Therefore, a decrease in an area of the passage at positions where the protrusions 93 are present is small, and a pressure loss in the dust flocculating duct 90 is also small accordingly.

Accordingly, by using the dust flocculating duct 90 of the embodiment 3-3-A, a great effect of reducing the pressure loss can be attained. For example, by using the dust flocculating duct 90 whose length is tripled, the pressure loss can be reduced without deteriorating performance of flocculation caused when the particulates collide with one another. Therefore, for example, in a case where an output and a static pressure rise of a driving source (for example, a fan, a blower, or the like) for generating a flow circulating in the passage 91 are small or where the driving source is susceptible to the pressure loss, performance of a whole system including the dust flocculating duct 90 and the driving source is enhanced.

(Embodiment 3-3-B)

Fig. 29 shows a perspective view in which an important part of a dust flocculating duct of an embodiment 3-3-B according to the present invention is viewed in a perspective manner. Fig. 30 shows a front view illustrating the important part of the dust flocculating duct of the embodiment 3-3-B.

As shown in Fig. 29 and Fig. 30, in the dust flocculating duct 70 of the embodiment 3-3-B according to the present invention, a plurality of protrusions 73a and a plurality of protrusions 73b are disposed on an inner surface of a wall 72 of a passage 71. Each of the protrusions 73a and protrusions 73b has a triangular bottom.

Fig. 31 is a diagram illustrating the protrusion in the embodiment 3-3-B. Fig. 31 (A) shows a bottom view of the protrusion, Fig. 31 (B) shows a side view of the protrusion, and Fig. 31 (C) shows a front view of the protrusion. It is supposed that an upstream side of a passage is a front side.

As shown in Fig. 31, the bottom of the protrusion 73a is of a right triangle EFG whose respective sides has lengths with EF : FG : GE = $1 : 2 : \sqrt{3}$. The bottom EFG of the protrusion 73a is jointed to an inner surface of a wall 72 of a passage 71 such that among respective apices of the right triangle, an apex G having an angle of 30 degrees is disposed on an upstream side of a flow and a side EF spanning between an apex having an angle of 60 degrees and an apex having an angle of 90 degrees is disposed so as to be perpendicular to a flow direction. The remaining one apex I of the protrusion 73a is formed so as to project into the passage 71 from the wall 72.

The protrusion 73a is of a shape in which when a representative length of a passage width on a plane perpendicular to the flow direction of the passage 71 (a length of a side in a case of a square passage and a diameter in a case of a circular passage) is supposed to be D, a length GE in the flow direction is (3/8)D; an angle formed by the flow direction and a hypotenuse is 30 degrees in a clockwise manner when the protrusion 73a is viewed from the upstream side to a downstream side; and a height h of the protrusion 73a is (1/8)D. In a shape of the protrusion 73b which neighbors the protrusion 73a, an angle formed by the flow direction and a hypotenuse is 30 degrees in a counterclockwise manner when the protrusion 73b is viewed from the upstream side toward the downstream side. On the wall 72 of the passage 71, four protrusions 73a are disposed in an evenly-spaced manner; four protrusions 73b are disposed respectively between the two protrusions 73a; and the protrusions 73a and the protrusions 73b are disposed so as to each face toward opposite directions.

Fig. 32 is a schematic diagram illustrating a gas flow around the protrusion of the embodiment 3-3-B.

As shown in Fig. 32, a flow velocity V9 of a flow along a hypotenuse GI of the protrusion 73a is slightly lower than a flow velocity P of a fluid circulating through the passage 71 because the flow is stemmed by collision of the flow against the protrusion 73a. On the other hand, a flow velocity V10 of a flow along the side GE, in the flow direction, of the protrusion 73a is the substantially same as the flow velocity P of the fluid circulating through the inside the passage 71. Therefore, when a relative velocity in an area surrounding the protrusion 73a with reference to the flow velocity of the fluid circulating through the passage 71 is considered, a circulation which circulates around the protrusion 73a from the upstream side to the downstream side of the passage 71 on the side GE in the flow direction and from the downstream side to the upstream side of the passage 71 on a hypotenuse FG occurs. Due to this circulation, a horseshoe vortex V11 is generated from the apex of the protrusion 73a which is triangular pyramid-shaped and the horseshoe vortex V11 moves downstream along a downstream portion of the wall 72 of the passage 71. This horseshoe vortex 11 imparts a swirl to the flow circulating downstream of the protrusion 73a. Although also on the protrusion 73b, a horseshoe vortex is formed as similarly to on the protrusion 73a, a direction in which the horseshoe vortex swirls on the protrusion 73b is opposite to the direction in which the horseshoe vortex on the protrusion 73a swirls.

In the embodiment 3-3-B, since each of the heights h of the protrusion 73a and the protrusion 73b is (1/8)D, a diameter of the horseshoe vortex V11 immediately after the occurrence of the horseshoe vortex is (1/8)D or slightly larger than (1/8)D though depending on the flow velocity of the fluid circulating through the passage 71. In a case where sizes of particulates to be flocculated are mainly in micrometer order, the phenomenon that particularly in the area from the wall 72 of the passage 71 having the diameter D to a position which is (1/8)D distant from the wall 72, the density of distribution of the particulates to be flocculated is high is observed. Therefore, the protrusions 73a and the protrusions 73b in the embodiment 3-3-B actively agitate the gas passing the area from the wall 72 of the passage 71 to the position which is (1/8)D distant from the wall 72, where the density of distribution of the particulates to be flocculated is high, by generating the horseshoe vortices.

As described above, in the dust flocculating duct 70, because each of the heights of the protrusion 73a and the protrusion 73b from the wall 72 is one eighth of a representative length of a cross section which is perpendicular to a direction of the flow of the gas passing through the passage 71, a foreign substance is hardly caught by the protrusion 73a and the protrusion 73b.

Fig. 33 is a schematic diagram illustrating a view of the vortices generated by the protrusions in the embodiment 3-3-B according to the present invention. Fig. 33 (A) shows a view in which the passage is viewed from a front side and Fig. 33 (B) shows a view in which the passage is viewed from a lateral side.

As shown in Fig. 33, in the vicinity of the wall 72 of the passage 71, eight horseshoe vortices V11 are generated and pairs of neighboring vortices of the eight horseshoe vortices V11 each swirl in respectively opposite directions. Since the neighboring vortices each swirl in the opposite directions, when flow line vectors on a plane perpendicular to the direction of the flow are considered, one vector of a flow in a plane, on which the vortices neighbor each other, swirls from a central portion of the passage in a direction toward the wall surface and another vector thereof also swirls in the same direction; and the one vector thereof swirls from the wall surface of the passage in a direction toward the central portion of the passage and the another vector thereof also swirls in the same direction. Therefore, the vectors of the flow can smoothly converge, thereby decreasing a frictional resistance caused by a viscosity of the flow. Thus, in the dust flocculating duct 70 in the embodiment 3-3-B, a pressure loss due to the vortices is reduced.

In a case where a rod-like foreign substance having a length of D and a thickness of 0.05D is mixed in a fluid circulating through the passage 71, when each of the protrusions is of a shape having a curved portion, one end of the rod-like foreign substance is caught by one of the protrusions and another end of the rod-like foreign substance is caught by another of the protrusions, whereby a failure that the dust flocculating duct is clogged with the foreign substance is likely to occur. On the other hand, in the dust flocculating duct 70 of the embodiment 3-3-B, the protrusion 73a has no depression and on each of the protrusion 73a and the protrusion 73b, an oblique surface is formed, whereby the above-mentioned rod-like foreign substance or the like is hardly caught by the protrusions.

As described above, in the dust flocculating duct 70, an area of a cross section of each of the protrusions 73a and the protrusions 73b in a direction perpendicular to the direction of the gas flow is small on the upstream side and large on the downstream side. This causes a foreign substance to be hardly caught by the protrusions 73a and the protrusions 73b.

Accordingly, by using the dust flocculating duct 70 of the embodiment 3-3-B, for example, in a case where the rod-like foreign substance or the like is likely to be mixed in the flow, since the failure that the rod-like foreign substance is caught by the turbulence generating parts can be prevented, a highly reliable dust flocculating duct can be obtained.

The shape of each of the protrusions in the dust flocculating duct 70 of the embodiment 3-3-B may be of a shape shown in Fig. 63 through Fig. 65.

Fig. 63 shows a perspective view in which an important part of the dust flocculating duct 70 of the embodiment 3-3-B according to the present invention, in which protrusions each having another shape are disposed, is viewed in a perspective manner. Fig. 64 shows a front view illustrating the important part of the dust flocculating duct of the embodiment 3-3-B according to the present invention, in which the protrusions each having the another shape are disposed. Fig. 65 shows a cross-sectional side view illustrating the dust flocculating duct of the embodiment 3-3-B according to the present invention, in which the protrusions each having the another shape are disposed.

As shown in Fig. 63 through Fig. 65, in a passage 121 of the dust flocculating duct 120, protrusions 123 are disposed on an inner surface of a wall 122 of the passage 121.

(Embodiment 3-3-C)

Fig. 34 shows a perspective view in which an important part of a dust flocculating duct of an embodiment 3-3-C is viewed in a perspective manner. Fig. 35 shows a front view illustrating the important part of the dust flocculating duct of the embodiment 3-3-C. Fig. 36 shows a cross-sectional side view of the dust flocculating duct of the embodiment 3-3-C.

As shown in Fig. 34 through Fig. 36, in the embodiment 3-3-C, a plurality of protrusions 83 are disposed, instead of the protrusions 73a and the protrusions 73b in the embodiment 3-3-B. Each of the protrusions 83 is of a triangular pyramid shape.

Fig. 37 shows a top view (A) and a lateral view (B) of a shape of each of the protrusions in the embodiment 3-3-C.

As shown in Fig. 37, each of the protrusions 83 is of a triangular pyramid-shape whose bottom JKL is of an isosceles triangle with a base KL : a height JM = 1 : 2. The bottom JKL is jointed to a wall surface of the passage such that the smallest angle J of the isosceles triangle of the bottom is disposed on an upstream side of a flow and the base KL is disposed so as to be perpendicular to a flow direction. When an apex of the triangular pyramid-shaped protrusion is supposed to be N, the protrusion is formed such that a perpendicular spanning from the apex N to the isosceles triangle of the bottom passes M, that is, such that NM is perpendicular to JM and KL, respectively. The protrusion is of a shape in which when a representative length of a passage width on a plane perpendicular to a flow direction of a passage 81 (a length of a side in a case of a square passage and a diameter in a case of a circular passage) is supposed to be D, a length JM in the flow direction is (1/2)D; and a triangular pyramid height NM is (1/8)D.

In addition, on an inner surface of a wall 82 of a passage 81, a large number of protrusions 83 are disposed in a regular manner. In the dust flocculating duct 80, the plurality of protrusions 83 are disposed at intervals of (3/2)JM in the flow direction and at intervals of (3/2)KL in a direction perpendicular to the flow direction. The plurality of protrusions 83 are disposed such that with respect to one of the protrusions 83, another of the protrusions 83 is disposed so as to be (3/4)JM displaced from the one of the protrusions 83 in the flow direction and further another of the protrusions 83 is disposed so as to be (3/4)KL displaced from the one of the protrusions 83 in the direction perpendicular to the flow direction; and the other protrusions 83 are disposed in the same manner. In other words, the plurality of protrusions 83 are disposed in a manner of the so-called staggered arrangement and in a multistage manner such that when it is supposed that one pitch in the flow direction is (3/2)JM and one pitch in the direction perpendicular to the flow direction is (3/2)KL, the protrusions 83 are disposed so as to be 0.5 pitch displaced, each in the flow direction and the direction perpendicular to the flow direction, from one another.

When these protrusions 83 are viewed from an upstream side in a perspective manner, the plurality of protrusions 83 are disposed so as not to completely overlap each other but such that neighboring protrusions 83 only partially overlap each other.

In the dust flocculating duct 80 of the embodiment 3-3-C, a flow circulating in the vicinity of the inner surface of the wall 82 of the passage 81 is lifted up to a side of an apex N with respect to the bottom of the triangular pyramid due to slopes of surfaces JNK and JNL of the protrusion 83 which is triangular pyramid-shaped and is wound up to a side of a central portion of the passage, generating weak twin vortices on a downstream side of the apex N. The flow circulating through the dust flocculating duct 80 of the embodiment 3-1-B is sequentially agitated such that the flow is agitated by weak twin vortices, generated by the protrusion 83 which the flow first meets, and circulates downstream; the flow is agitated again by weak twin vortices, generated by the protrusion 83 which the flow next meets, and circulates further downstream; and the flow is agitated further again by weak twin vortices, generated by the protrusion 83 which the flow further next meets. Such agitation is repeated at the plurality of protrusions 83. As mentioned above, in the case where the sizes of particulates to be flocculated are mainly in micrometer order, a phenomenon that particularly in an area from the wall 82 of the passage 81 having the diameter D to a position which is (1/8)D distant from the wall 82, a density of distribution of the particulates to be flocculated is high is observed. Therefore, the plurality of protrusions 83 disposed in the multistage manner in the embodiment 3-3-C actively agitate the area from the wall 82 of the passage 81 to the position which is (1/8)D distant from the wall 82, where the density of distribution of the particulates to be flocculated is high, by using the plurality of twin vortices.

As described above, in the dust flocculating duct 80, because each of the heights of the protrusions 83 from the wall 82 is less than or equal to one eighth of a representative length of a cross section which is perpendicular to the direction of the flow of the gas passing through the passage 81, a foreign substance is hardly caught by the protrusions 83.

In addition, when the plurality of protrusions 83 are viewed from the upstream side in the perspective manner, the plurality of protrusions 83 are disposed so as not to completely overlap each other but such that the neighboring protrusions 83 only partially overlap each other. Therefore, the flow circulating along the wall 82 of the passage 81 invariably meets the protrusions 83. Thereafter, the flow circulating along the wall 82 of the passage 81 passes through the dust flocculating duct 80 while circulating downstream and accordingly meeting the protrusions 83 repeatedly.

As described above, in the dust flocculating duct 80, the plurality of protrusions 83 are disposed along the direction of the gas flow in the passage 81 so as to partially overlap each other when viewed from the upstream side toward the downstream side of the passage 81 in the perspective manner. This allows the gas flowing through the passage 81 to easily pass around the protrusions 83, thereby enabling efficient generation of the vortices.

Accordingly, in the dust flocculating duct 80 of the embodiment 3-3-C, the gas flow circulating in the area from the wall 82 of the passage 81 to the position which is (1/8)D distant from the wall 82 can be most efficiently agitated and the number of the generated twin vortices can be increased.

As described above, in the dust flocculating duct 80, the plurality of protrusions 83 are disposed along the direction of the gas flow in the passage 81 so as to partially overlap each other when viewed from the upstream side toward the downstream side of the passage 81 in the perspective manner. This allows the gas flowing through the passage 81 to easily pass around the protrusions 83, thereby enabling efficient generation of the vortices.

In addition, in a case where a foreign substance or the like (for example, a cloth-like or mesh-like material such as a handkerchief and pantyhose), for example, which is of a soft cloth-like material and has a size substantially equal to the diameter of the passage 81 is mixed in a fluid circulating through the dust flocculating duct 80, when each of the protrusions in the dust flocculating duct is of a shape having a curved portion or a rectangular portion, the cloth-like foreign substance is easily caught by the protrusions, whereby a failure that the dust flocculating duct is clogged with the foreign substance is likely to occur. In the embodiment 3-3-C, since the protrusions 83 are formed as the smooth triangular pyramid-shaped protrusions on the upstream side of the flow, the above-mentioned cloth-like foreign substance or the like is hardly caught by the protrusions 83.

Accordingly, by using the dust flocculating duct 80 of the embodiment 3-3-C, sufficient flocculation performance can be attained through the agitation by the large number of twin vortices. Moreover, for example, in a case where the cloth-like foreign substance or the like is likely to be mixed in the flow, since the failure that the cloth-like foreign substance is caught by the turbulence generating parts can be prevented, a highly reliable dust flocculating duct 80 can be obtained as compared with the dust flocculating ducts of the embodiment 3-1 through the embodiment 3-3-B.

(Embodiment 3-3-D)

Fig. 42 shows a perspective view in which an important part of a dust flocculating duct of an embodiment 3-3-D is viewed in a perspective manner. Fig. 43 shows a front view illustrating an important part of a dust flocculating duct of the embodiment 3-3-D. Fig. 44 shows a cross-sectional side view of the dust flocculating duct of the embodiment 3-3-D.

As shown in Fig. 42 through Fig. 44, in the dust flocculating duct 100 of the embodiment 3-3-D, a plurality of protrusions 103 are provided on an inner surface of a wall 102 of a passage 101. Each of the protrusions 103 is formed so as to be of the same triangular pyramid shape as that of each of the protrusions 83 in the embodiment 3-3-C but an arrangement or a disposition thereof is different from that of the embodiment 3-3-C. In other words, when viewed from an upstream side, the plurality of protrusions 103 are disposed so as not to overlap each other and the neighboring protrusions 103 are disposed in an evenly-spaced manner. In addition, a configuration of the plurality of protrusions 103 may be provided such that the plurality of protrusions 103 are not disposed on a plane in a direction perpendicular to a flow direction. The other parts are the same as those of the embodiment 3-1-B.

In the dust flocculating duct 100 of the embodiment 3-3-D, the substantially same twin vortices as those in the embodiment 3-3-C are generated by the protrusions 103. However, because the number of the protrusions 103 is small, as compared with that of the protrusions 83 in the embodiment 3-1-B, and the plurality of protrusions 103 are disposed so as not to overlap each other when viewed from the upstream side, many parts of a flow circulating along the wall 102 of the passage 101 each meet one of the protrusions 103 once and a part, which circulates between one of the protrusions 103 and another of the protrusions 103, of the many parts of the flow never meets any one of the protrusions 103. Therefore, in the dust flocculating duct 100 of the embodiment 3-3-D, agitation which can be imparted to the flow is drastically reduced, as compared with the dust flocculating duct 80 of the embodiment 3-3-C.

However, the dust flocculating duct 100 of the embodiment 3-3-D has an advantage that a method of molding the dust flocculating duct 100 is extremely easy. In other words, when viewed from the upstream side, the plurality of protrusions 103 are disposed so as not to overlap each other and the neighboring protrusions 103 are disposed in an evenly-spaced manner. Therefore, for example, in a case where the dust flocculating duct 100 is formed through resin-molding, a molding die is configured such that the upstream side of the dust flocculating duct 100 is set on a movable side of the molding die and a downstream side of the dust flocculating duct 100 is set on a fixed side of the molding die, thereby allowing the dust flocculating duct 100 to be integrally molded without requiring a complicated configuration of the molding die.

In addition, for example, in a case where a foreign substance (for example, something like a milk bottle cap) which is of a plate-like shape and has an area approximate to an area of a cross section of the passage 101 or the like is mixed in a fluid circulating through the dust flocculating duct 100, for example, since a plurality of turbulence generating parts are disposed so as to be present in the plane in the direction perpendicular to the flow direction, an edge of the plate-like shaped foreign substance having the area approximate to the area of the cross section of the passage is highly likely to be caught concurrently by the plurality of protrusions and thereby, a failure that the dust flocculating duct is clogged with the foreign substance is likely to occur. However, in the embodiment 3-1-C, since the configuration of the plurality of protrusions 103 is provided such that the plurality of protrusions 103 are not disposed so as to be present in the plane in the direction perpendicular to the flow direction, the plate-like shaped foreign substance, having the area approximate to the area of the cross section of the passage 101, or the like is hardly caught by the plurality of protrusions.

Accordingly, not only moldability of the dust flocculating duct 100 of the embodiment 3-3-D is excellent but also, for example, in the case where the plate-like shaped foreign substance, having the area approximate to the area of the cross section of the passage, or the like is likely to be mixed in the flow, the failure that the foreign substance is caught by the turbulence generating parts and thereby, the dust flocculating duct is clogged with the foreign substance can be prevented. As described above, the dust flocculating duct having both the extremely high moldability and extremely high reliability can be obtained.

Fig. 45 through Fig. 49 are schematic diagrams illustrating the other arrangements of the protrusions in the embodiment 3-3-D. In each of Fig. 45 through Fig. 49, a diagram (A) with the protrusions viewed in a direction perpendicular to a direction of a passage and a schematic diagram (B) with the protrusions viewed from the upstream side of the flow are shown.

As shown in Fig. 45, a plurality of protrusions 103 are disposed on an inner circumferential surface in the direction perpendicular to the flow. In a case where the protrusions are disposed so as to be close to one another or in a cylindrical-shaped duct, when the plurality of protrusions 103 are disposed in a plane in the direction perpendicular to the flow, preferably each with approximately 90 degrees of an interior angle on the cross section of the passage, both extremely high moldability and extremely high reliability can be concurrently attained.

As shown in Fig. 46, a configuration of the protrusions 103 is provided such that neighboring protrusions 103 are slightly displaced from each other to avoid mutual overlapping of the neighboring protrusions 103, thereby preventing the duct from being clogged with the foreign substance due to the protrusions. As a configuration which allows the same effect as mentioned above to be attained, as shown in Fig. 47, a configuration is provided such that the protrusion are divided into several groups and the groups are mutually displaced from one another in the direction of the flow. As shown in Fig. 48 and Fig. 49, a sawtooth-like arrangement can be shown in an illustrative manner. By employing any of these arrangements of the protrusions 103, extremely high moldability can be attained.

Fig. 50 is a diagram illustrating an arrangement of neighboring protrusions in the dust flocculating duct of the embodiment 3-3-D.

As shown in Fig. 50, when the protrusions 103 are disposed so as not to overlap each other in a projection plane which is viewed from a direction parallel to the direction of the flow and a distance between the neighboring protrusions 103 is supposed to be W, W is expressed by the following equation.

$$W = 2\alpha + \gamma\tan\beta \text{ (note: } \alpha, \beta, \text{ and } \gamma \text{ are any positive integers.)}$$

With respect to the protrusions 103, it is supposed that $\alpha$ and $\beta$ are greater than or equal to 3 mm, respectively, and $\gamma$ (mm) is any number.

When the dust flocculating duct 100 is produced by using a molding die which is separated in a direction S parallel to the gas flow, the passage 101 and the protrusions 103 can be simultaneously molded. This allows a molding cost to be drastically reduced. Regarding the distance between the protrusions 103, by ensuring a lower limit of W (mm), the protrusions can be disposed so as not to overlap each other in the projection plane perpendicular to the gas flow and a strength in portions of the molding die, which come between the protrusions, can be ensured.

(Embodiment 3-3-E)

Fig. 51 shows a perspective view in which an important part of a dust flocculating duct of an embodiment 3-3-E is viewed in a perspective manner. Fig. 52 shows a front view illustrating an important part of the dust flocculating duct of the embodiment 3-3-E. Fig. 53 shows a cross-sectional side view of the dust flocculating duct of the embodiment 3-3-E.

As shown in Fig. 51 through Fig. 53, in the embodiment 3-3-E according to the present invention, a plurality of protrusions 113 are provided on a wall 112 of a passage 111, instead of the protrusions 83 in the embodiment 3-3-C. Each of the protrusions 113 is of a triangular pyramid shape (a length, in a flow direction, of JM=(1/4)D; and a height of a triangular pyramid of NM=(1/16)D) which is a similar figure of each of the protrusions in the embodiment 1-8 and has a size of 1/2 of a size of each of the protrusions 83 in the embodiment 3-3-C. Also in an arrangement thereof, the protrusions 113 are disposed in a 1/2-similar manner. The number of the triangular pyramid shaped protrusions 113 is set to be approximately four times the number of those in the embodiment 3-3-C. The other parts are the same as those in the embodiment 3-3-C.

In the dust flocculating duct 110 of the embodiment 3-3-E, twin vortices, each of which has a size of 1/2 of a size of each of the vortices generated by the protrusions 83 in the embodiment 3-3-C and has a shape substantially similar to each of the vortices generated by the protrusions 83 in the embodiment 3-3-C, are generated by the protrusions 113. Intensities of the twin vortices generated by one of the protrusions 113 are reduced as compared with those of the twin vortices generated by one of the protrusions 83 in the embodiment 3-3-C. However, since a large number of the protrusions 113 are provided, agitation substantially similar to the agitation imparted in the embodiment 3-3-C can be imparted to a flow.

As described above, in a case where sizes of particulates to be flocculated are mainly in micrometer order, a phenomenon that particularly in an area from the wall surface of the passage 111 having a diameter D to a position which is (1/8)D distant from the wall surface, a density of distribution of the particulates to be flocculated is high is observed. However, in the embodiment 3-1-D, since the plurality of protrusions 113 are disposed in a multistage manner so as to each have the height (1/16)D, in the area from the wall 112 of the passage 111 having the diameter D to the position (1/8)D, where the density of distribution of the particulates to be flocculated is particularly high, there is a limitation that only a half of such an area can be actively agitated.

However, the protrusions 113 in the embodiment 3-3-E have the following advantage: since each of the protrusions 113 has the height of (1/16)D which is 1/2 of the height of each of the protrusions 83 in the embodiment 3-3-C, a reduction of a passage area due to the protrusions 113 disposed so as to be present in the same plane in the direction perpendicular to the flow is 1/4 of that in the embodiment 3-3-C, thereby markedly reducing also a pressure loss in the dust flocculating duct 110, as compared with that in the dust flocculating duct 80 in the embodiment 3-1-B.

Furthermore, in the embodiment 3-3-E, owing to the height of (1/16)D which each of the protrusions 113 has, the twin vortices generated by the protrusions 113 exert an influence on a velocity boundary layer which develops on the wall 112 of the passage 111 of the dust flocculating duct 110, thereby attaining an effect that a thickness of the velocity boundary layer is decreased.

In general, in the vicinity of the wall surface in the passage, due to a viscosity of a fluid circulating through the passage, the velocity boundary layer develops. A flow velocity in the boundary layer is low as compared with that in a middle portion of the passage and a resistance against a flow in the boundary layer is high. In other words, when the boundary layer develops and the thickness of the boundary layer increases, an area of a region which allows an easy flow decreases and an behavior observed as if an apparent area of a cross section of the passage decreased is exhibited. Accordingly, when the boundary layer develops and the thickness of the boundary layer increases, the pressure loss of the passage increases.

Because the twin vortices generated by the protrusions 113 in the embodiment 3-3-E are small in scale and generated in the vicinity of the wall surface, the twin vortices generated by the protrusions 113 suppress the development of the above-mentioned boundary layer, thereby decreasing the resistance against the flow around the wall surface of the passage and drastically reducing the pressure loss in the passage 111.

For example, in a case where a diameter D of the passage 111 is 40 mm and a representative velocity of the flow is 25 m/second at ordinary temperatures and pressures, the experimental result showed a relationship: (a pressure loss due to a portion in which turbulence occurs) < (an effect of suppressing the development of the boundary layer due to the portion in which turbulence occurs) and despite the presence of the large number of the protrusions 113, the dust flocculating duct 110 having a smaller pressure loss than that of a duct having no protrusions was obtained.

In addition, also in a case where a foreign substance or the like is mixed in the fluid circulating through the dust flocculating duct 110, because the height of each of the protrusions 113 is 1/2 of the height of each of the protrusions 83 in the embodiment 3-3-C, the foreign substance is hardly caught by the protrusions 113, as compared with the protrusions 83 in the embodiment 3-3-C.

Accordingly, through using the dust flocculating duct 110 of the embodiment 3-3-E, sufficient flocculation performance is attained owing to the agitation by the large number of the twin vortices and further, a duct frictional resistance can be reduced, thereby obtaining the dust flocculating duct 110 which allows the pressure loss to be drastically reduced. In addition, for example, also in a case the foreign substance or the like is likely to be mixed in the flow, a failure that the foreign substance is caught by the protrusions 113 and causes clogging can be substantially completely prevented, thereby obtaining the dust flocculating duct 110 which realizes extremely high reliability.

(Embodiment 3-3-F)

A dust flocculating duct of an embodiment 3-3-F has any of the protrusions in the embodiment 3-3-A through the embodiment 3-3-E on a part of an upstream side of a passage thereof. A part of a downstream side of the passage or the protrusions have a first electrification part for positively contact-electrifying dust contained in gas circulating through the passage and a second electrification part for negatively contact-electrifying the dust contained in the gas circulating through the passage. The first electrification part and the second electrification part are disposed so as to face each other.

In the above-described configuration, the gas flowing into the dust flocculating duct of the embodiment 3-3-F passes through the dust flocculating duct while undergoing the following steps: a step at which the dust is guided into the passage by the gas flow; a step at which the dust is transported through an inside of the passage by the gas flow traveling forward; a step at which the dust circulates along the wall surface of the passage; a step at which the dust is caused to collide with the protrusions projecting from the wall surface of the passage; a step at which the dust is caught up in vortical flows generated downstream of the protrusions and circulates; a step at which the dust is caused to collide with the wall surface of the passage by the vortical flows a plurality of times; a step at which a plurality of pieces of the dust are caused to collide with one another by the vortical flows; a step at which the plurality of pieces of the dust in collision with one another form the dust masses (clusters); and a step at which the dust masses are transported through the inside of the passage by the gas flow.

At this time, the gas flow circulating through the first electrification part and the second electrification part is controlled in the below-described manner. Specifically, when the dust is transported through the inside of the passage by the gas flow, gas flow control is performed so as to electrify the dust by causing the dust to collide with the surface of the wall and the protrusion and thereafter, so as to cause the particulates of the dust to collide with one another; and a period of causing a plurality of pieces of the dust in collision with one another to form dust masses (clusters) is provided.

In the above-described manner, collision of the dust which has been caused to collide with the first electrification part and been positively electrified and the dust which has not collided with the first electrification part is facilitated. When the former dust and the latter dust collide with each other, dielectric polarization occurs on a surface of the latter dust due to the electric charge of the former dust and a strong bonding force is generated between the former dust and the latter dust due to an electrostatic force. Due to this bonding force, a first dust mass in which the plurality of pieces of dust have been flocculated is generated. The first dust mass has been positively electrified as a whole. By the same mechanism as that by which the first dust mass is generated, a second dust mass which has been negatively electrified as a whole is generated by the second electrification part.

Further gas flow control is performed so as to cause positively electrified first dust mass generated by the first electrification part and negatively electrified second dust mass generated by the second electrification part to collide with each other; and a period of bonding the first dust mass and the second dust mass in collision with each other due to an electrostatic force and of forming further large dust masses (large clusters) is provided.

By performing the gas flow control as described above, collision of the first dust mass which has been positively electrified as a whole and the second dust mass which has been negatively electrified as a whole is facilitated.

Upon the collision of the first dust mass and the second dust mass, due to a strong electrostatic force generated from the positive electric charge which the former dust mass has and the negative electric charge which the latter dust mass has, a further strong bonding force is generated between the former dust mass and the latter dust mass. Due to this bonding force, a large dust mass in which the plurality of dust masses have been further flocculated is generated.

By performing the gas flow control as described above, the flocculation of fine dust, which is caused by the collision, is repeated, thereby forming large dust masses (large clusters).

As described above, in the dust flocculating duct, the wall and/or the vortex generating part(s) have/has the first electrification part for positively contact-electrifying the dust contained in the gas circulating through the passage and the second electrification part for negatively electrifying the dust contained in the gas circulating through the passage and the first electrification part and the second electrification part are disposed so as to face each other. By employing the above-described configuration, when the dust is transported by the gas flow through the passage, the dust contacts the first electrification part or the second electrification part and is positively or negatively electrified by the first electrification part for positively contact-electrifying the dust and the second electrification part for negatively contact-electrifying the dust, whereby the positively or negatively electrified dust can be caused to form the dust masses (clusters). This causes the positively or negatively electrified dust to adsorb each other by electrostatic action, thereby causing the dust to form the dust masses (clusters).

On the inner surface of the wall of the passage, the plurality of protrusions are provided. The plurality of protrusions are disposed such that the plurality of protrusions partially overlap each other when viewed from an upstream side of the dust flocculating duct in a perspective manner, whereby the dust is caused to easily collide with the wall surface or the protrusions.

As described above, in the dust flocculating duct having both of the vortex generating part(s) and the electrification parts, since the vortex generating part(s) protrude(s) toward an inside of the passage, the particulates easily contact the inner wall. Further, an area of the wall surface is increased owing to the vortex generating part(s), thereby allowing an increase in the probability with which the particulates collide with the wall surface. Since the probability with which the particulates collide with the wall surface can be increased by the vortices generated by the vortex generating part(s), the number of times when the particulates contact the inner wall can be increased. Since this allows the particulates in the dust to be further easily electrified, the dust particulates are further easily flocculated and the generation of the dust masses is facilitated.

In a case where as further another embodiment according to the embodiment 3-3-F, each of the dust flocculating ducts of the embodiment 3-3-A through the embodiment 3-3-E is formed by using an electrification member, as the protrusions, first protrusions for positively contact-electrifying the dust contained in the gas circulating through the passage and second protrusions for negatively contact-electrifying the dust contained in the gas circulating through the passage may be included, and the first protrusions and the second protrusions may be disposed such that each of the first protrusions and each of the second protrusions face each other, respectively.

By employing the above-described configuration, when the dust is transported by the gas flow through the passage, the dust contacts the first protrusions or the second protrusions and is positively or negatively electrified, whereby the positively or negatively electrified dust can be caused to form the dust masses (clusters). This causes the positively or negatively electrified dust to adsorb each other by electrostatic action, thereby causing the dust to form the dust masses (clusters).

In addition, it is preferable in the dust flocculating duct of the embodiment 3-3-F that the protrusions are made of the same material as the material forming the wall.

This allows a flocculation effect to be enhanced since the particulates in the dust contained the gas circulating through the inside of the passage are electrified by the collision with either of the wall or the protrusions.

(Embodiment 3-3-G)

A dust flocculating duct of an embodiment 3-3-G according to the present invention has any of the protrusions in the embodiment 3-3-A through the embodiment 3-3-E on a part of an upstream side of a passage thereof. A part of a downstream side of the passage or the protrusions are made of a material which is capable of positively or negatively contact-electrifying dust contained in gas circulating through the passage.

In the dust flocculating duct having the above-described configuration, sequentially performed are a step at which the dust is guided into the passage by a gas flow; a step at which the dust is transported through an inside of the passage by the gas flow traveling forward; a step at which the dust circulates along a wall surface of the passage; a step at which the dust is caused to collide with the protrusions projecting from the wall surface of the passage; a step at which the dust is caught up in vortical flows generated downstream of the protrusions and circulates; a step at which the dust is caused to collide with the wall surface of the passage by the vortical flows a plurality of times; a step at which a plurality of pieces of the dust are caused to collide with one another by the vortical flows; a step at which the plurality of pieces of the dust in collision with one another form the dust masses (clusters); and a step at which the dust masses are transported through the inside of the passage by the gas flow.

At this time, the gas flow circulating through the dust flocculating duct is controlled in the below-described manner. Specifically, when the dust is transported through the inside of the passage by the gas flow, gas flow control is performed so as to electrify the dust by causing the dust to collide with the surface of the wall and the protrusion and thereafter, so as to cause the particulates of the dust to collide with one another; and a period of causing a plurality of pieces of the dust in collision with one another to form dust masses (clusters) is provided.

This facilitates collision of the dust which has collided with the dust flocculating duct and been positively or negatively electrified and the dust which has not collided with the dust flocculating duct. When the former dust and the latter dust collide with each other, dielectric polarization occurs on a surface of the latter dust due to the electric charge of the former dust and a strong bonding force is generated between the former dust and the latter dust due to an electrostatic force. Due to this bonding force, dust masses (clusters) in which the plurality of pieces of dust have been flocculated are generated.

By performing the gas flow control as described above, fine dust is flocculated by the collision, thereby forming dust masses (clusters).

In a case where as further another embodiment according to the embodiment 3-3-G, each of the dust flocculating ducts of the embodiment 3-3-A through the embodiment 3-3-E is formed of an electrification member, the protrusions may be formed of a material which is capable of positively or negatively contact-electrifying the dust contained in the gas circulating through the passage.

This facilitates collision of the dust which has collided with the protrusions of the dust flocculating duct and been positively or negatively electrified and the dust which has not collided with the protrusions of the dust flocculating duct. When the former dust and the latter dust collide with each other, dielectric polarization occurs on a surface of the dust which has not collided with the protrusions of the dust flocculating duct due to the electric charge of the dust which has collided with the protrusions of the dust flocculating duct and been positively or negatively electrified, and a strong bonding force is generated between the former dust and the latter dust due to an electrostatic force. Due to this bonding force, dust masses (clusters) in which the plurality of pieces of dust have been flocculated are generated.

By performing the gas flow control as described above, fine dust is easily flocculated by the collision and the dust masses (clusters) are easily formed.

In addition, it is preferable in the dust flocculating duct of the embodiment 3-3-G that the protrusions are formed of the same material as the material forming the wall.

This allows a flocculation effect to be enhanced since the particulates in the dust contained the gas circulating through the inside of the passage are electrified by the collision with either of the wall or the protrusions.

As described above, the embodiment 3-3 relates to the mechanism of flocculating the fine particulates. Since an efficiency of collecting the fine particulates can be enhanced by utilizing this mechanism, the dust flocculating duct according to the present invention is applicable to a vacuum cleaner, an air cleaner, an air conditioner, etc.

The dust flocculating duct of the embodiment 3-3 will be summarized as follows.

(1) The dust flocculating duct is **characterized in that** the dust flocculating duct is used as the dust flocculating duct for, in the process of transporting dust from the upstream side to the downstream side by the gas flow, causing the pieces of dust to collide with one another and for promoting formation of the dust masses (clusters), constitutes the tubular duct in which the inlet and the outlet communicate with each other, and comprises the wall surface which is of the shape of the circular pipe and the plurality of protrusions formed on the wall surface; that in the agitation flocculating duct molded by being divided into the plurality of parts on the plane passing the core axis of the tubular duct, which extends from the center of the inlet to the center of the outlet, the cross-sectional shape of each of protrusions on the plane perpendicular to the core axis of the agitation flocculating duct is of the triangular shape having the apex T, the vertices P and Q, and the base PQ, and each of the protrusions is disposed so as to be integrated with the wall surface of the agitation flocculating duct; and that when it is supposed that the core axis is O, both ends of one part of the agitation flocculating duct formed by being divided into the plurality of parts are respectively A and B, a straight line extending from A to B is AB, and a point of intersection of the wall surface of the agitation flocculating duct and a perpendicular line which passes the core axis O and perpendicularly intersects the straight line AB is H, the protrusions TPQ, each of which has the cross section of the triangular shape in which the conditions of TP//OH and arc HP<arc HQ are satisfied, are provided on at least one part of the wall surface of the agitation flocculating duct.

(2) The above-described dust flocculating duct in (1) is **characterized in that** the protrusions are provided on all areas of the wall surface of the agitation flocculating duct.

(3) The dust flocculating duct is **characterized in that** the groups of protrusions, each of which has the second shape of the isosceles triangle whose apex is S, vertices are respectively M and N, and base is MN as the shape of the cross section on the plane perpendicular to the core axis of the agitation flocculating duct and is provided such that the part of the base MN is buried in the wall surface of the agitation flocculating duct, are further provided.

(4) The dust flocculating duct is **characterized in that** the dust flocculating duct is used as the dust flocculating duct formed so as to be the bent passage, the groups of protrusions, each of which has the first shape of the triangle TPQ, are provided on the outside portion of the inner wall surface with respect to the center of curvature of the bent passage, and the groups of protrusions, each of which has the second shape of the triangle SMN, are provided on the inside portion of the inner wall surface with respect to the center of curvature of the bent passage.

(5) The dust flocculating duct is **characterized in that** when it is supposed that on the cross section on a plane perpendicular to the core axis of the agitation flocculating duct, X and Y are set respectively on the arc AH and the arc BH of the arc AHB which is one part of the wall surface of the agitation flocculating duct and one part of the wall surface is the arc AXHYB, the groups of protrusions, each of which has the first shape of the triangle TPQ, are provided on the arc AX and the arc BY which are both end portions of one part of the agitation flocculating duct; and the groups of protrusions, each of which has the second shape of the triangle SMN, are provided on the arc XHY which is the central portion of the arc AXHYB.

(6) The dust flocculating duct is **characterized in that** when it is supposed that on the cross section on a plane perpendicular to the core axis of the agitation flocculating duct, the angle $\angle AOB$ which the two lines AO and BO extending from the both ends A and B to the core axis O of one part of the agitation flocculating duct form is $\theta$ and the apex angle $\angle MSN$ of each of protrusions, which has the second shape, is $2\alpha$, the protrusions each having the second shape are set so as to satisfy a condition $\theta > 2\alpha$ and the central angles $\angle AOX$ and $\angle BOY$ which an arc AX and an arc BY form with the core axis O are set so as to satisfy conditions $\angle AOX \geqq 0.5\theta - \alpha$ and $\angle BOY \geqq 0.5\theta - \alpha$.

(7) The dust flocculating duct is **characterized in that** the dust flocculating duct is the agitation flocculating duct formed by combining the plurality of the parts of the agitation flocculating duct, each of which is the part of the agitation flocculating duct described above in any of (1) through (6); at least one of the plurality of the parts of the agitation flocculating duct is the first agitation flocculating duct part made of the material which is easily positively electrified by the contact and friction and as one part other than said at least one of the plurality of the parts thereof, at least one of the plurality of the parts of the agitation flocculating duct is the second agitation flocculating duct part made of the material which is easily negatively electrified by the contact and friction; and the first agitation flocculating duct part and the second agitation flocculating duct part are provided so as to neighbor each other.

(8) The molding die is capable of molding any of the agitation flocculating ducts described above in (1) through (7).

EXAMPLE 1

One of the effects attained by the present invention is that the number of fine particulates in an exhaust air in a vacuum cleaner is reduced. This effect is attained by causing the fine particulates to be flocculated upstream of a dust collecting unit in the vacuum cleaner and to be grown so as to have a large average size, whereby a collecting efficiency of the dust collecting unit is enhanced and the number of the fine particulates in the exhaust air is reduced.

Hereinafter, an experimental result obtained by examining a relationship between a size of each of the particulates in the exhaust air and the number of the particulates in the exhaust air in each of the conventional vacuum cleaner and the vacuum cleaner including the dust flocculating duct according the present invention will be described.

Fig. 76 is a schematic diagram illustrating a whole of a conventional vacuum cleaner, as a comparison machine, which comprises a cyclone dust collecting chamber. Fig. 77 is a schematic diagram illustrating a whole of a vacuum cleaner which comprises a dust flocculating duct according to the present invention.

As shown in Fig. 76 and Fig. 77, in each of the conventional vacuum cleaner 6a as the comparison machine and the vacuum cleaner 6b comprising the dust flocculating duct according to the present invention, an extension pipe 502 had a pipe length a of 700 mm and an pipe internal diameter of 35 mm, and a wind velocity at a center of the extension pipes 502 was 20 m/second.

As shown in Fig. 77, in the vacuum cleaner comprising the dust flocculating duct according to the present invention, the dust flocculating duct having a length b was formed, which was located so as to have a distance c from a tip of the extension pipe 502. The length b of the dust flocculating duct was 200 mm and the distance c was 100 mm.

Sizes and the numbers of the particulates contained in the exhaust airs were measured in conformity with JIS C 9802 (methods of measurement of performance of vacuum cleaners for household).

From the result of measurements, exhaust amount reduction ratios in the vacuum cleaner 6b comprising the dust flocculating duct according to the present invention were obtained. The exhaust amount reduction ratios were obtained as follows. Specifically, each of the exhaust amount reduction ratios was supposed to be a proportion of a difference calculated by subtracting, from the number of particulates which was measured in the exhaust air from the conventional vacuum cleaner 6a, the number of particulates which was measured in the exhaust air from the vacuum cleaner 6b comprising the dust flocculating duct according to the present invention, with respect to the number of particulates which was measured in the exhaust air from the conventional vacuum cleaner 6a. For example, if the exhaust amount reduction ratio is 30%, it is indicated that the number of particulates measured in the exhaust air from the vacuum cleaner 6b comprising the dust flocculating duct according to the present invention is 70% of the number of particulates measured in the exhaust air from the conventional vacuum cleaner 6a. The exhaust amount reduction ratios were obtained with respect to the total numbers of exhaust particulates, each of which has a diameter of greater than or equal to 0.1 $\mu$m.

The exhaust amount reduction ratios in a case where the dust flocculating ducts of the respective embodiments were used as the dust flocculating duct included in the vacuum cleaner 6b are shown in Table 4.

[Table 4]

| | | Exhaust amount reduction ratio (%) |
|---|---|---|
| Embodiment 1-1 | Dust flocculating duct 10 | 9.5 |
| Embodiment 1-2 | Dust flocculating duct 20 | 7.7 |
| Embodiment 1-3 | Dust flocculating duct 30 | 6.5 |
| Embodiment 1-4 | Dust flocculating duct 40 | 5.1 |
| Embodiment 1-5 | Dust flocculating duct 50 | 7.5 |

(continued)

| | | Exhaust amount reduction ratio (%) |
|---|---|---|
| Embodiment 1-6 | Dust flocculating duct 60 | 8.5 |
| Embodiment 1-7 | Dust flocculating duct 70 | 4.7 |
| Embodiment 1-8 | Dust flocculating duct 80 | 8.4 |
| Embodiment 1-9 | Dust flocculating duct 90 | 7.8 |
| Embodiment 1-10 | Dust flocculating duct 100 | 6.7 |
| Embodiment 1-11 | Dust flocculating duct 110 | 8.0 |

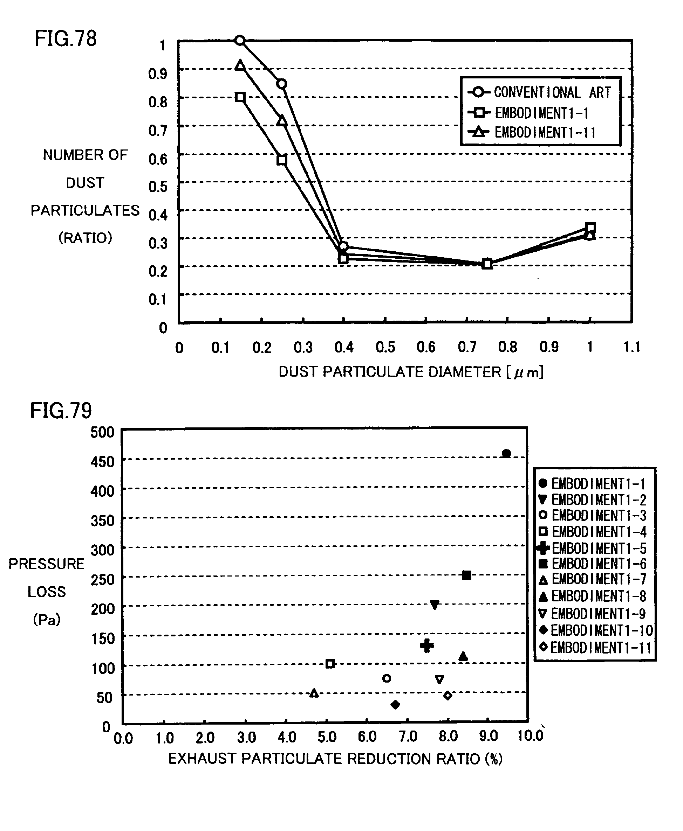

Fig. 78 is a graph showing relationships between sizes and the numbers of particulates contained in an exhaust air, obtained when the conventional vacuum cleaner comprising the cyclone dust collecting chamber and the vacuum cleaner comprising the cyclone dust collecting chamber and the dust flocculating duct according to the present invention were examined. On a vertical axis in Fig. 78, values which relatively represent the numbers of the dust particulates with a maximum value of 1 are shown.

As the dust flocculating duct according to the present invention, the dust flocculating duct 10 of the embodiment 1-1 and the dust flocculating duct 110 of the embodiment 1-11 were used. When both of the vacuum cleaners in which both of the dust flocculating duct 10 of the embodiment 1-1 and the dust flocculating duct 110 of the embodiment 1-11 were used were examined, the numbers of particulates of dust in the exhaust air were decreased, as compared with that obtained when the conventional vacuum cleaner was examined. In particular, decreases in the numbers of particulates, each of which had a diameter of 0.1 $\mu$m through 0.4 $\mu$m, were clearly observed.

Fig. 79 is a graph showing relationships between reduction ratios (%) of the particulates contained in the exhaust airs and pressure losses (Pa), obtained by examining the conventional vacuum cleaner comprising the cyclone dust collecting chamber and the vacuum cleaner comprising the cyclone dust collecting chamber and the dust flocculating duct according to the present invention.

As shown in Fig. 79, when the vacuum cleaner comprising the dust flocculating duct 10 of the embodiment 1-1 was examined, the reduction ratio of the exhaust particulates was higher than that obtained when the vacuum cleaner comprising the dust flocculating duct of the other embodiment was examined whereas the pressure loss was also the highest. On the other hand, when the vacuum cleaner comprising the dust flocculating duct 70 of the embodiment 1-7 was examined, the reduction ratio of the exhaust particulates was the lowest whereas the pressure loss was also low.

EXAMPLE 2

Fig. 76 is a schematic diagram illustrating a whole of a conventional vacuum cleaner, as a comparison machine, which comprises a cyclone dust collecting chamber. Fig. 77 is a schematic diagram illustrating a whole of a vacuum cleaner which comprises a dust flocculating duct according to the present invention.

As shown in Fig. 76 and Fig. 77, in each of the conventional vacuum cleaner 6a and the vacuum cleaner 6b comprising the dust flocculating duct according to the present invention, an extension pipe 502 had a pipe length a of 700 mm and an pipe internal diameter of 35 mm, and a wind velocity at a center of the extension pipes 502 was 20 m/second.

As shown in Fig. 77, in the vacuum cleaner 6b comprising the dust flocculating duct according to the present invention, the dust flocculating duct having a length b was formed, which was located so as to have a distance c from a tip of the extension pipe 502. The length b of the dust flocculating duct was 400 mm and the distance c was 100 mm. As a material of which a first frictional electrification part for positively electrifying particulates was made, a polypropylene (PP) resin was used and as a material of which a second frictional electrification part for negatively electrifying the particulates was made, a nylon resin was used.

Sizes and the numbers of the particulates contained in the exhaust airs were measured in conformity with JIS C 9802 (methods of measurement of performance of vacuum cleaners for household).

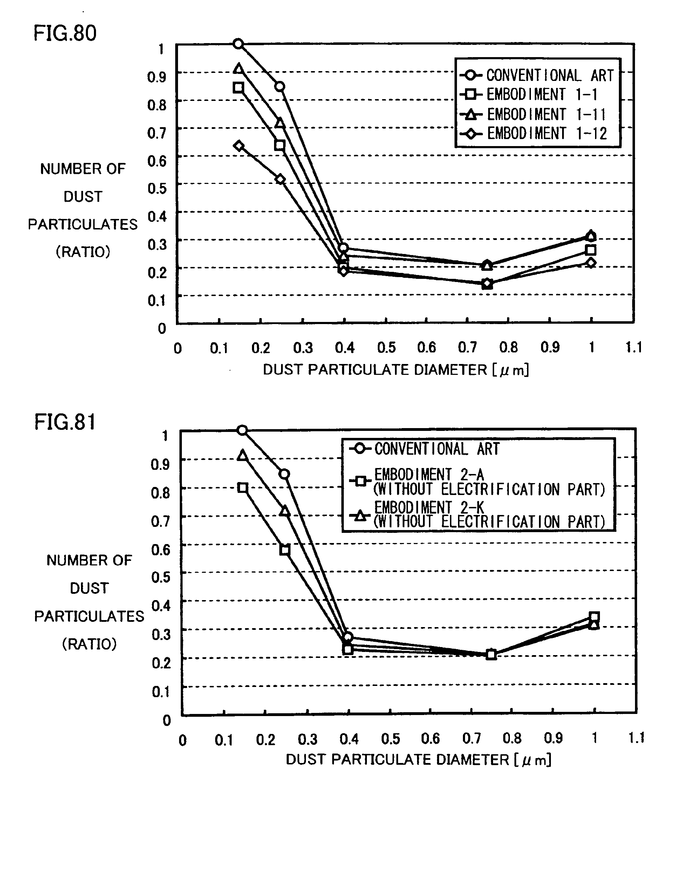

Fig. 80 is a graph showing relationships between sizes and the numbers of particulates contained in an exhaust air, obtained when the conventional vacuum cleaner comprising the cyclone dust collecting chamber and the vacuum cleaner comprising the cyclone dust collecting chamber and the dust flocculating duct according to the present invention were examined. On a vertical axis in Fig. 80, values which relatively represent the numbers of the dust particulates with a maximum value of 1 are shown.

As shown in Fig. 80, the relationships between the sizes and the numbers of the particulates contained in the exhaust air, obtained when the conventional vacuum cleaner comprising the cyclone dust collecting chamber and the vacuum cleaner comprising the dust flocculating duct according to the present invention were examined, were compared.

EXAMPLE 3

As the dust flocculating duct according to the present invention, the dust flocculating duct 10 of the embodiment 1-1, the dust flocculating duct 110 of the embodiment 1-11, and the dust flocculating duct of the embodiment 1-12 were used. As the dust flocculating duct of the embodiment 1-12, the dust flocculating duct whose portions of the protrusions were formed of the electrification members was used. When any of the vacuum cleaners in which any of the dust flocculating duct 10 of the embodiment 1-1, the dust flocculating duct 110 of the embodiment 1-11, and the dust flocculating duct of the embodiment 1-12 was used was examined, the numbers of particulates of dust in the exhaust air were decreased, as compared with that obtained when the conventional vacuum cleaner was examined. In particular, decreases in the numbers of particulates, each of which had a diameter of 0.1 $\mu$m through 0.4 $\mu$m, were clearly observed. In addition, when the vacuum cleaner comprising the dust flocculating duct of the embodiment 1-12 according to the present invention was examined, the total number of exhaust particulates, each of which had a diameter of 0.1 $\mu$m or more, among the particulates contained in the exhaust air was decreased by 40.1% as compared with the conventional vacuum cleaner comprising the cyclone dust collecting chamber. As to the dust flocculating duct of the embodiment 1-12, a dust flocculation effect can be attained even by using the dust flocculating duct whose portions of the protrusions were formed of the electrification members as used in the present example and also the dust flocculating duct whose downstream sides of the protrusions were formed of the electrification members or the dust flocculating duct whose upstream sides of the protrusions were formed of the electrification members. The dust flocculating ducts of the embodiment 1-12 are ranked in descending order of the dust flocculation effect: first, the dust flocculating duct whose portions of the protrusions are formed of the electrification members; second, the dust flocculating duct whose downstream sides of the protrusions are formed of the electrification members; and third, the dust flocculating duct whose upstream sides of the protrusions are formed of the electrification members.

EXAMPLE 3

An experiment to examine differences in degrees to which foreign substances are prone to be caught by protrusions having varied heights was conducted. The experiment was conducted at ordinary temperatures and pressures and under conditions that a diameter D of a circular pipe was 40 mm and a representative velocity of a flow was 20 m/second. A mark ○ in Table 5 indicates that no catching of the foreign substances occurred all three times. A mark × in Table 5 indicates that the foreign substances were caught by triangular pyramids of the protrusions all three times. A mark $\Delta$ in Table 5 indicates that the foreign substances were caught by a turbulence generation part at least one time among three times of measurement. Here, Table 5 shows a result obtained by examining whether the foreign substances were caught by the turbulence generation part when flowing in the circular pipe as a passage and obtained by conducting suction measurement respectively three times under conditions that a bottom face of each of the triangular pyramids had the same shape; when the height h of each of the triangular pyramids as the protrusions was supposed to be D/$\alpha$, a value of $\alpha$ was changed to be 2, 4, 8, and 16; and a total of 10 kinds of the foreign substances shown in Table 5 were used. In addition, for reference sake, a measurement result obtained by using the dust flocculating duct of the embodiment 1-6 is also shown.

[Table 5]

| Foreign substance \ h | D/2 | D/4 | D/8 | D/16 | Dust floccula-ting duct 60 |
|---|---|---|---|---|---|
| Dust with a particulate size of 1μm or less | ○ | ○ | ○ | ○ | ○ |
| Dust with a particulate size of 10μm or less | ○ | ○ | ○ | ○ | ○ |
| Dust with a particulate size of 30μm or less | ○ | ○ | ○ | ○ | ○ |
| Toothpick (20 pieces) | × | △ | ○ | ○ | △ |
| Matchstick (20 pieces) | × | △ | ○ | ○ | △ |
| Mixture of hair (200 hairs each with a length of 20 cm) and yarn (20 pieces of yarn each with a length of 15 cm) | × | ○ | ○ | ○ | ○ |
| Tissue paper (10 cm × 30 cm) | × | ○ | ○ | ○ | ○ |
| Dust ball (approximately φ 10 cm) | × | × | △ | ○ | × |
| Cloth (textile waste, 30 cm × 30 cm) | × | × | ○ | ○ | × |
| Pantyhose | × | × | ○ | ○ | × |

It was understood from the result shown in Table 5 that in a case where the height h of each of the triangular pyramids was 5 mm ((1/8)D), most of the foreign substances passed without being caught by the protrusions. In addition, in a case where each of the protrusions is of a shape such as a triangular prism whose sides, in a height direction thereof, extending from apices of a bottom face portion of each of the triangular pyramids are disposed directly in a direction perpendicular to the flow, the foreign substances are easily caught by the protrusions since the sides thereof are not oblique to the flow, unlike in the present embodiment. Table 6 shows a result of similar measurement conducted in a case where a round portion was formed on each of the sides forming the triangular pyramid.

[Table 6]

| Foreign substance \\ h | D/2 | D/4 | D/8 | D/16 | Dust flocculating duct 60 |
|---|---|---|---|---|---|
| Dust with a particulate size of 1µm or less | ○ | ○ | ○ | ○ | ○ |
| Dust with a particulate size of 10µm or less | ○ | ○ | ○ | ○ | ○ |
| Dust with a particulate size of 30µm or less | ○ | ○ | ○ | ○ | ○ |
| Toothpick (20 pieces) | × | △ | ○ | ○ | △ |
| Matchstick (20 pieces) | × | △ | ○ | ○ | △ |
| Mixture of hair (200 hairs each with a length of 20 cm) and yarn (20 pieces of yarn each with a length of 15 cm) | × | ○ | ○ | ○ | ○ |
| Tissue paper (10 cm × 30 cm) | × | ○ | ○ | ○ | ○ |
| Dust ball (approximately φ 10 cm) | × | ○ | ○ | ○ | ○ |
| Cloth (textile waste, 30 cm × 30 cm) | × | △ | ○ | ○ | × |
| Pantyhose | × | △ | ○ | ○ | × |

As shown in Table 6, even in a case where the height h of each of the triangular pyramids was 10 mm ((1/4) D), when the round portion was formed on each of the sides forming each of the triangular pyramids, the foreign substances were hardly caught by the protrusions.

EXAMPLE 4

One of the effects attained by the present invention is that the number of fine particulates in an exhaust air in a vacuum cleaner is reduced. This effect is attained by causing the fine particulates to be flocculated upstream of a dust collecting unit in the vacuum cleaner and to be grown so as to have a large average size, whereby a collecting efficiency of the dust collecting unit is enhanced and the number of the fine particulates in the exhaust air is reduced.

Hereinafter, an experimental result obtained by examining a relationship between a size of each of the particulates in the exhaust air and the number of the particulates in the exhaust air in each of the conventional vacuum cleaner and the vacuum cleaner including the dust flocculating duct according the present invention will be described.

Fig. 76 is a schematic diagram illustrating a whole of a conventional vacuum cleaner, as a comparison machine, which comprises a cyclone dust collecting chamber. Fig. 77 is a schematic diagram illustrating a whole of a vacuum cleaner which comprises a dust flocculating duct according to the present invention.

As shown in Fig. 76 and Fig. 77, in each of the conventional vacuum cleaner 6a as the comparison machine and the vacuum cleaner 6b comprising the vortex generating part applied to the dust flocculating duct according to the present invention, an extension pipe 502 had a pipe length a of 700 mm and an pipe internal diameter of 35 mm, and a wind velocity at a center of the extension pipes 502 was 20 m/second.

As shown in Fig. 77, in the vacuum cleaner comprising the vortex generating part applied to the dust flocculating duct according to the present invention, the dust flocculating duct having a length b was formed, which was located so as to have a distance c from a tip of the extension pipe 502. The length b of the dust flocculating duct was 200 mm and the distance c was 100 mm.

Sizes and the numbers of the particulates contained in the exhaust airs were measured in conformity with JIS C 9802 (methods of measurement of performance of vacuum cleaners for household).

From the result of measurements, exhaust amount reduction ratios in the vacuum cleaner 6b comprising the vortex generating part applied to the dust flocculating duct according to the present invention were obtained. The exhaust amount reduction ratios were obtained as follows. Specifically, each of the exhaust amount reduction ratios was supposed to be a proportion of a difference calculated by subtracting, from the number of particulates which was measured in the exhaust air from the conventional vacuum cleaner 6a, the number of particulates which was measured in the exhaust air from the vacuum cleaner 6b comprising the vortex generating part applied to the dust flocculating duct according to the present invention, with respect to the number of particulates which was measured in the exhaust air from the conventional vacuum cleaner 6a. For example, if the exhaust amount reduction ratio is 30%, it is indicated that the number of particulates measured in the exhaust air from the vacuum cleaner 6b comprising the dust flocculating duct according to the present invention is 70% of the number of particulates measured in the exhaust air from the conventional vacuum cleaner 6a. The exhaust amount reduction ratios were obtained with respect to the total numbers of exhaust particulates, each of which has a diameter of greater than or equal to 0.1 $\mu$m.

The exhaust amount reduction ratios in a case where the vortex generating parts applied to the dust flocculating ducts of the embodiment 2-A through the embodiment 2-K were used as the vortex generating part applied to the dust flocculating duct included in the vacuum cleaner 6b are shown in Table 7.

[Table 7]

| | | Exhaust amount reduction ratio (%) |
|---|---|---|
| Embodiment 2-A | Dust flocculating duct 10 | 9.5 |
| Embodiment 2-B | Dust flocculating duct 20 | 7.7 |
| Embodiment 2-C | Dust flocculating duct 30 | 6.5 |
| Embodiment 2-D | Dust flocculating duct 40 | 5.1 |
| Embodiment 2-E | Dust flocculating duct 50 | 7.5 |
| Embodiment 2-F | Dust flocculating duct 60 | 8.5 |
| Embodiment 2-G | Dust flocculating duct 70 | 4.7 |
| Embodiment 2-H | Dust flocculating duct 80 | 8.4 |
| Embodiment 2-1 | Dust flocculating duct 90 | 7.8 |
| Embodiment 2-J | Dust flocculating duct 100 | 6.7 |
| Embodiment 2-K | Dust flocculating duct 110 | 8.0 |

Fig. 81 is a graph showing relationships between sizes and the numbers of particulates contained in an exhaust air, obtained when the conventional vacuum cleaner comprising the cyclone dust collecting chamber and the vacuum cleaner comprising the cyclone dust collecting chamber and the dust flocculating duct according to the present invention were examined. On a vertical axis in Fig. 81, values which relatively represent the numbers of the dust particulates with a maximum value of 1 are shown.

As the vortex generating part applied to the dust flocculating duct according to the present invention, the swirling part 13 included in the dust flocculating duct 10 of the embodiment 2-A and the protrusions 113 included in the dust flocculating duct 110 of the embodiment 2-K were used. When both of the vacuum cleaners in which both of the swirling part 13 included in the dust flocculating duct 10 of the embodiment 2-A and the protrusions 113 included in the dust flocculating duct 110 of the embodiment 2-K were used were examined, the numbers of particulates of dust in the exhaust air were decreased, as compared with that obtained when the conventional vacuum cleaner was examined. In particular, decreases in the numbers of particulates, each of which had a diameter of 0.1 $\mu$m through 0.4 $\mu$m, were clearly observed.

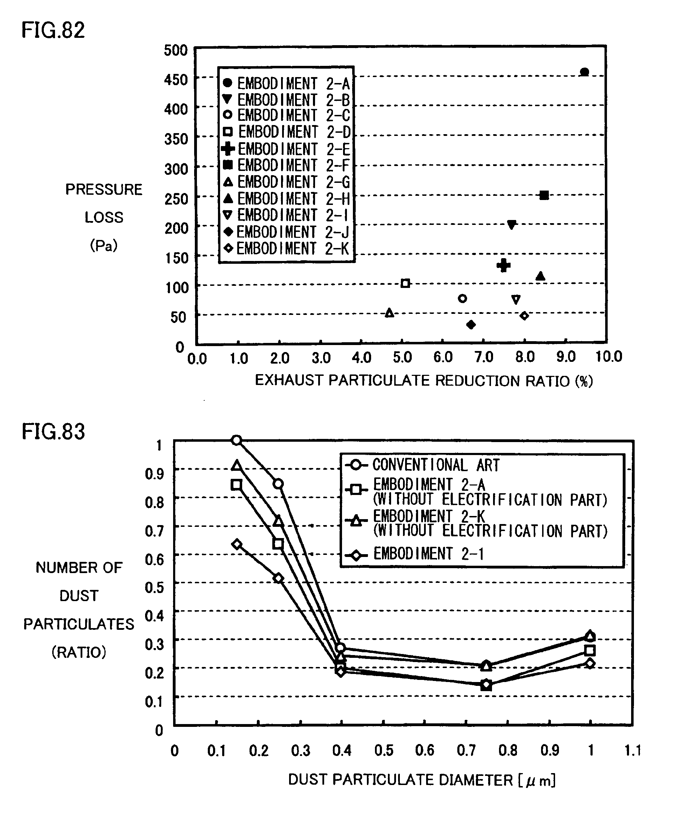

Fig. 82 is a graph showing relationships between reduction ratios (%) of the particulates contained in the exhaust airs and pressure losses (Pa), obtained by examining the conventional vacuum cleaner comprising the cyclone dust collecting chamber and the vacuum cleaner comprising the cyclone dust collecting chamber and the dust flocculating duct according to the present invention.

As shown in Fig. 82, when the vacuum cleaner comprising the swirling part 13 included in the dust flocculating duct 10 of the embodiment 2-A was examined, the reduction ratio of the exhaust particulates was higher than that obtained when the vacuum cleaner comprising the vortex generating part included in the dust flocculating duct of the other embodiment was examined whereas the pressure loss was also the highest. On the other hand, when the vacuum cleaner comprising the protrusions 73a and 73b included in the dust flocculating duct 70 of the embodiment 2-G was examined, the reduction ratio of the exhaust particulates was the lowest whereas the pressure loss was also low.

Next, a result of an experiment of examining relationships of sizes and the numbers of particulates contained in the exhaust airs in a case where the dust flocculating duct comprises the electrification part and in a case where the dust flocculating duct does not comprise the electrification part will be described.

Fig. 76 is a schematic diagram illustrating a whole of a conventional vacuum cleaner, as a comparison machine, which comprises a cyclone dust collecting chamber. Fig. 77 is a schematic diagram illustrating a whole of a vacuum cleaner which comprises a dust flocculating duct according to the present invention.

As shown in Fig. 76 and Fig. 77, in each of the conventional vacuum cleaner 6 as the comparison machine and the vacuum cleaner 6 comprising the dust flocculating duct according to the present invention, an extension pipe 502 had a pipe length a of 700 mm and an pipe internal diameter of 35 mm, and a wind velocity at a center of the extension pipes 502 was 20 m/second.

As shown in Fig. 77, in the vacuum cleaner 6 comprising the dust flocculating duct according to the present invention, the dust flocculating duct having a length b was formed, which was located so as to have a distance c from a tip of the extension pipe 502. The length b of the dust flocculating duct was 400 mm and the distance c was 100 mm. As a material of the electrodes of the electrification part, stainless steel was used. A voltage applied to the electrodes of the electrification part was 4kV. In addition, as other material of the electrodes of the electrification part, tungsten can be used.

Sizes and the numbers of the particulates contained in the exhaust airs were measured in conformity with JIS C 9802 (methods of measurement of performance of vacuum cleaners for household).

Fig. 83 is a graph showing relationships between sizes and the numbers of particulates contained in an exhaust air, obtained when the conventional vacuum cleaner which comprises a cyclone dust collecting chamber, a vacuum cleaner which comprises a cyclone dust collecting chamber, the vortex generating part included in the dust flocculating dust, and no electrification part, and a vacuum cleaner which comprises a cyclone dust collecting chamber and the dust flocculating duct according to the present invention were examined. On a vertical axis in Fig. 83, values which relatively represent the numbers of the dust particulates with a maximum value of 1 are shown.

As shown in Fig. 83, the relationships between the sizes and the numbers of the particulates contained in the exhaust air, obtained when the conventional vacuum cleaner which comprises the cyclone dust collecting chamber, the vacuum cleaner which comprises the cyclone dust collecting chamber, the vortex generating part included in the dust flocculating dust, and no electrification part, and the vacuum cleaner which comprises the cyclone dust collecting chamber and the dust flocculating duct according to the present invention were examined, were compared.

As the vortex generating part applied to the dust flocculating duct according to the present invention, the swirling part 13 included in the dust flocculating duct 10 of the embodiment 2-A and the protrusions 113 included in the dust flocculating duct 110 of the embodiment 2-K were used. As the dust flocculating duct according to the present invention, the dust flocculating duct in which the vortex generating part of the embodiment 2-K is applied to the dust flocculating duct of the embodiment 2-1 was used. When any of the vacuum cleaners in which any of the swirling part 13 included in the dust flocculating duct 10 of the embodiment 2-A, the protrusions 113 included in the dust flocculating duct 110 of the embodiment 2-K, and the dust flocculating duct of the embodiment 2-1 was/were used were examined, the numbers of particulates of dust in the exhaust air were decreased, as compared with that obtained when the conventional vacuum cleaner was examined. In particular, decreases in the numbers of particulates, each of which had a diameter of 0.1 $\mu$m through 0.4 $\mu$m, were clearly observed. In addition, when the vacuum cleaner comprising the dust flocculating duct of the embodiment 2-1 according to the present invention was examined, the total number of exhaust particulates, each of which had a diameter of 0.1 $\mu$m or more, among the particulates contained in the exhaust air was decreased by 40.1% as compared with the conventional vacuum cleaner comprising the cyclone dust collecting chamber.

The described embodiments and examples are to be considered in all respects only as illustrative and not restrictive. It is intended that the scope of the invention is, therefore, indicated by the appended claims rather than the foregoing descriptions of the embodiments and examples and that all modifications and variations coming within the meaning and equivalency range of the appended claims are embraced within their scope.

INDUSTRIAL APPLICABILITY

The present invention is applicable to a vacuum cleaner having a filter or the like for collecting dust, an air cleaner, an air conditioner, etc.

**Claims**

**1.** A dust flocculating duct (10) comprising:

a passage (11) for circulating gas therethrough;
a wall (12) forming the passage (11); and
a vortex generating part for generating vortices in the gas circulating through the passage (11),

wherein the vortex generating part is disposed on an inner surface of the wall (12) so as to impart an uneven velocity distribution to a flow of the gas in a vicinity of the wall (12).

2. The dust flocculating duct (10) according to claim 1, wherein the vortex generating part includes a swirling part (13) and the swirling part (13) has a wall portion projecting from the inner surface of the wall (12) toward an inside of the passage (11) so as to swirl the flow of the gas inside the passage (11).

3. The dust flocculating duct (40) according to claim 1, wherein the vortex generating part includes a protrusion (43) and the protrusion (43) is formed so as to project from the inner surface of the wall (42) and to make a velocity of the gas passing around the protrusion (43) uneven.

4. The dust flocculating duct (40) according to claim 3, wherein a plurality of the protrusions (43) are disposed along a direction of the gas flow in the passage (41) and are disposed such that at least one part of one of the protrusions (43) overlaps another of the protrusions (43) when the protrusions (43) are viewed from an upstream side toward a downstream side of the passage (41) in a perspective manner.

5. The dust flocculating duct (40) according to claim 4, wherein the protrusions (43) are disposed so as to wholly overlap each other when the protrusions (43) are viewed from the upstream side toward the downstream side of the passage (41) in the perspective manner.

6. The dust flocculating duct (50) according to claim 4, wherein the protrusions (53) are disposed so as to partially overlap each other when the protrusions (53) are viewed from the upstream side toward the downstream side of the passage (51) in the perspective manner.

7. The dust flocculating duct (80) according to claim 4, wherein the protrusions are disposed such that an upstream side end portion of the protrusion (83b) located downstream of the flow of the gas is located more upstream than a downstream side end portion of the protrusion (83a) located upstream of the flow of the gas.

8. The dust flocculating duct (10) according to claim 1, wherein the wall (12) and/or the vortex generating part (13) are/is formed of a material allowing dust contained in the gas circulating through the passage (11) to be positively or negatively contact-electrified.

9. The dust flocculating duct (10) according to claim 1, wherein the wall (12) and/or the vortex generating part (13) have/has a first electrification part for positively contact-electrifying dust contained in the gas circulating through the passage (11) and a second electrification part for negatively contact-electrifying the dust contained in the gas circulating through the passage (11), and the first electrification part and the second electrification part are disposed so as to face each other.

10. The dust flocculating duct (10) according to claim 2, wherein the wall portion is formed of a plurality of wall portions (13a, 13b, 13c, and 13d), the passage (11) is formed so as to be divided into a plurality of independent small passages by the plurality of wall portions (13a, 13b, 13c, and 13d), and the small passages are formed so as to be skewed along the flow of the gas and to allow the flow of the gas to be swirled.

11. The dust flocculating duct (30) according to claim 10, wherein the plurality of small passages communicate with one another in a central portion of the passage (31).

12. The dust flocculating duct (10) according to claim 10, wherein a skew angle of each of the small passages is small on an upstream side and increases gradually in accordance with an increase in proximity to a downstream side.

13. The dust flocculating duct (10) according to claim 10, wherein the wall portions (12, 13a, 13b, 13c, and 13d) are formed of a material allowing dust contained in the gas circulating through the small passages to be positively or negatively contact-electrified.

14. The dust flocculating duct (10) according to claim 10, wherein a first small passage for positively contact-electrifying dust contained in the gas circulating through the passage (11) and a second small passage for negatively contact-electrifying the dust contained in the gas circulating through the passage (11) constitute the plurality of small passages divided by the wall portions (12, 13a, 13b, 13c, and 13d) and the first small passage and the second small passage are disposed such that the first small passage and the second small passage neighbor each other.

15. The dust flocculating duct (40) according to claim 3, wherein a plurality of the protrusions (43) are disposed.

16. The dust flocculating duct (60) according to claim 15, wherein the protrusions (63a, 63b, 63c, and 63d) have curved shapes so as to form depressions and couples of the protrusions (63a, 63b, 63c, and 63d), each of which comprises two protrusions neighboring each other in a direction intersecting a direction of the flow of the gas, are disposed such that two depressions of the two protrusions face each other.

17. The dust flocculating duct (60) according to claim 15, wherein the protrusions (63a, 63b, 63c, and 63d) change directions of the flow of the gas entering the passage (61), and directions of the flow of the gas, changed by the two protrusions neighboring each other among the protrusions (63a, 63b, 63c, and 63d), are opposite to each other.

18. The dust flocculating duct (70) according to claim 15, wherein an area of a cross section of each of the protrusions (73a, 73b) in a direction perpendicular to a direction of the flow of the gas is small on an upstream side and large on a downstream side.

19. The dust flocculating duct (40) according to claim 15, wherein the wall (42) is formed of a material allowing dust contained in the gas circulating through the passage (41) to be positively or negatively contact-electrified.

20. The dust flocculating duct (40) according to claim 15, wherein the wall (42) has a first electrification part for positively contact-electrifying the dust contained in the gas circulating through the passage (41) and a second electrification part for negatively contact-electrifying the dust contained in the gas circulating through the passage (41), and the first electrification part and the second electrification part are disposed so as to face each other.

21. The dust flocculating duct (40) according to claim 15, wherein the protrusions (43) are formed of a material allowing the dust contained in the gas circulating through the passage (41) to be positively or negatively contact-electrified.

22. The dust flocculating duct (60) according to claim 15, wherein a first protrusion (63a, 63d) for positively contact-electrifying the dust contained in the gas circulating through the passage (61) and a second protrusion (63c, 63b) for negatively contact-electrifying the dust contained in the gas circulating through the passage (61) constitute the protrusions (63a, 63b, 63c, and 63d), and the first protrusion (63a, 63d) and the second protrusion (63c, 63b) are disposed so as to face each other.

23. The dust flocculating duct (40) according to claim 21, wherein the protrusions (43) are formed of a same material as the material forming the wall (42).

24. The dust flocculating duct (40) according to claim 1, wherein a height of the vortex generating part (43) from the wall (42) is less than or equal to one eighth of a representative length of a cross section of the passage (41), the cross section being perpendicular to the direction of the gas flow.

25. The dust flocculating duct according to claim 1, wherein a height of the vortex generating part from the wall is less than or equal to a quarter of a representative length of a cross section of the passage, the cross section being perpendicular to the direction of the gas flow, and a round portion is formed on an edge face of the vortex generating part.

26. The dust flocculating duct according to claim 1, wherein the vortex generating part is disposed in a position with no contracted flow in the passage.

27. The dust flocculating duct according to claim 1, wherein the vortex generating part is disposed in a position four times as distant from an inlet of the passage as a representative length of a cross section of the passage.

28. The dust flocculating duct according to claim 1, wherein a round portion is formed at an edge face of an inlet of the passage and the vortex generating part is disposed in a vicinity of the inlet of the passage.

**29.** The dust flocculating duct according to claim 28, wherein when a representative length of a cross section perpendicular to a direction of the gas flow is supposed to be D, a radius of the round portion formed at the edge face of the inlet of the passage is supposed to be R, a ratio of R to D (R/D) is supposed to be β, a distance from the inlet of the passage to the vortex generating part is X, and a condition $0<β≦1/4$ is satisfied, X is a value expressed by $(70β^2-33β+4)D$.

**30.** A vacuum cleaner comprising:

an electric blower (567);
a gas duct (502) communicating from a suction inlet (501) to the electric blower (567); and
a dust collecting unit (561),

wherein dust is sucked from the suction inlet (501) by a gas flow generated by the electric blower (567) and the dust passing through the gas duct (502) is collected into the dust collecting unit (561), and
wherein the gas duct (502) has a dust flocculating duct according to claim 1.

**31.** A dust flocculating method for forming dust masses (clusters) through generating vortices in a gas flow when dust is transported through a passage (11) by the gas flow.

**32.** A dust flocculating method for forming dust masses (clusters) through generating vortices in a gas flow along a wall surface (32) of a passage (31) when dust is transported through the passage (31) by the gas flow.

**33.** A dust flocculating method comprising the steps of:

guiding dust into a passage (41) by a gas flow;
transporting the dust through an inside of the passage (41) by the gas flow traveling forward;
causing the dust to be caught up in a vortical flow generated downstream of a protrusion (43) projecting from a wall (42) of the passage (41) and to circulate;
causing a plurality of particulates of the dust to mutually collide with one another by the vortical flow;
causing the plurality of particulates of dust in collision with one another to form dust masses (clusters); and
transporting the dust masses through the inside of the passage (41) by the gas flow.

**34.** A dust flocculating method comprising the steps of:

guiding dust into a passage (11) by a gas flow;
transporting the dust through an inside of the passage (11) by the gas flow traveling forward;
circulating the dust along a surface of a wall (12) of the passage (11);
causing the dust to collide with a protrusion (13) projecting from the wall (12) of the passage (11);
causing the dust to be caught up in a vortical flow generated downstream of the protrusion (13) and to circulate;
causing the dust to collide with the surface of the wall (12) of the passage (11) by the vortical flow a plurality of times;
causing a plurality of pieces of the dust to collide with one another by the vortical flow;
causing the plurality of pieces of the dust in collision with one another to form dust masses (clusters); and
transporting the dust masses through the inside of the passage (11) by the gas flow.

**35.** The dust flocculating method, according to claim 33, wherein when the dust is transported through the inside of the passage by the gas flow, gas flow control is performed so as to electrify the dust by causing the dust to collide with the surface of the wall and/or the protrusion and thereafter, so as to cause the particulates of the dust to collide with one another; and a period of causing a plurality of pieces of the dust in collision with one another to form dust masses (clusters) is provided.

**36.** The dust flocculating method, according to claim 35, wherein when the dust is transported through the inside of the passage by the gas flow, gas flow control is performed so as to cause positively electrified first dust mass and negatively electrified second dust mass to collide with each other; and a period of bonding the first dust mass and the second dust mass in collision with each other due to an electrostatic force and of forming further large dust masses (large clusters) is provided.

**37.** A dust flocculating duct (200) comprising:

a passage (201) for circulating gas therethrough;
a wall (202) forming the passage (201);
a vortex generating part (203) for generating vortices in the gas circulating through the passage (201); and
an electrification part (210) for positively and/or negatively electrifying dust (220) contained in the gas circulating through the passage (201),

wherein the electrification part (210) includes electrodes (211a, 211b) connected to power sources (212), and
wherein the vortex generating part (203) is disposed on an inner surface of the wall (202) so as to impart an uneven velocity distribution to the gas in a vicinity of the wall (202).

**38.** The dust flocculating duct (200) according to claim 37, wherein the electrification part (210) is disposed on an upstream side of the passage (201) and the vortex generating part (203) is disposed on a downstream side of the passage (201).

**39.** The dust flocculating duct (10) according to claim 37, wherein the vortex generating part includes a swirling part (13) and the swirling part (13) has a wall portion projecting from the inner surface of the wall (12) toward an inside of the passage (11) so as to swirl a flow of the gas in the passage (11).

**40.** The dust flocculating duct (40) according to claim 37, wherein the vortex generating part includes a protrusion (43) and the protrusion (43) is formed so as to project from the inner surface of the wall (42) and to make the velocity of the gas passing around the protrusion (43) uneven.

**41.** The dust flocculating duct (80) according to claim 40, wherein a plurality of the protrusions (83) are disposed along a direction of a gas flow in the passage (81) and the protrusions (83) are disposed so as to partially overlap each other when the protrusions (83) are viewed from an upstream side toward a downstream side of the passage (81) in a perspective manner.

**42.** A vacuum cleaner comprising:

an electric blower (567);
a gas duct (502) communicating from a suction inlet (501) to the electric blower (567); and
a dust collecting unit (561),

wherein dust is sucked from the suction inlet (501) by a gas flow generated by the electric blower (567) and the dust passing through the gas duct (502) is collected into the dust collecting unit (561), and
wherein the gas duct (502) has a dust flocculating duct according to claim 37.

**43.** A dust flocculating duct comprising:

a passage (91) for circulating gas containing dust there through; and
a frictional electrification passage part for electrifying the dust flowing through the passage (91) and for promoting formation of dust masses (clusters) by causing the electrified dust and other dust to collide with each other,

wherein the frictional electrification passage part has a wall (92) forming the frictional electrification passage part; a protrusion (93) having a projected top edge portion is disposed on an inner surface of the wall (92); at the top edge portion of the protrusion (93), a round portion (94) is formed; and a radius of the round portion (94) is greater than or equal to 0.2 mm.

**44.** The dust flocculating duct according to claim 43, wherein when a length of a shortest part of a diameter of a cross section perpendicular to a direction of a gas flow in the passage is supposed to be D and the radius of the round portion formed on an edge face at the top edge portion is supposed to be R, a condition $R \leqq 0.25D$ is satisfied.

**45.** The dust flocculating duct according to claim 43, wherein when a length of a shortest part of a diameter of a cross section perpendicular to a direction of a gas flow in the passage is supposed to be D and the radius of the round portion formed on an edge face at the top edge portion is supposed to be R, a condition $R \leqq 0.05D$ is satisfied.

**46.** The dust flocculating duct according to claim 43, wherein the frictional electrification passage part is formed of a material allowing easy electrification of the dust contained in the gas circulating through the passage.

**47.** The dust flocculating duct according to claim 43, wherein the frictional electrification passage part has a first frictional electrification part having a contact potential difference higher than a contact potential difference of predetermined dust circulating through the passage and a second frictional electrification part having a contact potential difference lower than the contact potential difference of the predetermined dust circulating through the passage, and the first frictional electrification part and the second frictional electrification part are disposed so as to face each other.

FIG.1

D

P

Q

4

3

3

2

1

4D〜5D

FIG.2

5a

5a

5b

5b

P

Q

4

2

1

FIG.3

(A)

P

5

V

Q

4

2

1

(B)

Q

V

5

Q

FIG.4

(A)

(B)

FIG.5

FIG.6

FIG.7

FIG.8

(A)                              (B)

FIG.9

FIG.10

FIG.11

FIG.12

FIG.13

FIG.14

(A)

(B)

FIG.15

FIG.16

FIG.17

FIG.18

(A)

(B)

FIG.19

FIG.20

(A)

(B)

**FIG.21**

**FIG.22**

FIG.23

FIG,24

FIG.25

60

62

61

63c

63d

63b

63a

FIG.26

60

61

62

63c

63d

63b

63a

FIG.27

60

62

61

63c

63d

63b

63a

FIG.28

63c

63d

V7

V8

63b

63a

FIG.29

FIG.30

FIG.31

(A)

73a

G ⌐ E

F

(B)

73a

G E

I

(C)

I

73a

E F

h

FIG.32

(A)

V9

I

73a

P

G E

V10

(B)

I

73a

E

F

V11

FIG.33

(A)

70

71

V11

72

(B)

70

71

P

P

72

EP 2 087 827 A1

FIG.34

FIG.35

121

FIG.36

FIG.37

(A)

(B)

FIG.38

(A)                    (B)

FIG.39

FIG.40

FIG.41

FIG.42

FIG.43

100

101

102

103

FIG.44

100

102

101

103

FIG.45

(A)

102

103

(B)

102

103

FIG.46

(A)

102

103

(B)

102

103

FIG.47

(A)

102

103

(B)

102

103

FIG.48

(A)

102

103

(B)

102

103

FIG.49

(A)

(B)

FIG.50

FIG.51

FIG.52

FIG.53

FIG.54

FIG.55

FIG.56

FIG.57

FIG.58

FIG.59

# FIG.60

## (A)

## (B)

FIG.61

ELECTRIC FIELD (V/mm)

CURVATURE RADIUS OF PROTRUSION TIP (mm)

FIG.62

FLOCCULATION EFFECT (−FOLD)

CURVATURE RADIUS OF PROTRUSION TIP (r/D)

FIG.63

120

122

121

123

123

FIG.64

120

123

123

121

122

123

123

FIG.65

FIG.66

FIG.67

FIG.68

FIG.69

FIG.70

FIG.71

FIG.72

FIG.73

FIG.74

FIG.75

FIG.76

FIG.77

FIG.78

FIG.79

FIG.80

FIG.81

FIG.82

FIG.83

**EP 2 087 827 A1**

### INTERNATIONAL SEARCH REPORT

| International application No. |
|---|
| PCT/JP2007/068628 |

A. CLASSIFICATION OF SUBJECT MATTER
*A47L9/16*(2006.01)i, *A47L9/24*(2006.01)i, *B01D51/02*(2006.01)i, *B03C3/15*
(2006.01)i, *B03C3/30*(2006.01)i, *B03C3/36*(2006.01)i

According to International Patent Classification (IPC) or to both national classification and IPC

B. FIELDS SEARCHED

Minimum documentation searched (classification system followed by classification symbols)
A47L9/16, A47L9/24, B01D51/02, B03C3/15, B03C3/30, B03C3/36

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2002-320578 A  (Hitachi, Ltd.),<br>05 November, 2002 (05.11.02),<br>Full text; Figs. 1 to 14<br>(Family: none) | 1,2,31,32 |
| X | JP 63-182014 A  (Hisao KOJIMA),<br>27 July, 1988 (27.07.88),<br>Full text; Figs. 1 to 6<br>& US 4878925 A | 1,2,10,11,<br>31,32 |

☐ Further documents are listed in the continuation of Box C.   ☐ See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>12 December, 2007 (12.12.07) | Date of mailing of the international search report<br>25 December, 2007 (25.12.07) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2007/068628 |

---

**Box No. II    Observations where certain claims were found unsearchable (Continuation of item 2 of first sheet)**

This international search report has not been established in respect of certain claims under Article 17(2)(a) for the following reasons:

1. ☐  Claims Nos.:
   because they relate to subject matter not required to be searched by this Authority, namely:

2. ☐  Claims Nos.:
   because they relate to parts of the international application that do not comply with the prescribed requirements to such an extent that no meaningful international search can be carried out, specifically:

3. ☐  Claims Nos.:
   because they are dependent claims and are not drafted in accordance with the second and third sentences of Rule 6.4(a).

---

**Box No. III    Observations where unity of invention is lacking (Continuation of item 3 of first sheet)**

This International Searching Authority found multiple inventions in this international application, as follows:

It is apparent that the matter of the invention of claims 1 an 2 is not novel, because it is disclosed not only in JP 2002-320578 A described as Patent Document 1 of the prior art in the specification but also in JP 63-182014 A.  Moreover, it is also apparent that the matter of the invention of claims 3 and 15 and the matter of the invention of claim 10 are not novel, because the former is disclosed in JP 2002-320578 A and whereas the latter is disclosed in JP 63-182014 A.  (continued to extra sheet)

1. ☐  As all required additional search fees were timely paid by the applicant, this international search report covers all searchable claims.

2. ☐  As all searchable claims could be searched without effort justifying additional fees, this Authority did not invite payment of additional fees.

3. ☐  As only some of the required additional search fees were timely paid by the applicant, this international search report covers only those claims for which fees were paid, specifically claims Nos.:

4. ☒  No required additional search fees were timely paid by the applicant.   Consequently, this international search report is restricted to the invention first mentioned in the claims; it is covered by claims Nos.:
   Claims 1, 2, 10, 11, 31 and 32.

**Remark on Protest**     ☐  The additional search fees were accompanied by the applicant's protest and, where applicable,
the                             payment of a protest fee.

                        ☐  The additional search fees were accompanied by the applicant's protest but the applicable protest
                            fee was not paid within the time limit specified in the invitation.

                        ☐  No protest accompanied the payment of additional search fees.

Form PCT/ISA/210 (continuation of first sheet (2)) (April 2007)

| **INTERNATIONAL SEARCH REPORT** | International application No. |
|---|---|
| | PCT/JP2007/068628 |

Continuation of Box No.III of continuation of first sheet(2)

As a result, the matter of the invention of claim 1 - 3, 10 and 15 does not have the special technical features within the meaning of PCT Rule 13.2, second sentence, since it does not explicitly specify any contribution over the prior art. Hence, it is apparent that the inventions of the following twenty three groups do not comply with the requirement of unity of invention, because the technical relations described in PCT Rule 13.2 cannot be found out between those inventions:

(1)   Claims 1, 2, 10, 11, 31 and 32;
(2)   Claims 3 - 7;
(3)   Claim 8;
(4)   Claim 9;
(5)   Claim 12;
(6)   Claim 13;
(7)   Claim 14;
(8)   Claims 15 and 16;
(9)   Claim 17;
(10)  Claim 18;
(11)  Claim 19;
(12)  Claim 20;
(13)  Claims 21 and 23;
(14)  Claim 22;
(15)  Claim 24;
(16)  Claim 25;
(17)  Claim 26;
(18)  Claim 27;
(19)  Claims 28 and 29;
(20)  Claim 30;
(21)  Claims 33 - 36;
(22)  Claims 37 - 42; and
(23)  Claims 43 - 47.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002320578 A
- JP 9131522 A
- JP 2005324094 A
- JP 2517877 B
- JP 2004101411 A

**Non-patent literature cited in the description**

- Basic Aerosol Science. Morikita Publishing Co., Ltd, 17
- Powder Engineering. Ohmsha, Ltd, 91